(19) Europäisches Patentamt
European Patent Office
Office européen des brevets

(11) EP 1 513 086 A1

(12) **EUROPEAN PATENT APPLICATION**
published in accordance with Art. 158(3) EPC

(43) Date of publication:
**09.03.2005 Bulletin 2005/10**

(21) Application number: **03733339.0**

(22) Date of filing: **10.06.2003**

(51) Int Cl.$^7$: **G06F 17/60**

(86) International application number:
**PCT/JP2003/007325**

(87) International publication number:
**WO 2003/107235 (24.12.2003 Gazette 2003/52)**

(84) Designated Contracting States:
**AT BE BG CH CY CZ DE DK EE ES FI FR GB GR HU IE IT LI LU MC NL PT RO SE SI SK TR**

(30) Priority: **12.06.2002 JP 2002171132**
**12.06.2002 JP 2002171167**
**12.07.2002 JP 2002203522**

(71) Applicant: **HITACHI CONSTRUCTION MACHINERY CO., LTD.**
**Bunkyo-ku, Tokyo 112-0004 (JP)**

(72) Inventors:
- **FURUNO, Yoshinori**
**Tsuchiura-shi, Ibaraki 300-0837 (JP)**
- **MATSUDA, Fujio**
**Nagareyama-shi, Chiba 270-0103 (JP)**
- **IKARI, Takanobu**
**Tsuchiura-shi, Ibaraki 300-0012 (JP)**
- **AKINO, Shinji**
**Ushiku-shi, Ibaraki 300-1207 (JP)**
- **OHWADA, Yoshinori**
**Niihari-gun, Ibaraki 315-0051 (JP)**
- **WATANABE, Hiroshi**
**Ushiku-shi, Ibaraki 300-1236 (JP)**
- **EGUCHI, Yoshinori**
**Tsuchiura-shi, Ibaraki 300-0011 (JP)**
- **ADACHI, Hiroyuki**
**Inashiki-gun, Ibaraki 300-0331 (JP)**

(74) Representative: **Beetz & Partner Patentanwälte**
**Steinsdorfstrasse 10**
**80538 München (DE)**

# (54) INFORMATION PROVIDING SYSTEM OF CONSTRUCTION MACHINE AND INFORMATION PROVIDING METHOD OF CONSTRUCTION MACHINE

(57) In an information providing system for a construction machine, the system transmitting and receiving information regarding the construction machine, the system comprises a plurality of information terminals (4) provided on the side of users or owners of hydraulic excavators (1), a main server (5) provided on the side of a manufacturer of the hydraulic excavators, and an intermediate server (6) provided on the side of a dealer in charge of services presented to the users or the owners. The main server (5) obtains data regarding machine operation of each hydraulic excavator (1) via information communication and stores the obtained data in a database (5A), and outputs the obtained data regarding the machine operations of the plurality of hydraulic excavators (1), as basic information for services presented to the users or the owners, to the intermediate server (6). The intermediate server (6) outputs, to the corresponding information terminal (4), the basic information directly or after optionally selecting the basic information. Each of the information terminals (4) receives. the basic information or information resulting from the basic information from the intermediate server (6), and displays the received information on a display unit 4B, as service information presented to the user or the owner, in a predetermined form.

*FIG.3*

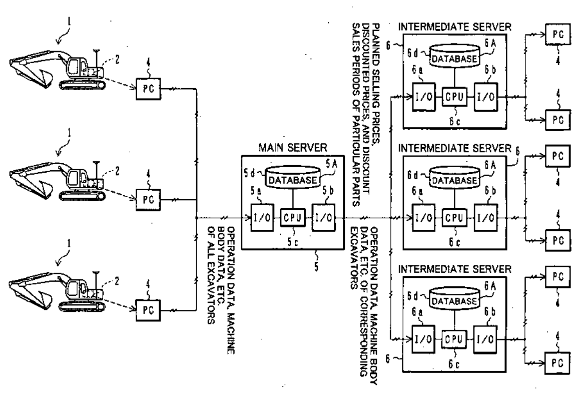


EP 1 513 086 A1

## Description

Technical Field

The present invention relates to an information providing system for a construction machine. More particularly, the present invention relates to an information providing system for a machine is used in mining and an information providing method for a machine is used in mining, which can give sufficiently satisfied care to the customer side with careful consideration.

Background Art

Maintenance of machines are used in mining, such as hydraulic excavators, has conventionally been performed by servicemen who periodically make the round of their assigned areas. The servicemen measure operation data of the hydraulic construction machines and component parts thereof, and predict the life of each component based on design data and experiences. Then, the servicemen manage the timing of maintenance and other information to prevent the occurrence of troubles.

On the other hand, as disclosed in, e.g., JP,A 2000-259729, an information providing system for a construction machine is already known in which, by utilizing the recent information and communication technology, information, such as operation data, of construction machines distributed all over the world is transmitted to one place so that the information of all the construction machines is collected and managed in a centralized manner based on the transmitted data.

With that prior-art system, the operating status of each construction machine is detected as operation data by an operation sensor, and the detected operation data is periodically transmitted by an operation data communicating device to a support center installed in one place. The support center receives the transmitted operation data and records it in a main database. Based on the recorded operation data, the support center predicts a possibility of the occurrence of troubles for each construction machine and automatically outputs a report. The system having such a construction liberates the servicemen from skills otherwise required in prediction of troubles and enables the prediction of troubles to be always made at a certain level of accuracy.

Disclosure of the Invention

In the field of construction machines, it is general that construction machine makers are engaged only in manufacturing the construction machine and actual marketing of the manufactured construction machine is performed via a plurality of selling companies (so-called dealers), branch offices, etc. Therefore, business for selling parts and customer service business, such as repair, replacement and maintenance, for the construction machines after being sold are handled by not the construction machine makers, but by the selling companies, etc. The selling companies, etc. are, for example, medium- or small-sized firms having close relations to local communities. They are usually in direct contact with customers after the time of purchasing of the machines and are well acquainted with specific situations and environments (such as natural environment, economical environment, legal situation, cultural background, and labor environment) for each local area and each customer. Based on those stances and knowledge, the selling companies, etc. can give sufficiently satisfied and appropriate care to the customers with careful consideration.

With the prior-art system described above, however, the information of all construction machines distributed all over the world is collected to one place, i.e., by one support center installed in a construction machine maker, for example, and is managed in a centralized manner. The occurrence of troubles, etc. is then predicted based on the collected information. Accordingly, a report on prediction as to the occurrence of troubles is outputted in accordance with only the judgment on the side of the maker, who has no direct contact with the customers, while bypassing the selling companies, etc. who are actually engaged in the marketing business and the service business. As a result, there is a fear that, looking from the customer side, sufficiently careful consideration is not paid and care becomes unsatisfied in such points as that questions and demands raised from the customer side regarding the contents of the report are not thoroughly responded, and the information and format of the report are not responsive to the real request from the customer side.

The present invention has been made in view of the state of the art described above, and its object is to provide an information providing system for a construction machine and an information providing method for a construction machine, which can give sufficiently satisfied care to the customer side with careful consideration.

To achieve the above object, the present invention provides an information providing system for a construction machine, the system transmitting and receiving information regarding the construction machine, wherein the system includes a server for obtaining data regarding machine operations of a plurality of construction machines via information communication and storing the obtained data in a database, and for outputting the obtained data regarding the machine operations of the plurality of construction machines via information communication.

Also, to achieve the above object, the present invention provides an information providing system for a construction machine, the system transmitting and receiving information regarding the construction machine, wherein the system includes a server which is provided on the side of a manufacturer of the construction machine or a person commissioned from the manufacturer, which obtains data regarding machine operations of a plurality of construction machines via information communication and stores the obtained data in a database, and which outputs, via information communication, the obtained data regarding the machine operations of the plurality of construction machines, as basic information for services presented to a user or an owner of each construction machine, to an information terminal provided on the side of a serviceman in charge of the services or a supervisor supervising the serviceman.

In the present invention, the data regarding the machine operations of a plurality of construction machines is taken in via information communication by the server provided on the side of the manufacturer, etc. of the construction machine and then stored in the database, and it is also outputted to the side of the serviceman, etc. as basic information for the services. Based on the basic information for the service, the salesman, etc. can make a judgment by themselves and take actions depending on situations and demands of the customer (such as the user) with whom the serviceman, etc. usually keep direct contact. For example, the data can be displayed, as final service information, on the side of the user, etc. in a predetermined form. Further, the serviceman, etc. can go to the customer side to make explanation and analysis with regard to the contents of the information, the display form and so on, as required, in response to questions, demands, etc. from the customer side.

Thus, the functions required on the manufacture side are restricted to those ones of receiving and collecting data from a large number of hydraulic excavators and distributing the data, while a judgment made based on the distributed data regarding, e.g., what kinds of care should be finally presented to the customer, is left to the side of the serviceman, etc. taking charge of services in the closest relation to the customer. As a result, unlike the prior art in which all operations ranging from data reception to services are managed at one place in a centralized manner, sufficiently satisfied and proper care can be given to the customer side with careful consideration.

Further, to achieve the above object, the present invention provides an information providing system for a construction machine, the system transmitting and receiving information regarding the construction machine, wherein the system includes a server which is provided on the side of a manufacturer of the construction machine or a person commissioned from the manufacturer, which obtains, via information communication, data regarding machine operations of a plurality of construction machines from an information terminal provided on the side of a user or an owner of each construction machine, and stores the obtained data in a database, and which outputs, via information communication, the obtained data regarding the machine operations of the plurality of construction machines, as basic information for services presented to the user or the owner, to an information terminal provided on the side of a serviceman in charge of the services or a supervisor supervising the serviceman.

Further, to achieve the above object, the present invention provides an information providing system for a construction machine, the system transmitting and receiving information regarding the construction machine, wherein the system comprises an information terminal provided on the side of a user or an owner of a construction machine and being connectable to a portable terminal for obtaining data regarding machine operation of the construction machine; a first server provided on the side of a manufacturer of the construction machine or a person commissioned from the manufacturer, obtaining data regarding the machine operation of the corresponding construction machine from each information terminal via information communication and storing the obtained data in a database, and outputting the obtained data regarding the machine operations of a plurality of construction machines, as basic information for services presented to the user or the owner, via information communication; and a second server provided on the side of a serviceman in charge of the services or a supervisor supervising the serviceman, receiving the basic information from the first server, and outputting the basic information or information resulting from the basic information, the information terminal receiving the basic information or the information resulting from the basic information from the second server, and displaying the received information, as service information presented to the user or the owner, in a predetermined form.

Still further, to achieve the above object, the present invention provides an information providing system for a construction machine, the system transmitting and receiving information regarding the construction machine, wherein the system comprises a plurality of information terminals provided on the side of users or owners of construction machines, a first server provided on the side of a manufacturer of the construction machines or a person commissioned from the manufacturer, and a plurality of second servers provided in a hierarchical form on the side of a plurality of servicemen in charge of services presented to the users or the owners and on the side of a supervisor supervising the servicemen; wherein the first server obtains data regarding machine operation of each construction machine via information communication and stores the obtained data in a database, and outputs the obtained data regarding the machine operations of the plurality of construction machines, as basic information for services presented to the users or the owners, to the second server provided on the supervisor side via information communication; wherein the second server provided on the supervisor side outputs the basic information received from the first server to a plurality of other second servers provided on the serviceman side; wherein the plurality of second servers provided on the serviceman side receive the basic information from the second server provided on the supervisor side and output, to the plurality of corresponding information terminals, the basic information directly or after optionally selecting the basic information; and wherein the plurality of information terminals each receive the basic information or information resulting from the basic information from the second server provided on the corresponding serviceman side, and display the received information, as service information presented to the user or the owner, in a predetermined form.

Still further, to achieve the above object, the present invention provides an information providing system for a construction machine, the system transmitting and receiving information regarding the construction machine, wherein the system includes a second server which is provided on the side of a serviceman in charge of services presented to a user or an owner of the hydraulic excavator, or on the side of a supervisor supervising the serviceman, which receives, as basic information for the services, data regarding machine operations of a plurality of construction machines via information communication, the data being obtained by a first server provided on the side of a manufacturer of the construction machines or a person commissioned from the manufacturer, and which outputs the basic information or information resulting from the basic information to an information terminal provided on the side of the user or the owner such that the basic information or the information resulting from the basic information is displayed in a predetermined form as service information presented to the user or the owner.

Still further, to achieve the above object, the present invention provides an information providing system for a construction machine, the system transmitting and receiving information regarding the construction machine, wherein the system comprises a supervisor-side second server which is provided on the side of a supervisor supervising a plurality of servicemen in charge of services presented to users or owners of hydraulic excavators, and which receives, as basic information for the services, data regarding machine operations of a plurality of construction machines via information communication, the data being obtained by a first server provided on the side of a manufacturer of the construction machines or a person commissioned from the manufacturer; and a plurality of serviceman-side second servers which are provided on the side of the plurality of salesmen, and each of which receives the basic information from the supervisor-side second server and outputs, to a corresponding information terminal provided on the side of the user or the owner, the basic information directly or after optionally selecting the basic information, such that the basic information or the optionally selected basic information is displayed in a predetermined form as service information to the user or the owner of the hydraulic excavator.

Preferably, in the above information providing system for the construction machine, the information terminal includes display means for displaying the service information in a predetermined graphical format, and the display means rearranges the information from the second server to form a file each time when the information is obtained from each hydraulic excavator, and displays the file in relation to a machine number or a customer management-purposed machine name of the hydraulic excavator from which the file has been obtained, and a model name or a working site name of the relevant hydraulic excavator.

With those features, the customer can easily find out desired data on the customer side, and hence convenience for the customer can be increased.

Still further, to achieve the above object, the present invention provides an information providing system for a construction machine, the system transmitting and receiving information regarding the construction machine, wherein the system includes a server which is provided on the side of a manufacturer of the construction machine or a person commissioned from the manufacturer, which obtains data regarding machine operations of a plurality of construction machines via information communication and stores the obtained data in a database, and which outputs, via information communication, the obtained data regarding the machine operations of the plurality of construction machines, as basic information for sales to a user or an owner of each construction machine, to an information terminal provided on the side of a salesman or a supervisor supervising the serviceman.

In the present invention, the data regarding the machine operations of a plurality of construction machines is taken in via information communication by the server provided on the side of the manufacturer, etc. of the construction machine and then stored in the database, and it is also outputted to the side of the salesman, etc. as basic information for the sales. Based on the basic information for the sales, the salesman, etc. can make a judgment by themselves and take actions depending on situations and demands of the customer (such as the user) with whom the salesman, etc. usually keep direct contact. For example, the data can be displayed, as final sales information, on the side of the user, etc. in a predetermined form. Further, the salesman, etc. can go to the customer side to make explanation and analysis with regard to the contents of the information, the display form and so on, as required, in response to questions, demands, etc. from the customer side.

Thus, the functions required on the manufacture side are restricted to those ones of receiving and collecting data from a large number of hydraulic excavators and distributing the data, while a judgment based on the distributed data regarding, e.g., what kinds of care should be finally presented to the customer, is left to the side of the salesman, etc. taking charge of sales in the closest relation to the customer. As a result, unlike the prior art in which all operations ranging from data reception to services are managed at one place in a centralized manner, sufficiently satisfied and proper care can be given to the customer side with careful consideration.

Still further, to achieve the above object, the present invention provides an information providing system for a construction machine, the system transmitting and receiving information regarding the construction machine, wherein the system includes a server which is provided on the side of a manufacturer of the construction machine or a person commissioned from the manufacturer, which obtains, via information communication, data regarding machine operations of a plurality of construction machines from an information terminal provided on the side of a user or an owner of each construction machine, and stores the obtained data in a database, and which outputs, via information communication, the obtained data regarding the machine operations of the plurality of construction machines, as basic information for sales to the user or the owner, to an information terminal provided on the side of a salesman or a supervisor supervising the salesman.

Still further, to achieve the above object, the present invention provides an information providing system for a construction machine, the system transmitting and receiving information regarding the construction machine, wherein the system comprises an information terminal provided on the side of a user or an owner of a construction machine and being connectable to a portable terminal for obtaining data regarding machine operation of the construction machine; a first server provided on the side of a manufacturer of the construction machine or a person commissioned from the manufacturer, obtaining data regarding the machine operation of the corresponding construction machine from each information terminal via information communication and storing the obtained data in a database, and outputting the obtained data regarding the machine operations of a plurality of construction machines, as basic information for sales to the user or the owner, via information communication; and a second server provided on the side of a salesman or a supervisor supervising the salesman, receiving the basic information from the first server, and outputting the basic information or information resulting from the basic information, the information terminal receiving the basic information or the information resulting from the basic information from the second server, and displaying the received information, as sales information presented to the user or the owner, in a predetermined form.

Still further, to achieve the above object, the present invention provides an information providing system for a construction machine, the system transmitting and receiving information regarding the construction machine, wherein the system comprises a plurality of information terminals provided on the side of users or owners of construction machines, a first server provided on the side of a manufacturer of the construction machines or a person commissioned from the manufacturer, and a plurality of second servers provided in a hierarchical form on the side of a plurality of salesmen in charge of sales to the users or the owners and on the side of a supervisor supervising the salesmen; wherein the first server obtains data regarding machine operation of each construction machine via information communication and stores the obtained data in a database, and outputs the obtained data regarding the machine operations of the plurality of construction machines, as basic information for sales to the users or the owners, to the second server provided on the supervisor side via information communication; wherein the second server provided on the supervisor side outputs the basic information received from the first server to a plurality of other second servers provided on the serviceman side; wherein the plurality of second servers provided on the serviceman side receive the basic information from the second server provided on the supervisor side and output, to the plurality of corresponding information terminals, the basic information directly or after optionally selecting the basic information, and wherein the plurality of information terminals each receive the basic information or information resulting from the basic information from the second server provided on the corresponding serviceman side, and display the received information, as sales information presented to the user or the owner, in a predetermined form.

Still further, to achieve the above object, the present invention provides an information providing system for a construction machine, the system transmitting and receiving information regarding the construction machine, wherein the system includes a second server which is provided on the side of a salesman in charge of sales to a user or an owner of the hydraulic excavator, or on the side of a supervisor supervising the serviceman, which receives, as basic information for the sales, data regarding machine operations of a plurality of construction machines via information communication, the data being obtained by a first server provided on the side of a manufacturer of the construction machines or a person commissioned from the manufacturer, and which outputs the basic information or information resulting from the basic information to an information terminal provided on the side of the user or the owner such that the basic information or the information resulting from the basic information is displayed in a predetermined form as sales information presented to the user or the owner.

Still further, to achieve the above object, the present invention provides an information providing system for a construction machine, the system transmitting and receiving information regarding the construction machine, wherein the system comprises a supervisor-side second server which is provided on the side of a supervisor supervising a plurality of servicemen in charge of sales to users or owners of hydraulic excavators, and which receives, as basic information for the sales, data regarding machine operations of a plurality of construction machines via information communication, the data being obtained by a first server provided on the side of a manufacturer of the construction machines or a person commissioned from the manufacturer; and a plurality of serviceman-side second servers which are provided on the side of the plurality of salesmen, and each of which receives the basic information from the supervisor-side second server and outputs, to a corresponding information terminal provided on the side of the user or the owner, the basic information directly or after optionally selecting the basic information, such that the basic information or the optionally selected basic information is displayed in a predetermined form as sales information presented to the user or the owner of the hydraulic excavator.

Preferably, in the above information providing system for the construction machine, the information terminal includes display means for displaying the sales information in a predetermined graphical format, and the display means rearranges the information from the second server to form a file each time when the information is obtained from each hydraulic excavator, and displays the file in relation to a machine number or a customer management-purposed machine name of the hydraulic excavator from which the file has been obtained, and a model name or a working site name of the relevant hydraulic excavator.

More preferably, in the above information providing system for the construction machine, the display means displays a list of the information from the second server, the list including the model name, the machine number corresponding to the model name, and a name of the file corresponding to the machine number, which are arranged in this order in a tree form.

Preferably, in the above information providing system for the construction machine, the display means displays a list of the information from the second server, the list including the working site name, the customer-management machine name corresponding to the working site name, and a name of the file corresponding to the customer-management machine name, which are arranged in this order in a tree form.

Preferably, in the above information providing system for the construction machine, the display means includes simultaneous display instructing means for simultaneously displaying the contents of the plural files on one screen image.

With those features, it is possible to more easily make comparative analysis of the contents of a plurality of files, and to further improve serviceability.

Furthermore, preferably, in the above information providing system for the construction machine, the display means displays, of the data in the file, change in load factor of an engine equipped in the hydraulic excavator or in pressure frequency of hydraulic actuators associated with a front operating mechanism in a color-coded representation depending on the magnitudes of numerical values of the load factor or the pressure frequency.

With those features, it is possible to recognize the load rate of the engine (i.e., degree of fuel consumption) or the excavation load imposed on the front operating mechanism, for example, at a glance, and hence to easily carry out management and evaluation of operating situations of each construction machine or characteristics of the working site.

Preferably, in the above information providing system for the construction machine, the display means displays, of the data in the file, values of an operation time and a non-operation time within a run time of the hydraulic excavator along with percentages of the values with respect to the run time.

With that feature, a comparison can be more easily made between a plurality of files (including the hydraulic excavators of different machine numbers and different models) in which absolute values of respective run times differ from each other.

Preferably, in the above information providing system for the construction machine, the server or the first server has the functions of obtaining data regarding operation per component section in a plurality of construction machines via information communication, computing, based on the obtained data, the repair/replacement timing of a part belonging to the component section for each of the construction machines, confirming parts having the repair/replacement timings substantially matched with each other among the plurality of construction machines, deciding a planned selling price of the confirmed parts depending on a quantity thereof, and outputting the planned selling price as the basic information via information communication.

In the present invention, the data regarding the operation per component section in a plurality of construction machines is taken in via information communication by the server provided on the side of the manufacturer, etc. of the construction machine and then stored in the database, for example. Further, the part repair/replacement timing is computed for each of the hydraulic excavators. Such processing is executed for all of the hydraulic excavators, and the parts having the repair/replacement timings substantially matched with each other are extracted and confirmed from among the many hydraulic excavators.

On the premise that the relevant parts are collectively repaired or replaced in all of the thus-extracted hydraulic excavators, productivity, distribution efficiency, etc. could be increased and hence the repair/replacement cost estimated for each hydraulic excavator could be greatly reduced. In view of that, the planned selling price of the relevant part is decided while reflecting a cost reduction depending on the number of the parts to be repaired or replaced, and then outputted as the basic information for services or the basic information for sales to the side of the serviceman or the salesman, etc. Furthermore, the serviceman or the salesman, etc. display the basic information, as final services information or final sales information, in a predetermined form to the customer side.

Thus, by advantageously utilizing a scale merit resulting from the capability of predicting the part repair/replacement timings of the many hydraulic excavators and by performing repair or replacement of a particular part for the many hydraulic excavators in a collective manner, it is possible to improve productivity, distribution efficiency, etc., and to greatly reduce the repair/replacement cost estimated for each hydraulic excavator. Consequently, a burden imposed on the customer side can be noticeably reduced.

Preferably, in the above information providing system for the construction machine, the server or the first server has the functions of obtaining data regarding operation per component section in a plurality of construction machines via information communication, computing, based on the obtained data, the repair/replacement timing of a part belonging to the component section for each of the construction machines, confirming parts having the repair/replacement timings substantially matched with each other among the plurality of construction machines, deciding, for the confirmed parts, a discount sales period substantially the same as or prior to the repair/replacement timing thereof and a discount selling price during the discount sales period, and outputting the discount sales period and the discount selling price as the basic information via information communication.

With those features, besides the effect described above, the side of the serviceman, etc. can obtain an effect of positively ensuring a profit and promotion of sales with advanced booking, while the customer side can obtain an effect of further reducing a cost burden based on setting of the discount selling price.

Preferably, in the above information providing system for the construction machine, the information terminal is connectable to the portable terminal for obtaining data regarding operation per component section of the construction machine; the first server obtains the data regarding the operation per component section of the corresponding construction machine from each information terminal via information communication and stores the obtained data in the database, computes, based on the data stored in the database, the repair/replacement timing of a part belonging to the component section for each of the construction machines, confirms parts having the repair/replacement timings substantially matched with each other among the plurality of construction machines, decides a planned-selling price of the confirmed parts depending on a quantity thereof, and outputs the planned selling price as the basic information to the second server via information communication; the second server outputs the basic information received from the first server or the information resulting from the basic information to the information terminal; and the information terminal displays the information received from the second server, as the service information or the sales information, in a predetermined form.

Preferably, in the above information providing system for the construction machine, the information terminal is connectable to the portable terminal for obtaining data regarding operation per component section of the construction machine; the first server obtains the data regarding the operation per component section of the corresponding construction machine from each information terminal via information communication and stores the obtained data in the database, computes, based on the data stored in the database, the repair/replacement timing of a part belonging to the component section for each of the construction machines, confirms parts having the repair/replacement timings substantially matched with each other among the plurality of construction machines, decides, for the confirmed parts, a discount sales period substantially the same as or prior to the repair/replacement timing thereof and a discount selling price during the discount sales period, and outputs the discount sales period and the discount selling price, as the basic information, to the second server via information communication; the second server outputs the basic information received from the first server or the information resulting from the basic information to the information terminal, and the information terminal displays the information received from the second server, as the service information or the sales information presented to the user or the owner, in a predetermined form.

Preferably, in the above information providing system for the construction machine, the server or the first server has the functions of obtaining data regarding operation per component section of the construction machine via information communication, computing, based on the obtained data, future change in machine management cost of the construction machine and future change in machine value of the construction machine, as well as the timing at which the machine management cost and the machine value become substantially equal to each other, computing, when a particular part belonging to the component section is to be repaired or replaced before the computed timing, subsequent change in machine management cost of the construction machine and subsequent change in machine value of the construction machine resulting after the repair/replacement of the particular part, and outputting at least the subsequent change in machine management cost and the subsequent change in machine value after the repair/replacement, as the service information or the sales information presented to the user or the owner of the corresponding construction machine, via information communication.

In the present invention, the data regarding the operation per component section in a plurality of construction machines is taken in via information communication by the server provided on the side of the manufacturer, etc. of the construction machine and then stored in the database. Further, future changes in both machine management cost and machine value are computed for each construction machine, and the timing at which the machine management cost and the machine value become substantially equal to each other is also computed.

In the past, it was usual to recommend the customer to purchase a new machine substituted for an old one at that timing. Recently, however, there have increased needs for more effectively employing the currently owned old machines for a longer period through repair/replacement of parts. If the user side takes an action for prolonging the machine life, for example, by repairing or replacing at least one particular part (e.g., several or many parts having the repair/replacement timings close to each other, or a particular part having an effect of prolonging the life of the overall machine), a curve representing the machine management cost (= curve representing the repair/replacement cost estimated for the overall machine) slides toward the longer life side (i.e., the lower cost side), and a curve representing the overall machine value (= curve representing the trade-in cost) also slides toward the longer life side (i.e., the higher value side). With that point in mind, in the present invention, assuming the case that the particular part is repaired or replaced before the timing at which the machine management cost and the machine value become substantially equal to each other, subsequent changes in both machine management cost and machine value after the repair/replacement in such a case are computed. Then, at least those subsequent changes in both machine management cost and machine value after the repair/replacement (i.e., the above-mentioned sliding of the curves toward the longer life side than that estimated for the case before the repair/replacement of the part) are outputted, as the services or sales information (basic information), to the side of the serviceman, etc. The outputted information is displayed, as final services or sales information, in a predetermined form to the customer side by the serviceman or the salesman, for example.

Thus, since the user side can obtain at least the subsequent changes in both machine management cost and machine value after the repair/replacement of the part, i.e., the above-mentioned sliding of the curves toward the longer life side (lower cost side for the machine management cost curve and higher value side for machine value curve) than that estimated for the case before the repair/replacement of the part. It is hence possible to properly determine at the user's own discretion as to, for example, when and how the part is to be repaired or replaced, and how long the machine life can be extended. As a result, the user can effectively utilize the machine possessed by himself at a sufficiently satisfied level.

Preferably, in the above information providing system for a construction machine, the server or the first server has the functions of obtaining data regarding operation per component section of the construction machine via information communication, computing, based on the obtained data, future change in machine management cost of the construction machine and future change in machine value of the construction machine, as well as the timing at which the machine management cost and the machine value become substantially equal to each other, computing, when a particular part belonging to the component section is to be repaired or replaced before the computed timing, subsequent change in machine management cost of the construction machine and subsequent change in machine value of the construction machine resulting after the repair/replacement of the particular part, and outputting the subsequent change in machine management cost and the subsequent change in machine value after the repair/replacement along with the future change in machine management cost and the future change in machine value of the construction machine, as the service information or the sales information presented to the user or the owner of the corresponding construction machine, via information communication.

Since the user side can obtain not only the subsequent changes in both machine management cost and machine value after the repair/replacement of the particular part, but also the changes in both machine management cost and machine value estimated for the case before the repair/replacement, it is possible to more exactly recognize the sliding of the curves toward the longer life side, and to reliably make an appropriate decision.

Preferably, in the above information providing system for the construction machine, the server or the first server outputs at least the subsequent change in machine management cost and the subsequent change in machine value after the repair/replacement, as data capable of being graphically displayed in the form of curves, via information communication.

Preferably, in the above information providing system for the construction machine, the information terminal is connectable to the portable terminal for obtaining data regarding operation per component section of the construction machine; the first server obtains the data regarding the operation per component section of the construction machine from the information terminal via information communication and stores the obtained data in the database, computes, based on the data stored in the database, future change in machine management cost of the construction machine and future change in machine value of the construction machine, as well as the timing at which the machine management cost and the machine value become substantially equal to each other, computes, when a particular part belonging to the component section is to be repaired or replaced before the computed timing, subsequent change in machine management cost of the construction machine and subsequent change in machine value of the construction machine resulting after the repair/replacement of the particular part, and outputs at least the subsequent change in machine management cost and the subsequent change in machine value after the repair/replacement, as the basic information, to the second server via information communication; the second server outputs, to the information terminal, the basic information received from the first server directly or after processing or optionally selecting the basic information; and the information terminal displays the information received from the second server, as the service information or the sales information, in a predetermined form.

Preferably, in the above information providing system for the construction machine, the information terminal is connectable to the portable terminal for obtaining data regarding operation per component section of the construction machine; the first server obtains the data regarding the operation per component section of the construction machine from the information terminal via information communication and stores the obtained data in the database, computes, based on the data stored in the database, future change in machine management cost of the construction machine and future change in machine value of the construction machine, as well as the timing at which the machine management cost and the machine value become substantially equal to each other, computes, when a particular part belonging to the component section is to be repaired or replaced before the computed timing, subsequent change in machine management cost of the construction machine and subsequent change in machine value of the construction machine resulting after the repair/replacement of the particular part, and outputs at least the subsequent change in machine management cost and the subsequent change in machine value after the repair/replacement along with the future change in machine management cost and the future change in machine value of the construction machine, as the basic information, to the second server via information communication; the second server outputs, to the information terminal, the basic information received from the first server directly or after processing or optionally selecting the basic information; and the information terminal displays the information received from the second server, as the service information or the sales information, in a predetermined form.

More preferably, in the above information providing system for the construction machine, the server or the first server outputs at least the subsequent change in machine management cost and the subsequent change in machine value after the repair/replacement, as data capable of being graphically displayed in the information terminal in the form of curves, to the second server via information communication.

In addition, to achieve the above object, the present invention provides an information providing method for a construction machine, the method comprising the steps of obtaining data regarding machine operations of a plurality of construction machines via information communication, and outputting, via information communication, the obtained data regarding the machine operations of the plurality of construction machines, as basic information for services and/or sales made to a user or an owner of each construction machine, to a serviceman, a salesman or a supervisor supervising the serviceman and/or the salesman.

Also, to achieve the above object, the present invention provides an information providing method for a construction machine, the method comprising the steps of obtaining, via information communication, data regarding machine operations of a plurality of construction machines from an information terminal provided on the side of a user or an owner of each construction machine, and outputting, via information communication, the obtained data regarding the machine operations of the plurality of construction machines, as basic information for services and/or sales made to the user or the owner, to the side of a serviceman, a salesman or a supervisor supervising the serviceman and/or the salesman.

Preferably, in the above information providing method for the construction machine, the method further comprises the steps of computing, based on the data obtained via information communication, the repair/replacement timing of a part belonging to the component section for each of the construction machines, confirming parts having the repair/replacement timings substantially matched with each other among the plurality of construction machines, deciding a planned selling price of the confirmed parts depending on a quantity thereof, and outputting the planned selling price as the service information and/or the sales information via information communication.

Preferably, in the above information providing method for the construction machine, the method further comprises the steps of computing, based on the data obtained via information communication, the repair/replacement timing of a part belonging to the component section for each of the construction machines, confirming parts having the repair/replacement timings substantially matched with each other among the plurality of construction machines, deciding, for the confirmed parts, a discount sales period prior to the repair/replacement timing thereof and a discount selling price during the discount sales period, and outputting the discount sales period and the discount selling price as the service information and/or the sales information via information communication.

Preferably, in the above information providing method for the construction machine, the method further comprises the steps of computing, based on the data obtained via information communication, future change in machine management cost of the construction machine and future change in machine value of the construction machine, as well as the timing at which the machine management cost and the machine value become substantially equal to each other, computing, when a particular part belonging to the component section is to be repaired or replaced before the computed timing, subsequent change in machine management cost of the construction machine and subsequent change in machine value of the construction machine resulting after the repair/replacement of the particular part, and outputting at least the subsequent change in machine management cost and the subsequent change in machine value after the repair/replacement, as the service information and/or the sales information, via information communication.

Preferably, in the above information providing method for the construction machine, the method further comprises the steps of computing, based on the data obtained via information communication, future change in machine management cost of the construction machine and future change in machine value of the construction machine, as well as the timing at which the machine management cost and the machine value become substantially equal to each other, computing, when a particular part belonging to the component section is to be repaired or replaced before the computed timing, subsequent change in machine management cost of the construction machine and subsequent change in machine value of the construction machine resulting after the repair/replacement of the particular part, and outputting the subsequent change in machine management cost and the subsequent change in machine value after the repair/replacement along with the future change in machine management cost and the future change in machine value of the construction machine, as the service information and/or the sales information, via information communication.

Brief Description of the Drawings

Fig. 1 is an overall schematic view of one embodiment of an information providing system for a construction machine according to the present invention.

Fig. 2 is a diagram showing a schematic construction of one example of a hydraulic system equipped in a hydraulic excavator, along with sensors, to which the one embodiment of the information providing system for the construction machine, shown in Fig. 1, according to the present invention is applied.

Fig. 3 is a conceptual block diagram showing a flow of information in the one embodiment of the information providing system for the construction machine, shown in Fig. 1, according to the present invention.

Fig. 4 is a block diagram showing a functional construction of a machine side controller constituting the one embodiment of the information providing system for the construction machine according to the present invention.

Fig. 5 is a flowchart showing the function of collecting an operation time for each component of a hydraulic excavator, which is executed by a CPU in the machine side controller constituting the one embodiment of the information providing system for the construction machine according to the present invention.

Fig. 6 is a representation showing one example of a data structure used when data is downloaded to a portable terminal from the machine side controller constituting the one embodiment of the information providing system for the construction machine according to the present invention.

Fig. 7 is a functional block diagram showing a functional construction of a user-side personal computer constituting the one embodiment of the information providing system for the construction machine according to the present invention.

Fig. 8 is a representation showing details of programs stored in a program storage area of the user-side personal computer constituting the one embodiment of the information providing system for the construction machine according to the present invention.

Fig. 9 is an illustration showing a standard screen layout employed when processing operation data, which has been stored in a data storage area of a storage device by a data taking-in program, by using a data processing program and displaying the processed data on a display unit in the user-side personal computer constituting the one embodiment of the information providing system for the construction machine according to the present invention.

Fig. 10 is an illustration showing a display example of a first graph selection area displayed on the display unit of the user-side personal computer constituting the one embodiment of the information providing system for the construction machine according to the present invention.

Fig. 11 is a flowchart showing a sequence of processing steps executed by a life data processing program stored in the program storage area in the user-side personal computer constituting the one embodiment of the information providing system for the construction machine according to the present invention.

Fig. 12 is an illustration showing one example of a screen image graphically displaying life data, which has been processed by the life data processing program, on the display unit of the user-side personal computer constituting the one embodiment of the information providing system for the construction machine according to the present invention.

Fig. 13 is an illustration showing one example of a screen image displaying the life data in the form of a list on the display unit of the user-side personal computer constituting the one embodiment of the information providing system for the construction machine according to the present invention.

Fig. 14 is an illustration showing another example of the screen image graphically displaying the life data on the display unit of the user-side personal computer constituting the one embodiment of the information providing system for the construction machine according to the present invention.

Fig. 15 is an illustration showing one example of a screen image displaying the life data, which corresponds to the graphical representation of Fig. 14, in the form of a list on the display unit of the user-side personal computer constituting the one embodiment of the information providing system for the construction machine according to the present invention.

Fig. 16 is a flowchart showing one example of a sequence of processing steps executed by a daily data processing program stored in the program storage area in the user-side personal computer constituting the one embodiment of the information providing system for the construction machine according to the present invention.

Fig. 17 is an illustration showing one example of a screen image displaying daily data, which has been processed by the daily data processing program, on the display unit of the user-side personal computer constituting the one embodiment of the information providing system for the construction machine according to the present invention.

Fig. 18 is a flowchart showing another example of a sequence of processing steps executed by the daily data processing program stored in the program storage area in the user-side personal computer constituting the one embodiment of the information providing system for the construction machine according to the present invention.

Fig. 19 is an illustration showing another example of the screen image graphically displaying daily data, which has been processed by the daily data processing program, on the display unit of the user-side personal computer constituting the one embodiment of the information providing system for the construction machine according to the present invention.

Fig. 20 is a flowchart showing one example of a sequence of processing steps executed by an hours data processing program stored in the program storage area in the user-side personal computer constituting the one embodiment of the information providing system for the construction machine according to the present invention.

Fig. 21 is an illustration showing one example of a screen image graphically displaying hours data, which has been processed by the hours data processing program, on the display unit of the user-side personal computer constituting the one embodiment of the information providing system for the construction machine according to the present invention.

Fig. 22 is an illustration showing another example of the graphical screen image, shown in Fig. 21, displayed after being processed by the hours data processing program on the display unit of the user-side personal computer constituting the one embodiment of the information providing system for the construction machine according to the present invention, in which engine non-run time zones are displayed in a color.

Fig. 23 is a flowchart showing one example of a sequence of processing steps executed by the hours data processing program stored in the program storage area in the user-side personal computer constituting the one embodiment of the information providing system for the construction machine according to the present invention.

Fig. 24 is an illustration showing another example of the screen image graphically displaying hours data, which has been processed by the hours data processing program, on the display unit of the user-side personal computer constituting the one embodiment of the information providing system for the construction machine according to the present invention.

Fig. 25 is an illustration showing one example of a screen image displaying the hours data in the form of a list on the display unit of the user-side personal computer constituting the one embodiment of the information providing system for the construction machine according to the present invention.

Fig. 26 is a flowchart showing one example of a sequence of processing steps executed by a ratio data processing program stored in the program storage area in the user-side personal computer constituting the one embodiment of the information providing system for the construction machine according to the present invention.

Fig. 27 is an illustration showing one example of a screen image graphically displaying ratio data, which has been processed by the ratio data processing program, on the display unit of the user-side personal computer constituting the one embodiment of the information providing system for the construction machine according to the present invention.

Fig. 28 is a flowchart showing one example of a sequence of processing steps executed by the ratio data processing program stored in the program storage area in the user-side personal computer constituting the one embodiment of the information providing system for the construction machine according to the present invention.

Fig. 29 is an illustration showing another example of the screen image graphically displaying ratio data, which has been processed by the ratio data processing program, on the display unit of the user-side personal computer constituting the one embodiment of the information providing system for the construction machine according to the present invention.

Fig. 30 is a flowchart showing a sequence of processing steps executed by a summary data processing program stored in the program storage area in the user-side personal computer constituting the one embodiment of the information providing system for the construction machine according to the present invention.

Fig. 31 is an illustration showing one example of a screen image graphically displaying summary data, which has been processed by the summary data processing program, on the display unit of the user-side personal computer constituting the one embodiment of the information providing system for the construction machine according to the present invention.

Fig. 32 is an illustration showing one example of a screen image displaying the summary data in the form of a list on the display unit of the user-side personal computer constituting the one embodiment of the information providing system for the construction machine according to the present invention.

Fig. 33 is an illustration showing another example of the screen image graphically displaying the summary data on the display unit of the user-side personal computer constituting the one embodiment of the information providing system for the construction machine according to the present invention.

Fig. 34 is an illustration showing one example of a screen image displaying the life data in the form of a list, which corresponds to the graphical screen image of Fig. 33, on the display unit of the user-side personal computer constituting the one embodiment of the information providing system for the construction machine according to the present invention.

Fig. 35 is a flowchart showing a sequence of processing steps executed by a utilization data processing program stored in the program storage area in the user-side personal computer constituting the one embodiment of the information providing system for the construction machine according to the present invention.

Fig. 36 is an illustration showing one example of a screen image graphically displaying utilization data, which has been processed by the utilization data processing program, on the display unit of the user-side personal computer constituting the one embodiment of the information providing system for the construction machine according to the present invention.

Fig. 37 is an illustration showing another example of the screen image graphically displaying utilization data, which has been processed by the utilization data processing program, on the display unit of the user-side personal computer constituting the one embodiment of the information providing system for the construction machine according to the present invention.

Fig. 38 is a flowchart showing another example of a sequence of processing steps executed by the utilization data processing program stored in the program storage area in the user-side personal computer constituting the one embodiment of the information providing system for the construction machine according to the present invention.

Fig. 39 is an illustration showing one example of the screen image graphically displaying utilization data, which has been processed by the utilization data processing program, on the display unit of the user-side personal computer constituting the one embodiment of the information providing system for the construction machine according to the present invention.

Fig. 40 is an illustration showing another example of the screen image graphically displaying utilization data, which has been processed by the utilization data processing program, on the display unit of the user-side personal computer constituting the one embodiment of the information providing system for the construction machine according to the present invention.

Fig. 41 is a flowchart showing one example of a sequence of blowby data processing steps executed by a blowby & fuel-consumption-rate data processing program stored in the program storage area in the user-side personal computer constituting the one embodiment of the information providing system for the construction machine according to the present invention.

Fig. 42 is an illustration showing one example of a screen image graphically displaying blowby data, which has been processed by the blowby & fuel-consumption-rate data processing program, on the display unit of the user-side personal computer constituting the one embodiment of the information providing system for the construction machine according to the present invention.

Fig. 43 is a flowchart showing one example of a sequence of fuel-consumption-rate data processing steps executed by the blowby & fuel-consumption-rate data processing program stored in the program storage area in the user-side personal computer constituting the one embodiment of the information providing system for the construction machine according to the present invention.

Fig. 44 is an illustration showing one example of a screen image graphically displaying fuel consumption rate data, which has been processed by the blowby & fuel-consumption-rate data processing program, on the display unit of the user-side personal computer constituting the one embodiment of the information providing system for the construction machine according to the present invention.

Fig. 45 is a flowchart showing one example of a sequence of event/alarm and other data processing steps executed by an event/alarm and other data processing program stored in the program storage area in the user-side personal computer constituting the one embodiment of the information providing system for the construction machine according to the present invention.

Fig. 46 is an illustration showing one example of a screen image displaying data, which has been processed by the event/alarm and other data processing program, on the display unit of the user-side personal computer constituting the one embodiment of the information providing system for the construction machine according to the present invention.

Fig. 47 is an illustration showing one example of a screen image displaying the data in the form of a list on the display unit of the user-side personal computer constituting the one embodiment of the information providing system for the construction machine according to the present invention.

Fig. 48 is an illustration showing one example of a screen image displaying the data in the form of a list on the display unit of the user-side personal computer constituting the one embodiment of the information providing system for the construction machine according to the present invention.

Fig. 49 is a flowchart showing one example of a sequence of event/alarm and other data processing steps executed by a histogram processing program stored in the program storage area in the user-side personal computer constituting the one embodiment of the information providing system for the construction machine according to the present invention.

Fig. 50 is an illustration showing one example of a screen image graphically displaying histogram data, which has been processed by the histogram processing program, on the display unit of the user-side personal computer constituting the one embodiment of the information providing system for the construction machine according to the present invention.

Fig. 51 is an illustration showing another example of the screen image graphically displaying histogram data, which has been processed by the histogram processing program, on the display unit of the user-side personal computer constituting the one embodiment of the information providing system for the construction machine according to the present invention.

Fig. 52 is an illustration showing still another example,of the screen image graphically displaying histogram data, which has been processed by the histogram processing program, on the display unit of the user-side personal computer constituting the one embodiment of the information providing system for the construction machine according to the present invention.

Fig. 53 is an illustration showing still another example of the screen image graphically displaying histogram data, which has been processed by the histogram processing program, on the display unit of the user-side personal computer constituting the one embodiment of the information providing system for the construction machine according to the present invention.

Fig. 54 is an illustration showing still another example of the screen image graphically displaying histogram data, which has been processed by the histogram processing program, on the display unit of the user-side personal computer constituting the one embodiment of the information providing system for the construction machine according to the present invention.

Fig. 55 is an illustration showing still another example of the screen image graphically displaying histogram data, which has been processed by the histogram processing program, on the display unit of the user-side personal computer constituting the one embodiment of the information providing system for the construction machine according to the present invention.

Fig. 56 is an illustration showing a display example of a second graph selection area and a menu button area both displayed on the display unit of the user-side personal computer constituting the one embodiment of the information providing system for the construction machine according to the present invention.

Fig. 57 is an illustration showing an example of an option setting screen displayed upon clicking of an "Option Setting (Option)" button in the menu button area that is displayed on the display unit of the user-side personal computer constituting the one embodiment of the information providing system for the construction machine according to the present invention.

Fig. 58 is an illustration showing a display example of a menu area displayed on the display unit of the user-side personal computer constituting the one embodiment of the information providing system for the construction machine according to the present invention.

Fig. 59 is an illustration showing an example of a detailed menu displayed as a pull-down menu upon clicking of a "File" menu in the menu area that is displayed on the display unit of the user-side personal computer constituting the one embodiment of the information providing system for the construction machine according to the present invention.

Fig. 60 is an illustration showing an example in which a multi-screen display button is provided, as simultaneous display instructing means for displaying a plurality of file data, graphs, etc. on one screen at the same time, in the menu button area that is displayed on the display unit of the user-side personal computer constituting the one embodiment of the information providing system for the construction machine according to the present invention.

Fig. 61 is a functional block diagram showing an outline of the processing functions of a CPU of a main server constituting the one embodiment of the information providing system for the construction machine according to the present invention.

Fig. 62 is a flowchart showing the processing function of a machine-body/operation data processing unit of the main server constituting the one embodiment of the information providing system for the construction machine according to the present invention, when machine-body/operation data is sent from the user-side personal computer.

Fig. 63 is a flowchart showing the function of processing product exchange information in a product-exchange and part-repair/replacement data processing unit of the main server constituting the one embodiment of the information providing system for the construction machine according to the present invention.

Fig. 64 is a flowchart showing the function of processing part repair/replacement information in the product-exchange and part-repair/replacement data processing unit of the main server constituting the one embodiment of the information providing system for the construction machine according to the present invention.

Fig. 65 is an illustration showing an arrangement of operation data, actual maintenance data, and exchange operation time data stored as a part of a database in the main server constituting the one embodiment of the information providing system for the construction machine according to the present invention.

Fig. 66 is a flowchart showing a sequence of steps for obtaining distribution data of the number of currently working machines per model with respect to an engine run time, which are executed by the machine-body/operation data processing unit of the main server constituting the one embodiment of the information providing system for the construction machine according to the present invention.

Fig. 67 is a histogram showing a distribution of the number of currently working hydraulic excavators of model X with respect to an operation time per hydraulic excavator as one example of distribution graphs which are created by the machine-body/operation data processing unit of the main server constituting the one embodiment of the information providing system for the construction machine according to the present invention.

Fig. 68 is a flowchart showing a sequence of steps for obtaining distribution data of the number of currently working machines with respect to an operation time per part, which are executed by the machine-body/operation data processing unit of the main server constituting the one embodiment of the information providing system for the construction machine according to the present invention.

Fig. 69 shows an example of the distribution graphs created by the machine-body/operation data processing unit of the main server constituting the one embodiment of the information providing system for the construction machine according to the present invention.

Fig. 70 shows an example of the distribution graphs created by the machine-body/operation data processing unit of the main server constituting the one embodiment of the information providing system for the construction machine according to the present invention.

Fig. 71 is a flowchart showing a sequence of steps for obtaining distribution data of the number of exchanged products, i.e., hydraulic excavators having been exchanged in the past, with respect to an operation time per hydraulic excavator, which are executed by the product-exchange and part-repair/replacement data processing unit of the main server constituting the one embodiment of the information providing system for the construction machine according to the present invention.

Fig. 72 shows an example of distribution graphs created by the product-exchange and part-repair/replacement data processing unit of the main server constituting the one embodiment of the information providing system for the construction machine according to the present invention.

Fig. 73 is a flowchart showing a sequence of steps for computing distribution data of the number of parts having been repaired or replaced in the past with respect to an operation time and obtaining a distribution graph of the number of repaired or replaced parts based on the calculated distribution data, which are executed by the product-exchange and part-repair/replacement data processing unit of the main server constituting the one embodiment of the information providing system for the construction machine according to the present invention.

Fig. 74 shows an example of the distribution graphs created by the product-exchange and part-repair/replacement data processing unit of the main server constituting the one embodiment of the information providing system for the construction machine according to the present invention.

Fig. 75 is a flowchart showing a sequence of steps for preparing a sales plan executed by a sales plan scheduling unit of the main server constituting the one embodiment of the information providing system for the construction machine according to the present invention.

Fig. 76 is a representation showing one example of a part sales list per customer, which is prepared by the sales plan scheduling unit of the main server constituting the one embodiment of the information providing system for the construction machine according to the present invention.

Fig. 77 is a representation showing one example of a part sales list per dealer, etc., which is prepared by the sales plan scheduling unit of the main server constituting the one embodiment of the information providing system for the construction machine according to the present invention.

Fig. 78 is a flowchart showing a sequence of steps for preparing a sales plan when a sales campaign is scheduled, which are executed by the sales plan scheduling unit of the main server constituting the one embodiment of the information providing system for the construction machine according to the present invention.

Fig. 79 is a representation showing one example of a part sales list per customer, which is prepared by the sales plan scheduling unit of the main server constituting the one embodiment of the information providing system for the construction machine according to the present invention, when a sales campaign is scheduled.

Fig. 80 is a representation showing one example of an advice note, which is prepared by a CPU of an intermediate server constituting the one embodiment of the information providing system for the construction machine according to the present invention and is then sent to a customer.

Fig. 81 is a representation showing one example of an advice note, which is prepared at the time of a sales campaign in the CPU of the intermediate server constituting the one embodiment of the information providing system for the construction machine according to the present invention and is then sent to a customer selected as a target of the sales campaign.

Fig. 82 is a flowchart showing a sequence of steps for preparing a sales plan executed by the sales plan scheduling unit of the main server constituting a modification in which a potential demand is predicted based on changes in machine management cost and machine value.

Fig. 83 is a graph representing the concept for predicting a potential demand in the sales plan scheduling unit of the main server constituting the modification in which the potential demand is predicted based on changes in machine management cost and machine value.

Fig. 84 is a representation showing one example of a part sales list per customer, which is prepared by the sales plan scheduling unit of the main server constituting the modification in which the potential demand is predicted based on changes in machine management cost and machine value.

Fig. 85 is a representation showing one example of a part sales list per dealer, etc., which is prepared by the sales plan scheduling unit of the main server constituting. the modification in which the potential demand is predicted based on changes in machine management cost and machine value.

Fig. 86 is a representation showing one example of main contents of an advice note sent to a customer, which is prepared by a CPU of an intermediate server constituting the modification in which the potential demand is predicted based on changes in machine management cost and machine value.

Fig. 87 is a representation showing one example of incidental information annexed to an advice note sent to a customer, which is prepared by the CPU of the intermediate server constituting the modification in which the potential demand is predicted based on changes in machine management cost and machine value.

Best Mode for Carrying Out the Invention

One embodiment of an information providing system for a construction machine according to the present invention will be described with reference to the drawings.

Fig. 1 is an overall schematic view of one embodiment of an information providing system for a construction machine according to the present invention. The information providing system comprises a machine-side controller 2 equipped in each of a plurality of hydraulic excavators 1 (representative one is only shown in Fig. 1) currently working in the fields, a portable terminal 3 connectable to the controller 2 via a cable 3a (including a wireless way), an information terminal (personal computer; hereinafter referred to as a "user-side personal computer") 4 which is placed in, e.g., an office or the like near the site where the hydraulic excavator 1 is operating and which is connectable to the portable terminal 3 via a cable 3a (including a wireless way), a main server 5 installed in, e.g., a maker manufacturing the hydraulic excavator 1 (or an information management firm, etc. commissioned from the maker), and an intermediate server 6 which is located in, e.g., each of medium- or small-sized areas (per country, district, provincial block (urban or rural prefecture), etc.) and which is installed in a selling company (dealer), a branch office, an agency or the like (hereinafter referred to as a "dealer, etc.") engaged in not only just selling, but also in service, such as maintenance, and marketing business directly to each user (customer). The user-side personal computer 4, the main server 5, and the intermediate server 6 are connected to each other via information communication using a communication line (such as the Internet via public communication lines).

The hydraulic excavator 1 comprises a travel body 12, a swing body 13 swingably mounted on the travel body 12, a cab 14 provided in a front left portion of the swing body 13, and a front operating mechanism (excavating device) 15 provided in a front central portion of the swing body 13 in vertically angularly movable manner. The front operating mechanism 15 is made up of a boom 16 rotatably mounted to the swing body 13, an arm 17 rotatably mounted to a fore end of the boom 16, and a bucket 18 rotatably mounted to a fore end of the arm 17.

While the hydraulic excavator 1 is shown in Fig. 1, by way of example, as the so-called super-large-sized excavator or large-sized excavator in class having the body weight of several hundreds tons, which is employed in oversea mines, for example, in many cases, applications of the present invention are not limited to that class of excavators. In other words, the present invention is also applicable to the so-called medium-sized excavator in class having the body weight of several tens tons (such as shown in Figs. 2 and 3 described later), which is most popularly employed in various construction work sites, etc. in Japan, and to the so-called mini-excavator in even smaller class which is employed in small-scaled work sites.

Fig. 2 is a diagram showing a schematic construction of one example of a hydraulic system equipped in the hydraulic excavator 1, along with sensors, to which the one embodiment of the information providing system for the construction machine, shown in Fig. 1, according- to the present invention is applied.

In Fig. 2, a hydraulic system 20 equipped in the hydraulic excavator 1 comprises, for example, hydraulic pumps 21a, 21b, boom control valves 22a, 22b, an arm control valve 23, a bucket control valve 24, a swing control valve 25, travel control valves 26a, 26b, a boom cylinder 27, an arm cylinder 28, a bucket cylinder 29, a swing motor 30, and travel motors 31a, 31b.

The hydraulic pumps 21a, 21b are driven for rotation by a diesel engine (hereinafter referred to simply as an "engine") 32 provided with a fuel injecting device (not shown) of the so-called electronic governor type, and deliver a hydraulic fluid (working oil). The control valves (regulation valves) 22a, 22b - 26a, 26b control respective flows (flow rates and flowing directions) of the hydraulic fluid supplied from the hydraulic pumps 21a, 21b to the hydraulic actuators 27 - 31a, 31b, and the hydraulic actuators 27 - 31a, 31b drive the boom 16, the arm 17, the bucket 18, the swing body 13, and the travel body 12. The hydraulic pumps 12a, 21b, the control valves 22a, 22b - 26a, 26b, and the engine 32 are mounted in an accommodation room (engine room) behind the swing body 13.

Control lever devices 33, 34, 35 and 36 are disposed corresponding to the control valves 22a, 22b to 26a, 26b. When a control lever of the control lever device 33 is manipulated in one X1 of two crossed directions, an arm-crowding pilot pressure or an arm-dumping pilot pressure is produced and applied to the arm control valve 23. When the control lever of the control lever device 33 is manipulated in the other X2 of the two crossed directions, a rightward-swing pilot pressure or a leftward-swing pilot pressure is produced and applied to the swing control valve 25.

When a control lever of the control lever device 34 is manipulated in one X3 of two crossed directions, a boom-raising pilot pressure or a boom-lowering pilot pressure is produced and applied to the boom control valves 22a, 22b. When the control lever of the control lever device 34 is manipulated in the other X4 of the two crossed directions, a bucket-crowding pilot pressure or a bucket-dumping pilot pressure is produced and applied to the bucket control valve 24. Further, when control levers of the control lever devices 35, 36 are manipulated, a left-travel pilot pressure and a right-travel pilot pressure are produced and applied to the travel control valves 26a, 26b. The control lever devices 33 to 36 are disposed in the cab 14 along with the controller 2.

Sensors 40 to 49 are disposed in the hydraulic system 20 having the construction described above. The sensor 40 is a pressure sensor for detecting, as an operation signal for the front operating mechanism 15, the arm-crowding pilot pressure in this embodiment, and the sensor 41 is a pressure sensor for detecting, as a swing operation signal, the swing pilot pressure taken out through a shuttle valve 41a. The sensor 42 is a pressure sensor for detecting, as a travel operation signal, the travel pilot pressure taken out through shuttle valves 42a, 42b and 42c.

The sensor 43 is a sensor for detecting an ON/OFF state of a key switch for the engine 32, the sensor 44 is a pressure sensor for detecting the delivery pressure of the hydraulic pumps 21a, 21b, i.e., the pump pressure, taken out through a shuttle valve 44a, and the sensor 45 is an oil temperature sensor for detecting the temperature of the hydraulic oil (i.e., the oil temperature) in the hydraulic system 1. The sensor 46 is a revolution speed sensor for detecting the revolution speed of the engine 32. The sensor 47a is a fuel sensor for detecting the amount of fuel injected by the fuel injecting device of the engine 32 (i.e., the fuel consumption), the sensor 47b is a pressure sensor for detecting the blowby pressure in a cylinder of the engine 32, and the sensor 47c is a temperature sensor for detecting the temperature of a coolant (radiator water) for cooling the engine 32. The sensor 48 is a pressure sensor for detecting, as a digging pressure applied from the front operating mechanism 15, the pressure on the bottom side of the bucket cylinder 29 in this embodiment (or on the bottom side of the arm cylinder 28). The sensor 49a is a pressure sensor for detecting the traveling pressure, i.e., the pressure of the travel motor 31a or 31b (for example, a maximum one of the pressures of the travel motors 31a and 31b may be taken out through a shuttle valve not sown), and the sensor 49b is a pressure sensor for detecting the swing pressure, i.e., the pressure of the swing motor 30. Detected signals of those sensors 40 to 49 are all sent to and collected in the controller 2.

The controller 2 is to collect (as described later in detail) data regarding the machine operation for each part of the hydraulic excavator 1 (hereinafter referred to simply as "operation data"). The most important feature of the present invention resides in a flow of the operation data and manners of presenting services and sales to the customer based on the operation data.

Fig. 3 is a conceptual block diagram showing a flow of information in the one embodiment of the information providing system for the construction machine, shown in Fig. 1, according to the present invention.

Referring to Fig. 3, the operation data collected by the controller 2 of each hydraulic excavator 1 is downloaded, along with machine body data (such as the machine model and the machine number), to the portable terminal 3, which is carried with an operator and connected to the controller 2 of the hydraulic excavator 1 via the cable 3a, by performing a predetermined operation on the side of the portable terminal 3 (or the controller 2). After disconnecting the cable 3a from the controller 2, the portable terminal 3 is carried back and is connected to the user-side personal computer 4 via the cable 3a. The collected data is then downloaded to the user-side personal computer 4 by performing a predetermined operation on the side of the portable terminal 3 (or the user-side personal computer 4). As an alternative, it is needless to say that the user-side personal computer 4 may be connected to the controller 2 and the collected data may directly be downloaded from the controller 2 to the user-side personal computer 4.

The operation data and the machine body data both downloaded to the user-side personal computer 4 are first processed (described later in detail) in the user-side personal computer 4 by using an application program installed therein beforehand, and are then displayed in a predetermined format as service/sales information representing the operation status of the relevant hydraulic excavator.

On the other hand, the operation data and the machine body data both downloaded to the user-side personal computer 4 are subjected to automatic search made from the side of the main server 5 via the intermediate server 6 as to whether new data is stored in the user-side personal computer, for example, when a homepage of the dealer, etc. is accessed from the user-side personal computer. If new data is found, the new data is sucked up from the user-side personal computer 4 upon consent of the user side whenever accessed. On that occasion, in addition to the operation data and the machine body data of the hydraulic excavator 1, check data, repair data, etc. obtained at the time of routine check may also be manually entered for collection by the dispatched serviceman or the serviceman (including the salesman) belonging to the dealer, etc. Then, the entered data may also be taken into the main server 5.

Thereafter, the operation data of the individual hydraulic excavators 1 thus collected is transmitted to the corresponding user-side personal computer 4 (belonging to the user of the relevant hydraulic excavator 1) via the corresponding intermediate server 6 (belonging to the dealer, etc. engaged in service/sales business for the user of the relevant hydraulic excavator 1). More specifically, among the operation data and the machine body data of all the hydraulic excavators 1 collected in the main server 5, at least data of the hydraulic excavators 1 related to the user, for example, possessed, used or managed by the user, is downloaded to the user-side personal computer 4 (including the intermediate server 6) by performing a predetermined operation on the side of the user-side personal computer 4 (e.g., by accessing the homepage of the dealer, etc. and clicking a download button on a predetermined screen). In this respect, at the discretion of the dealer, etc., it is possible to select or restrict users to which the data is to be transmitted, and to actuate a lock or disable display of a downloading screen itself for some users so that they cannot download any data.

Additionally, in Fig. 3, the intermediate server 6 may be disposed in plural between the main server 5 and the user-side personal computer 4 instead of being disposed one as described above, and data may be sent so as to flow via a plurality of intermediate servers in a hierarchical way. In such a case, for example, data is first outputted from the main server 5 to the intermediate server 6 installed in an organization (e.g., the head office of the selling company or the general agency) supervising a plurality of dealers, etc., and is then outputted from that intermediate server 6 to the other intermediate servers 6 belonging to the dealers, etc.

Fig. 4 is a block diagram showing a functional construction of a machine side controller 2 constituting the one embodiment of the information providing system for the construction machine according to the present invention. Referring to Fig. 4, the controller 2 comprises input/output interfaces 2a, 2b, a CPU (Central Processing Unit) 2c, a memory 2d, and a timer 2e.

The input/output interface 2a receives, from the above-described sensors 40 to 49, the pilot pressure detected signals for the front operating mechanism 15, swing and travel, the key switch-on detected signal for the engine 32, the pump pressure detected signal for the pumps 21a, 21b, the oil temperature detected signal, the revolution speed detected signal for the engine 32, the coolant temperature detected signal, the digging pressure detected signal, the traveling pressure detected signal, the fuel consumption detected signal, the blowby pressure detected signal, and the swing pressure detected signal.

The CPU 2c processes those detected signals into predetermined operation data by using the timer (including the clock function) 2e and stores the operation data in the memory 2d.

In addition to the components described above, the controller 2 further comprises a ROM serving as a recording medium that stores control programs for causing the CPU 2c to execute the predetermined processing, and a RAM serving as memory means for temporarily storing data produced during the processing.

Fig. 5 is a flowchart showing the function of collecting an operation time for each component of a hydraulic excavator, which is executed by the CPU 2c in the machine side controller 2 constituting the one embodiment of the information providing system for the construction machine according to the present invention.

Referring to Fig. 5, the CPU 2c first determines whether the engine 32 is under the operation (step 1). In practice, for example, the CPU may read data regarding the detected signal of the engine revolution speed from the sensor 46 and determines whether the read data shows a revolution speed not lower than a predetermined value. As an alternative, the CPU may read data regarding the ON/OFF detected signal of the key switch from the sensor 43 and determines whether the read data shows the ON state of the key switch. If it is determined that the engine 32 is not under the operation, the CPU repeats step 1.

If it is determined that the engine 32 is under the operation, the CPU proceeds to step 2 in which it reads the pilot pressure detected signals for the front operating mechanism, swing and travel from the sensors 40, 41 and 42 (step 2). Then, for each of the thus-read pilot pressure detected signals for the front operating mechanism, swing and travel, the CPU calculates a period of time during which the pilot pressure exceeds a predetermined one (i.e., a pilot pressure at which the front operating mechanism, the swing body or the travel body can be regarded as being operated) by using the clock information of the timer 2e. Subsequently, the CPU stores and accumulates the calculated data in the memory 2d in correspondence with the date and the time of day (step 3).

Thereafter, in step 4, the CPU reads data regarding the pump-delivery-pressure detected signal from the sensor 44, data regarding the hydraulic-oil-temperature detected signal from the sensor 45, data regarding the engine-revolution-speed detected signal from the sensor 46, data regarding the fuel consumption detected signal from the sensor 47a, data regarding the engine-blowby-pressure detected signal from the sensor 47b, data regarding the engine-coolant-temperature detected signal from the sensor 47c, data regarding the digging pressure detected signal from the sensor 48, data regarding the traveling pressure detected signal from the sensor 49a, and data regarding the swing pressure detected signal from the sensor 49b. Subsequently, the CPU stores and accumulates the read data in the memory 2d in correspondence with the date and the time of day by using the clock information of the timer 2e.

Then, during a period in which it is determined in step 1 that the engine 32 is under the operation, the engine run time is calculated by utilizing the clock information of the timer 2e, and is stored and accumulated in the memory 2d in correspondence with the date and the time of day (step 5).

The CPU 2 executes the above-described processing of steps 1 to 5 per predetermined time unit (= cycle) (e.g., per several minutes to several tens minutes) while a source power for the controller 2 is held ON. As a result, the memory 2d accumulates therein the front operation time, the swing operation time and the travel lever operation time during the predetermined cycle in accordance with step 3, an average pump delivery pressure, an average oil temperature, an average engine revolution speed, an average fuel consumption rate, an average engine blowby pressure, an average coolant temperature, an average digging pressure and an average traveling pressure during the predetermined cycle in accordance with step 4, as well as an average engine run time in accordance with step 5 (see Fig. 6 described later).

On that occasion, for the time data described above, respective values accumulated whenever each cycle lapses, i.e., an accumulated front operation time, an accumulated swing operation time, an accumulated travel lever operation time, and an accumulated engine run time are separately calculated and stored in the memory 2d while updating the previous values (see Fig. 6 described later).

In addition, though not described here in detail, various event data, such as engine on/off data and key switch on/off data, various alarm data, and so on are also time-serially stored in the memory 2d (see Fig. 6 described later).

Returning to Fig. 4, the operation data stored in the memory 2d in the above-mentioned form is downloaded from the input/output interface 2b to the portable terminal 3 via the cable 3a, as described above, by performing a predetermined operation on the side of the portable terminal 3 or the controller 2.

Fig. 6 is a representation showing one example of a data structure used when data is downloaded to the portable terminal 3 from the machine side controller 2 constituting the one embodiment of the information providing system for the construction machine according to the present invention.

Referring to Fig. 6, data is grouped as a file each time when the data is downloaded. The file is made up of a file header located at the beginning of the file, the machine body data such as the machine model and number of the relevant hydraulic excavator 1, the download time (when there are excavators working oversea, the download time is indicated, for example, on the basis of any standard time and may additionally contain the time lag difference, etc.), and so on.

A main portion of the operation data after the file header is constituted, as a first set of data, by the data accumulated after manufacturing of the relevant hydraulic excavator. More specifically, the accumulated data comprises, for example, the accumulated engine run time, various accumulated operation times (such as the accumulated lever operation (including travel) time, the accumulated swing operation time and the accumulated travel lever operation time), and an accumulated frequency distribution (see a later description on a frequency distribution).

Subsequent to the accumulated data mentioned above, items of data sectioned per cycle are time-serially arranged. More specifically, those items contain the time of day at which the data was obtained, and the accumulated engine run time up to the preceding cycle, followed by the engine run time, the respective operation times (such as the lever operation (including travel) time, the swing operation time and the travel lever operation time), respective frequency distributions (such as an engine revolution speed distribution, a hydraulic oil temperature distribution, a coolant temperature distribution, a pump delivery pressure distribution, a digging pressure distribution, and a traveling pressure distribution), the average engine blowby pressure, the average fuel consumption rate, the average pump delivery pressure, the average oil temperature, the average engine revolution speed, the average coolant temperature, the average digging pressure, the average traveling pressure, and so on. In this connection, for easier understanding of the frequency distributions, the frequency distributions are each represented by previously setting a plurality of frequency areas (e.g., 5 minutes in the engine revolution speed range of 0 to 600 rpm, 2 minutes in the range of 600 to 800 rpm, and 15 minutes in the range of 800 to 1000 rpm), and by indicating time lengths falling in the respective frequency ranges on the basis of unit time (e.g., the engine revolution speed range of 0 to 600 rpm, of 600 to 800 rpm, and of 800 to 1000 rpm).

After the above-mentioned data per cycle unit, there follows the event/alarm and other data. In the illustrated example, the event/alarm and other data contains the date and the time of day at which the event/alarm and other has occurred, and the number of the event/alarm and other. The accumulated engine run time at that time (e.g., the above-mentioned accumulated engine run time) is also indicated as reference data.

The operation data, which has been downloaded from the controller 2 to the portable terminal 3 in the above-mentioned file format, is taken into the user-side personal computer 4 in the same file format. The taken-in data is processed by the application program previously installed (or another one distributed and installed, as required, from the dealer side, for example), as described above, and is then indicated in a predetermined format as information representing the operation status of the relevant excavator.

Fig. 7 is a functional block diagram showing a functional construction of the user-side personal computer 4 constituting the one embodiment of the information providing system for the construction machine according to the present invention.

Referring to Fig. 7 together with Fig. 1 described above, the user-side personal computer 4 comprises a personal computer body 4A, a display unit 4B serving as display means, a mouse 4C, and a keyboard 4D.

The personal computer body 4A comprises communication interfaces (I/O) 4a, 4b serving respectively as input means and output means, a CPU (Central Processing Unit) 4c serving as processing means, a RAM 4d serving as memory means, a storage device (storing and holding means) 4e including a program storage area (ROM) 4ea and a data storage area 4eb, and a display interface 4f.

The communication interface 4a receives not only operation signals from the keyboard 4D and the mouse 4C, but also the operation data having the file structure, shown in Fig. 6, from the portable terminal 3, and then store them in the data storage area 4eb of the storage device.

The CPU 4c processes the stored operation data based on the received operation signals into data in conformity with a predetermined display format by using a data processing program (described later) that has been stored in the program storage area 4ea of the storage device. On that occasion, data produced during the processing is temporarily stored, as required, in the RAM 4d serving as memory means. The processed operation data is displayed on the display unit 4B in the predetermined format via the display interface 4f.

Additionally, the not-yet-processed operation data stored in the data storage area 4eb of the storage device can be outputted to the main server 5 via the communication interface 4b in accordance with operation signals from the keyboard 4D and the mouse 4C. This point will be described later.

Fig. 8 is a representation showing details of programs stored in the program storage area 4ea of the user-side personal computer 4 constituting the one embodiment of the information providing system for the construction machine according to the present invention.

As shown in Fig. 8 in a hierarchical form, the program storage area 4ea mainly stores therein a data taking-in program 100 for taking in the operation data from the portable terminal 3 and storing the taken-in data in the data storage area 4eb of the storage device 4e, and an information displaying program 110 for displaying the thus-stored operation data as information on the display unit 4b.

Further, the information displaying program 110 is made up of a data processing program 120 for processing the operation data stored in the data storage area 4eb of the storage device to be matched with the predetermined display format, and a standard screen program 130 including various functions related to screen display itself.

The data processing program 120 is made up of a life data processing program 121, a daily data processing program 122, an hours data processing program 123, a ratio data processing program 124, a summary data processing program 125, a utilization data processing program 126, a blowby data & fuel-consumption-rate data processing program 127, an event/alarm and other data processing program 128, and a histogram processing program 129 for respectively preparing life data, daily data, hours data, ratio data, summary data, utilization data, blowby data & fuel consumption rate data, event/alarm and other data, and histogram data, which are described later.

The standard screen program 130 contains a mail outputting program 131, a storing program 132, and a printing program 133, which serve to respectively send data displayed on a screen image to any desired address by electronic mail, store it in a predetermined place (e.g., the storage area 4eb of the storage device), and print it. The standard screen program 130 further contains a file information displaying program 134 for displaying the property of each file, and a multi-screen displaying program 135 for displaying data of a plurality of files (other files than one that is now opened) at the same time.

Detailed processing steps and function of each program will be described later.

Examples of display screen images presented on the display unit 4B by the functions of the above-mentioned programs will be described below one by one.

Fig. 9 is an illustration showing a standard screen layout employed when processing the operation data, which has been stored in the data storage area 4eb of the storage device by the data taking-in program 100, by using the data processing program 100 (i.e., the life data processing program 121, the daily data processing program 122, the hours data processing program 123, the ratio data processing program 124, the summary data processing program 125, the utilization data processing program 126, the blowby data & fuel-consumption-rate data processing program 127, the event/alarm and other data processing program 128, and the histogram processing program 129), and then displaying the processed data on the display unit 4B in the user-side personal computer 4 constituting the one embodiment of the information providing system for the construction machine according to the present invention.

In Fig. 9, the displayed screen image is mainly made up of a first graph selection area A displayed at the left end in a tree structure, a graph display area B which is displayed on the right side of the first graph selection area A while occupying a most part of the screen, and in which the processed operation data is graphically displayed, a second graph selection area C displayed above both the first graph selection area A and the graph display area B in the form of a menu bar, a menu button area D which is displayed above the second graph selection area C and is employed to execute various kinds of processing by the standard screen program 130 (i.e., the mail outputting program 131, the storing program 132, the printing program 133, the file information displaying program 134, and the multi-screen displaying program 135), a status display area E displayed under the first graph selection area A at the lower left corner of the whole screen, and a menu area F displayed above the menu button area D at the upper left corner of the whole screen.

Such a division of the screen into the areas A to F enables an operator to look for any desired data with more ease. Also, since the graph display area B for displaying the operation data itself is arranged so as to occupy a most part of the screen, the operator can more easily look at a displayed graph. Further, the second graph selection area C in the form of a menu bar is always displayed, while the first graph selection area A in a tree structure can be selectively displayed or not displayed at the operator's discretion. By selecting the first graph selection area A to be not displayed, the graph display area B is displayed in a larger size so that the operator can more easily look at a graph.

The areas A to F will be described in more detail below in order.

(1) First Graph Selection Area A

Fig. 10 is an illustration showing a display example of the first graph selection area A displayed on the display unit 4B of the user-side personal computer 4 constituting the one embodiment of the information providing system for the construction machine according to the present invention.

As shown in Fig. 10 along with Fig. 9 described above, the first graph selection area A displays, in the form of files, a list of the operation data that has already been stored in the data storage area 4eb of the storage device in the user-side personal computer 4. The operation data is grouped into files (book files) each of which is formed whenever the data is obtained (downloaded) from the hydraulic excavator 1. Further, each file is displayed in a tree structure in the order of a machine model name folder, a machine number folder, and a book file name in relation to the machine model (e.g., "XYOO", etc. in the illustrated example) and the machine number (e.g., "501", "504" or "505" in the illustrated example) of the hydraulic excavator 1 from which the file has been obtained. By displaying the files in such a tree structure, the operator can easily look for any desired data.

The tree structure is not limited to the above-described one, but it may be rewritable, as required, to contain, for example, a folder having an operation site name (e.g., "○○ prefecture, ○○ city, ×× work site") for the hydraulic excavator 1, a folder having a specific machine name (e.g., "first loader in ×× work site") for customer management, and a book file name. Such a structure enables the data to be displayed and changed in a more easily understandable manner to the user.

Further, while in the illustrated example the download date and time (e.g., "○○/□/× (year/month/day)" is directly used as the book file name, the range of date and time (e.g., "○○/□/× to OO/Δ/□ (year/month/day)") covering the data contained in the file may also be employed instead. This modification enables the operator to easily look for any one among plural sets of the downloaded data, which corresponds to the desired period. Alternatively, for example, when the number of files is small, the simple file number or the like (e.g., "No. 5") may be displayed for simplification of display. Further, in a display state in which only the machine number (e.g., "501" or "504" in the illustrated example) is displayed before opening any file name, the latest download data and time of day, for example, may be displayed on the right side of the machine number so that the operator can recognize the date and the time of day of the latest date without opening a lower-level layer (i.e., any file name). Additionally, where no file is stored for the latest predetermined period (e.g., three months) or more, the relevant machine number name may be displayed in a different color, thereby prompting the operator to download the latest file.

In the illustrated example, each operation data file contains, in a lower level layer, a "life data" file, an "operation data" folder, an "alarm and fault data" folder, an "event data" file, and a "histogram data" folder.

The "operation data" folder contains, in an even lower level layer, a "daily data" file, an "hours data" file, a "ratio data" file, a "summary data" file, a "utilization data" folder, a "blowby data" file, and a "fuel consumption rate data" file. The "utilization data" folder contains, in an even lower level layer, an "hours data" file and a "ratio data" file.

The "alarm and fault data" folder contains, in an even lower level layer, an "alarm data " file and a "fault data" file.

The "histogram data" folder contains an "engine speed data" file, a "hydraulic oil temperature data" file, a "coolant temperature data" file (not shown), a "pump pressure data" file (not shown), a "digging pressure data" file (not shown), and a "traveling pressure data" file (not shown).

The reason why there are a plurality of files having machine model names and machine numbers in the examples shown in Figs. 9 and 10 resides in that there are not only a route for obtaining the operation data through the hydraulic excavator 1 possessed (or used) by the customer - the portable terminal 3 - the user-side personal computer 4 as described above with reference to Figs. 1 and 3, but also another route through the main server 5 - the intermediate server 6 - the user-side personal computer 4. That example corresponds to, for instance, the case in which a user possessing a plurality of hydraulic excavators 1 operating in remote places or plural work sites looks at files represented by a plurality of machine model names and machine numbers. In such a case, data of the hydraulic excavator 1 of the relevant user is communicated to the user-side personal computer 4 via, e.g., the main server 5 and the intermediate server 6 (described later in more detail).

(2) Graph Display Area B

Each of the above-mentioned data files or folders will be described one by one in more detail below.

(2-1) Life Data

The "life data" file is displayed by processing the operation data, which is stored in the data storage area 4ea of the storage device in the user-side personal computer 4, into accumulated operation information since the start of operation of the hydraulic excavator 1 (e.g., the time of machine delivery) after manufacturing thereof.

Fig. 11 is a flowchart showing a sequence of processing steps executed by the life data processing program 121 stored in the program storage area 4ea in the user-side personal computer 4 constituting the one embodiment of the information providing system for the construction machine according to the present invention.

Referring to Fig. 11, in step 140, the CPU first extracts the accumulated data (see Fig. 6) from the relevant file having the structure shown in Fig. 6, in which the life data to be now processed is contained.

Then, in step 141, by using both the accumulated engine run time Teng contained in the accumulated data and the lever operation (including travel) time Tlever obtained from the various accumulated operation times therein, a non-operation time Tnop is calculated from the following formula:

non-operation time Tnop = accumulated engine run time

Teng - lever operation time Tlever

Then, in step 142, by using the non-operation time Tnop determined step 141, a non-operation time rate Tr_nop [%] is calculated from the following formula:

non-operation time rate Tr_nop = (non-operation time Tnop

/ accumulated engine run time Teng) $\times$ 100

Thereafter, in step 143, by using the travel lever operation time Ttravel obtained from the various accumulated operation times contained in the accumulated data, an operation time rate Tr_lever_ex_travel [%] of the work lever (except for travel) is calculated from the following formula:

work lever operation time rate Tr_lever_ex_travel

= {(lever operation time Tlever - travel lever operation

time Ttravel)/accumulated engine run time Teng) $\times$ 100 [%]

Then, in step 144, a travel lever operation time rate Tr_travel [%] is calculated from the following formula:

travel lever operation time rate Tr_travel

= (travel lever operation time Ttravel / accumulated

engine run time Teng) $\times$ 100 [%]

Thereafter, the CPU proceeds to step 145 and displays the non-operation time Tnop, the travel lever operation time Ttravel, the work lever operation time Tlever ex_travel, and the accumulated engine run time Teng in the form of bar graphs, which have been obtained as described above.

Then, the CPU proceeds to step 146 and displays, as numerals, the respective values of the non-operation time Tnop, the travel lever operation time Ttravel, the work lever operation time Tlever_ex_travel, and the accumulated engine run time Teng on the right side of fore ends of the bar graphs representing the non-operation time Tnop (Non-Operation), the travel lever operation time Ttravel (Travel), the work lever operation time Tlever_ex_travel (Operation), and the accumulated engine run time Teng (Engine Run), respectively. In addition, the CPU also displays, as numerals, the non-operation time rate Tr_nop, the travel lever operation time rate Tr_travel, the work lever operation time rate Tr_lever_ex_travel, and the accumulated engine run time rate (= 100 [%]).

Fig. 12 is an illustration showing one example of a screen image graphically displaying life data, which has been processed by the life data processing program 121, on the display unit 4B of the user-side personal computer 4 constituting the one embodiment of the information providing system for the construction machine according to the present invention.

In a graph illustrated in Fig. 12, by way of example, the horizontal axis represents a time (hours notation), and the respective bar graphs of the non-operation time Tnop, the travel lever operation time Ttravel, the work lever operation time Tlever_ex_travel, and the accumulated engine run time Teng are displayed in the order named from the upper side, preferably, in different colors from each other. In addition, on the right side of fore ends of those bar graphs, the respective values of the non-operation time Tnop, the travel lever operation time Ttravel, the work lever operation time Tlever_ex_travel, and the accumulated engine run time Teng are also displayed as numerals. Such graphical display makes it possible to confirm the operation time for each component after the time of delivery of the hydraulic excavator 1 and hence to more closely carry out assessment of the hydraulic excavator 1.

Furthermore, assuming the accumulated engine run time Teng to be 100 [%], the respective values of the non-operation time rate Tr_nop, the travel lever operation time rate Tr_travel, the work lever operation time rate Tr_lever_ex_travel, and the accumulated engine run time rate are also displayed as numerals. This graphic display makes it easier to compare data among a plurality of hydraulic excavators 1 differing in the engine run time from each other (see also Fig. 60 described later).

On the right side of the bar graphs, there is a "memo box" in which the operator is able to enter a memo as required. Accordingly, it is possible to enter, as a memo, the matters that cannot be displayed by graphs.

Moreover, two tags "Graph" and "Report" are selectably displayed in an upper left portion of the area B of the screen, thus enabling the operator to display data of the same contents in the form of a graph or a list including numerical values in a selectable manner (Fig. 12 shows an example displayed when the "Graph" tag is selected). This makes it easier to change display between graph and numerical data in two-way directions and to realize the display reversing operation. Additionally, the data period is displayed in an upper right portion of the area B as indicated by "○○/□/× - Δ/□(year/month/day)", By looking at it, the operator can recognize the period of the currently displayed data at a glance.

Fig. 13 is an illustration showing one example of a screen image displaying the life data in the form of a list on the display unit 4B of the user-side personal computer 4 constituting the one embodiment of the information providing system for the construction machine according to the present invention.

In Fig. 13, the contents of the graphs displayed as described above with reference to Fig. 12, i.e., the respective values of the non-operation time Tnop, the travel lever operation time Ttravel, the work lever operation time Tlever_ex_travel, and the accumulated engine run time Teng are displayed as numerical data. Also, as in the screen image of Fig. 12, the screen image of Fig. 13 also includes a "memo box" for convenience to the operator. In the illustrated example of Fig. 13, the event/alarm and other data (described later in detail; see also, e.g., Figs. 46, 47 and 48) in the data period is also displayed as reference data.

While, in Fig. 12, the bar graphs are displayed in four item zones representing the non-operation time, the travel lever operation time, the work lever operation time, and the accumulated engine run time as described above, the present invention is not limited to such a layout. Fig. 14 is an illustration showing another example of the screen image graphically displaying the life data on the display unit 4B of the user-side personal computer 4 constituting the one embodiment of the information providing system for the construction machine according to the present invention. In this example, the bar graphs are displayed in six item zones, i.e., the non-operation time, a data collection disable time, the travel lever operation time, a swing lever operation time, a digging time, and the accumulated engine run time (namely, the lever operation time in Fig. 12 is divided into the swing lever operation time and the digging time, and a new item zone representing the data collection disable time is added).

Fig. 15 is an illustration showing one example of a screen image displaying the life data, which corresponds to the graphical representation of Fig. 14, in the form of a list on the display unit 4B of the user-side personal computer 4 constituting the one embodiment of the information providing system for the construction machine according to the present invention.

(2-2) Daily Data

The "daily data" file is displayed by processing the operation data, which is stored in the data storage area 4ea of the storage device in the user-side personal computer 4, into various kinds of general operation information per day over the range of several days to one month or several tens days, for example.

Fig. 16 is a flowchart showing one example of a sequence of processing steps executed by the daily data processing program 122 stored in the program storage area 4ea in the user-side personal computer 4 constituting the one embodiment of the information providing system for the construction machine according to the present invention.

Referring to Fig. 16, in step 150, the CPU first extracts the time unit data [a] to [b] of the desired period (e.g., month of interest) from the time unit data [1] to [n] in the relevant file having the structure shown in Fig. 6, in which the daily data to be now processed is contained, while referring to the date and the time of day of each data.

Then, in step 151, the CPU sets an operator i = a, which is used for counting the time unit data, followed by proceeding to step 152.

In step 152, the CPU reads the engine run time Teng in the time unit data [i] and determines whether the read time is not shorter than a predetermined time Td1 (e.g., 1/2 of the time unit). If this determination is satisfied, the CPU proceeds to step 153 in which the relevant box (i.e., the box corresponding to the time unit [i]) is painted all over in a first color (e.g., light blue). Thereafter, the CPU proceeds to step 154.

In step 154, the CPU reads the lever operation (including travel) time Tlever in the time unit data [i] and determines whether the read time is not shorter than a predetermined time Td2 (e.g., 1/2 of the time unit). If this determination is satisfied, the CPU proceeds to step 155 in which the relevant box (i.e., the box corresponding to the time unit [i]) is painted all over in a second color (e.g., yellowish green). Thereafter, the CPU proceeds to step 156. If the determination is not satisfied in step 152 or step 154, the CPU directly proceeds to step 156. As a result, if both the conditions in steps 152 and 154 are satisfied, the relevant box is painted in a deep green color resulting from mixing of light blue and yellowish green. If the condition in step 152 alone is satisfied, the relevant. box is painted just in a light blue color.

In step 156, the operator i is incremented by one, and it is determined in step 157 whether i is larger than b. If this determination is not satisfied, the CPU returns to step 152 and repeats the same sequence of steps as that described above. If that determination is satisfied, the processing flow is brought to an end.

With the processing steps described above, the box of the time unit [i] corresponding to the state in which the engine run time is not less than a certain value and the lever operation time is not less than a certain value (namely the state of the hydraulic excavator 1 being under the operation) is painted in a deep green color, while the box of the time unit [i] corresponding to the state in which the engine run time is not less than the certain value, but the lever operation time is less than the certain value (namely the engine idling state) is painted just in a light blue color.

Fig. 17 is an illustration showing one example of a screen image displaying daily data, which has been processed by the daily data processing program 122, on the display unit 4B of the user-side personal computer 4 constituting the one embodiment of the information providing system for the construction machine according to the present invention.

In a graph illustrated in Fig. 17, by way of example, the vertical axis represents days in one month from first day to thirty-first day of ×× (month), and the horizontal axis represents the time of day (24 hours notation) from 6:00 to 18:00. Along the horizontal axis, each box is divided per 15 minutes and displayed in a color-coded manner as described above. The boxes (i.e., large number of boxes occupying most of the illustrated graph) each representing the time unit (15 minutes in this example), in which the hydraulic excavator 1 is under the operation, are shown in Fig. 17 as one hatched pattern (relatively thin) instead of a deep green color, while the boxes (just several boxes in the illustrated graph) each representing the time unit under the engine idling state are shown in Fig. 17 as the other hatched pattern (relatively dense) instead of a light blue color. By displaying the operation time and the engine idling time in such a color-coded manner, it is possible to recognize at a glance the time during which work is actually carried out, and to facilitate machine management.

In an upper left region of the screen, there are disposed a "month selection pull-down menu" in the form of a menu bar enabling the operator to select year/month of the desired data to be displayed, a "+" button, and a "-" button. The operator can directly and promptly select the month to be displayed by using the "pull-down menu", and can simply change the month to be displayed by using the "+" and "-" buttons. On the right side of the "+" and "-" buttons, a "time zone pull-down menu" in the form of a menu bar is disposed so that the operator can select the desired time zone to be displayed. In addition to the time zone of "6-18" shown in Fig. 17, though not shown, other time zones of "0-8", "8-16", "16-24", "0-24", etc. are prepared in the "time zone pull-down menu", thus enabling the operator to freely select the desired time zone to be displayed.

Fig. 18 is a flowchart showing another example of a sequence of processing steps executed by the daily data processing program 122 stored in the program storage area 4ea in the user-side personal computer 4 constituting the one embodiment of the information providing system for the construction machine according to the present invention.

Referring to Fig. 18, in step 160, the CPU first extracts, similarly to step 150 in Fig. 16, the time unit data [a] to [n] of the desired period from the time unit data [1] to [n] in the relevant file in which the daily data to be now processed is contained. Then, in step 161, the CPU sets an operator i = a similarly to step 151, followed by proceeding to step 162.

In step 162, similarly to step 152, the CPU reads the engine run time Teng in the time unit data [i] and determines whether the read time is not shorter than a predetermined time Td1 (e.g., 1/2 of the time unit). If this determination is satisfied, the CPU proceeds to step 163 in which it reads the average fuel consumption rate Qf in the time unit data [i] and determines whether the read rate is not smaller than a first predetermined value (25% in this example). If this determination is not satisfied, the CPU proceeds to step 169 in which the relevant box (i.e., the box corresponding to the time unit [i]) is painted all over in a first color (e.g., light blue). Thereafter, the CPU proceeds to step 167 described later.

If the determination in step 163 is satisfied, the CPU proceeds to step 164 in which it determines whether the average fuel consumption rate Qf in the time unit data [i] is not smaller than a second predetermined value (50% in this example) which is larger than the first predetermined value. If this determination is not satisfied, the CPU proceeds to step 170 in which the relevant box (i.e., the box corresponding to the time unit [i]) is painted all over in a second color (e.g., yellowish green). Thereafter, the CPU proceeds to step 167 described later.

If the determination in step 164 is satisfied, the CPU proceeds to step 165 in which it determines whether the average fuel consumption rate Qf in the time unit data [i] is not smaller than a third predetermined value (75% in this example) which is larger than the second predetermined value. If this determination is not satisfied, the CPU proceeds to step 171 in which the relevant box (i.e., the box corresponding to the time unit [i]) is painted all over in a third color (e.g., green). Thereafter, the CPU proceeds to step 167 described later.

If the determination in step 165 is satisfied, the relevant box (i.e., the box corresponding to the time unit [i]) is painted all over in a fourth color (e.g., red). Thereafter, the CPU proceeds to step 167.

In step 167, the operator i is incremented by one, and it is determined in step 168 whether i is larger than b. If this determination is not satisfied, the CPU returns to step 162 and repeats the same sequence of steps as that described above. If that determination is satisfied, the processing flow is brought to an end.

With the processing steps described above, when the engine run time is not more than a certain value, the box is not colored. When the engine run time is not less than the certain value, the box is displayed in a color differing in the order of light blue, yellowish green and green as the fuel consumption rate (stated another way, the engine load rate) increases. Further, when the fuel consumption rate is a maximum range, the box is displayed in a red color.

Fig. 19 is an illustration showing another example (resulting from the processing steps shown in Fig. 18) of the screen image graphically displaying daily data, which has been processed by the daily data processing program 122, on the display unit 4B of the user-side personal computer 4 constituting the one embodiment of the information providing system for the construction machine according to the present invention.

In a graph illustrated in Fig. 19, by way of example, the vertical axis represents, similarly to Fig. 17, days in one month from first day to thirty day of ×× (month), and the horizontal axis represents the time of day (24 hours notation) from 6:00 to 17:00. Along the horizontal axis, each box is divided per 30 minutes and displayed in a color-coded manner as described above. Instead of displaying the box in a color differing in the order of light blue, yellowish green, green and red as the fuel consumption rate (stated another way, the engine load rate) increases when the engine run time is not less than the certain value, the box is displayed in Fig. 19 as a hatched pattern with a density increasing gradually in the same order. By providing such color-coded display depending on the engine load rate, it is possible to recognize at a glance in which time zone work is carried out at how level of the engine load, and to facilitate engine evaluation of each hydraulic excavator 1.

While the color-coded display is performed depending on the fuel consumption rate in the example described above, the present invention is not limited to such a display way. For example, the color-coded display may be performed depending on the digging pressure (i.e., the bottom side pressure of the bucket cylinder 29 or the arm cylinder 28). The color-coded display can be realized, for example, by determining whether the rate of a time during which a predetermined pressure is reached in the desired time zone is large or small, or whether the number of times of pressure peaks is large or small. This enables the operator to recognize the digging load per time zone at a glance. As a result, it is possible to facilitate structure evaluation of the front operating mechanism 15 of each hydraulic excavator 1 or, in particular, the necessity of a blast (with a dynamite) for assisting the digging carried out by the so-called large-scaled and super-large-scaled hydraulic excavators, evaluation of the blast properties, etc.

(2-3) Hours Data

The "hours data" file is displayed by processing the operation data, which is stored in the data storage area 4ea of the storage device in the user-side personal computer 4, into various kinds of operation information (display per unit interval in time of day; see Fig. 21 described later) representing detailed behaviors over the range of 24 hours for each day, or into various kinds of behavior information (display per day; see Fig. 24 described later) representing detailed behaviors over the range of several tens days to one month, for example.

Fig. 20 is a flowchart showing one example of a sequence of processing steps (corresponding to display per unit interval in time of day) executed by the hours data processing program 123 stored in the program storage area 4ea in the user-side personal computer 4 constituting the one embodiment of the information providing system for the construction machine according to the present invention.

Referring to Fig. 20, in step 180, the CPU first extracts the time unit data [a] to [b] of the desired day from the time unit data [1] to [n] in the relevant file having the structure shown in Fig. 6, in which the hours data to be now processed is contained, while referring to the date and the time of day of each data.

Then, in step 181, the CPU sets an operator i = a, which is used for counting the time unit data, followed by proceeding to step 182.

In step 182, by using the engine run time Teng and the lever operation (including travel) time Tlever both contained in the time unit data [i], a non-operation time Tnop is calculated from the following formula:

non-operation time Tnop = engine run time Teng - lever

operation time Tlever

Thereafter, in step 183, by using the travel lever operation time Ttravel contained in the time unit data [i], a work lever operation (except for travel) time T_lever_ex travel is calculated from the following formula:

work lever operation time Tlever_ex_travel = lever

operation time Tlever - travel lever operation time Ttravel

Thereafter, the CPU proceeds to step 184 and plots the engine run time Teng on the graph. Subsequently, the CPU plots on the graph the work lever operation time Tlever_ex_travel calculated in above step 185, and also plots on the graph the travel lever operation time Ttravel calculated in above step 186.

Then, the CPU proceeds to step.187 in which the operator i is incremented by one, and it determines in step 188 whether i is larger than b. If this determination is not satisfied, the CPU returns to step 182 and repeats the same sequence of steps as that described above. If that determination is satisfied, the processing flow is brought to an end.

Fig. 21 is an illustration showing one example (corresponding to the flow of Fig. 20) of a screen image graphically displaying hours data, which has been processed by the hours data processing program 123, on the display unit 4B of the user-side personal computer 4 constituting the one embodiment of the information providing system for the construction machine according to the present invention.

In a graph illustrated in Fig. 21, by way of example, the horizontal axis represents a time (24 hours notation), and respective line graphs of the engine run time Teng, the work lever operation time Tlever_ex_travel, and the travel lever operation time Ttravel are displayed in the order named from the upper side, preferably, in different colors from each other. Such graphic display makes it possible to recognize what kind of operation is performed more frequently at which time of day, and hence to facilitate machine operation management, time management for machine movement, etc. Particularly, because whether the operation is performed continuously or not can be judged, the operator is able to discern whether the travel time is required during work or for movement.

In this respect, two tags "Graph" and "Report" similar to those described above are selectably displayed in an upper left portion of the area B of the screen, thus enabling the operator to display data of the same contents in the form of a graph or a list including numerical values in a selectable manner (Fig. 21 shows an example displayed when the "Graph" tag is selected; see Fig. 25, described later, for display in the form of a list).

Under the two tags in an upper left portion of the area B of the screen, there are disposed a "daily" button corresponding to the above-mentioned display per unit interval in time of day and a "Monthly" button corresponding to the above-mentioned display per day so that the operator can select the time of day and the day in month. Fig. 21 shows an example displayed when the "daily" button is clicked. On the right side of the "daily" button, a "date selection pull-down menu" in the form of a menu bar is disposed to allow selection of the desired year/month/day of the relevant data to be displayed. Thus, the operator can directly and promptly select the date to be displayed. Also, the day to be displayed can easily be selected, though not shown, by displaying a calendar so that the operator is able to select the desired year/month/day on the calendar. Further, by providing "+" and "-" buttons similarly to the above-described case, it is possible to change the displayed month/day on the day-by-day basis.

In addition, at the bottom of the screen, the number of times at which various alarms (described later in detail) occurred per unit interval in time of day (per 30 minutes in this example) is displayed as numerical data as information for reference. On the farther right side of the "daily" button, an "alarm list display pull-down menu" in the form of a menu bar is disposed to allow selection of the alarm type to be displayed at the bottom of the screen from a displayed list. Thus, the operator can directly and promptly select the alarm type for which the number of times of occurrences is to be displayed.

While, in the example described above, legends for the graph, i.e., "Travel". "Operation (except for travel)", and "Engine Run", are displayed in an upper right portion of the area B, the legends may be movable to a place near the vertical axis on the left side with a proper manipulation as required. Such a movement of the legends makes the graph more easily viewed. Further, though not shown, the graph may be designed such that the operator can make a bookmark or a memo in any desired place on the graph. In such a case, the operator can manage, along with the graph, the matters that cannot be expressed by only the graph. Moreover, the background of the graph may be color-coded, for example, such that the time zone in which the engine is not operated (in Fig. 24 described later, the day in which the engine is not operated) is displayed in a particular color. Fig. 22 is an illustration showing another example of the graphical screen image, shown in Fig. 21, displayed after being processed by the daily data processing program 123 on the display unit 4B of the user-side personal computer 4 constituting the one embodiment of the information providing system for the construction machine according to the present invention, in which engine non-run time zones are displayed in a color. This example enables the operator to very easily understand in which time zone the machine is operated.

Fig. 23 is a flowchart showing one example of a sequence of processing steps (corresponding to the display per day) executed by the hours data processing program 123 stored in the program storage area 4ea in the user-side personal computer 4 constituting the one embodiment of the information providing system for the construction machine according to the present invention.

Referring to Fig. 23, in step 190, the CPU first extracts the time unit data [a] to [b] of the desired period (e.g., the desired month) from the time unit data [1] to [n] in the relevant file having the structure shown in Fig. 6, in which the hours data to be now processed is contained, while referring to the date and the time of day of each data. From the extracted time unit data [a] to [b], the CPU then takes out the time unit data [1] to [24] of the desired day [k (= operator indicating the date)] (for convenience, the following description will be made in connection with an example in which the time unit is an hour). In this respect, as described above, each of the time unit data [1] to [24] contains the engine run time Teng and the travel lever operation time Ttravel.

Then, in step 191, the CPU sets an operator j = 1, which is used for counting the time unit data, followed by proceeding to step 193.

In step 193, by using the lever operation (including travel) time Tlever and the travel lever operation time Ttravel both contained in the time unit data [i], a work lever operation (except for travel) time Tlever_ex_travel is calculated from the following formula:

work lever operation time Tlever_ex_travel = lever

operation time Tlever - travel lever operation time Ttravel

Thereafter, the CPU proceeds to step 194 in which the operator j is incremented by one, and it determines in step 195 whether j is not smaller than 24. If this determination is not satisfied, the CPU returns to step 191 and repeats the same sequence of steps as that described above. As a result, respective values of the work lever operation time Tlever_ex_travel in the time unit data [1] to [24] (per hour) for 24 hours in the desired day [k] are extracted.

If the determination in step 195 is satisfied, the CPU proceeds to step 197 in which the respective values of the work lever operation time Tlever_ex_travel for 24 hours in the desired day [k], which have been extracted as described above, are totalized to obtain:

daily accumulated work lever operation time Tlever_ex_travel_day [k] = $\sum$ Tlever_ex_travel [j]

Thereafter, in step 198, the respective values of the travel lever operation time Ttravel for 24 hours in the desired day [k], which have been extracted as described above, are totalized to obtain:

daily accumulated travel lever operation time

$$Ttravel_day [k] = \sum Ttravel [j]$$

Then, in step 199, a daily accumulated engine run time Teng_day is calculated by adding the engine run time Teng in the time unit, which is contained in the last time unit data [24], to the accumulated engine run time Teng contained in the last time unit data [24].
Thereafter, the CPU proceeds to step 200 in which the daily accumulated work lever operation time Tlever_ex_travel_day [k], the daily accumulated travel lever operation time Ttravel_day [k], and the daily accumulated engine run time Teng_day, which have been calculated respectively in above steps 197, 198 and 199, are plotted on a graph.
Then, the CPU proceeds to step 201 in which the operator k indicating the date is incremented by one, and it determines in step 202 whether k is larger than a value representing the date of the time unit data [b]. If this determination is not satisfied, the CPU returns to step 190 and repeats the same sequence of steps as that described above. As a result, for a period spanning from the extracted time unit data [a (e.g., ○/×/Δ (month/day/hour))] to the extracted time unit data [b (e.g., ×/○/□(month/day/hour))], the daily accumulated work lever operation time Tlever_ex_travel_day [k], the accumulated travel lever operation time Ttravel_day [k], and the daily accumulated engine run time Teng_day are plotted on the graph.
If the determination in step 202 is satisfied, the processing flow is brought to an end.
Fig. 24 is an illustration showing another example (corresponding to the flow of Fig. 23) of the screen image graphically displaying hours data, which has been processed by the hours data processing program 123, on the display unit 4B of the user-side personal computer 4 constituting the one embodiment of the information providing system for the construction machine according to the present invention.
In a graph illustrated in Fig. 24, by way of example, the vertical axis represents a time (hours notation), and the horizontal axis represents a date (1st to 30th day of the desired month). As in the screen image of Fig. 21, the accumulated engine run time Teng, the accumulated work lever operation time Tlever_ex_travel, and the accumulated travel lever operation time Ttravel per day are displayed in the form of line graphs, preferably, in different colors from each other. Such graphic display makes it possible to recognize changes in specific work items of the machine per day and is useful for machine management.
In the illustrated example, the accumulated engine run time Teng (Hour Meter) is also displayed as the life data, and a vertical axis representing the accumulated engine run time is indicated on the right side. This vertical axis is defined, for example, to be fixed to a predetermined time t (e.g., t = 1200 hours) from an hour meter value at the beginning of each month (namely, to fix a reduced scale of that vertical axis). Such display makes it possible to easily compare behaviors between the progress (slope) of the hour meter and the time per operation type among a plurality of machine models, and to lay a proper maintenance plan.
The processing flow shown in Fig. 23 may be modified, by way of example, as follows. Between steps 191 and 193, step 192 is executed to calculate the non-operation time Tnop by using the engine run time Teng and the lever operation (including travel) time Tlever, which are both contained in the time unit data [i], based on the formula given below:

non-operation time Tnop = engine run time Teng

- lever operation time Tlever

The non-operation time Tnop in each desired day [k] thus calculated is plotted on the graph in step 200. The processing flow shown in Fig. 20 and the graphs shown in Figs. 21 and 22 may also be modified in a similar way.
In Fig. 24, as in the screen image of Fig. 21, in an upper left region of the screen, there are disposed a "month selection pull-down menu" in the form of a menu bar enabling the operator to select year/month of the desired data to be displayed, a "+" button, and a "-" button. The operator can directly and promptly select the month to be displayed by using the "pull-down menu", and can simply change the month to be displayed by using the "+" and "-" buttons.
Fig. 25 is an illustration showing one example of a screen image displaying the hours data (display per day) in the form of a list on the display unit 4B of the user-side personal computer 4 constituting the one embodiment of the information providing system for the construction machine according to the present invention.
In Fig. 25, the graphically displayed contents shown in Fig. 24 as described above, respective values of the accumulated engine run time Teng (hours data value) as the life data, the daily accumulated engine run time Teng, the daily accumulated work lever operation time Tlever_ex_travel, and the daily accumulated travel lever operation time Ttravel, are indicated numerical data. Also in the screen image of Fig. 25, as in the screen image of Fig. 22, engine non-run time zones are displayed in color for convenience of the operator. Additionally, instead of displaying the engine non-run time zones in color, only the date or the time of day may be displayed. Because the engine non-run time zones can be recognized at a glance with display of blank columns, the similar effect can be obtained. Further, though not shown, a space in which the operator can enter a work amount, etc., as required, may be disposed outside the frame of the list display (e.g., in an upper right area of the screen). In such a modification, since the information required for operation management, such as the work amount, is managed on the same time basis as the monitoring data, it is possible to realize evaluation of an operation plan and education of operators. In this respect, a mark indicating that each numerical data is entered may be displayed, for example, on the left side of the entered numerical data. By looking at the mark, the operator can recognize at a glance at which date the data is entered.

(2-4) Ratio Data

The "ratio data" file is displayed by converting the unit of the vertical axis of the graph representing the "hours data" file, described in above (2-3), from an absolute value to a rate (e.g., a percentage relative to the engine run time Teng set to 100%). Then, the "ratio data" file is displayed by processing the operation data, which is stored in the data storage area 4ea of the storage device in the user-side personal computer 4, into various kinds of operation information (display per unit interval in time of day) representing detailed behaviors over the range of 24 hours for each day, or into various kinds of behavior information (display per day) representing detailed behaviors over the range of several tens days to one month, for example, similarly to the hours data described above.

Fig. 26 is a flowchart showing one example of a sequence of processing steps (corresponding to display per unit interval in time of day) executed by a ratio data processing program 124 stored in the program storage area 4ea in the user-side personal computer 4 constituting the one embodiment of the information providing system for the construction machine according to the present invention.

Referring to Fig. 26, in step 210, the CPU first extracts the time unit data [a] to [b] of the desired day from the time unit data [1] to [n] in the relevant file having the structure shown in Fig. 6, in which the ratio data to be now processed is contained, while referring to the date and the time of day of each data.

Then, in step 211, the CPU sets an operator i = a, which is used for counting the time unit data, followed by proceeding to step 212.

In step 212, by using the lever operation (including travel) time Tlever and the travel lever operation time Ttravel both contained in the time unit data [i], an operation time Tlever_ex_travel of the work lever except for travel is calculated from the following formula:

work lever operation time Tlever_ex_travel = lever

operation time Tlever - travel lever operation time Ttravel

Then, in step 213, by using the engine run time Teng contained in the time unit data [i], a work lever operation time rate Trlever_ex_travel is calculated from the following formula:

work lever operation time rate Trlever_ex_travel

= (work lever operation time Tlever_ex_travel / engine run

time Teng) $\times$ 100

Thereafter, the CPU proceeds to step 214 in which a travel lever operation time rate Tr_travel is calculated from the following formula:

travel lever operation time rate Tr_travel

= (travel lever operation time Ttravel / engine run time

Teng) $\times$ 100

Then, the CPU proceeds to step 215 in which the work lever operation time rate Trlever_ex_travel and the travel lever operation time rate Tr_travel are plotted on a graph along with numerical values.

Then, the CPU proceeds to step 216 in which the operator i is incremented by one, and it determines in step 217 whether i is larger than b. If this determination is not satisfied, the CPU returns to step 212 and repeats the same sequence of steps as that described above. If that determination is satisfied, the processing flow is brought to an end.

Fig. 27 is an illustration showing one example (corresponding to the flow of Fig. 26) of a screen image graphically displaying ratio data, which has been processed by the ratio data processing program 124, on the display unit 4B of the user-side personal computer 4 constituting the one embodiment of the information providing system for the construction machine according to the present invention. Fig. 27 corresponds to Fig. 21 described above.

In a graph illustrated in Fig. 27, by way of example, the vertical axis represents an operation rate [%] on an assumption that the engine run time Teng is set to 100%, and the horizontal axis represents a time (24 hours notation). In the graph, the work lever operation time (Operation) Tlever_ex_travel and the travel lever operation time Ttravel are displayed in the form of line graphs in the order named from the upper side, preferably, in different colors from each other. As with Fig. 21 described above, such graphic display also makes it possible to recognize what kind of operation is performed more frequently at which time of day, and hence to facilitate machine operation management, time management for machine movement, etc.

Fig. 28 is a flowchart showing one example of a sequence of processing steps (corresponding to display per day) executed by the ratio data processing program 124 stored in the program storage area 4ea in the user-side personal computer 4 constituting the one embodiment of the information providing system for the construction machine according to the present invention.

Referring to Fig. 28, in step 220, the CPU first extracts the time unit data [a] to [b] of the desired period (e.g., the desired month) from the time unit data [1] to [n] in the relevant file having the structure shown in Fig. 6, in which the hours data to be now processed is contained, while referring to the date and the time of day of each data. From the extracted time unit data [a] to [b], the CPU then takes out the time unit data [1] to [24] of the desired day [k (= operator indicating the date)] (for convenience, the following description will be made in connection with an example in which the time unit is an hour). In this respect, as described above, each of the time unit data [1] to [24] contains the engine run time Teng and the travel lever operation time Ttravel.

Then, in step 221, the CPU sets an operator j = 1, which is used for counting the time unit data, followed by proceeding to step 222.

In step 222, by using the lever operation (including travel) time Tlever and the travel lever operation time Ttravel both contained in the time unit data [i], a work lever operation (except for travel) time Tlever_ex_travel is calculated from the following formula:

work lever operation time Tlever_ex_travel = lever

operation time Tlever - travel lever operation time Ttravel

Thereafter, the CPU proceeds to step 223 in which the operator j is incremented by one, and it determines in step 224 whether j is not smaller than 24. If this determination is not satisfied, the CPU returns to step 221 and repeats the same sequence of steps as that described above. As a result, respective values of the work lever operation time Tlever_ex_travel in the time unit data [1] to [24] (per hour) for 24 hours in the desired day [k] are extracted.

If the determination in step 224 is satisfied, the CPU proceeds to step 225 in which the respective values of the engine run time Teng for 24 hours in the desired day [k], which have been extracted as described above, are totalized to obtain:

daily accumulated engine run time Teng_day [k]

$$= \sum Teng [j]$$

Thereafter, in step 226, the respective values of the work lever operation time Tlever_ex_travel for 24 hours in the desired day [k], which have been extracted as described above, are totalized to obtain:

daily accumulated work lever operation time

$$Tlever_ex_travel_day [k] = \sum Tlever_ex_travel [j]$$

Further, by using $\sum$ Tlever_ex_travel [j] and the daily accumulated engine run time Teng_day [k], a work lever operation time rate Tr_lever_ex_travel_day [k] per day is calculated from the following formula:

work lever operation time rate Tr_lever_ex_travel_day [k]

$$= (\sum \text{Tlever_ex_travel [j] / Teng_day [k]}) \times 100$$

Thereafter, in step 227, the respective values of the travel lever operation time Ttravel for 24 hours in the desired day [k], which have been extracted as described above, are totalized to obtain:

daily accumulated travel lever operation time

$$\text{Ttravel_day [k]} = \sum \text{Ttravel [j]}$$

Further, by using $\sum$ Ttravel [j] and the daily accumulated engine run time Teng_day [k], a travel lever operation time rate Tr_travel_day [k] per day is calculated from the following formula:

travel lever operation time rate Tr_travel_day [k]

$$= (\sum \text{Ttravel [j] / Teng_day [k]}) \times 100$$

Thereafter, in step 228, a daily accumulated engine run time Teng_day is calculated by adding the engine run time Teng in the time unit, which is contained in the last time unit data [24], to the accumulated engine run time Teng contained in the last time unit data [24].

Thereafter, the CPU proceeds to step 229 in which the daily work lever operation time rate Tr_lever_ex_travel_day [k], the daily accumulated travel lever operation time rate Tr_travel_day [k], and the daily accumulated engine run time Teng_day [k], which have been calculated respectively in above steps 226, 227 and 228, are plotted on a graph along with numerical values.

Then, the CPU proceeds to step 230 in which the operator k indicating the date is incremented by one, and it determines in step 231 whether k is larger than a value representing the date of the time unit data [b]. If this determination is not satisfied, the CPU returns to step 220 and repeats the same sequence of steps as that described above. As a result, for a period spanning from the extracted time unit data [a (e.g., ○/×/Δ (month/day/hour))] to the extracted time unit data [b (e.g., ×/○/□ (month/day/hour))], the daily accumulated work lever operation time rate Tr_lever_ex_travel_day [k], the daily accumulated travel lever operation time rate Tr_travel_day [k], and the daily accumulated engine run time Teng_day [k] are plotted on the graph.

If the determination in step 231 is satisfied, the processing flow is brought to an end.

Fig. 29 is an illustration showing another example (corresponding to the flow of Fig. 28) of the screen image graphically displaying ratio data, which has been processed by the ratio data processing program 124, on the display unit 4B of the user-side personal computer 4 constituting the one embodiment of the information providing system for the construction machine according to the present invention.

In a graph illustrated in Fig. 29, by way of example, the vertical axis represents an operation rate [%], as in the screen image of Fig. 27, on an assumption that the engine run time Teng is set to 100%, and the horizontal axis represents a date (1st to 30th day of the desired month). In the graph, similarly to Fig. 27, the daily accumulated work lever operation time rate Trlever_ex_travel and the daily accumulated travel lever operation time Tr_travel are displayed in the form of line graphs, preferably, in different colors from each other. As with Fig. 27 described above, such graphic display also makes it possible to recognize changes in specific work items of the machine per day and is useful for machine management.

In the illustrated example of Fig. 29, as in the screen image of Fig. 27, the accumulated engine run time Teng (Hour Meter) is also displayed as the life data, and a vertical axis on the right side is defined, for example, to be fixed to a predetermined time t from an hour meter value at the beginning of each month.

Further, in the graphs of Figs. 27 and 29, there are disposed two tags "Graph" and "Report", "daily" and "Monthly" buttons, a "date selection pull-down menu", a "month selection pull-down menu", an indication of the number of times of various alarms at the bottom of the screen, an "alarm list display pull-down menu", and so on, which are similar to those shown in Figs. 21 22, 24 and 25. Those buttons, menus, etc. has similar functions capable of providing similar advantages.

Additionally, it is also possible to prepare, e.g., display of a calendar, "+" and "-" buttons, movable arrangement of the legends, a space for making a bookmark or a memo, and colored display of the engine non-run time zones. Such a modified screen layout can also provide similar advantages to those described above.

(2-5) Summary Data

The "summary data" file is to display data having the same contents as those of the "life data" file, described above in (2-1), by processing the operation data, which is stored in the data storage area 4ea of the storage device in the user-side personal computer 4, into accumulated operation information for a period designated by the operator, instead of accumulated operation information from the start of operation of the hydraulic excavator 1 after manufacturing thereof to the present time.

Fig. 30 is a flowchart showing a sequence of processing steps executed by a summary data processing program 125 stored in the program storage area 4ea in the user-side personal computer 4 constituting the one embodiment of the information providing system for the construction machine according to the present invention.

Referring to Fig. 30, in step 240, the CPU first extracts the time unit data [a] to [b] of the desired day from the time unit data [1] to [n] in the relevant file having the structure shown in Fig. 6, in which the summary data to be now processed is contained, while referring to the date and the time of day of each data.

Then, in step 241, the CPU sets an operator i = a, which is used for counting the time unit data, followed by proceeding to step 242.

In step 242, by using both the engine run time Teng contained in each time unit data [i] and the lever operation (including travel) time Tlever obtained from the various operation times therein, a non-operation time Tnop in each time unit is calculated from the following formula:

$$\text{non-operation time Tnop} = \text{engine run time Teng} - \text{lever operation time Tlever}$$

Then, in step 243, by using the travel lever operation time Ttravel contained in each time unit data [i], a work lever operation time Tlever_ex_travel in each time unit is calculated from the following formula:

$$\text{work lever operation time Tlever_ex_travel} = \text{lever operation time Tlever} - \text{travel lever operation time Ttravel}$$

Thereafter, the CPU proceeds to step 244 in which the operator i is incremented by one, and it determines in step 245 whether i is larger than b. If this determination is not satisfied, the CPU returns to step 242 and repeats the same sequence of steps as that described above. As a result, respective values of the non-operation time Tnop and the travel lever operation time Ttravel in each time unit are obtained for all of the time unit data [a] to [b] in the desired period.

If the determination in step 245 is satisfied, the CPU proceeds to step 246 in which the respective values of the non-operation time Tnop in all of the time units [a] to [b] calculated in above step 242 are totalized to obtain:

$$\text{accumulated non-operation time Ts_nop in desired period (e.g., certain month)} = \sum \text{T_nop [i]}$$

Thereafter, in step 247, the respective values of the work lever operation time Tlever_ex_travel in all of the time units [a] to [b] calculated in above step 243 are totalized to obtain:

$$\text{accumulated work lever operation time Ts_lever_ex_travel in desired period (e.g., certain month)} = \sum \text{Tlever_ex_travel [i]}$$

Then, in step 248, the respective values of the travel lever operation time Ttravel in all of the time units [a] to [b], which have already been extracted, are totalized to obtain:

$$\text{accumulated travel lever operation time Ts_travel in desired period (e.g., certain month)} = \sum \text{Ttravel [i]}$$

Thereafter, in step 249, the respective values of the engine run time Teng in all of the time units [a] to [b], which have already been extracted, are totalized to obtain:

$$\text{accumulated engine run time Ts_eng in desired period (e.g., certain month)} = \sum \text{Teng [i]}$$

Thereafter, in step 250, by using the accumulated non-operation time Ts_nop and the accumulated engine run time Ts_eng which have been obtained respectively in above steps 246 and 249, a non-operation time rate Tr_s_nop in the desired period (e.g., certain month) is calculated from the following formula:

$$Tr_s_nop = (Ts_nop / Ts_eng) \times 100$$

Then, in step 251, by using the accumulated work lever operation time Ts_lever_ex_travel which has been obtained in above step 247, a work lever operation time rate Tr_s_lever_ex_travel in the desired period (e.g., certain month) is calculated from the following formula:

$$Tr_s_lever_ex_travel = (Ts_lever_ex_travel/Ts_eng) \times 100$$

Thereafter, in step 252, by using the accumulated travel lever operation time Ts_travel which has been obtained in above step 248, a travel lever operation time rate Tr_s_travel in the desired period (e.g., certain month) is calculated from the following formula:

$$Tr_s_travel = (Ts_travel / Ts_eng) \times 100$$

Thereafter, the CPU proceeds to step 253 and displays the accumulated non-operation time Ts_nop (Non-Operation), the accumulated travel lever operation time Ts_travel (Travel), the accumulated work lever operation time Ts leyer_ex_travel (Operation), and the accumulated engine run time Ts_eng (Engine Run) in the desired period in the form of bar graphs, which have been obtained in above steps 246, 247 and 248.

Then, in step 254, the respective values of the accumulated non-operation time Ts_nop, the accumulated travel lever operation time Ts_travel, the accumulated work lever operation time Ts_lever_ex_travel, and the accumulated engine run time Ts_eng are displayed, as numerals, on the right side of fore ends of the bar graphs displayed in above step 253. In addition, the non-operation time rate Tr_s_nop, the travel lever operation time rate Tr_s_travel, the work lever operation time rate Tr_s_lever_ex_travel, and the accumulated engine run time rate (= 100 [%]) in the desired period, which have been obtained respectively in above steps 250, 251 and 252, are also displayed as numerals.

Fig. 31 is an illustration showing one example of a screen image graphically displaying summary data, which has been processed by the summary data processing program 125, on the display unit 4B of the user-side personal computer 4 constituting the one embodiment of the information providing system for the construction machine according to the present invention.

In a graph illustrated in Fig. 31, by way of example, the horizontal axis represents a time (hours notation), and the respective bar graphs of the accumulated non-operation time Ts_nop, the accumulated travel lever operation time Ts_travel, the accumulated work lever operation time Ts_lever_ex_travel, and the accumulated engine run time Ts_eng are displayed in the order named from the upper side, preferably, in different colors from each other. In addition, on the right side of fore ends of those bar graphs, the respective values of the accumulated non-operation time Ts_nop, the accumulated travel lever operation time Ts_travel, the accumulated work lever operation time Ts_lever_ex_travel, and the accumulated engine run time Ts_eng are also displayed as numerals. Such graphical display makes it possible to easily form a report for specific work items of the hydraulic excavator 1 per month or in a designated period.

Furthermore, assuming the accumulated engine run time Ts_eng to be 100 [%], the respective values of the non-operation time rate Tr_s_nop, the travel lever operation time rate Tr_s_travel, the work lever operation time rate Tr_s_lever_ex_travel, and the accumulated engine run time rate are also displayed as numerals. This graphic display makes it easier to compare data among a plurality of hydraulic excavators 1 differing in the engine run time from each other (see also Fig. 60 described later).

Moreover, as in the display screen images of the life data shown in Figs. 12 and 14, two tags "Graph" and "Report" are selectably displayed in an upper left portion of the area B of the screen (Fig. 31 shows an example displayed when the "Graph" tag is selected). Additionally, the data period is displayed in an upper right portion of the area B as indicated by "○○/□/× - Δ/□ (year/month/day)". Further, as in the display screen images of the hours data shown in Figs. 21, 22 and 24, under the two tags in the upper left portion of the area B of the screen, there are disposed a "daily" button for displaying data in any desired period of from the start date to the end date and a "Monthly" button for displaying data per day. A "date selection pull-down menu" for setting the start date and the end date is disposed on the right side of the "daily" button, and a "month selection pull-down menu" is disposed on the right side of the "Monthly" button. With the above-described arrangement that the "month selection pull-down menu" for setting a month and the "date selection pull-down menu" for setting the start date and the end date are disposed close to each other, it is possible to easily change the display between the month setting and the period setting from one to the other. Fig. 31 shows an example displayed when the "daily" button is clicked.

Fig. 32 is an illustration showing one example of a screen image displaying the summary data (corresponding to Fig. 31) in the form of a list on the display unit 4B of the user-side personal computer 4 constituting the one embodiment of the information providing system for the construction machine according to the present invention.

In Fig. 32, as in the screen image of Fig. 13 showing the life data, the contents of the graphs displayed as described above with reference to Fig. 31, i.e., the respective values of the accumulated non-operation time Ts_nop, the accumulated travel lever operation time Ts_travel, the accumulated work lever operation time Ts_lever_ex_travel, and the accumulated engine run time Ts_eng are displayed as numerical data. Further, as in the screen image of Fig. 13, the event/alarm and other data (described later in detail; see also, e.g., Figs. 46, 47 and 48) in the data period may also be displayed as reference data.

While, in Fig. 31, the bar graphs are displayed in four item zones representing the accumulated non-operation time, the accumulated travel lever operation time, the accumulated work lever operation time, and the accumulated engine run time as described above, the present invention is not limited to such a layout. Fig. 33 is an illustration showing another example of the screen image graphically displaying the summary data on the display unit 4B of the user-side personal computer 4 constituting the one embodiment of the information providing system for the construction machine according to the present invention. In this example, the bar graphs are displayed in six item zones, i.e., the accumulated non-operation time, an accumulated data collection disable time (TimeOut), the accumulated travel lever operation time, an accumulated swing lever operation time, a digging time, and the accumulated engine run time.

Fig. 34 is an illustration showing one example of a screen image displaying the life data, which corresponds to the graphical representation of Fig. 33, on the display unit 4B of the user-side personal computer 4 constituting the one embodiment of the information providing system for the construction machine according to the present invention. This example enables the operator to look at various kinds of numerical information together.

(2-6) Utilization Data

The "utilization data" file is displayed by processing the operation data, which is stored in the data storage area 4ea of the storage device in the user-side personal computer 4, into information indicating transition of an operation item ratio per month or week, for example.

Fig. 35 is a flowchart showing a sequence of processing steps executed by the utilization data processing program 126 stored in the program storage area 4ea in the user-side personal computer 4 constituting the one embodiment of the information providing system for the construction machine according to the present invention.

Referring to Fig. 35, in step 260, the CPU first extracts the time unit data [a] to [b] of the desired month (or any other suitable unit period, e.g., week: this is similarly applied to the following description) from the time unit data [1] to [n] in the relevant file having the structure shown in Fig. 6, in which the utilization data to be now processed is contained, while referring to the date and the time of day of each data.

Then, in step 261, the CPU sets an operator i = a, which is used for counting the time unit data, followed by proceeding to step 262.

In step 262, by using both the engine run time Teng contained in each time unit data [i] and the lever operation (including travel) time Tlever obtained from the various operation times therein, a non-operation time Tnop in each time unit is calculated from the following formula:

non-operation time Tnop = engine run time Teng - lever

operation time Tlever

Then, in step 263, by using the travel lever operation time Ttravel contained in each time unit data [i], a work lever operation time Tlever_ex_travel in each time unit is calculated from the following formula:

work lever operation time Tlever_ex_travel = lever

operation time Tlever - travel lever operation time Ttravel

Thereafter, the CPU proceeds to step 264 in which the operator i is incremented by one, and it determines in step 245 whether i is larger than b. If this determination is not satisfied, the CPU returns to step 262 and repeats the same sequence of steps as that described above. As a result, respective values of the non-operation time Tnop and the travel lever operation time Ttravel in each time unit are obtained for all of the time unit data [a] to [b] in the desired month.

If the determination in step 265 is satisfied, the CPU proceeds to step 266 in which the respective values of the non-operation time Tnop in the desired month, i.e., in all of the time units [a] to [b], calculated in above step 262 are totalized to obtain:

accumulated non-operation time Tu_nop in desired month

$= \sum$ T_nop [i]

Thereafter, in step 267, the respective values of the work lever operation time Tlever_ex_travel in the desired month (all of the time units [a] to [b]) calculated in above step 263 are totalized to obtain:

accumulated work lever operation time Tu_lever_ex_travel

in desired month $= \sum$ Tlever_ex_travel [i]

Then, in step 268, the respective values of the travel lever operation time Ttravel in the desired month (all of the time units [a] to [b]), which have already been extracted, are totalized to obtain:

accumulated travel lever operation time Tu_travel in

desired month $= \sum$ Ttravel [i]

Thereafter, in step 269, the respective values of the engine run time Teng in the desired month (all of the time units [a] to [b]), which have already been extracted, are totalized to obtain:

accumulated engine run time Tu_eng in desired month

$= \sum$ Teng [i]

Thereafter, in step 270, by using the accumulated non-operation time Tu_nop and the accumulated engine run time Tu_eng which have been obtained respectively in above steps 266 and 269, a non-operation time rate Tr_u_nop in the desired month is calculated from the following formula:

Tr_u_nop = (Tr_nop / Tr_eng) $\times$ 100

Then, in step 271, by using the accumulated work lever operation time Tu_lever_ex_travel which has been obtained in above step 267, a work lever operation time rate Tr_u_lever_ex_travel in the desired month is calculated from the following formula:

$$Tr_u_lever_ex_travel = (Tu_lever_ex_travel/Tu_eng) \times 100$$

Thereafter, in step 272, by using the accumulated travel lever operation time Tu_travel which has been obtained in above step 268, a travel lever operation time rate Tr_u_travel in the desired month is calculated from the following formula:

$$Tr_u_travel = (Tu_travel / Tu_eng) \times 100$$

Then, the CPU proceeds to step 273 and determines, in accordance with a selection input from a separate means (not shown), whether the utilization data is to be indicated as real time display (described in detail later; see Fig. 36 described later) or as ratio display (described in detail later; see Fig. 37 described later). If the real time display is selected, the CPU proceeds to step 274.

In step 274, the accumulated non-operation time Tu_nop (Non-Operation), the accumulated travel lever operation time Tu_travel (Travel), and the accumulated work lever operation time Tu_lever_ex_travel (Operation) in the desired month, which have been obtained respectively in above steps 266, 267 and 268, are displayed in the form of a bar graph. In addition, the respective values of the accumulated non-operation time Tu_nop, the accumulated travel lever operation time Tu_travel, and the accumulated work lever operation time Tu_lever_ex_travel are also displayed as numerals each representing the relevant real time, by way of example, inside the bar graph.

If the ratio display is selected in step 273, the CPU proceeds to step 275. In step 275, the non-operation time rate Tr_u nop, the travel lever operation time rate Tr_u_travel, and the work lever operation time rate Tr_u_lever_ex_travel in the desired month, which have been obtained respectively in above steps 270, 271 and 272, are displayed in the form of a bar graph. In addition, the respective values of the accumulated non-operation time Tu_nop, the accumulated travel lever operation time Tu_travel, and the accumulated work lever operation time Tu_lever_ex_travel are also displayed as numerals representing ratios (percentages), which are taken by those respective values on an assumption of the accumulated engine run time Tu_eng being set to 100%, by way of example, inside the bar graph (see Fig. 37 described later).

Fig. 36 is an illustration showing one example (corresponding to above step 274) of a screen image graphically displaying utilization data, which has been processed by the utilization data processing program 126, on the display unit 4B of the user-side personal computer 4 constituting the one embodiment of the information providing system for the construction machine according to the present invention.

In a graph illustrated in Fig. 36, by way of example, the horizontal axis represents a time (hours notation), and the vertical axis represents desired months time-serially arranged at intervals of one month. The data of each month is displayed in the form of a bar graph extending rightward from the left end. In each bar graph, the accumulated travel lever operation time Tu_travel, the accumulated work lever operation time Tu_lever_ex_travel, and the accumulated non-operation time Tu_nop are displayed in the order named rightward from the left end in different colors from each other while occupying specific item zones of the bar graph. The whole of the bar graph represents the accumulated engine run time Tu_eng. In the bar graphs adjacent to each other in the vertical direction, boundary lines between the specific item zones of each bar graph are interconnected by transition lines so that the operator can recognize at a glance changes in absolute amounts of the specific item zones (i.e., the accumulated travel lever operation time Tu_travel, the accumulated work lever operation time Tu_lever_ex_travel, and the accumulated non-operation time Tu_nop).

Furthermore, the respective values (absolute amounts) of the accumulated travel lever operation time Tu_travel, the accumulated work lever operation time Tu_lever_ex_travel, and the accumulated non-operation time Tu_nop are also displayed as numerals in the corresponding specific item zones of each bar graph. As a result, it is possible to easily perform work management of the hydraulic excavator 1 in units of a month (or a week).

On the other hand, Fig. 37 is an illustration showing another example (corresponding to above step 275) of the screen image graphically displaying utilization data, which has been processed by the utilization data processing program 126, on the display unit 4B of the user-side personal computer 4 constituting the one embodiment of the information providing system for the construction machine according to the present invention.

In a graph illustrated in Fig. 37, by way of example, the horizontal axis represents ratios which are taken by the respective values of the above-mentioned various operation times on an assumption of the accumulated engine run time Tu_eng being set to 100 [%], and the vertical axis represents desired months time-serially arranged at intervals of one month. The respective data of the months are displayed in the form of bar graphs all having the same length in the left-and-right direction, in which only ratios of the specific item zones vary. In each bar graph corresponding to that in Fig. 36, the travel lever operation time rate Tr_u_travel, the work lever operation time rate Tr_u_lever_ex travel, and the non-operation time rate Tr_u_nop are displayed in the order named rightward from the left side in different colors from each other on an assumption that the accumulated engine run time Tu_eng is set to 100 [%]. In the bar graphs adjacent to each other, boundary lines between the specific item zones of each bar graph are interconnected by transition lines. Furthermore, the respective values (ratio values) of the travel lever operation time rate Tr_u_travel, the work lever operation time rate Tr_u_lever_ex_travel, and the non-operation time rate Tr_u_nop are also displayed as numerals in the corresponding specific item zones of each bar graph. Such graphic display also makes it possible to easily perform work management of the hydraulic excavator 1 in units of a month (or a week). Additionally, it is possible to easily compare the operation time for each of the specific work items among plural sets of data, which correspond to different values of the engine run time.

In Figs. 36 and 37, as in the display screen images of the life data shown in, e.g., Figs. 12 and 14, the data period is displayed in an upper right portion of the area B of the screen, as indicated by "○○/□/× - Δ/□ (year/month/day)". Furthermore, as in the display screen images of the hours data shown in Figs. 21, 22 and 24, a "year/month selection pull-down menu" is disposed in an upper left portion of the area B of the screen, thus enabling the operator to select the time of data that is to be displayed at the head in the graph. In addition, "+" and "-" buttons similar to those described above with reference to Fig. 17, for example, may also be provided so that the operator can easily change the month to be displayed.

Fig. 38 is a flowchart showing another example (corresponding to combined display of target operation time) of a sequence of processing steps executed by the utilization data processing program 126 stored in the program storage area 4ea in the user-side personal computer 4 constituting the one embodiment of the information providing system for the construction machine according to the present invention.

Referring to Fig. 38, in step 280, the CPU first extracts the time unit data [a] to [b] of the desired month (or any other suitable unit period, e.g., week; this is similarly applied to the following description) from the time unit data [1] to [n] in the relevant file having the structure shown in Fig. 6, in which the utilization data to be now processed is contained, while referring to the date and the time of day of each data.

Then, in step 281, the CPU sets an operator i = a, which is used for counting the time unit data, followed by proceeding to step 282.

In step 282, by using both the engine run time Teng contained in each time unit data [i] and the lever operation (including travel) time Tlever obtained from the various operation times therein, a non-operation time Tnop in each time unit is calculated from the following formula:

non-operation time Tnop = engine run time Teng - lever

operation time Tlever

Then, in step 283, by using the travel lever operation time Ttravel contained in each time unit data [i], a work lever operation time Tlever_ex_travel in each time unit is calculated from the following formula:

work lever operation time Tlever_ex_travel = lever

operation time Tlever - travel lever operation time Ttravel

Thereafter, the CPU proceeds to step 284 in which the operator i is incremented by one, and it determines in step 285 whether i is larger than b. If this determination is not satisfied, the CPU returns to step 282 and repeats the same sequence of steps as that described above. As a result, respective values of the non-operation time Tnop and the travel lever operation time Ttravel in each time unit are obtained for all of the time unit data [a] to [b] in the desired month.

If the determination in step 285 is satisfied, the CPU proceeds to step 286 in which the respective values of the non-operation time Tnop in the desired month, i.e., in all of the time units [a] to [b], calculated in above step 282 are totalized to obtain:

accumulated non-operation time Tu_nop in desired month

$$= \sum T_nop [i]$$

Thereafter, in step 287, the respective values of the work lever operation time Tlever_ex_travel in the desired month calculated in above step 283 are totalized to obtain:

$$\text{accumulated work lever operation time Tu_lever_ex_travel in desired month} = \sum \text{Tlever_ex travel [i]}$$

Then, in step 288, the respective values of the travel lever operation time Ttravel in the desired month, which have already been extracted, are totalized to obtain:

$$\text{accumulated travel lever operation time Tu_travel in desired month} = \sum \text{Ttravel [i]}$$

Thereafter, in step 289, by using the accumulated non-operation time Tu_nop calculated in above step 286 and a target operation time per month (= operation budget, x hours/month in an example described later with reference to Figs. 39 and 40) which has been set and inputted in advance by the operator (as described later in detail), an actual-to-target non-operation time rate Tr_u_nop in the desired month is calculated from the following formula:

$$\text{Tr_u_nop} = (\text{Tr_nop / operation budget}) \times 100$$

Then, in step 290, by using the accumulated work lever operation time Tu_lever_ex_travel which has been obtained in above step 287, an actual-to-target work lever operation time rate Tr_u_lever_ex_travel in the desired month is calculated from the following formula:

$$\text{Tr_u_lever_ex_travel} = (\text{Tu_lever_ex_travel / operation budget}) \times 100$$

Thereafter, in step 291, by using the accumulated travel lever operation time Tu_travel which has been obtained in above step 288, an actual-to-target travel lever operation time rate Tr_u_travel in the desired month is calculated from the following formula:

$$\text{Tr_u_travel} = (\text{Tu_travel / operation budget}) \times 100$$

Then, the CPU proceeds to step 292 and determines, in accordance with a selection input from separate means (not shown), whether the utilization data is to be indicated as real time display (described in detail later; see Fig. 39 described later) or as ratio display (described in detail later; see Fig. 40 described later). If the real time display is selected, the CPU proceeds to step 294.

In step 294, the accumulated non-operation time Tu_nop (Non-Operation), the accumulated travel lever operation time Tu_travel (Travel), and the accumulated work lever operation time Tu_lever_ex_travel (Operation) in the desired month, which have been obtained respectively in above steps 286, 287 and 288, are displayed as specific component zones of one bar graph. In addition, the respective values of the accumulated non-operation time Tu_nop, the accumulated travel lever operation time Tu_travel, and the accumulated work lever operation time Tu_lever_ex_travel are also displayed as numerals each representing the relevant real time inside the specific component zones of the bar graph along with the respective values of the corresponding operation budges displayed as numerals each representing the relevant real time (see Fig. 39 described later).

If the ratio display is selected in step 292, the CPU proceeds to step 293. In step 293, the actual-to-target non-operation time rate Tr_u_nop, the actual-to-target travel lever operation time rate Tr_u_travel, and the actual-to-target work lever operation time rate Tr_u_lever_ex_travel in the desired month, which have been obtained respectively in above steps 289, 290 and 291, are displayed as specific component zones of one bar graph. In addition, their respective values are also displayed as numerals representing ratios (percentages), which are taken by those respective values on an assumption of the corresponding target operation time (operation budget) being set to 100%, by way of example, inside the bar graph (see Fig. 40 described later).

Fig. 39 is an illustration showing one example (corresponding to above step 294) of the screen image graphically displaying utilization data, which has been processed by the utilization data processing program 126, on the display unit 4B of the user-side personal computer 4 constituting the one embodiment of the information providing system for the construction machine according to the present invention.

In a graph illustrated in Fig. 39, by way of example, the horizontal axis represents a time (hours notation), and the vertical axis represents desired months time-serially arranged at intervals of one month. The data of each month is displayed in the form of one bar graph extending rightward from the left end at a length changed depending on the data. In each bar graph, the accumulated travel lever operation time Tu_travel, the accumulated work lever operation time Tu_lever_ex_travel, and the accumulated non-operation time Tu_nop are displayed in the order named rightward from the left end in different colors from each other while occupying specific item zones of the bar graph. The whole of the bar graph represents the accumulated engine run time Tu_eng. In addition, each bar graph is displayed to extend up to reach the relevant operation budget (target operation time), and the extended zone is displayed colorless, for example, as representing a component not achieved. Further, as in the screen image of Fig. 36 described above, in the bar graphs adjacent to each other in the vertical direction, boundary lines between the specific item zones of each bar graph are interconnected by transition lines. The respective values (absolute amounts) of the accumulated travel lever operation time Tu_travel, the accumulated work lever operation time Tu_lever_ex_travel, and the accumulated non-operation time Tu_nop are displayed as numerals in the corresponding specific item zones of each bar graph. Also, rightward of the right end of each bar graph, the value of the operation budget (target operation time) is displayed as a numeral (denoted by x in Fig. 39).

An operation budget setting button (which may be replaced by a tag) is disposed in an upper central portion of the area B of the screen at a position slightly offset to the left side. Upon the operation budget setting button being clicked, an operation budget (target operation time) setting list is displayed as an interrupt window, for example, as shown in the right side of Fig. 39. An upper list in Fig. 39 is displayed as a list screen window for setting in units of a month, in which a numerical value (denoted by x in Fig. 39) can be set per month. A lower list in Fig. 39 is displayed as a list screen window for setting in units of a week, in which a numerical value (denoted by x in Fig. 39) can be set per month and a numerical value (denoted by x1, x2, x3, and x4 in Fig. 39) can be set in more detail per week.

With such a screen layout, it is possible to recognize the operation status with respect to the target operation time (operation budget) and to facilitate production management.

On the other hand, Fig. 40 is an illustration showing another example (corresponding to above step 293) of the screen image graphically displaying utilization data, which has been processed by the utilization data processing program 126, on the display unit 4B of the user-side personal computer 4 constituting the one embodiment of the information providing system for the construction machine according to the present invention.

In a graph illustrated in Fig. 40, by way of example, the horizontal axis represents ratios which are taken by the respective values of the above-mentioned various operation times on an assumption of the target operation time (operation budget) being set to 100 [%], and the vertical axis represents desired months time-serially arranged at intervals of one month. The respective data of the months are displayed in the form of bar graphs all having the same length in the left-and-right direction, in which only ratios of the specific item zones vary. In each bar graph corresponding to that in Fig. 39, the travel lever operation time rate Tr_u_travel, the work lever operation time rate Tr_u_lever_ex_travel, and the non-operation time rate Tr_u_nop are displayed in the order named rightward from the left side in different colors from each other on an assumption that the target operation time (x hours in this example) is set to 100 [%]. In the bar graphs adjacent to each other, boundary lines between the specific item zones of each bar graph are interconnected by transition lines. Furthermore, the respective values (ratio values) of the travel lever operation time rate Tr_u_travel, the work lever operation time rate Tr_u_lever_ex_travel, and the non-operation time rate Tr_u_nop are also displayed as numerals in the corresponding specific item zones of each bar graph.

As in the screen image of Fig. 39, by clicking an operation budget setting button which is similarly disposed in an upper central portion of the area B of the screen at a position slightly offset to the left side, a list screen window for setting the operation budget (target operation time) in units of a month and a list screen window for setting the operation budget (target operation time) in units of a week are displayed as shown in the right side of Fig. 40. With such a screen layout, it is possible to recognize the operation status with respect to the target operation time (operation budget) and to facilitate production management. Further, since the length of each bar graph is constant regardless of what value is set as the operation budget, the operator can change the operation budget at relatively high flexibility and can perform machine management in accordance with a dedicated base time.

In Figs. 39 and 40, as in the screen images of Figs. 36 and 37 described above, the data period is displayed in an upper right portion of the area B of the screen, and a "year/month selection pull-down menu", etc. are disposed in places. Further, though not shown, a memo box and a space for entry of work amounts may additionally be provided similarly to those described above. Thus, by displaying the operation ratios and those data at the same time, the operator can evaluate the work plan upon looking at the graph.

(2-7) Blowby Data and Fuel Consumption Rate Data

The "blowby data" file is displayed by processing engine blowby pressure data detected by the sensor 47b, which is contained in the operation data stored in the data storage area 4ea of the storage device in the user-side personal computer 4, into information indicating behaviors of the engine blowby pressure for a period spanning from several days to one month. Also, the "fuel consumption rate data" file is displayed by processing engine fuel consumption data detected by the sensor 47a, which is contained in the operation data stored in the data storage area 4ea of the storage device in the user-side personal computer 4, into information indicating behaviors of the fuel consumption for a period spanning from several days to one month.

Fig. 41 is a flowchart showing one example of a sequence of blowby data processing steps executed by the blowby & fuel-consumption-rate data processing program 127 stored in the program storage area 4ea in the user-side personal computer 4 constituting the one embodiment of the information providing system for the construction machine according to the present invention.

Referring to Fig. 41, in step 300, the CPU first extracts the time unit data [a] to [b] of the desired period (e.g., the desired month) from the time unit data [1] to [n] in the relevant file having the structure shown in Fig. 6, in which the blowby data to be now processed is contained, while referring to the date and the time of day of each data. From the extracted time unit data [a] to [b], the CPU then takes out the time unit data [1] to [24] of the desired day [k (= operator indicating the date)] (for convenience, the following description will be made in connection with an example in which the time unit is an hour). In this respect, as described above, each of the time unit data [1] to [24] contains the lever operation time Tlever and the average blowby pressure in each time unit.

Thereafter, in step 301, respective values of the lever operation time Tlever of each time unit data [j] (j = 1 to 24) are totalized to obtain a daily accumulated lever operation (including travel) time Tlever_day [k] from the following formula:

$$Tlever_day\ [k] = \sum Tlever\ [j]$$

Thereafter, in step 302, the average blowby pressure Pblowby [j] in each unit data [j] is multiplied by the number of samplings n[j] in each unit data [j], and the resulting values are totalized for all of the time units j = 1 to 24. This total value is divided by the number of samplings $\sum$ n[j] in all of the time units to obtain a daily average blowby pressure Pblowby_day from the following formula:

$$Pblowby_day\ [k] = \sum (Pblowby\ [j] \times n[j]) / \sum n[j]$$

Then; in step 303, the daily accumulated lever operation time Tlever_day and the daily average blowby pressure Pblowby_day, which have been calculated respectively in above steps 301 and 302, are plotted on a graph (in the case of displaying those data in the form of a list as well, the respective numerical values are displayed in the list).

Then, the CPU proceeds to step 304 in which the operator k indicating the date is incremented by one, and it determines in step 305 whether k is larger than a value representing the date of the time unit data [b]. If this determination is not satisfied, the CPU returns to step 300 and repeats the same sequence of steps as that described above. As a result, for a period spanning from the extracted time unit data [a (e.g., ○/×/Δ (month/day/hour))] to the extracted time unit data [b (e.g., ×/○/□ (month/day/hour))], the daily accumulated lever operation time Tlever_day and the daily average blowby pressure Pblowby_day are plotted on the graph.

If the determination in step 305 is satisfied, the processing flow is brought to an end.

Fig. 42 is an illustration showing one example (corresponding to the flow of Fig. 41) of a screen image graphically displaying blowby data, which has been processed by the blowby & fuel-consumption-rate data processing program 127, on the display unit 4B of the user-side personal computer 4 constituting the one embodiment of the information providing system for the construction machine according to the present invention.

In a graph illustrated in Fig. 42, by way of example, the vertical axis defined on the left side for the blowby pressure represents a pressure value [KPa] and the vertical axis defined on the right side for the lever operation time represents an operation rate [%] on an assumption of the engine run time Teng being set to 100%, while the horizontal axis represents a date (1st to 30th day of the desired month). In the graph, the daily accumulated lever operation time Tlever_day and the daily average blowby pressure Pblowby_day are displayed in the form of line graphs, preferably, in different colors from each other. By displaying both the blowby pressure and the operation rate on the same graph in such a way, the operator can more easily recognize a tendency of change in the blowby pressure and can more exactly judge, particularly, the meaning of change in the blowby pressure. While the daily average blowby pressure is graphically displayed in the example described above, the present invention is not limited to the illustrated example, and the average blowby pressure per week or hour may be graphically displayed.

Fig. 43 is a flowchart showing one example of a sequence of fuel-consumption-rate data processing steps executed by the blowby & fuel-consumption-rate data processing program 127 stored in the program storage area 4ea in the user-side personal computer 4 constituting the one embodiment of the information providing system for the construction machine according to the present invention.

Referring to Fig. 43, in step 310, the CPU first extracts the time unit data [a] to [b] of the desired period (e.g., the desired month) from the time unit data [1] to [n] in the relevant file having the structure shown in Fig. 6, in which the fuel consumption rate data to be now processed is contained, while referring to the date and the time of day of each data. From the extracted time unit data [a] to [b], the CPU then takes out the time unit data [1] to [24] of the desired day [k (= operator indicating the date)] (for convenience, the following description will be made in connection with an example in which the time unit is an hour). In this respect, as described above, each of the time unit data [1] to [24] contains the lever operation time Tlever and the average fuel consumption rate in each time unit.

Thereafter, in step 311, respective values of the lever operation time Tlever of each time unit data [j] (j = 1 to 24) are totalized to obtain a daily accumulated lever operation (including travel) time Tlever_day [k] from the following formula:

$$Tlever_day\ [k] = \sum Tlever\ [j]$$

Thereafter, in step 312, the average fuel consumption rate Qfuel [j] in each unit data [j] is multiplied by the number of samplings n[j] in each unit data [j], and the resulting values are totalized for all of the time units j = 1 to 24. This total value is divided by the number of samplings $\sum$ n[j] in all of the time units to obtain a daily average fuel consumption rate Qfuel_day from the following formula:

$$Qfuel_day\ [k] = \sum (Qfuel\ [j] \times n[j]) / \sum [j]$$

Then, in step 313, the daily accumulated lever operation time Tlever_day and the daily average fuel consumption rate Qfuel_day, which have been calculated respectively in above steps 311 and 312, are plotted on a graph (in the case of displaying those data in the form of a list as well, the respective numerical values are displayed in the list).

Then, the CPU proceeds to step 314 in which the operator k indicating the date is incremented by one, and it determines in step 315 whether k is larger than a value representing the date of the time unit data [b]. If this determination is not satisfied, the CPU returns to step 310 and repeats the same sequence of steps as that described above. As a result, for a period spanning from the extracted time unit data [a (e.g., ○/×/Δ (month/day/hour))] to the extracted time unit data [b (e.g., ×/○/□ (month/day/hour))], the daily accumulated lever operation time Tlever_day and the daily average fuel consumption rate Qfuel_day are plotted on the graph.

If the determination in step 315 is satisfied, the processing flow is brought to an end.

Fig. 44 is an illustration showing one example (corresponding to the flow of Fig. 43) of a screen image graphically displaying fuel consumption rate data, which has been processed by the blowby & fuel-consumption-rate data processing program 127, on the display unit 4B of the user-side personal computer 4 constituting the one embodiment of the information providing system for the construction machine according to the present invention.

In a graph illustrated in Fig. 44, by way of example, the vertical axis defined on the left side for the fuel consumption rate represents an engine load rate (= actual fuel consumption / fuel consumption at 100% of the rated load) [%] and the vertical axis defined on the right side for the lever operation time represents an operation rate [%] on an assumption of the engine run time Teng being set to 100%, while the horizontal axis represents a date (1st to 30th day of the desired month). In the graph, the daily accumulated lever operation time Tlever_day and the daily average fuel consumption rate Qfuel_day are displayed in the form of line graphs, preferably, in different colors from each other. By displaying both the fuel consumption rate and the operation rate on the same graph in such a way, the operator can more easily recognize a tendency of change in the fuel consumption rate and can more exactly judge, particularly, the meaning of change in the fuel consumption rate. While the daily average fuel consumption rate is graphically displayed in the example described above, the present invention is not limited to the illustrated example, and the average fuel consumption rate per week or hour may be graphically displayed.

In Figs. 42 and 44, as in the display screen images of the above-described examples, the data period is displayed in an upper right portion of the area B of the screen, as indicated by "○○/□/× - Δ/□(year/month/day)". Further, a "month selection pull-down menu", a "+" button and a "-" button, which are used for displaying the data per month, are disposed in an upper left portion of the area B of the screen. Additionally, the blowby pressure shown in Fig. 42 and the fuel consumption rate (load pressure) shown in Fig. 44 may be both displayed on the same graph.

(2-8) Event/Alarm and Other Data

The "event/alarm and other data" file is displayed by processing various event data detected by the sensors, such as engine on/off and key switch on/off, various alarm data, etc., which are contained in the operation data stored in the data storage area 4ea of the storage device in the user-side personal computer 4, into information indicating behaviors of the event/alarm and other data for a period spanning from several days to one month. The event data is grouped into an "event data" file, and the alarm and other data is grouped into an "alarm and fault data" folder. However, since those two kinds of data are processed in a similar manner, the following description is made below by regarding those two kinds of data together as the event/alarm and other data.

Fig. 45 is a flowchart showing one example of a sequence of event/alarm and other data processing steps executed by the event/alarm and other data processing program 128 stored in the program storage area 4ea in the user-side personal computer 4 constituting the one embodiment of the information providing system for the construction machine according to the present invention.

Referring to Fig. 45, in step 320, the CPU first extracts the time unit data [a] to [b] of the desired day from the time unit data [1] to [n] in the relevant file having the structure shown in Fig. 6, which is to be now processed, while referring to the date and the time of day of each data. From the extracted time unit data [a] to [b], the CPU then takes out event data [a] to [e] to be processed.

Thereafter, the CPU sets in step 321 an operator i = a, which is used for counting the time unit data. In step 322, the CPU clears, to an initial value 0, a count value N1 representing the accumulated number of times at which the event number 1 has occurred, followed by proceeding to step 323.

In step 323, the CPU reads event data [i] of each unit data [i] and determines whether the event number 1 is turned on (in other words, whether the event of the event number 1 has occurred during the relevant unit time. If this determination is satisfied, the CPU proceeds to step 324 in which the count value N1 representing the accumulated number of times of occurrences is incremented by one, followed by proceeding to step 325. If the determination in step 323 is not satisfied, the CPU directly proceeds to step 325.

After incrementing the operator i by one in step 325, the CPU proceeds to step 326. In step 326, the CPU determines whether i is larger than b. If this determination is not satisfied, the CPU returns to step 323 and repeats the same sequence of steps as that described above. As a result, for the desired day (for a period of the time units [a] to [b]), how many times the event of the event number 1 has occurred (i.e., the accumulated number of times N1 of occurrences in the desired day) is calculated.

If the determination in step 326 is satisfied, the CPU proceeds to step 327. In step 327, the CPU determines whether the counted number of times N1 of occurrences is not smaller than 10. If this determination is satisfied, the CPU proceeds to step 329 in which a relevant box (i.e., a box corresponding to the desired day) is painted all over in a first color (for example, red representing an alarm color), followed by bringing this processing flow to an end. If that determination is not satisfied, the CPU proceeds to step 328 in which a relevant box (i.e., a box corresponding to the desired day) is painted all over in a second color (for example, yellow) and the accumulated number of times N1 of occurrences is put in the relevant box, followed by bringing this processing flow to an end.

Note that, while the above description has been made in a simplified way for easier understanding, the sequence of steps 320 to 328 or 329 is executed for each of a plurality of days. Also, while the above description has been made, by way of example, in connection with only the event of the event number 1, similar processing is executed for each event of another number.

As a result, for each event, the box corresponding to the day in which the event has occurred 10 or more times is painted red and the box corresponding to the day in which the event has occurred 9 or less times is painted yellow with the number of times of event occurrences displayed in the yellow box. For the day showing the number of times of event occurrences being zero, i.e., for the day in which the event has not occurred, the corresponding box may be left blank (see Fig. 46 described later) in stead of displaying "0" and painting it yellow. Also, the threshold used for determining whether the box is to be painted red or not may be variably set other than 10 for change to any suitable number of times in accordance with, for example, the user's desire.

Fig. 46 is an illustration showing one example of a screen image displaying data (alarm data in this example), which has been processed by the event/alarm and other data processing program 128, on the display unit 4B of the user-side personal computer 4 constituting the one embodiment of the information providing system for the construction machine according to the present invention.

In a graph illustrated in Fig. 46, by way of example, various alarms (regarding the coolant level, the coolant temperature, the hydraulic oil level, the hydraulic oil temperature, etc.) are listed in the vertical direction, and the horizontal axis represents a period of one month from 1st to 30th of ×× (month). Along the horizontal axis, boxes are demarcated per day and displayed in a color-coded manner. More specifically, as described above, the box corresponding to the day in which the relevant event (alarm in this example) has occurred 10 or more times is painted red (hatched instead in Fig. 46) and the box corresponding to the day in which the event has occurred 1 or more times but 9 or less times is painted yellow (not colored in Fig. 46) with the number of times of event occurrences displayed as a numeral (denoted by a, b, c, etc. in Fig. 46) in that box. Further, in the illustrated example, the box showing the number of times of event occurrences being zero is displayed, as described above, in such a way as containing no numeral and being colorless. Such graphical display makes it possible to recognize the frequency of alarm occurrences at a glance and to facilitate management of machine trouble history. In addition, by painting the box corresponding to the day in which the event has occurred many times (10 times in this example) in a conspicuous color, e.g., red, the operator can understand at a glance which item has occurred at a large number of times.

Additionally, as in the several screen examples described above, a "month selection pull-down menu" in the form of a menu bar, a "+" button and a "-" button, which enable the operator to select year/month of the relevant data to be displayed, are disposed in an upper left portion of the area B of the screen. Further, the data period is displayed in an upper right portion of the area B, as indicated by "○○/□/× - Δ/□ (year/month/day)". With such a screen layout, similar advantages to those described above can also be obtained.

Moreover, as in the several screen examples described above, two tags "Graph" and "Report" are selectably displayed in an upper left portion of the area B, thus enabling the operator to display data of the same contents in the form of a graph or a list including numerical values in a selectable manner (Fig. 46 shows an example displayed when the "Graph" tag is selected). This makes it easier to change display between graph and numerical data in two-way directions and to realize the display reversing operation.

Figs. 47 and 48 are each an illustration showing one example of a screen image displaying the data (the alarm data, etc. in Fig. 47 and the event data in Fig. 45) in the form of a list on the display unit 4B of the user-side personal computer 4 constituting the one embodiment of the information providing system for the construction machine according to the present invention. As shown in Figs. 47 and 48, the alarm data, etc. and the event data are each made up of the date and the time of day of occurrence, the detail of the alarm, etc. or the event, and the status, which are time-serially displayed in the vertical direction. As an alternative, the alarm data, etc. and the event data may be both displayed in the same list in a mixed way. This screen layout makes it possible to realize a comprehensive analysis of all the troubles and events in a time-serial manner and to increase the efficiency of trouble-shooting.

Thought not specifically shown in Figs. 46, 47 and 48, a "memo box" allowing the operator to put a memo in it, as required, may be provided in the right side of each screen. With such screen layout, matters which cannot be expressed by display of a box pattern and a list can also be displayed as a memo.

(2-9) Histogram Data

The "histogram data" file is displayed by processing the operation data, which is stored in the data storage area 4ea of the storage device in the user-side personal computer 4, into behavior transition information at intervals of a predetermined time (e.g., per day or per a predetermined engine run time).

Fig. 49 is a flowchart showing one example of a sequence of event/alarm and other data processing steps executed by the histogram processing program 129 stored in the program storage area 4ea in the user-side personal computer 4 constituting the one embodiment of the information providing system for the construction machine according to the present invention.

Referring to Fig. 49, in step 340, the CPU first extracts the time unit data [a] to [b] of the desired certain period (desired time zone in this example, but it may be replaced by the desired day, etc.) from the time unit data [1] to [n] (including various frequency distribution data as described above) in the relevant file having the structure shown in Fig. 6, which is to be now processed, while referring to the date and the time of day of each data.

Then, for a region number n indicating a plurality of frequency regions (e.g., engine revolution speed regions of 0 - 600 rpm, 600 - 800 rpm, 800 - 1000 rpm, 1000 - 1200 rpm, 1200 - 1400 rpm, 1400 - 1600 rpm, 1600 - 1800 rpm, 1800 - 2000 rpm, 2000 - 2200 rpm, 2200 - 2400 rpm, 2400 - 2600 rpm, and 2600 rpm or over) which are set to look at a frequency distribution for a certain item A (e.g., engine revolution speed distribution, hydraulic oil temperature distribution, coolant temperature distribution, pump delivery pressure distribution, digging pressure distribution, or traveling pressure distribution), the CPU sets in step 341 the region number n = 1 (corresponding to the region of 0 - 600 rpm in the above example).

Thereafter, the CPU sets in step 342 an operator i = a, which is used for counting the time unit data, followed by proceeding to step 343.

In step 343, from among the various frequency distribution data in each unit data [i], a value of time for the item A (e.g., the engine revolution speed) corresponding to each region (e.g., 0 - 600 rpm) indicated by the region number n is extracted and added to a preceding value (described later) to obtain an accumulated value.

After incrementing the operator i by one in step 344, the CPU proceeds to step 345. In step 345, the CPU determines whether i is larger than b. If this determination is not satisfied, the CPU returns to step 343 and repeats the same sequence of steps as that described above. As a result, for the desired day (for a period of the time units [a] to [b]), a total time for the item A (e.g., the engine revolution speed) corresponding to each region (e.g., 0 - 600 rpm) indicated by the region number n is calculated.

If the determination in step 345 is satisfied, the CPU increments the region number n by one in step 346, followed by proceeding to step 347.

In step 347, the CPU determines whether the region number n reaches the specified number of regions (12 in the example in which frequency regions are given as engine revolution speed regions of 0 - 600 rpm, 600 - 800 rpm, 800 - 1000 rpm, 1000 - 1200 rpm, 1200 - 1400 rpm, 1400 - 1600 rpm, 1600 - 1800 rpm, 1800 - 2000 rpm, 2000 - 2200 rpm, 2200 - 2400 rpm, 2400 - 2600 rpm, and 2600 rpm or over). If this determination is not satisfied, the CPU returns to step 342 and repeats the same sequence of steps as that described above. As a result, for the desired day (for a period of the time units [a] to [b]), a total time for the item A (e.g., the engine revolution speed) corresponding to each of the frequency distribution regions (e.g., 12 regions in this example) is calculated.

Thereafter, the CPU proceeds to step 348 in which the calculated results are displayed in the form of a bar graph sectioned into the frequency distribution regions and painted in different colors for each of the frequency distribution regions, followed by bringing this processing flow to an end.

While the description is simplified for easier understanding and is made in connection with, by way of example, only the item A, similar processing to that described above is executed for each of the other items and for each of plural time zones set at intervals of the processing time.

As a result, a plurality of bar graphs representing the respective items sectioned into the predetermined frequency distribution regions, which are painted in different colors from each other, are formed at intervals of the processing time.

Fig. 50 is an illustration showing one example (engine revolution speed frequency distribution) of a screen image graphically displaying histogram data, which has been processed by the histogram processing program 129, on the display unit 4B of the user-side personal computer 4 constituting the one embodiment of the information providing system for the construction machine according to the present invention.

In a graph illustrated in Fig. 50, by way of example, the vertical axis represents the engine run time. Frequency distribution data of the engine revolution speed (given as hours in respective regions of 0 - 600 rpm, 600 - 800 rpm, 800 - 1000 rpm, 1000 - 1200 rpm, 1200 - 1400 rpm, 1400 - 1600 rpm, 1600 - 1800 rpm, 1800 - 2000 rpm, 2000 - 2200 rpm, 2200 - 2400 rpm, 2400 - 2600 rpm, and 2600 rpm or over), which are measured at intervals of the predetermined engine run time (e.g., several tens hours to 200 hours), are displayed in the form of upright bar graphs time-serially arranged in a horizontal direction.

In each of the bar graphs, the frequency distribution regions are arranged successively from the high revolution speed side to the low revolution speed side in the direction from above to below in different colors from each other (though not shown in detail, the colors are preferably selected so as to change from a warm color, e.g., red, toward a cold and dark color, while gradually becoming lighter and then conversely becoming darker via yellow and green, in the direction from above to below for the purpose of presenting a cautious color in the region of excessively high revolutions speeds and providing continuity from a visual point of view), thereby making up individual specific component zones of the bar graph. Further, in the bar graphs adjacent to each other in the left-to-right direction, boundary lines between the specific component zones of each bar graph are interconnected by transition lines so that the operator can recognize at a glance time-dependent transitions of the respective specific components (i.e., the frequency distribution regions).

In addition, under each bar graph, the predetermined accumulated time value (e.g., 200 hours, 300 hours, etc. representing the accumulated engine run time) corresponding to the bar graph data and the date (e.g., the start date, the end date, or the middle date of the data measurement) representing the corresponding data are displayed. This enables the operator to understand at a glance the region (engine revolution speed region in this example) in which the operation is performed at high frequency. Further, since the horizontal axis is graduated to intervals of the predetermined time, it is possible to easily read from which point in time the tendency has changed, and to increase the efficiency of troubleshooting. In particular, by selecting the predetermined time interval to 100 hours of the engine run time, resulting display of the data per 100 hours can be used for evaluation of machine components.

Fig. 51 is an illustration showing another example (hydraulic oil temperature frequency distribution) of the screen image graphically displaying histogram data, which has been processed by the histogram processing program 129, on the display unit 4B of the user-side personal computer 4 constituting the one embodiment of the information providing system for the construction machine according to the present invention.

In a graph of Fig. 51, as in Fig. 50, frequency distribution data of the hydraulic oil temperature (given as hours in respective regions of - 20°C or lower, - 20°C to - 10°C, - 10°C to 0°C, 0°C to 10°C, 10°C to 20°C, 20°C to 30°C, 30°C to 40°C, 40°C to 50°C, 50°C to 60°C, 60°C to 70°C, 70°C to 80°C, 80°C to 90°C, 90°C to 100°C, 100°C to 110°C, and 110°C or higher), which are measured at intervals of the predetermined engine run time (e.g., several tens hours to 200 hours), are displayed in the form of upright bar graphs time-serially arranged in a horizontal direction. In each of the bar graphs, the frequency distribution regions are arranged successively from the high temperature side to the low temperature side in the direction from above to below in different colors from each other (though not shown in detail, the colors are preferably selected so as to change from a warm color, e.g., red, toward a cold and dark color, while gradually becoming lighter and then conversely becoming darker via yellow and green, in the direction from above to below in match with a human sense of temperature perception), thereby making up individual specific component zones of the bar graph.

Fig. 52 is an illustration showing still another example (coolant temperature frequency distribution) of the screen image graphically displaying histogram data, which has been processed by the histogram processing program 129, on the display unit 4B of the user-side personal computer 4 constituting the one embodiment of the information providing system for the construction machine according to the present invention.

In a graph of Fig. 52, as in Figs. 50 and 51, frequency distribution data of the coolant temperature (given as hours in respective regions of 0°C or lower, 0°C to 10°C, 10°C to 20°C, 20°C to 30°C, 30°C to 40°C, 40°C to 50°C, 50°C to 60°C, 60°C to 70°C, 70°C to 80°C, 80°C to 90°C, 90°C to 100°C, 100°C to 110°C, and 110°C or higher), which are measured at intervals of the predetermined engine run time (e.g., several tens hours to 200 hours), are displayed in the form of upright bar graphs time-serially arranged in a horizontal direction. In each of the bar graphs, the frequency distribution regions are arranged successively from the high temperature side to the low temperature side in the direction from above to below in different colors from each other (though not shown in detail, the colors are preferably selected so as to change from a warm color, e.g., red, toward a cold and dark color, while gradually becoming lighter and then conversely becoming darker via yellow and green, in the direction from above to below in match with a human sense of temperature perception), thereby making up individual specific component zones of the bar graph.

Fig. 53 is an illustration showing still another example (pump pressure distribution) of the screen image graphically displaying histogram data, which has been processed by the histogram processing program 129, on the display unit 4B of the user-side personal computer 4 constituting the one embodiment of the information providing system for the construction machine according to the present invention.

In a graph of Fig. 53, as in Figs. 50 to 52, frequency distribution data of the pump pressure (given as hours. in respective regions of 0 - 4 MPa, 4 - 6 MPa, 6 - 8 MPa, 8 - 10 MPa, 10 - 12 MPa, 12 - 14 MPa, 14 - 16 MPa, 16 - 18 MPa, 18 - 20 MPa, 20 - 22 MPa, 22 - 24 MPa, 24 - 26 MPa, 26 - 28 MPa, 28 - 30 MPa, 30 - 32 MPa, 32 - 34 MPa, 34 - 36 MPa, 36 - 38 MPa, 38 - 40 MPa, and 40 MPa or over), which are measured at intervals of the predetermined engine run time (e.g., several tens hours to 200 hours), are displayed in the form of upright bar graphs time-serially arranged in a horizontal direction. In each of the bar graphs, the frequency distribution regions are arranged successively from the high pressure side to the low pressure side in the direction from above to below in different colors from each other (though not shown in detail, the colors are preferably selected so as to change from a warm color, e.g., red, toward a cold and dark color, while gradually becoming lighter and then conversely becoming darker via yellow and green, in the direction from above to below for the purpose of presenting a cautious color in the region of excessively high pressure and providing continuity from a visual point of view), thereby making up individual specific component zones of the bar graph.

Fig. 54 is an illustration showing still another example (digging pressure distribution) of the screen image graphically displaying histogram data, which has been processed by the histogram processing program 129, on the display unit 4B of the user-side personal computer 4 constituting the one embodiment of the information providing system for the construction machine according to the present invention.

In a graph of Fig. 54, as in Figs. 50 to 53, frequency distribution data of the digging pressure (given as hours in respective regions of 0 - 4 MPa, 4 - 6 MPa, 6 - 8 MPa, 8 - 10 MPa, 10 - 12 MPa, 12 - 14 MPa, 14 - 16 MPa, 16 - 18 MPa, 18 - 20 MPa, 20 - 22 MPa, 22 - 24 MPa, 24 - 26 MPa, 26 - 28 MPa, 28 - 30 MPa, 30 - 32 MPa, 32 - 34 MPa, 34 - 36 MPa, 36 - 38 MPa, 38 - 40 MPa, and 40 MPa or over), which are measured at intervals of the predetermined engine run time (e.g., several tens hours to 200 hours), are displayed in the form of upright bar graphs time-serially arranged in a horizontal direction. In each of the bar graphs, the frequency distribution regions are arranged successively from the high pressure side to the low pressure side in the direction from above to below in different colors from each other (though not shown in detail, the colors are preferably selected so as to change from a warm color, e.g., red, toward a cold and dark color, while gradually becoming lighter and then conversely becoming darker via yellow and green, in the direction from above to below for the purpose of presenting a cautious color in the region of excessively high pressure and providing continuity from a visual point of view), thereby making up individual specific component zones of the bar graph.

Fig. 55 is an illustration showing still another example (traveling pressure distribution) of the screen image graphically displaying histogram data, which has been processed by the histogram processing program 129, on the display unit 4B of the user-side personal computer 4 constituting the one embodiment of the information providing system for the construction machine according to the present invention.

In a graph of Fig. 55, as in Figs. 50 to 54, frequency distribution data of the traveling pressure (given as hours in respective regions of 0 - 4 MPa, 4 - 6 MPa, 6 - 8 MPa, 8 - 10 MPa, 10 - 12 MPa, 12 - 14 MPa, 14 - 16 MPa, 16 - 18 MPa, 18 - 20 MPa, 20 - 22 MPa, 22 - 24 MPa, 24 - 26 MPa, 26 - 28 MPa, 28 - 30 MPa, 30 - 32 MPa, 32 - 34 MPa, 34 - 36 MPa, 36 - 38 MPa, 38 - 40 MPa, and 40 MPa or over), which are measured at intervals of the predetermined engine run time (e.g., several tens hours to 200 hours), are displayed in the form of upright bar graphs time-serially arranged in a horizontal direction. In each of the bar graphs, the frequency distribution regions are arranged successively from the high pressure side to the low pressure side in the direction from above to below in different colors from each other (though not shown in detail, the colors are preferably selected so as to change from a warm color, e.g., red, toward a cold and dark color, while gradually becoming lighter and then conversely becoming darker via yellow and green, in the direction from above to below for the purpose of presenting a cautious color in the region of excessively high pressure and providing continuity from a visual point of view), thereby making up individual specific component zones of the bar graph.

While the frequency distribution regions are displayed all in different colors in Figs. 50 to 55, the present invention is not limited to the examples described above, and only the regions to be noted (e.g., the regions in excess of a certain threshold) may be colored. Such graphical display enables the operator to understand, for example, the occurrence of an abnormality with more ease. As an alternative, the frequency distribution regions may be displayed with only monochromatic gradations instead of coloring. Such monochromatic display enables the operator to more easily look at the data when printed out by a printer. Further, the histogram range may be adjustable, as required, to a width that is desired for viewing.

Additionally, as in the several screen examples described above, a "base period selection pull-down menu" in the form of a menu bar, a "+" button and a "-" button, which enables the operator to select a base period (hour meter value representing the accumulated engine run time in this example) for the relevant data to be displayed, are disposed in an upper left portion of the area B of the screen. The data period is displayed in an upper right portion of the area B, as indicated by "○○/□/× - Δ/□ (year/month/day)". Further, as in the several screen examples described above, two tags "Graph" and "Report" are selectably displayed in an upper left portion of the area B, thus enabling the operator to display data of the same contents in the form of a graph or a list including numerical values in a selectable manner (Figs. 50 to 55 each show the example displayed when the "Graph" tag is selected).

(3) Second Graph Selection Area C

Fig. 56 is an illustration showing a display example of the second graph selection area C and the menu button area D (described later) both displayed on the display unit 4B of the user-side personal computer 4 constituting the one embodiment of the information providing system for the construction machine according to the present invention.

As shown in Fig. 56 and Fig. 9 that has been described above, in the second graph selection area C, four selection boxes representing the "machine model name" of the hydraulic excavator 1, the "machine number" of the same, the "book file name (download date)", and the "data file name (graph name)" are disposed in the form of pull-down menus successively toward the right from the left end, allowing the operator to easily select whichever ones of the "machine model name", the "machine number", the "book file name", and the "data file name" the operator wants to look at. Further, each menu having a hierarchical structure can be displayed in a smaller space as a whole.

As described above in connection with the first graph selection area A, the "machine model name" box and the "machine number" box may be replaced, for example, by an "operation site name" box and a "specific machine name for custom management" box such that the box name is rewritable as required.

Additionally, the "book file name" box may be displayed, for example, in the forward or backward order of the dates each corresponding to file download date (or the range covered by the relevant data).

(4) Menu Button Area D

As shown in Figs. 56 and 9 described above, in this menu button area D, seven frequently used buttons "Back", "Forward", "Print", "Preview", "Send Mail", "Option", and "Help" are disposed successively toward the right from the left end (e.g., in the descending order of frequency of use).

For example, when the "Print" button is clicked, the data (or the whole of the book file) displayed on the screen at that time can be printed out by a printer in accordance with the printing program 133 (not described here in detail) stored in the program storage area 4ea in the user-side personal computer 4. When the "Preview" button is clicked, a print layout which will be printed out as it is upon clicking of the "Print" button can be displayed on the screen beforehand.

Further, when the "Send Mail" button serving as a sending instruction means is clicked, the data (or the whole of the book file) displayed on the screen at that time can be sent by E-mail (e.g., as an attached file) via the communication interface 4b (see Fig. 7) in accordance with the mail outputting program 131 (not described here in detail) stored in the program storage area 4ea in the user-side personal computer 4. Accordingly, not only the other user-side personal computer 4, the main server 5, and the intermediate server 6, but also any other information terminal (such as a personal computer and a portable terminal) can open and read the data, etc. sent by E-mail so long as the data taking-in program 100 and the information displaying program 110 are both installed, for example, as application software in the relevant unit.

When the "Option" button is clicked, various kinds of settings incorporated as options in the operating program can be changed as required.

Fig. 57 is an illustration showing an example (graph display item color setting) of an option setting screen displayed upon clicking of an the "option setting (Option)" button in the menu button area D that is displayed on the display unit 4B of the user-side personal computer 4 constituting the one embodiment of the information providing system for the construction machine according to the present invention.

The screen image shown in Fig. 57 is one on which colors of individual graphs (only a graphical expression itself or including affixed characters, etc.) can be designated and changed. In other words, on this screen, the operator can select the colors of individual graphs representing "Non Operation", "Time Out", and so on. The selected color is displayed as a sample in a box "Color" (though not specifically shown in Fig. 57). It is therefore possible to easily change the colors of individual graphs to ones convenient for the operator to view. Additionally, the individual graphs may be displayed by setting different monochrome gradations between white and black, for example, instead of displaying them in different colors. In such a case, the monochrome gradations of individual graphs can separately be set, for example, when printed out by using a monochrome printer.

Further, though not shown, when an initialization file is installed, setting data can optionally be set and changed based on the file. Thus, the graph display method can easily be modified by preparing such an initialization file in advance. Moreover, in the case capable of designating the place where data is to be stored, the data storage place can optionally be changed (by using the storing program 132 stored in the program storage area 4ea in the user-side personal computer 4). Thus, the displayable contents can easily be changed by selecting a data group to be displayed. Additionally, in the case capable of switching over a manner of displaying the date and the time of day, it is possible to change the date and the time of day displayed on the graph to more convenient ones, for example, when the manner of displaying the date and the time of day differs depending on countries and/or districts.

(5) Status Display Area E

As indicated by "○○○○○○" in Figs. 9 and 10 described above and in Fig. 60, etc. that will be described later, this status display area E briefly displays information regarding the contents currently displayed in the graph display area B (e.g., information capable of specifying the machine, such as "machine model name" and "machine number", information indicating the type of graph, information indicating the data display period, etc.). This enables the operator to confirm what is currently displayed on the screen, even when a pull-down menu in the menu area F, described later, is opened downward to extend over a large space and the graph displayed in the graph display area B is concealed.

(6) Menu Area F

Fig. 58 is an illustration showing a display example of the menu area F displayed on the display unit 4B of the user-side personal computer 4 constituting the one embodiment of the information providing system for the construction machine according to the present invention.

As shown in Fig. 58 and Fig. 9 that has been described above, in this menu area F, five frequently used pull-down menus (buttons) "File", "Edit", "View", "Option", and "Help" are disposed successively toward the right from the left end (e.g., in the descending order of frequency of use).

Fig. 58 shows an example of a detailed menu pulled down upon clicking of the "File" menu. In the illustrated example, this menu contains eight frequently used buttons "Print", "Preview", "Printer Option", "Import BookFile", "Export BookFile", "Send BookFile by E-Mail", "BookFile Properties", and "Exit", which are disposed successively downward from the top (e.g., in the descending order of frequency of use).

For example, when the "Send BookFile by E-Mail" button serving as a sending instruction means is clicked, the data (or the whole of the book file) displayed on the screen at that time can be sent by E-mail via the communication interface 4b (see Fig. 7) similarly to the case of clicking the above-described "Send Mail" button in the menu button area D shown in Fig. 56.

Also, when the "BookFile Properties" is clicked, properties of the relevant book file, such as download date and time, time-zone difference data, serial number, and name of the person having downloaded the book file, can be displayed (though not shown) in accordance with the file information displaying program 134 (not described here in detail) stored in the program storage area 4ea in the user-side personal computer 4. Display of the properties facilitates management of each book file.

Fig. 59 is an illustration showing an example of a detailed menu displayed as a pull-down menu upon clicking of the "File" menu in the menu area F that is displayed on the display unit 4B of the user-side personal computer 4 constituting the one embodiment of the information providing system for the construction machine according to the present invention. In the illustrated example, "Go to", a menu for various graphs such as "life data (Life)", "Tool Bar" and "Status Bar" are displayed.

When the "Go to" menu is clicked, two menus "Back" and "Forward", and the names of the graphs opened at that time (three graphs in the illustrated example, i.e., life data graph of "YZOOO-103030", life data graph of "YZOOO-103030", and life data graph of "YZOOO-103030") are displayed on the right side as shown. By clicking any one of those menus and names, the corresponding graphical screen image is displayed. In addition to the box for displaying the graphs opened at that time, an option menu "graphical representation (all)", for example, may be disposed to provide the function of developing all of the registered graphs. In this case, all the graphs can be formed at a time.

The menu for various graphs displays the kinds of graphs, which are viewable for the machine model ("YZOO" in this example) currently selected on the screen. In this example, in addition to the "life data (Life)", the following data are displayed, i.e., "operation daily data (Operation-Daily)", "operation hours data (Operation-Hours)", "operation ratio data (Operation-Ratio)", "operation summary data (Operation-Summary)", "alarm, etc. data _ (Alarms_Faults-Alarms)", "alarm, etc. data _ (Alarms_Faults-Faults)", "event data _ (Events)", "engine revolution speed histogram data (Histogram-Engine Speed)", "hydraulic oil temperature histogram data (Histogram-Hydraulic Oil Temp)", "coolant temperature histogram data (Histogram-Coolant Temp)", "pump pressure histogram data (Histogram-Pump Press)", "digging pressure histogram data (Histogram-Digging Press", and "traveling pressure histogram data (Histogram-Traveling Press)". Thus, since a list of graph items different for each machine model is displayed, the operator can recognize the kinds of viewable graphs at a glance. Additionally, the name of the relevant machine model name itself may be displayed in the display box of the menu for various graphs. This enables the operator to recognize at a glance to which machine model the displayed graph items belong.

(7) Others

Any other suitable operating means, e.g., buttons for actuating other functions convenient to users, can also be disposed in any appropriate place on the screen.

Fig. 60 shows, as one example of such a modification, the case in which a multi-screen display button is provided, as simultaneous display instructing means for displaying a plurality of file data, graphs, etc. on one screen at the same time, in the menu button area D that is displayed on the display unit 4B of the user-side personal computer 4 constituting the one embodiment of the information providing system for the construction machine according to the present invention. In this example, two life data graphs (each corresponding to the graph of Fig. 12) of the same type are displayed respectively in left and right halves for two machines of different models. This display enables the contents of plural files to be easily compared with each other for analysis.

As described above, the operation data taken into the user-side personal computer 4 from the controller 2 is processed and displayed as information representing the operation situation of the relevant machine. On the other hand, as described above with reference to Fig. 3, etc., the operation data is transmitted to the main server 5 in a state not being processed.

Returning to Fig. 3, the main server 5 comprises input/output interfaces 5a, 5b, a CPU 5c, and a storage 5d in which a database 5A is formed. The input/output interface 5a receives the operation data and the machine body data from all of the user-side personal computers 4. corresponding to all the hydraulic excavators 1. At this time, the input/output interface 5a also separately receives, in addition to those data, part repair/replacement data for each hydraulic excavator 1 from an intra-company computer on the maker side and the intermediate servers 6 belonging to dealers, etc. The CPU 5c stores and accumulates those input data in the storage 5d as the database 5A. Also, the CPU 5c processes the information stored in the database 5A and executes various analyses (described in detail later) primarily regarding maintenance, e.g., part repair and replacement. Then, the CPU 5c decides the planned selling price (described in detail later), etc. for a particular part of the hydraulic excavator 1 based on the analyses, and transmits the decided data to the intermediate server 6 via the input/output interface 5b. Additionally, the CPU 5c also has the function of transmitting the operation data and the machine body data proper to the intermediate server 6 without processing those data.

Though not shown, the main server 5 further comprises a ROM for storing control programs and a RAM for primarily storing data during the processing in order that the CPU 5c can execute the above-mentioned processing. Further, the ROM stores application programs that are equivalent to or the same as the data taking-in program 100 and the information displaying program 110 both installed in the device program storage area (ROM) 4ea in the user-side personal computer 4. With those programs, similar display screen images for all of the hydraulic excavators 1 to those displayed on the user-side personal computer 4 can be displayed on the display unit 5D in accordance with the operation of, for example, a keyboard 5B and a mouse 5C.

Fig. 61 is a functional block diagram showing an outline of the processing functions of the CPU 5c of the main server 5 constituting the one embodiment of the information providing system for the construction machine according to the present invention.

In Fig. 61, the CPU 5c has various processing functions executed by a machine-body/operation data processing unit 50, a product-exchange and part-repair/replacement data processing unit 51, and a sales plan scheduling unit 53. The machine-body/operation information processing unit 50 executes predetermined processing based on the operation data inputted from the user-side personal computer 4, and the product-exchange and part-repair/replacement data processing unit 51 executes predetermined processing based on product-exchange and part- repair/replacement data inputted from the intermediate server 6, the intra-company computer 4, etc. These sections 50, 51 thereby compute the repair/replacement timing for each of parts belonging to respective component sections of each hydraulic excavator 1 (as described in detail later).

Based on not only the information created by the machine-body/operation data processing unit 50 and the product-exchange and part-repair/replacement data processing unit 51, but also the information stored and accumulated in the database 5A, the sales plan scheduling unit 53 confirms particular parts of plural hydraulic excavators 1 which have repair/replacement timings substantially coincident with each other, and decides the planned selling price of each of the confirmed particular parts depending on the number of those parts. Also, for the confirmed particular part, the sales plan scheduling unit 53 decides, as required, a discount sales (campaign) period prior to the repair/replacement timing and a discount selling price (campaign price) during the discount sales period. Then, the planned selling price, the discount sales period, the discount selling price, etc. are outputted to the intermediate server 6 as base information used by the dealers, etc. for promoting sales or services/sales to corresponding customers of the respective hydraulic excavators 1 (as described in detail later).

The processing functions of the machine-body/operation data processing unit 50 and the product-exchange and part-repair/replacement data processing unit 51 will be first described below with reference to flowcharts. The machine-body/operation data processing unit 50 of the main server 5 has the function of processing the operation time corresponding to the above-described function of collecting the operation time for each component section of the hydraulic excavator 1, which is executed by the machine-side controller 2. Also, the product exchange and part repair/replacement data processing unit 51 has the function of processing product exchange information and the function of processing part repair/replacement information.

Fig. 62 is a flowchart showing the processing function of the machine-body/operation data processing unit 50 of the main server 5 constituting the one embodiment of the information providing system for the construction machine according to the present invention, when the machine-body/operation data is sent from the user-side personal computer 4.

In Fig. 62, the machine-body/operation data processing unit 50 monitors whether the machine-body/operation data is inputted from the user-side personal computer 4 (step 30). If the machine-body/operation data is inputted, the processing unit 50 reads the inputted information, and then stores and accumulates it in the database 5A (step 32). The machine body data contains, as described above, the machine model and number. Subsequently, the processing unit 50 reads the operation data of all the hydraulic excavators 1 currently working in the field from the database 5A and then computes distribution data of the number of currently working machines with respect to the operation time per model and per part of the hydraulic excavator (step 36). Based on the computed distribution data, the processing unit 50 creates a distribution graph for the number of the currently working machines (step 38) (described later). The created distribution graph is then transmitted to the display unit 5D (or the intra-company computer) (step 40).

Fig. 63 is a flowchart showing the function of processing the product exchange information in the product-exchange and part-repair/replacement data processing unit 51 of the main server 5 constituting the one embodiment of the information providing system for the construction machine according to the present invention.

In Fig. 63, the product-exchange and part-repair/replacement data processing unit 51 monitors whether the product exchange information is inputted, for example, from the intra-company computer 4 by a serviceman (or from the intermediate server 6 by a responsible person (including a salesman) in the dealer, etc.) (step 44). If the product exchange information is inputted, the processing unit 51 reads the inputted information (step 45). Here, the product exchange information contains the machine model and number of an old hydraulic excavator exchanged by a new purchased hydraulic excavator, the machine model and number of the new hydraulic excavator, as well as the exchange date.

Subsequently, the processing unit 51 accesses the database 5A, reads out the operation data for the machine number corresponding to the old hydraulic excavator, and stores the latest engine run time in the read operation data, as operation time until exchange of the hydraulic excavator (hereinafter also referred to as "exchange operation time"), in the database 5A (step 46).

Then, the processing unit 51 reads out the latest exchange operation time, computes distribution data of the number of the exchanged machines with respect to the operation time, and creates a distribution graph for the number of the exchanged machines based on the computed distribution data (step 47) (described later).

Fig. 64 is a flowchart showing the function of processing the part repair/replacement information in the product-exchange and part-repair/replacement data processing unit 51 of the main server 5 constituting the one embodiment of the information providing system for the construction machine according to the present invention.

In Fig. 64, the product-exchange and part-repair/replacement data processing unit 51 monitors whether the part repair/replacement information is inputted, for example, from the intra-company computer 4 by a serviceman (or from the intermediate server 6 by a responsible person (including a salesman) in the dealer, etc.) (step 50). If the part repair/replacement information is inputted, the processing unit 51 reads the inputted information (step 52). Here, the part repair/replacement information contains the machine model and number of a hydraulic excavator of which part has been repaired or replaced, the date at which part has been repaired or replaced, and the name of the repaired or replaced part.

Subsequently, the processing unit 51 accesses the database 5A, reads out the operation data for the relevant machine model and number and computes a repair/replacement time interval of the part on the basis of the operation time of the component section to which the repaired or replaced part belongs, followed by storing and accumulating the computed time interval, as actual maintenance data, in the database 5A (step 54). Here, the term "part repair/ replacement time interval" means a time interval from assembly of one part into the machine body to repair of the part or replacement of thereof by a new one upon the occurrence of a failure or the expiration of the life. The part repair/ replacement time interval is computed on the basis of the operation time of the component section to which the relevant part belongs. In the case of a bucket prong, for example, the component section to which the bucket prong belongs is the front. If the front operation time (excavation time) from mounting of one bucket prong to the machine body to repair or replacement of the bucket prong upon breakage is 1500 hours, the repair/replacement time interval of the bucket prong is computed as 1500 hours.

Then, the processing unit 51 reads out the latest actual maintenance data, computes distribution data of the number of the repaired or replaced parts with respect to the operation time, and creates a distribution graph for the number of the repaired or replaced parts based on the computed distribution data (step 56) (described later).

Fig. 65 is an illustration showing an arrangement of the operation data, the actual maintenance data, and the exchange operation time data stored as a part of the database 5A in the main server 5 constituting the one embodiment of the information providing system for the construction machine according to the present invention.

In Fig. 65, the database 5A has sections containing a database in which the operation data per machine model and number is stored and accumulated (hereinafter referred to as an "operation database"), a database in which the actual maintenance data per machine model and number is stored and accumulated (hereinafter referred to as an "actual maintenance database"), and a database in which the exchange operation time per machine model and number is stored and accumulated (hereinafter referred to as an "exchange database"). In these databases, the respective data are stored as follows.

The operation database per machine model and number stores therein, as accumulated values, the engine run time, the front operation time (hereinafter also referred to the "excavation time", the swing time, and the travel time per machine model and number corresponding to the date. In the shown example, $T_{NE}(1)$ and $T_D(1)$ represent respectively an accumulated value of the engine run time and an accumulated value of the front operation time of the hydraulic excavator of the machine model A and No. N on January 1, 2000. $T_{NE}(K)$ and $T_D(K)$ represent respectively an accumulated value of the engine run time and an accumulated value of the front operation time of the hydraulic excavator of the machine model A and No. N on March 16, 2000. Likewise, accumulated values of $T_S(1)$ to $T_S(K)$ of the swing time and accumulated values of $T_T(1)$ to $T_T(K)$ of the travel time of the hydraulic excavator of the machine model A and No. N are also stored corresponding to the dates. Respective accumulated values for the hydraulic excavators of the machine model A and Nos. N+1, N+2, ..., and of the machine models B, C, ... are further stored in a similar manner.

The actual maintenance database per machine model and number stores therein the repair/replacement time interval of the part repaired or replaced in the past per machine model and number, as an accumulated value on the basis of the operation time of the component section to which the part belongs. In the shown example, $T_{FB}(1)$ and $T_{FB}(L)$ represent respectively accumulated values (e.g., 3400 hr and 12500 hr on the basis of the front operation time) of the first and L-th repair/replacement time intervals of the bucket prong in the hydraulic excavator of the machine model A and No. N. $T_{TL}(1)$ and $T_{TL}(M)$ represent respectively accumulated values (e.g., 5100 hr and 14900 hr on the basis of the travel time) of the first and M-th repair/replacement time intervals of a travel link in the hydraulic excavator of the machine No. N. Respective accumulated values for the hydraulic excavators of the machine model A and Nos. N+1, N+2, ..., and of the machine models B, C, ... are also stored in a similar manner.

The exchange database per machine model and number stores therein, as a value on the basis of the engine run time, the operation time of the old hydraulic excavator per machine model and number, which has been exchanged by the new one. In the shown example, $T_X(1)$ represents the operation time (e.g., 32000 hr on the basis of the engine run time) until the exchange of the hydraulic excavator of the machine model A and No. 1, and $T_X(L)$ represents the operation time (e.g., 30000 hr on the basis of the engine run time) until the exchange of the hydraulic excavator of the machine model A and No. L. Respective values for the hydraulic excavators of the machine models B, C, ... are also stored in a similar manner.

In step 36 shown in Fig. 62, by using the data stored in the operation database mentioned above, the machine-body/operation data processing unit 50 computes the distribution data of the number of hydraulic excavators currently working in the field per model and per part with respect to the operation time per hydraulic excavator in accordance with sequences of steps shown in flowcharts of Figs. 66 and 68 described later. The operation time per part is calculated on the basis of the operation time of the component section to which the part belongs.

The expression "the operation time of the component section to which the part belongs" used in this embodiment means the operation time of the front operating mechanism 15 (i.e., the excavation time) when the component section to which the part belongs is the front operating mechanism 15, such as for the bucket, the bucket prong, and a front pin (e.g., a joint pin between the boom and the arm), means the swing time when the component section to which the part belongs is the swing body 13, such as for a swing wheel and the swing motor, and means the travel time when the component section to which the part belongs is the travel body 12, such as for the travel motor, the travel link and a travel roller. Also, it means the engine run time when the component section to which the part belongs is the engine 32, such as for engine oil and an engine oil filter. Further, when the component section to which the part belongs is a hydraulic source of the hydraulic system, such as for the working oil, a working oil filter, a main pump and a pilot pump, the engine run time is regarded as the operation time of the component section to which the part belongs. As an alternative, the operation time of the hydraulic source may be obtained by detecting an operation time during which the delivery pressure of the hydraulic pumps 21a, 21b exceeds a predetermined level, or by subtracting the non-load time from the engine run time.

Fig. 66 is a flowchart showing a sequence of steps for obtaining distribution data of the number of currently working machines per model with respect to the engine run time, which are executed by the machine-body/operation data processing unit 50 of the main server 5 constituting the one embodiment of the information providing system for the construction machine according to the present invention.

In Fig. 66, the machine-body/operation data processing unit 50 first reads out the engine run time of all the hydraulic excavators of the model A from the operation database shown in Fig. 66 (step 60). Then, after dividing the engine run time into ranges per 10000 hours, the processing unit 50 calculates the number of hydraulic excavators having the engine run time in each of the divided ranges. More specifically, it calculates the number of hydraulic excavators having the engine run time in each of the divided ranges of 0 - 10000 hr, 10001 - 20000 hr, 20001 - 30000 hr, 30001 - 40000 hr, and 40001 hr or more (steps 62 to 70).

Likewise, the number of hydraulic excavators having the engine run time in each range per 10000 hours is calculated for the machine models B, C, ... (step 72). After the distribution data of the number of the currently working hydraulic excavators has been computed for each range of the engine run time in such a manner, a distribution graph of the number of the currently working hydraulic excavators is created through the processing executed in steps 38 and 40 shown in Fig. 62. The created distribution graph is then outputted to the display unit 5D (or the intra-company computer).

Fig. 67 is a histogram showing a distribution of the number of currently working hydraulic excavators of model X with respect to the operation time (engine run time) as one example of distribution graphs which are created by the machine-body/operation data processing unit of the main server 5 constituting the one embodiment of the information providing system for the construction machine according to the present invention. In Fig. 67, the horizontal axis represents the number of the currently working hydraulic excavators and the vertical axis represents the operation time of the hydraulic excavator.

Fig. 68 is a flowchart showing a sequence of steps for obtaining distribution data of the number of currently working machines with respect to an operation time per part, which are executed by the machine-body/operation data processing unit 50 of the main server 5 constituting the one embodiment of the information providing system for the construction machine according to the present invention.

In Fig. 68, for processing all data of the hydraulic excavators of the machine model A and Nos. 1 to Z, the machine-body/operation data processing unit 50 first determines whether the machine number N is not larger than Z (step 81). If N is not larger than Z, the processing unit 50 reads out the latest accumulated value $T_D(K)$ of the front operation time of the hydraulic excavator of the machine model A and No. N from the operation database shown in Fig. 65 (step 82). Then, the processing unit 50 reads out the latest accumulated value $T_{FB}(M)$ of the repair/replacement time interval of the bucket prong in the No. N hydraulic excavator from the actual maintenance database shown in Fig. 65 (step 83), and calculates an operation time (front operation time) $\Delta T_{LFB}$ of the currently used bucket prong from the following formula (step 84):

$$\Delta T_{LFB} = T_D(K) - T_{FB}(M)$$

Subsequently, the processing unit 50 executes the above-described process for all the hydraulic excavators of the machine numbers Nos. 1 to Z and calculates the operation time (front operation time) $\Delta T_{LFB}$ of the currently used bucket prong for each of all the hydraulic excavators of the model A.

Then, after dividing the front operation time $\Delta T_{LFB}$ of each bucket prong into ranges per 500 hours, the processing unit 50 calculates the number of hydraulic excavators having the front operation time in each of the divided ranges. More specifically, it calculates the number of hydraulic excavators having the front operation time in each of the divided ranges of 0 - 500 hr, 501 - 1000 hr, 1001 - 1500 hr, 1501 - 2000 hr, and 2001 hr or more, thereby obtaining distribution data of the number of the currently working hydraulic excavators (step 85).

Similarly, for the travel link of each of the hydraulic excavators of the model A, the operation time (travel time) of each travel link is calculated, and distribution data of the number of currently working hydraulic excavators having the travel time in each range per 250 hours is obtained (step 86). Then, for each of the other parts, the operation time is calculated and distribution data of the number of currently working hydraulic excavators having the operation time in each predetermined range in a similar manner.

Likewise, the operation time is calculated for each of the parts of the hydraulic excavators of the models B, C, ... and distribution data of the number of currently working hydraulic excavators having the operation time in each predetermined range (step 87).

After the distribution data of the operation time and the number of the currently working hydraulic excavators has been computed per machine model and part, a distribution graph of the number of the currently working hydraulic excavators is created through the processing executed in steps 38 and 40 shown in Fig. 62. The created distribution graph is then outputted to the display unit 5D (or the intra-company computer).

Figs. 69 and 70 show examples of the distribution graphs created by the machine-body/operation data processing unit of the main server 5 constituting the one embodiment of the information providing system for the construction machine according to the present invention. Specifically, Fig. 69 shows one example of the distribution graph representing the number of currently working hydraulic excavators with respect to the front operation time (excavation time) for the bucket prong, and Fig. 70 shows one example of the distribution graphs representing the number of currently working hydraulic excavators with respect to the travel time for the travel link. In Figs. 69 and 70, the horizontal axis represents the number of the currently working hydraulic excavators and the vertical axis represents the front operation time (excavation time) and the travel time, respectively.

In step 47 shown in Fig. 63, the product-exchange and part-repair/replacement data processing unit 51 computes distribution data of the number of exchanged products, i.e., hydraulic excavators having been exchanged in the past, with respect to the operation time per hydraulic excavator in accordance with a sequence of steps shown in Fig. 71, described below, by using the data stored in the exchange database shown in Fig. 67, and then creates a distribution graph representing the number of the exchanged products based on the computed distribution data.

Fig. 71 is a flowchart showing a sequence of steps for obtaining the distribution data of the number of exchanged products, i.e., hydraulic excavators having been exchanged in the past, with respect to the operation time per hydraulic excavator, which are executed by the product-exchange and part-repair/replacement data processing unit 51 of the main server 5 constituting the one embodiment of the information providing system for the construction machine according to the present invention.

In Fig. 71, the product-exchange and part-repair/replacement data processing unit 51 first reads out the operation time of all the hydraulic excavators of the model A from the exchange database shown in Fig. 65 (step 90). Then, the processing unit 51 computes, from the read-out data of the operation time, distribution data of the number of the exchanged products with respect to the operation time, and creates a distribution graph of the number of the exchanged products based on the computed distribution data (step 92). The distribution data of the number of the exchanged products can be obtained in a similar manner to the above-described one used for computing the distribution data of the number of the currently working hydraulic excavators. Likewise, for the hydraulic excavators of the models B, C, ..., respective distribution data of the number of the exchanged products are computed and respective distribution graphs are created (step 94). The created distribution graphs representing the number of the exchanged products are then outputted to the display unit 5D (or the intra-company computer) (step 98).

Fig. 72 shows one example of the distribution graph representing the number of exchanged products, i.e., hydraulic excavators having been exchanged in the past, with respect to the operation time per hydraulic excavator, as an example of the distribution graphs created by the product-exchange and part-repair/replacement data processing unit 51 of the main server 5 constituting the one embodiment of the information providing system for the construction machine according to the present invention. In Fig. 72, the horizontal axis represents the run time of the hydraulic excavator, and the vertical axis represents the number of exchanged products.

Also, in step 56 shown in Fig. 64, the product-exchange and part-repair/replacement data processing unit 51 computes distribution data of the number of parts having been repaired or replaced in the past with respect to the operation time in accordance with a sequence of steps shown in Fig. 73, described below, by using the data stored in the actual maintenance database shown in Fig. 65, and then creates a distribution graph representing the number of the repaired or replaced parts based on the computed distribution data.

Fig. 73 is a flowchart showing a sequence of steps for computing distribution data of the number of parts having been repaired or replaced in the past with respect to an operation time and obtaining a distribution graph of the number of the repaired or replaced parts based on the calculated distribution data, which are executed by the product-exchange and part-repair/replacement data processing unit 51 of the main server 5 constituting the one embodiment of the information providing system for the construction machine according to the present invention.

In Fig. 73, the product-exchange and part-repair/replacement data processing unit 51 first reads out the maintenance data of the all-number hydraulic excavators of the model A from the actual maintenance database shown in Fig. 65 (step 100). Then, for processing all data of the hydraulic excavators of the machine model A and Nos. 1 to Z, the processing unit 51 determines whether the machine number N is not larger than Z (step 102). If N is not larger than Z, the processing unit 51 computes, from the read-out data of the No. N hydraulic excavator, a repair/replacement time interval $\Delta T_{FB}(i)$ of the bucket prong, for example, based on the accumulated values of the repair/replacement time interval of the bucket prong by using the following formula (step 104):

$$\Delta T_{FB}(i) = T_{FB}(i) - T_{FB}(i-1)$$

i = 1 to L (L is the number of times of repairs/replacements of the bucket prong in the No. N hydraulic excavator) Here, the repair/replacement time interval $\Delta T_{FB}(i)$ of the bucket prong means a time interval (life) from assembly of one bucket prong into the machine body to repair of the bucket prong or replacement of thereof by a new one upon the occurrence of a failure or the expiration of the life. The time interval is computed as a value on the basis of the operation time of the front (i.e., the excavation time) to which the bucket prong belongs. Then, the processing unit 51 executes the above-described process for all the hydraulic excavators of the machine numbers Nos. 1 to Z and collects data of the repair/replacement time interval $\Delta T_{FB}$ of the bucket prong for each of all the hydraulic excavators of the model A.

When the data collection of the repair/replacement time interval $\Delta T_{FB}$ of the bucket prong is completed for all the hydraulic excavators, distribution data of the number of the repaired or replaced parts with respect to the repair/replacement time interval is computed from the collected data of the repair/replacement time interval, and a distribution graph of the number of the repaired or replaced parts is created based on the computed distribution data (step 106). The distribution data of the number of the repaired or replaced parts can be obtained in a similar manner to the above-described one used for computing the distribution data of the number of the currently working hydraulic excavators. For each of the other parts such as the travel link, distribution data of the number of the repaired or replaced parts is computed and a corresponding distribution graph is created in a similar manner (step 108). Likewise, for the hydraulic excavators of the models B, C, ..., respective distribution data of the number of the repaired or replaced parts are computed and respective distribution graphs are created (step 110). The created distribution graphs representing the number of the repaired or replaced parts are then outputted to the display unit 5D (or the intra-company computer) (step 114).

Fig. 74 shows one example of the distribution graph representing the number of bucket prongs having been repaired or replaced in the past with respect to the front operation time, as an example of the distribution graphs created by the product-exchange and part-repair/replacement data processing unit 51 of the main server 5 constituting the one embodiment of the information providing system for the construction machine according to the present invention. In Fig. 74, the horizontal axis represents the front operation time and the vertical axis represents the number of repaired or replaced bucket prong.

Here, one of major features of this embodiment resides in that, by referring to the distribution graph of the number of the hydraulic excavators with respect to the operation time per hydraulic excavator, the distribution graph of the number of the hydraulic excavators with respect to the operation time per part, the distribution graph of the number of the exchanged hydraulic excavators with respect to the operation time per hydraulic excavator, and the distribution graph of the number of the repaired or displaced parts with respect to the operation time per component section, which have been created by the machine-body/operation data processing unit 50 and the product-exchange and part-repair/replacement data processing unit 51, the sales plan scheduling unit 53 predicts the number of parts belonging to, e.g., the front operating mechanism and the travel body (i.e., makes demand prediction), which are to be repaired or replaced if the current situation will continue as it is, and then decides a sales plan for a particular part of the hydraulic excavator based on the demand prediction.

Fig. 75 is a flowchart showing a sequence of steps for preparing a sales plan executed by the sales plan scheduling unit 53 of the main server 5 constituting the one embodiment of the information providing system for the construction machine according to the present invention.

In Fig. 75, in step 120, the sales plan scheduling unit 53 first predicts the number of parts A of all the hydraulic excavators 1 (for each type of parts belonging to, e.g., the front operating mechanism and the travel body) which will be repaired or replaced in future. Prediction methods will be described in detail in the following items (A) to (E).

(A) Prediction of Number of Parts

(1) The sales plan scheduling unit 53 assumes an average operation time until repair or replacement of the part. The average operation time is given as a value on the basis of the operation time of the component section to which the relevant part belongs.

Taking the bucket prong as an example, the average operation time is assumed to be, e.g., 1000 hours on the basis of the front operation time.

(2) The number of the hydraulic excavators exceeding the average operation time is calculated from the distribution graph representing the number of the currently working hydraulic excavators with respect to the operation time for the relevant part.

For example, in the case of assuming the average operation time of the bucket prong to be 1000 hours on the basis of the front operation time as mentioned above, the number of the hydraulic excavators having the front operation time (excavation time) exceeding the average operation time is 2800 in total from the distribution graph shown in Fig. 69, i.e., 2000 in the operation time range of 1001 to 1500 hr, 600 in the range of 1501 to 2000 hr, and 200 in the range of 2001 hr or more.

(3) From the number of the hydraulic excavators exceeding the average operation time, the sales plan scheduling unit 53 estimates the number of the hydraulic excavators having the parts which will be actually repaired or replaced in near future (e.g., in the next term) if the current situation will continue as it is.

For example, in the case shown in Fig. 69, when it is estimated that, among 2800 hydraulic excavators having the front operation time in excess of the average operation time of 1000 hours, the number of those ones in which the bucket prongs will be continuously used in the next term without being repaired or replaced is about 10%, the number of the hydraulic excavators in which the bucket prongs will be repaired or replaced in the next term is estimated to be 2520.

(4) The estimated number of the relevant hydraulic excavators is multiplied by the number of the parts per hydraulic excavator to predict the number of the parts to be repaired or replaced in the near future.

For example, when it is estimated that the number of the hydraulic excavators in which the bucket prongs will be repaired or replaced is 2520, the number (demand) of the bucket prongs which will require to be repaired or replaced in near future (e.g., in the next term) is predicted to be 10080 because the number of the bucket prongs per hydraulic excavator is four.

Likewise, for each of the other types of parts B, C, D, ..., the number of the parts which will be actually repaired or replaced is predicted successively (step 121). In the case of the travel link, for example, by assuming the average operation time until the travel ink until repair or replacement of the travel link on the basis of travel time to be 500 hours, the number of the travel links which will require to be repaired or replaced in near future (e.g., in the next term) can be predicted in a similar manner from the distribution graph shown in Fig. 70.

(B) More Exact Prediction of Number of Parts

In this embodiment, as described above, the main server 5 reads out the actual maintenance data (part repair/ replacement data) and the operation data both shown in Fig. 65, and then creates and outputs the distribution graph, shown in Fig. 74 by way of example, representing the number of the parts having been repaired or replaced in the past with respect to the operation time on the basis of the operation time per component section to which the relevant part belongs. Based on the outputted distribution graphs, the sales plan scheduling unit 53 can determine an average operation time $T_B$ until repair or replacement of each type of part and hence can more exactly predict the number of parts which will require to be repaired or replaced in near future (e.g., in the next term).

Stated another way, in above (A), the average operation time until repair or replacement of the bucket prong is assumed to be 1000 hours, by way of example, on the basis of the front-operation time in the above-mentioned step (1). Therefore, the accuracy in predicting the number of the bucket prongs to be repaired or replaced is determined depending on how the assumed operation time is appropriate.

In this embodiment, since the distribution graph of the actual number of the repaired or replaced bucket prongs is obtained as shown in Fig. 74, an operation time $T_B$ near the maximum number of the repaired or replaced bucket prongs in the distribution graph can be taken, by way of example, as the average operation time until repair or replacement of the bucket prong. It is hence possible to obtain the average operation time $T_B$ until repair or replacement of the bucket prong as a value reflecting the actual maintenance performed in the past, and to more exactly predict the number of the bucket prongs to be repaired or replaced.

Thus, the demand for the number of parts to be repaired or replaced in the hydraulic excavators 1 for each type of the parts is predicted in the manner described in above (A) or (B). On that occasion, the number of the hydraulic excavators 1, which will require to be exchanged if the current situation continues as it is, may be additionally predicted as related reference information. This prediction is carried out, for example, as follows.

(C) Prediction of Number of Hydraulic Excavators

(1) The sales plan scheduling unit 53 assumes an average operation time until exchange of the hydraulic excavator. The average operation time is given as a value on the basis of the engine run time.
The average operation time is assumed to be, e.g., 20000 hours on the basis of the engine run time.
(2) The number of the hydraulic excavators exceeding the average operation time is calculated from the distribution graph representing the number of the currently working hydraulic excavators.
For example, in the case of assuming the average operation time to be 20000 hours as mentioned above, the number of the hydraulic excavators having the operation time exceeding the average operation time is 2800 in total from the distribution graph shown in Fig. 67, i.e., 2000 in the operation time range of 20001 to 30000 hr, 600 in the range of 30001 to 40000 hr, and 200 in the range of 40001 hr or more.
(3) From the number of the hydraulic excavators exceeding the average operation time, the sales plan scheduling unit 53 estimates the number of the hydraulic excavators which will be exchanged in near future (e.g., in the next term) if the current situation will continue as it is (particularly if a particular part will not be repaired or replaced for the purpose of prolonging the life).

For example, in the case shown in Fig. 67, when it is estimated that, among 2800 hydraulic excavators having the operation time in excess of the average operation time of 20000 hours, the number of those ones which will be continuously used in the next term without being exchanged is given as 600 in the range of 30001 to 40000 hr and 200 in the range of 40001 hr or more similarly to the current situation, the number of the hydraulic excavators which will be exchanged in the next term is estimated to be about 2000.

(D) More Exact Prediction of Number of Hydraulic Excavators

In this embodiment, as described above, the main server 5 reads out the exchange data and the operation data of the hydraulic excavators both shown in Fig. 65, and then creates and outputs the distribution graph, shown in Fig. 72 by way of example, representing the number of exchanged products, i.e., hydraulic excavators having been exchanged in the past, with respect to the operation time per hydraulic excavator. Based on the outputted distribution graph, the sales plan scheduling unit 53 can determine an average operation time until exchange of the hydraulic excavator and hence can more exactly predict the number of hydraulic excavators which will require to be exchanged in near future (e.g., in the next term).

Stated another way, in above (C), the average operation time until exchange of the hydraulic excavator is assumed to be 20000 hours, by way of example, in the above-mentioned step (1). Therefore, the accuracy in predicting the number of the hydraulic excavators to be exchanged is determined depending on how the assumed operation time is appropriate.

In this embodiment, since the distribution graph of the actual number of the exchanged hydraulic excavators is obtained as shown in Fig. 72, an operation time $T_A$ near the maximum number of the exchanged hydraulic excavator in the distribution graph can be taken, by way of example, as the average operation time until exchange of the hydraulic excavator. It is hence possible to obtain the average operation time $T_A$ until exchange of the hydraulic excavator as a value reflecting the actual operation performed in the past, and to more exactly predict the number of the hydraulic excavators to be exchanged.

After predicting the number of parts to be repaired or replaced for each type of the parts in the manner described in above (A) to (D), the processing flow proceeds to step 122.

In step 122, the planned selling price of the part A is decided based on the demand prediction (sales prospect prediction) in step 120. When deciding the planned selling price, the efficiency of productivity, distribution, etc. can be increased by supplying, solely from the maker side, the parts A for all of the hydraulic excavators 1 in which the parts A are to be repaired or replaced. As a result, the planned selling price can be set to a value relatively lower than the ordinary selling price, and it can be more reduced as the number of the relevant hydraulic excavators 1 increases.

Likewise, for each of the other parts B, C, D, ..., the number of parts to be repaired or replaced is predicted and the ordinary selling price is decided one by one (step 123).

After deciding the selling price for each type of the parts in above steps 122 and 123, the processing flow proceeds to step 124 in which a part sales list is prepared for each customer. Fig. 76 is a representation showing one example of a part sales list per customer, which is prepared by the sales plan scheduling unit 53 of the main server 5 constituting the one embodiment of the information providing system for the construction machine according to the present invention.

As shown in Fig. 76, the part sales list per customer is prepared in the form of a table including, for example, the customer name, the name of the part to be repaired or replaced in the hydraulic excavator(s) 1 possessed (or used) by the relevant customer, the planned selling price per part, and the scheduled timing.

In the above-described case represented by Fig. 69, for example, it is assumed that, among 2800 hydraulic excavators having the front operation time in excess of the average operation time of 1000 hours, the number of those ones in which the bucket prongs will be continuously used in the next term without being repaired or replaced is about 10%. As a matter of course, however, the part sales list per customer is prepared for the customers of all the 2800 hydraulic excavators including those ones corresponding to about 10%. In other words, all the customers including several tens percentages of them, who will not probably purchase the hydraulic excavators, are listed up.

Returning to Fig. 75, after preparing the part sales list per customer in step 124 in such a manner, the processing flow proceeds to step 125 in which the prepared list is rearranged per dealer, etc. Fig. 77 is a representation showing one example of a part sales list per dealer, etc., which is prepared by the sales plan scheduling unit 53 of the main server 5 constituting the one embodiment of the information providing system for the construction machine according to the present invention.

As shown in Fig. 77, the part sales list per dealer, etc. is obtained by rearranging the part sales list per customer, shown in Fig. 76, to be grouped for each dealer, etc. taking in charge of or supervising services and sales to the customers. The part sales list per dealer, etc. is prepared in the form of a table including, for example, the name of the dealer, etc., the name of the acquainted customer, the name of the part to be repaired or replaced in the hydraulic excavator(s) 1 possessed (or used) by the relevant customer, the planned selling price per part, and the scheduled timing. Once the selling price is decided for each type of the parts in above steps 122 and 123, the part sales list per dealer, etc. shown in Fig. 77 may be prepared directly without preparing the part sales list per customer shown in Fig. 76.

Returning to Fig. 75, after preparing the part sales list per customer in step 125 in such a manner, the processing flow proceeds to step 126 in which the prepared part sales list per dealer, etc. is transmitted to the intermediate server 6 in the corresponding dealer, etc.

In the embodiment described above, the average operation time until repair or replacement per component section, for example, is assumed (in consideration of the actual performance in the past as required). Then, based on the assumed average operation time, the number of the parts to be repaired or replaced is predicted and the sales plan is scheduled. Depending on the situation, e.g., in the case of intending to promote sales, however, a sales campaign may be scheduled by the sales plan scheduling unit 53 so as to sell the parts at a cheaper special price than the planned selling price, for example, when the customers purchases the parts earlier than the ordinary repair or replacement timing.

Fig. 78 is a flowchart showing a sequence of steps for preparing a sales plan when such a sales campaign is scheduled, which are executed by the sales plan scheduling unit 53 of the main server 5 constituting the one embodiment of the information providing system for the construction machine according to the present invention. Note that the identical steps to those in the flowchart shown in Fig. 75 are denoted by the same symbols and a description thereof is omitted here.

In Fig. 78, steps 120 to 123 are the same as those shown in Fig. 75. Thus, the numbers of the parts A, B, C, ... to be repaired or replaced in all the hydraulic excavators 1 are predicted for each type of the parts, and the planned selling prices of the parts A, B, C, ... are decided.

After the completion of step 123, the processing flow proceeds to step 127. In this step 127, a potential demand (earlier demand), i.e., a demand for the parts that the customers will probably purchase depending on conditions though before reaching the ordinary timing of repair or replacement, is predicted instead of the ordinary demand prediction for the timing of repair or replacement, which is executed in above steps 120 and 121.

More specifically, in the case of the bucket prongs shown in Fig. 69, for example, there are 2800 hydraulic excavators 1 having the front operation time in the range of 501 to 1000 hours not larger than the average operation time, i.e., 1000 hours. How many ones of customers for those 2800 hydraulic excavators 1 will purchase the bucket prongs at the earlier timing depending on conditions (e.g., 200 among 2800 hydraulic excavators at 3%-off from the ordinary planned selling price, 300 at 5%-off, and 500 at 10%-off) is predicted based on marketing, past experimental rules, various model analyses, etc.

Likewise, a potential demand for each of the other types of parts B, C, D, ... is predicted successively (step 128).

After predicting the potential part demand for each type of the parts in such a manner, the processing flow proceeds to step 129.

In step 129, the campaign price (discount selling price) and the campaign period (discount sales period) for the part A are decided based on the potential demand prediction (sales prospect prediction) made in above step 127.

More specifically, how much discount is proper (e.g., 3%-off, 5%-off or 10%-off) and at which timing the campaign period is to take place are decided in step 129 from a comprehensive viewpoint depending the magnitude of the potential demand, taking into account both a decrease of profit resulting from discount selling of the part A to be repaired or replaced and an increase of profit on the customer side resulting from earlier purchasing of the part A. In addition, the point regarding whether a merit is resulted from the campaign may also be taken into consideration. If it is determined that the potential demand will not be so prospected even with the campaign at a certain discount selling price, the campaign for the part A may be itself put off.

Likewise, for each of the other parts B, C, D, ..., the campaign price (discount selling price) and the campaign period (discount sales period) are decided one by one (step 130).

After deciding the campaign price (discount selling price) for each type of the parts in above steps 129 and 130, the processing flow proceeds to step 124, which is similar to step 124 in the processing flow shown in Fig. 75, for preparing a part sales list per customer. This part sales list, however, includes the campaign price and the campaign period as well.

Fig. 79 is a representation showing one example of a part sales list per customer, which is prepared by the sales plan scheduling unit 53 of the main server 5 constituting the one embodiment of the information providing system for the construction machine according to the present invention, when a sales campaign is scheduled.

As shown in Fig. 79, the part sales list per customer is similar to that shown in Fig. 76. In addition to the customer name, the part name, the selling price and the scheduled timing, a part planned for a campaign (in this example, a part F for a customer a) is further listed up. Correspondingly, columns for the campaign price and the campaign period are newly provided.

In the example shown in Fig. 79, the campaign price and the campaign period are displayed for the part F with respect to the customer a because it comes under earlier purchase campaign than the ordinary repair/replacement timing. For a customer b, however, the same part F is scheduled to be purchased at the ordinary repair/replacement timing, and therefore only the ordinary selling price is displayed.

Returning to Fig. 78, after preparing the part sales list per customer in step 124 in such a manner, the processing flow proceeds to step 125 in which the list is rearranged for each dealer, etc., followed by proceeding to step 126 in which the prepared part sales list per dealer, etc. is transmitted to the intermediate server 6 in the corresponding dealer, etc.

The above-described campaign is one prompting the customer to purchase the part somewhat earlier timing than the ordinary repair/replacement timing, but the campaign is not limited to the above-described one. More specifically, in above (A)(3) regarding the bucket prongs, for example, on an assumption that, among 2800 hydraulic excavators 1 having the front operation time in excess of the average operation time of 1000 hours, the number of those ones in which the bucket prongs will be continuously used in the next term without being repaired or replaced is about 10%, the number of the hydraulic excavators in which repair/replacement of the bucket prongs will be actually demanded is estimated to be 2520. For the purpose of eliminating or minimizing 10% hydraulic excavators for which the bucket prongs have been estimated to be neither repaired nor replaced (i.e., aiming repair or replacement of all or almost all of the relevant hydraulic excavators 1), a campaign may be carried out with the intention of requesting all the customers to purchase the relevant hydraulic excavators at the ordinary repair/replacement timing without exceptions. In this case, the campaign period is substantially matched with the ordinary repair/replacement timing (scheduled timing).

Returning to Fig. 3 again, similarly to the main server 5, each intermediate server 6 comprises input/output interfaces 6a, 6b, a CPU 6c, and a storage 6d in which a database 6A is formed.

The input/output interface 6a receives, from the main server 5, not only the planned selling price (including the campaign price (discount selling price), the campaign period (discount sales period), etc.), which have been decided by the main server 5 for the particular parts of the hydraulic excavators 1, but also the prepared part sales list per dealer, etc. The input/output interface 6a further receives the above-described operation data and machine body data themselves, which are in state not yet processed, from the main server 5.

The CPU 6c stores and accumulates those input data in the database 6A in the storage 6d, prepares an advice note for part sales, as information presented to each customer, based on the part sales list per dealer, etc., and transmits the advice note to the user-side personal computer 4 of each customer via the input/output interface 5b by E-mail, for example, (alternatively the user-side personal computer 4 may access the homepage set up in the intermediate server 6 (such as the homepage of the dealer, etc.) and may download the advice note with operation made on the side of the user-side personal computer 4). The CPU 6c also has the function of transmitting the above-described operation data and machine body data themselves, which are in state not yet processed (alternatively, as in the above case, the user-side personal computer 4 may access the homepage set up in the intermediate server 6 and download the data regarding the hydraulic excavator owned by the user). On that occasion, a template and a form for displaying the operation data and the machine body data along with an explanation expressed in user's own language may be provided in, e.g., the homepage of the dealer, etc., and the operation data and the machine body data from the main server 5 may be provided to the user-side personal computer 4 through some processing, such as insetting of those data into the template, etc., instead of being in state not yet processed. As an alternative, it is also possible to translate only language parts, which are contained in the operation data and the machine body data from the main server 5, by the intermediate server 6 and to present the translated text to the user-side personal computer 4.

For causing the CPU 6c to execute the processing described above, though not shown, the intermediate server 6 further comprises a ROM storing control programs and a RAM serving as memory means for primarily storing data produced during the processing. As in the main server 5, the ROM stores application programs that are equivalent to or the same as the data taking-in program 100 and the information displaying program 110. With those programs, similar. display screen images for those of all the hydraulic excavators 1, which are directly or indirectly serviced or sold by the relevant dealer, etc., to those displayed on the user-side personal computer 4 can be displayed on a display unit 6D in accordance with the operation of, for example, the keyboard 6B and the mouse 6C.

Fig. 80 is a representation showing one example of an advice note, which is prepared by the CPU 6c of the intermediate server 6 constituting the one embodiment of the information providing system for the construction machine according to the present invention and is then sent to a customer. In the example shown in Fig. 80, the customer name, the machine No. of the hydraulic excavator used by the customer, the name of the part to be repaired or replaced, the planned selling price of the part (= a profit obtained by the dealer, etc. is usually added to the planned selling price inputted from the main server 5), and the repair/replacement timing of the part are listed in the form of a table.

Fig. 81 is a representation showing one example of an advice note, which is prepared at the time of a sales campaign in the CPU 6c of the intermediate server 6 constituting the one embodiment of the information providing system for the construction machine according to the present invention and is then sent to a customer selected as a target of the sales campaign. In the example shown in Fig. 81, in addition to a part list similar to that shown in Fig. 80, a part planned for a campaign (part F in this example) is further displayed. Columns for the planned selling price (= ordinary price), the repair/replacement timing, the campaign price, and the campaign period corresponding to the part F are newly provided. It is needless to say that, even if a campaign is planned for a certain part, the advice note having only the contents shown in Fig. 80 is sent to the customer who is not a target of the campaign.

Whether to send the above-mentioned advice note to the customer or not is basically totally left at the discretion of the dealer, etc. In spite of the part sales list per dealer, etc. being transmitted from the main server as described above, the dealer, etc. may take actions of not notifying the customer of such information given from the manufacturer side and supplying parts through another part supply route uniquely developed, for example, when the dealer, etc. make a judgment by themselves that those actions not complying with the information contained in the part sales list are benefit for the customer (because of enabling the part to be supplied at a lower cost) or advantageous for the dealer, etc. from the viewpoint of business, taking into consideration situations and environments (such as natural environment, economical environment, legal environment, cultural background, and labor environment) specific to the local area or the customer. It is also optional to send the advice note to some of the customers, but not to send it to the other customers.

On the other hand, as described above, the CPU 6c transmits, to the user-side personal computer 4, the operation data and machine body data themselves, which are obtained from the main server 5 and are in state not yet processed. Responsively, the user-side personal computer 4 can display, on the display unit 4D, not only the advice note transmitted from the intermediate server 6, but also the above-described display screen images (see Figs. 9 to 60) for the corresponding hydraulic excavator(s) 1 (not limited to one, and when a plurality of hydraulic excavators are owned or used, the screen images for all of them are displayed). By looking at the various screen images displayed on the display unit 4D, the customer (such as the user) ask the dealer, etc., as required, for explanation and analysis regarding the contents of the displayed information, the display form, etc. Correspondingly, the dealer, etc. go to the customer side to make explanation and analysis in response to questions, demands, etc. from the customer side.

The one embodiment of the present invention described above can provide advantageous effects given below.

1) Effect Resulting from Leaving Details of Services and Sales to Dealer Side

In the one embodiment of the present invention described above, data regarding the machine operations of all the hydraulic excavators 1 is taken in by the main server 5 installed on the manufacturer side via information communication and then stored in the database 5A. At the time, the data is also outputted, as basic information for services and sales, to the intermediate server 6 on the side of the dealer, etc. Based on that basic information for services and sales, the dealer, etc. in charge of services and sales can make a judgment by themselves and take the above-mentioned actions depending on situations and demands of the customer (such as the user) with whom the dealer, etc. usually keep direct contact. For example, the dealer, etc. set up a homepage so that the customer can access the homepage of the dealer, etc., download the relevant data into the user-side personal computer 4 by clicking a download button on a predetermined screen, and display the downloaded data, as final service/sales information, in a predetermined form on the user-side personal computer 4. Also, regarding the contents, the display form, etc. of the service/sales information finally displayed on the user-side personal computer 4, the dealer, etc. go to the customer side to make explanation and analysis, as required, in response to questions, demands, etc. from the customer side. In addition, the dealer, etc., can select or restrict users to which the data is to be transmitted, and can actuate a lock or disable display of a downloading screen itself for some users so that they cannot download any data.

Thus, the functions required on the side of the main server 5 (i.e., on the manufacturer side) are restricted to those ones of receiving and collecting data from a large number of hydraulic excavators 1 and distributing the data, while a judgment made based on the distributed data regarding, e.g., what kinds of services and sales should be finally presented to the customer (user), is left to the side of the intermediate server 6 (i.e., the side of the dealer, etc.) taking charge of services and sales in the closest relation to the customer. As a result, unlike the prior art in which all operations ranging from data reception to services and sales are managed at one place in a centralized manner, more appropriate and satisfactory service/sales information can be presented to the customer side with careful consideration.

2) Reduction of Repair/Replacement Cost with Scale Merit

In the one embodiment of the present invention, as described above, data regarding the operation per component section in many hydraulic excavators 1 is taken in by the main server 5 installed on the manufacturer side via information communication and then stored in the database 5A. Further, the part repair/replacement timing is computed for each of the hydraulic excavators 1. Such processing is executed for all of the hydraulic excavators 1, and the parts having the repair/replacement timings substantially matched with each other are extracted and confirmed from among the many hydraulic excavators 1.

Then, on the premise that the relevant parts are collectively repaired or replaced in almost all or a certain percentage of the thus-extracted hydraulic excavators 1 (i.e., collective repair or replacement of the relevant parts increases productivity, distribution efficiency, etc. and hence greatly reduces the repair/replacement cost estimated for each hydraulic excavator 1), the planned selling price of the relevant part is decided while reflecting a cost reduction depending on the number of the parts to be repaired or replaced, and then outputted as the basic information for services and sales to the side of the intermediate server 6. Further, the intermediate server 6 processes the basic information for services and sales, as appropriate, into the final service/sales information that is displayed on the user-side personal computer 4 in a predetermined form, for example, in the form of the advice note shown in Fig. 80.

Thus, by advantageously utilizing a scale merit resulting from the capability of predicting the part repair/replacement timings of the many hydraulic excavators 1 and by performing repair or replacement of a particular part for the many hydraulic excavators in a collective manner, it is possible to improve productivity, distribution efficiency, etc., and to greatly reduce the repair/replacement cost estimated for each hydraulic excavator 1. Consequently, a burden imposed on the customer side can be noticeably reduced.

3) Effect with Campaign

In the one embodiment of the present invention, as described above, in addition to the ordinary selling price, the discount sales (campaign) period prior to the ordinary repair/replacement timing and the discount selling price (campaign price) during the discount sales period are decided for a particular part, and such data is also outputted, as the basic information for services and sales, to the side of the intermediate server 6. Further, the intermediate server 6 processes the basic information for services and sales, as appropriate, into the final service/sales information that is displayed on the user-side personal computer 4 in a predetermined form, for example, in the form of the advice note shown in Fig. 81. As a result, besides the effect described in above 1), the following effects are obtained. The dealer, etc. in charge of services and sales can obtain an effect of positively ensuring a profit and promotion of sales with advanced booking, while the customer side can obtain an effect of further reducing a cost burden based on setting of the campaign price. Further, after the campaign period, a follow-up survey for the campaign result may be performed through the intermediate server 6 (or directly to the user-side personal computer 4), and information regarding, e.g., the number of those ones among all the campaign target customers, who did not purchase the relevant part, and the reasons why they did not purchase, may be collected by the main server 5. This enables a campaign to be carried out in a more effective manner by reflecting the result of the follow-up survey upon particulars of the next and subsequent campaigns, or by reflecting the result of a campaign carried out in one district, for example, upon particulars of a similar campaign when it is to be carried out in another district immediately after the preceding campaign.

Additionally, in the one embodiment of the present invention described above, a practical method has not been particularly described which is executed when the potential demand is predicted in steps 127 - 128 after the end of step 123 in Fig. 75. However, the potential demand may be predicted based on, for example, a relationship in magnitude between a machine management cost and a machine value. The concept of the method for predicting the potential demand in such a manner will be described with reference to Figs. 82 and 83.

Fig. 82 is a flowchart showing a sequence of steps for preparing a sales plan executed by the sales plan scheduling unit 53 of the main server 5 in such a modification, and it corresponds to Fig. 78. Steps 120 - 123 are the same as those in Fig. 78 and therefore a description of those steps is omitted here. After the end of step 123, the processing flow proceeds to step 127' in which a potential demand (earlier demand) is predicted for each customer unlike step 127 in Fig. 78. The concept for prediction of the potential demand executed in step 127 will be described with reference to Fig. 83.

Fig. 83 is a graph representing, in one construction machine, one example of a machine management cost curve (= repair cost curve as a whole of machine) that increases with time and an overall machine value curve (= trade-in cost curve) that decreases with time. The horizontal axis represents the operation time, while the vertical axis represents the machine management cost corresponding to a machine management cost curve (a) on the left side and the machine value corresponding to a machine value curve (b).

Referring to Fig. 83, in a construction machine used in outdoor severe environments, parts are routinely subjected to repair or replacement, maintenance, etc. However, because deterioration of each part progresses and the number of parts to be repaired or replaced and the frequency of part repair/replacement increase with time, the machine management cost curve (a) generally ascends with time, i.e., as the curve extends from right to left. In particular, the slope of the rightward ascending curve is abruptly increased after a certain time. On the other hand, the machine value curve (b) generally descends with time. Therefore, the user usually trades a construction machine, which has been employed for a certain period, in as a second-hand one, and purchases a new machine. One guideline for the repurchase timing is a cross point A at which the machine management cost curve (a) and the machine value curve (b) intersect each other. More specifically, when coming into a period exceeding the timing $T_A$ corresponding to the cross point A (i.e., a period on the right of $T_A$ in Fig. 83), the machine value curve (b) descends below the machine management cost curve (a) and the machine value (i.e., trade-in price) becomes lower than the repair/replacement cost. Stated another way, in many cases, whether the time is close to $T_A$, or how long time is left until $T_A$, represents a turning point in making a judgment as to whether the currently owned machine is repaired/replaced, or whether it is substituted for a newly purchased machine.

Recently, on the user side, there have increased needs for more effectively employing the currently owned old construction machines for a longer period through repair/replacement of parts instead of trading those old machines in for new ones successively. With those needs in mind, if an action for prolonging the machine life is taken, for example, by repairing or replacing all together a plurality of particular parts belonging particular equipment (such as an engine, a hydraulic pump, and control valves) which are effective in prolonging the life of the overall machine, an ascent of the machine management cost curve (a) is moderated and slides toward the longer life side (i.e., the lower cost side), while a descent of the machine value curve (b) is moderated and slides toward the longer life side (i.e., the higher value side). Fig. 83 shows an example in which the repair/replacement of the particular part is performed at a timing $T_B$ before the timing $T_A$ corresponding to the cross point A between the machine management cost curve (a) and the machine value curve (b).

More specifically, by repairing or replacing the plurality of parts all together at the timing $T_B$, the machine management cost increases once by $\Delta S1$ (see Fig. 83) corresponding to the repair/replacement cost as indicated by a curve (a'). With the effect resulting from such concentrated repair/replacement of the particular parts, however, the slope of the rightward-ascending machine management cost curve (a') is reduced to a level almost equal to, for example, the slope in an initial stage (near the left end in Fig. 83) of the machine management cost curve (a) (substantially horizontal). After passing a certain timing $T_C$, therefore, the machine management cost curve (a') extends below the original machine management cost curve (a). Thus, as described above, the machine management cost curve (a') slides toward the longer life side (i.e., the lower cost side) than the original curve (a) after the timing $T_C$.

Also, with the effect resulting from repairing or replacing the plurality of parts all together at the timing $T_B$, the slope of the rightward ascending machine value curve (b') becomes larger than that of the original machine value curve (b). Therefore, the machine value curve (b') extends above the original machine value curve (b) and, as described above, it slides toward the longer life side (i.e., the higher value side) than the original curve (b').

The above-mentioned sliding of the curves (a'), (b') shifts a timing $T_A'$ corresponding to a cross point A' between the machine management cost curve (a') and the machine value curve (b') to the right on the graph by a period $\Delta T$ (see Fig. 83) from the timing $T_A$ corresponding to the cross point A between the machine management cost curve (a) and the machine value curve (b). Hence, the life of the overall machine can be prolonged by a period $\Delta T$.

On the other hand, in the case (see a point C) of disposing of the old hydraulic excavator by sale (i.e., trade-in) at the timing $T_A$ (= timing corresponding to the cross point A between the original machine management cost curve (a) and the original machine value curve (b)) defined. in the case of not performing repair/replacement, the following cost merit can be obtained. When the old hydraulic excavator is disposed of by sale at the timing $T_A$, the machine value is increased by $\Delta S2$ as a result of the above-mentioned sliding from the curve (b) to (b'), and this increase of the machine value becomes a profit on the user side. Also, an increase $\Delta S3$ of the repair/replacement cost, which should have been paid during a period from the part repair/replacement timing $T_B$ to the timing $T_A$ in the case of not performing the repair/replacement, is reduced to an (initial) investment cost S1 paid at the part repair/replacement timing $T_B$. Therefore, the difference of $\Delta S3$ - $\Delta S1$ also becomes a profit on the user side. Consequently, the user side can obtain a cost merit of $\Delta S2 + \Delta S3 - \Delta S1$ in total by repairing or replacing the particular parts at the timing $T_B$.

The sales plan scheduling unit 53 prepares a graphic curve, such as shown in Fig. 83, for each of the construction machines belonging to customers (users), and predicts, when the above-described useful information is presented to the customers by referring to those graphic curves, what percentage of the target will purchase the particular parts at the earlier timing based on marketing, past experimental rules, various model analyses, etc.

In such a manner, the potential demand is predicted for one customer *a*. Then, the potential demand is similarly predicted for each of the other customers *b*, *c*, *d*, ... in turn (step 128').

After predicting the potential demand for the part per customer as described above, the processing flow proceeds to step 129'.

In step 129', based on the potential demand prediction (sales prospect prediction) executed in above step 127', the campaign price (discount selling price) and the campaign period (discount sales period) are decided for a plurality of particular parts (e.g., parts D, E and F, see Fig. 83) for which there will occur potential demands to the customer *a*. In this respect, how much discount is proper (e.g., 3%-off, 5%-off or 10%-off) and at which timing the campaign period is to take place are decided from a comprehensive viewpoint depending the magnitude of the potential demand, taking into account both a decrease of profit resulting from discount selling of the parts D, E and F to be repaired or replaced and an increase of profit on the customer side resulting from earlier purchasing of those parts. In addition, the point regarding whether a merit is resulted from the campaign may also be taken into consideration. If it is determined that the potential demand will not be so prospected even with the campaign at a certain discount selling price, the campaign for the relevant customer may be itself put off.

Likewise, for each of the other customers *b*, *c*, *d*, ..., the campaign price (discount selling price) and the campaign period (discount sales period) (including whether the campaign is to be performed or not) are decided one by one (step 130').

After deciding the campaign price (discount selling price) for each of the customers in above steps 129' and 130', the processing flow proceeds to step 124 (subsequent steps 124 - 126 are substantially similar to corresponding steps in Fig. 75) for preparing a part sales list per customer.

Fig. 84 is a representation showing one example of a part sales list per customer, which is prepared by the sales plan scheduling unit 53 of the main server 5 in this modification.

As shown in Fig. 84, the part sales list per customer is prepared, similarly to the above-mentioned list shown in Fig. 79, in the form of a table including, for example, the customer name, the name of the part to be repaired or replaced in the hydraulic excavator(s) 1 possessed (or used) by the relevant customer, the planned selling price per part, the scheduled timing, and the campaign price and the campaign period of the parts (in this example, the parts D, E and F for the customer *a*) as campaign targets.

In the above-described case represented by Fig. 69, for example, it is assumed that, among 2800 hydraulic excavators having the front operation time in excess of the average operation time of 1000 hours, the number of those ones in which the bucket prongs will be continuously used in the next term without being repaired or replaced is about 10%. As a matter of course, however, the part sales list per customer is prepared for the customers of all the 2800 hydraulic excavators including those ones corresponding to about 10%. In other words, all the customers including several tens percentages of them, who will not probably purchase the hydraulic excavators, are listed up.

Also, in the example shown in Fig. 84, the campaign price and the campaign period are displayed for the parts D, E and F with respect to the customer *a* because those parts come under earlier purchase campaign than the ordinary repair/replacement timing. For a customer *b*, however, the same part F is scheduled to be purchased at the ordinary repair/replacement timing, and therefore only the ordinary selling price is displayed. This is also applied to the part D for the customer *c*.

Returning to Fig. 82, after preparing the part sales list per customer in step 124 as described above, the processing flow proceeds to step 125 in which the prepared list is rearranged per dealer, etc. Fig. 85 is a representation showing one example of a part sales list per dealer, etc., which is prepared by the sales plan scheduling unit 53 of the main server 5 in this modification.

As shown in Fig. 85, the part sales list per dealer, etc. is obtained by rearranging the part sales list per customer, shown in Fig. 84, to be grouped for each dealer, etc. taking in charge of or supervising services and sales to the customers. The part sales list per dealer, etc. is prepared in the form of a table including, for example, the name of the dealer, etc., the name of the acquainted customer, the name of the part to be repaired or replaced in the hydraulic excavator(s) 1 possessed (or used) by the relevant customer, the planned selling price per part, and the scheduled timing, and the campaign price and the campaign period of the parts as campaign targets. Once the campaign price and the campaign period are decided for each customer in above steps 129 and 130, the part sales list per dealer, etc. shown in Fig. 85 may be prepared directly without preparing the part sales list per customer shown in Fig. 84.

Returning to Fig. 82, after preparing the part sales list per customer in step 125 in such a manner, the processing flow proceeds to step 126 in which the prepared part sales list per dealer, etc. is transmitted to the intermediate server 6 in the corresponding dealer, etc. At this time, future changes in the machine management cost curve and the machine value curve, and changes in the machine management cost curve and the machine value curve after the repair/replacement timing of the particular part when the repair/replacement is performed (or only the latter changes), which have been employed for prediction of the potential demands with respect to the machine belonging to the relevant customer, are also transmitted, as information in the form shown in Fig. 83 or in another similar form (hereinafter referred to also as "price change information"), to the customers as campaign targets.

Correspondingly, in this modification, the input/output interface 6a of each intermediate server 6 receives, from the main server 5, not only the part sales list per dealer, etc., including the planned selling price, the campaign price (discount selling price), the campaign period (discount sales period), etc., which have been decided by the main server 5 for the particular parts of the hydraulic excavators 1 as described above, but also the price change information regarding the customers as campaign targets.

The CPU 6c prepares an advice note for part sales, as service/sales information presented to each customer, based on the part sales list per dealer, etc. and the price change information, and transmits the advice note to the user-side personal computer 4 of each customer via the input/output interface 5b by E-mail, for example.

Figs. 86 and 87 are representations showing one example of an advice note sent to the customer (customer a as the campaign target in this example), which is prepared by the CPU 6c of the intermediate server 6 in this modification.

Fig. 86 represents main contents of the advice note constituting, e.g., a first page of the advice note. In the example shown in Fig. 86, similarly to the advice note shown in Fig. 81, the customer name, the machine No. of the hydraulic excavator used by the customer, the name of the part to be repaired or replaced, and the planned selling price and the repair/replacement timing of the part are listed in the form of a table in an upper area of the first page, while the parts as campaign targets (parts D, E and F in this example), the planned selling prices (= ordinary prices), the repair/replacement timings, the campaign prices, and the campaign periods corresponding to the respective parts are listed in the form of a table in a lower area of the first page.

Fig. 87 represents incidental information constituting, e.g., a second page of the advice note. In this example, the machine management cost curve (a) and the machine value curve (b), which are similar to those shown in Fig. 83, regarding the machine belonging to the relevant customer a are graphically shown in an upper area of the second page, while an explanation of the curves themselves, the purport of the campaign, and an explanation regarding the merit obtained on the customer side from purchasing the parts during the campaign period with reference to the graph are allocated in a lower area of the second page.

As in the one embodiment of the present invention described above, whether to send the above-mentioned advice note to the customer or not is basically totally left at the discretion of the dealer, etc. In spite of the part sales list per dealer, etc. and the price change information being both transmitted from the main server as described above, the dealer, etc. may take actions of not notifying the customer of such information given from the manufacturer side and supplying parts through, e.g., another part supply route uniquely developed. It is also optional to send the advice note to some of the customers, but not to send it to the other customers. Alternatively, if there is a reliance relationship between the customer and the dealer, etc., the list sent from the main server (e.g., the data shown in Fig. 85 or a part of the list regarding the relevant customer) may be sent, as it is, to the user-side personal computer 4.

With the above-mentioned modification, the following effect can be obtained in addition to the effects obtained with the one embodiment of the present invention.

In the modification, as described above, in response to the recent user's needs for the longer life of the hydraulic excavator, changes of the machine management cost curve (a') and the machine value curve (b'), i.e., sliding of the curves toward the longer life side, which are resulted in the case of repairing or replacing the particular parts at the timing $T_B$ before the timing $T_A$ corresponding to the cross point A between the machine management cost curve (a) and the machine value curve (b), are outputted as the basic information for services and sales to the intermediate server 5, and then displayed, as the final service/sales information, on the user-side personal computer 4 in the form in which the price change information is contained in the advice note.

Thus, since the user side can obtain the information indicating the sliding of the curve from (a) to (a') and the sliding of the curve from (b) to (b') which occur upon the repair/replacement of the part, it is possible to properly determine at the user's own discretion as to, for example, when and how the part is to be repaired or replaced, and how long the machine life can be extended. As a result, the machine possessed by the user can be effectively utilized at a sufficiently satisfied level.

In the above description, when the number of machines and the number of parts each having the operation state (operation time) in excess of the reference value (average operation time) are calculated, a responsible worker performs the calculation and setting of the reference value by outputting the distribution graphs such as shown in Figs. 72 and 74. However, those calculation and setting may be automatically performed, for example, by the product-exchange and part-repair/replacement data processing unit 51 of the main server 5. This realizes a reduction of the workload.

Further, the above-described steps of creating and transmitting the distribution data and the distribution graphs representing the number of currently working hydraulic excavators with respect to the operation time thereof may be modified such that the step of creating the distribution data is automatically executed by the main server 5, while the steps of creating and transmitting the distribution graphs are executed in accordance with instructions entered by, e. g., a person responsible for the sales plan scheduling through the keyboard 5B (or the intra-company computer).

Also, in the above-described embodiment, the distribution data and the distribution graphs representing the number of exchanged products with respect to the operation time of the old hydraulic excavators that have been exchanged by new ones, and the distribution data and the distribution graphs representing the number of repaired or replaced parts with respect to the operation time are executed each time when the product exchange data and the part repair/replacement data are inputted. However, those steps may be executed at any other suitable timing, e.g., at an appropriate- intermittent timing through batch processing.

While the above embodiment has been described in connection with, e.g., a hydraulic excavator as one example of construction machines, the present invention is not limited to the hydraulic excavator, but is also applicable other types of construction machines, such as a crawler crane and a wheel loader. These cases can also provide similar effects to those obtained with the above embodiment.

Moreover, applications of the present invention are not limited to construction machines, and the present invention is further applicable to general digging and loading machines working in mine sites (such as a scraper, a rock drill (drill machine), and large-sized hydraulic excavators, wheel loaders, motor graders, etc. employed in mines). These cases can also provide similar effects to those obtained with the above embodiment.

Industrial Applicability

According to the present invention, the functions required on the manufacture side are restricted to those ones of receiving and collecting data from a large number of hydraulic excavators and distributing the data, while a judgment made based on the distributed data regarding, e.g., what kinds of services and sales should be finally presented to the customer, is left to the side of the dealer, etc. taking charge of services and sales in the closest relation to the customer. As a result, unlike the prior art in which all operations ranging from data reception to services are managed at one place in a centralized manner, sufficiently satisfied and proper care can be given to the customer side with careful consideration.

## Claims

**1.** An information providing system for a construction machine, said system transmitting and receiving information regarding the construction machine, wherein:

said system includes a server (5) for obtaining data regarding machine operations of a plurality of construction machines (1) via information communication and storing the obtained data in a database (5A), and for outputting the obtained data regarding the machine operations of the plurality of construction machines (1) via information communication.

**2.** An information providing system for a construction machine, said system transmitting and receiving information regarding the construction machine, wherein:

said system includes a server (5) which is provided on the side of a manufacturer of the construction machine or a person commissioned from the manufacturer,
which obtains data regarding machine operations of a plurality of construction machines (1) via information communication and stores the obtained data in a database (5A), and
which outputs, via information communication, the obtained data regarding the machine operations of the plurality of construction machines (1), as basic information for services presented to a user or an owner of each construction machine (1), to an information terminal (6) provided on the side of a serviceman in charge of the services or a supervisor supervising the serviceman.

**3.** An information providing system for a construction machine, said system transmitting and receiving information regarding the construction machine, wherein:

said system includes a server (5) which is provided on the side of a manufacturer of the construction machine or a person commissioned from the manufacturer,
which obtains, via information communication, data regarding machine operations of a plurality of construction machines (1) from an information terminal (4) provided on the side of a user or an owner of each construction machine (1), and stores the obtained data in a database (5A), and
which outputs, via information communication, the obtained data regarding the machine operations of the plurality of construction machines (1), as basic information for services presented to said user or said owner, to an information terminal (6) provided on the side of a serviceman in charge of the services or a supervisor supervising the serviceman.

**4.** An information providing system for a construction machine, said system transmitting and receiving information regarding the construction machine, wherein:

said system comprises an information terminal (4) provided on the side of a user or an owner of a construction machine and being connectable to a portable terminal (3) for obtaining data regarding machine operation of the construction machine (1),
a first server (5) provided on the side of a manufacturer of the construction machine or a person commissioned from the manufacturer, obtaining data regarding the machine operation of the corresponding construction machine (1) from each information terminal (4) via information communication and storing the obtained data in a database (5A), and outputting the obtained data regarding the machine operations of a plurality of construction machines (1), as basic information for services presented to said user or said owner, via information communication, and
a second server (6) provided on the side of a serviceman in charge of the services or a supervisor supervising the serviceman, receiving the basic information from said first server (5), and outputting the basic information or information resulting from the basic information,
said information terminal (4) receiving the basic information or the information resulting from the basic information from said second server (6), and displaying the received information, as service information presented to said user or said owner, in a predetermined form.

**5.** An information providing system for a construction machine, said system transmitting and receiving information regarding the construction machine,
wherein said system comprises a plurality of information terminals (4) provided on the side of users or owners of construction machines (1),
a first server (5) provided on the side of a manufacturer of the construction machines or a person commissioned from the manufacturer, and
a plurality of second servers (6) provided in a hierarchical form on the side of a plurality of servicemen in charge of services presented to said users or said owners and on the side of a supervisor supervising the servicemen,
wherein said first server (5) obtains data regarding machine operation of each construction machine (1) via information communication and stores the obtained data in a database (5A), and outputs the obtained data regarding the machine operations of the plurality of construction machines (1), as basic information for services presented to said users or said owners, to said second server (6) provided on the supervisor side via information communication,
wherein the second server (6) provided on the supervisor side outputs the basic information received from said first server (5) to a plurality of other second servers (6) provided on the serviceman side,
wherein the plurality of second servers (6) provided on the serviceman side receive the basic information from the second server (6) provided on the supervisor side and output, to said plurality of corresponding information terminals (4), the basic information directly or after optionally selecting the basic information, and
wherein said plurality of information terminals (4) each receive the basic information or information resulting from the basic information from the second server (6) provided on the corresponding serviceman side, and display the received information, as service information presented to the user or the owner, in a predetermined form.

**6.** An information providing system for a construction machine, said system transmitting and receiving information regarding the construction machine, wherein:

said system includes a second server (6) which is provided on the side of a serviceman in charge of services presented to a user or an owner of the hydraulic excavator, or on the side of a supervisor supervising the serviceman,
which receives, as basic information for said services, data regarding machine operations of a plurality of construction machines (1) via information communication, the data being obtained by a first server (5) provided on the side of a manufacturer of the construction machines or a person commissioned from the manufacturer, and
which outputs the basic information or information resulting from the basic information to an information terminal (4) provided on the side of said user or said owner such that the basic information or the information resulting from the basic information is displayed in a predetermined form as service information presented to said user or said owner.

**7.** An information providing system for a construction machine, said system transmitting and receiving information regarding the construction machine, wherein:

said system comprises a supervisor-side second server (6) which is provided on the side of a supervisor supervising a plurality of servicemen in charge of services presented to users or owners of hydraulic excavators, and
which receives, as basic information for said services, data regarding machine operations of a plurality of construction machines (1) via information communication, the data being obtained by a first server (5) provided on the side of a manufacturer of the construction machines or a person commissioned from the manufacturer; and
a plurality of serviceman-side second servers (6) which are provided on the side of said plurality of servicemen, and
each of which receives the basic information from said supervisor-side second server (6) and outputs, to a corresponding information terminal (4) provided on the side of said user or said owner, the basic information directly or after optionally selecting the basic information, such that the basic information or the optionally selected basic information is displayed, as service information, in a predetermined form to the user or the owner of the hydraulic excavator.

**8.** An information providing system for a construction machine according to any one of Claims 4 to 7, wherein:

said information terminal (4) includes display means (4B) for displaying the service information in a predetermined graphical format, and
said display means (4B) rearranges the information from said second server (6) to form a file each time when the information is obtained from each hydraulic excavator (1), and displays the file in relation to a machine number or a customer management-purposed machine name of the hydraulic excavator (1) from which the file has been obtained, and a model name or a working site name of the relevant hydraulic excavator (1).

**9.** An information providing system for a construction machine, said system transmitting and receiving information regarding the construction machine, wherein:

said system includes a server (5) which is provided on the side of a manufacturer of the construction machine or a person commissioned from the manufacturer,
which obtains data regarding machine operations of a plurality of construction machines (1) via information communication and stores the obtained data in a database (5A), and
which outputs, via information communication, the obtained data regarding the machine operations of the plurality of construction machines (1), as basic information for sales to a user or an owner of each construction machine (1), to an information terminal (6) provided on the side of a salesman or a supervisor supervising the serviceman.

**10.** An information providing system for a construction machine, said system transmitting and receiving information regarding the construction machine, wherein:

said system includes a server (5) which is provided on the side of a manufacturer of the construction machine or a person commissioned from the manufacturer,
which obtains, via information communication, data regarding machine operations of a plurality of construction machines (1) from an information terminal (4) provided on the side of a user or an owner of each construction machine (1), and stores the obtained data in a database (5A), and
which outputs, via information communication, the obtained data regarding the machine operations of the plurality of construction machines (1), as basic information for sales to said user or said owner, to an information terminal (4) provided on the side of a salesman or a supervisor supervising the salesman.

**11.** An information providing system for a construction machine, said system transmitting and receiving information regarding the construction machine, wherein:

said system comprises an information terminal (4) provided on the side of a user or an owner of a construction machine and being connectable to a portable terminal (3) for obtaining data regarding machine operation of the construction machine (1),
a first server (5) provided on the side of a manufacturer of the construction machine or a person commissioned from the manufacturer, obtaining data regarding the machine operation of the corresponding construction machine (1) from each information terminal (4) via information communication and storing the obtained data in a database (5A), and outputting the obtained data regarding the machine operations of a plurality of construction machines (1), as basic information for sales to said user or said owner, via information communication, and
a second server (6) provided on the side of a salesman or a supervisor supervising the salesman, receiving the basic information from said first server (5), and outputting the basic information or information resulting from the basic information,
said information terminal (4) receiving the basic information or the information resulting from the basic information from said second server (6), and displaying the received information, as sales information presented to said user or said owner, in a predetermined form.

**12.** An information providing system for a construction machine, said system transmitting and receiving information regarding the construction machine,
wherein said system comprises a plurality of information terminals (4) provided on the side of users or owners of construction machines (1),
a first server (5) provided on the side of a manufacturer of the construction machines or a person commissioned from the manufacturer, and
a plurality of second servers (6) provided in a hierarchical form on the side of a plurality of salesmen in charge of sales to said users or said owners and on the side of a supervisor supervising the salesmen,
wherein said first server (5) obtains data regarding machine operation of each construction machine (1) via information communication and stores the obtained data in a database (5A), and outputs the obtained data regarding the machine operations of the plurality of construction machines (1), as basic information for sales to said users or said owners, to said second server (6) provided on the supervisor side via information communication,
wherein the second server (6) provided on the supervisor side outputs the basic information received from said first server (5) to a plurality of other second servers (6) provided on the serviceman side,
wherein the plurality of second servers (6) provided on the serviceman side receive the basic information from the second server (6) provided on the supervisor side and output, to said plurality of corresponding information terminals (4), the basic information directly or after optionally selecting the basic information, and
wherein said plurality of information terminals (4) each receive the basic information or information resulting from the basic information from the second server (6) provided on the corresponding serviceman side, and display the received information, as sales information presented to the user or the owner, in a predetermined form.

**13.** An information providing system for a construction machine, said system transmitting and receiving information regarding the construction machine, wherein:

said system includes a second server (6) which is provided on the side of a salesman in charge of sales to a user or an owner of the hydraulic excavator, or on the side of a supervisor supervising the serviceman,
which receives, as basic information for promoting said sales, data regarding machine operations of a plurality of construction machines (1) via information communication, the data being obtained by a first server (5) provided on the side of a manufacturer of the construction machines or a person commissioned from the manufacturer, and
which outputs the basic information or information resulting from the basic information to an information terminal (4) provided on the side of said user or said owner such that the basic information or the information resulting from the basic information is displayed in a predetermined form as sales information presented to said user or said owner of the construction machine (1).

**14.** An information providing system for a construction machine, said system transmitting and receiving information regarding the construction machine, wherein:

said system comprises a supervisor-side second server (6) which is provided on the side of a supervisor supervising a plurality of servicemen in charge of sales to users or owners of hydraulic excavators, and

which receives, as basic information for promoting said sales, data regarding machine operations of a plurality of construction machines (1) via information communication, the data being obtained by a first server (5) provided on the side of a manufacturer of the construction machines or a person commissioned from the manufacturer; and

a plurality of serviceman-side second servers (6) which are provided on the side of said plurality of salesmen, and

each of which receives the basic information from said supervisor-side second server (6) and outputs, to a corresponding information terminal provided on the side of said user or said owner, the basic information directly or after optionally selecting the basic information, such that the basic information or the optionally selected basic information is displayed in a predetermined form as sales information presented to the user or the owner of the hydraulic excavator.

**15.** An information providing system for a construction machine according to any one of Claims 11 to 14, wherein:

said information terminal (4) includes display means (4B) for displaying the sales information in a predetermined graphical format, and

said display means (4B) rearranges the information from said second server (6) to form a file each time when the information is obtained from each hydraulic excavator (1), and displays the file in relation to a machine number or a customer management-purposed machine name of the hydraulic excavator (1) from which the file has been obtained, and a model name or a working site name of the relevant hydraulic excavator (1).

**16.** An information providing system for a construction machine according to Claim 8 or 15, wherein:

said display means (4B) displays a list of the information from said second server (6), the list including the model name, the machine number corresponding to the model name, and a name of the file corresponding to the machine number, which are arranged in this order in a tree form.

**17.** An information providing system for a construction machine according to Claim 8 or 15, wherein:

said display means (4B) displays a list of the information from said second server (6), the list including the working site name, the customer-management machine name corresponding to the working site name, and a name of the file corresponding to the customer-management machine name, which are arranged in this order in a tree form.

**18.** An information providing system for a construction machine according to Claim 8 or 15, wherein:

said display means (4B) includes simultaneous display instructing means for simultaneously displaying the contents of the plural files on one screen image.

**19.** An information providing system for a construction machine according to Claim 8 or 15, wherein:

said display means (4B) displays, of the data in the file, change in load factor of an engine (32) equipped in the hydraulic excavator or in pressure frequency of hydraulic actuators associated with a front operating mechanism in a color-coded representation depending on the magnitudes of numerical values of the load factor or the pressure frequency.

**20.** An information providing system for a construction machine according to Claim 8 or 15, wherein:

said display means (4B) displays, of the data in the file, values of an operation time and a non-operation time within a run time of the hydraulic excavator along with percentages of the values with respect to the run time.

**21.** An information providing system for a construction machine according to any one of Claims 2-7 and 9-14, wherein said server or said first server (5) has the functions of:

obtaining data regarding operation per component section in a plurality of construction machines (1) via information communication,

computing, based on the obtained data, the repair/replacement timing of a part belonging to the component section for each of the construction machines (1),

confirming parts having the repair/replacement timings substantially matched with each other among the plurality of construction machines (1),
deciding a planned selling price of the confirmed parts depending on a quantity thereof, and
outputting the planned selling price as the basic information via information communication.

**22.** An information providing system for a construction machine according to any one of Claims 2-7 and 9-14, wherein said server or said first server (5) has the functions of:

obtaining data regarding operation per component section in a plurality of construction machines (1) via information communication,
computing, based on the obtained data, the repair/replacement timing of a part belonging to the component section for each of the construction machines (1),
confirming parts having the repair/replacement timings substantially matched with each other among the plurality of construction machines (1),
deciding, for the confirmed parts, a discount sales period substantially the same as or prior to the repair/replacement timing thereof and a discount selling price during the discount sales period, and
outputting the discount sales period and the discount selling price as the basic information via information communication.

**23.** An information providing system for a construction machine according to Claim 4 or 11, wherein:

said information terminal (4) is connectable to said portable terminal (3) for obtaining data regarding operation per component section of the construction machine,
said first server (5) obtains the data regarding the operation per component section of the corresponding construction machine from each information terminal (4) via information communication and stores the obtained data in said database (5A), computes, based on the data stored in said database (5A), the repair/replacement timing of a part belonging to the component section for each of the construction machines (1), confirms parts having the repair/replacement timings substantially matched with each other among the plurality of construction machines (1), decides a planned selling price of the confirmed parts depending on a quantity thereof, and outputs the planned selling price as the basic information to said second server (6) via information communication,
said second server (6) outputs the basic information received from said first server (5) or the information resulting from the basic information to said information terminal (4), and
said information terminal (4) displays the information received from said second server (6), as the service information or the sales information, in a predetermined form.

**24.** An information providing system for a construction machine according to Claim 4 or 11, wherein:

said information terminal (4) is connectable to said portable terminal (3) for obtaining data regarding operation per component section of the construction machine,
said first server (5) obtains the data regarding the operation per component section of the corresponding construction machine from each information terminal (4) via information communication and stores the obtained data in said database (5A), computes, based on the data stored in said database (5A), the repair/replacement timing of a part belonging to the component section for each of the construction machines (1), confirms parts having the repair/replacement timings substantially matched with each other among the plurality of construction machines (1), decides, for the confirmed parts, a discount sales period substantially the same as or prior to the repair/replacement timing thereof and a discount selling price during the discount sales period, and outputs the discount sales period and the discount selling price, as the basic information, to the second server (6) via information communication,
said second server (6) outputs the basic information received from said first server (5) or the information resulting from the basic information to said information terminal (4), and
said information terminal (4) displays the information received from said second server (6), as the service information or the sales information presented to the user or the owner, in a predetermined form.

**25.** An information providing system for a construction machine according to any one of Claims 2-7 and 9-14, wherein said server or said first server (5) has the functions of:

obtaining data regarding operation per component section of the construction machine via information communication,
computing, based on the obtained data, future change in machine management cost of the construction machine and future change in machine value of the construction machine, as well as the timing at which the machine management cost and the machine value become substantially equal to each other,
computing, when a particular part belonging to the component section is to be repaired or replaced before said computed timing, subsequent change in machine management cost of the construction machine and subsequent change in machine value of the construction machine resulting after the repair/replacement of said particular part, and
outputting at least the subsequent change in machine management cost and the subsequent change in machine value after the repair/replacement, as the service information or the sales information presented to the user or the owner of the corresponding construction machine, via information communication.

**26.** An information providing system for a construction machine according to any one of Claims 2-7 and 9-14, wherein said server or said first server (5) has the functions of:

obtaining data regarding operation per component section of the construction machine via information communication,
computing, based on the obtained data, future change in machine management cost of the construction machine and future change in machine value of the construction machine, as well as the timing at which the machine management cost and the machine value become substantially equal to each other,
computing, when a particular part belonging to the component section is to be repaired or replaced before said computed timing, subsequent change in machine management cost of the construction machine and subsequent change in machine value of the construction machine resulting after the repair/replacement of said particular part, and
outputting the subsequent change in machine management cost and the subsequent change in machine value after the repair/replacement along with the future change in machine management cost and the future change in machine value of the construction machine, as the service information or the sales information presented to the user or the owner of the corresponding construction machine, via information communication.

**27.** An information providing system for a construction machine according to Claim 25 or 26, wherein:

said server (5) or said first server (5) outputs at least the subsequent change in machine management cost and the subsequent change in machine value after the repair/replacement, as data capable of being graphically displayed in the form of curves, via information communication.

**28.** An information providing system for a construction machine according to Claim 4 or 11, wherein:

said information terminal (4) is connectable to said portable terminal (3) for obtaining data regarding operation per component section of the construction machine,
said first server (5) obtains the data regarding the operation per component section of the construction machine from said information terminal (4) via information communication and stores the obtained data in said database (5A), computes, based on the data stored in said database (5A), future change in machine management cost of the construction machine and future change in machine value of the construction machine, as well as the timing at which the machine management cost and the machine value become substantially equal to each other, computes, when a particular part belonging to the component section is to be repaired or replaced before said computed timing, subsequent change in machine management cost of the construction machine and subsequent change in machine value of the construction machine resulting after the repair/replacement of said particular part, and outputs at least the subsequent change in machine management cost and the subsequent change in machine value after the repair/replacement, as the basic information, to said second server (6) via information communication,
said second server (6) outputs, to said information terminal (4), the basic information received from said first server (5) directly or after processing or optionally selecting the basic information, and
said information terminal (4) displays the information received from said second server (6), as the service information or the sales information, in a predetermined form.

**29.** An information providing system for a construction machine according to Claim 4 or 11, wherein:

said information terminal (4) is connectable to said portable terminal (3) for obtaining data regarding operation per component section of the construction machine,
said first server (5) obtains the data regarding the operation per component section of the construction machine from said information terminal (4) via information communication and stores the obtained data in said database (5A), computes, based on the data stored in said database (5A), future change in machine management cost of the construction machine and future change in machine value of the construction machine, as well as the timing at which the machine management cost and the machine value become substantially equal to each other, computes, when a particular part belonging to the component section is to be repaired or replaced before said computed timing, subsequent change in machine management cost of the construction machine and subsequent change in machine value of the construction machine resulting after the repair/replacement of said particular part, and outputs at least the subsequent change in machine management cost and the subsequent change in machine value after the repair/replacement along with the future change in machine management cost and the future change in machine value of the construction machine, as the basic information, to said second server (6) via information communication,
said second server (6) outputs, to said information terminal (4), the basic information received from said first server (5) directly or after processing or optionally selecting the basic information, and
said information terminal (4) displays the information received from said second server (6), as the service information or the sales information, in a predetermined form.

**30.** An information providing system for a construction machine according to Claim 28 or 29, wherein:

said server (5) or said first server (5) outputs at least the subsequent change in machine management cost and the subsequent change in machine value after the repair/replacement, as data capable of being graphically displayed in said information terminal (4) in the form of curves, to said second server (6) via information communication.

**31.** An information providing method for a construction machine, said method comprising the steps of:

obtaining data regarding machine operations of a plurality of construction machines (1) via information communication, and
outputting, via information communication, the obtained data regarding the machine operations of the plurality of construction machines (1), as basic information for services and/or sales made to a user or an owner of each construction machine (1), to a serviceman, a salesman or a supervisor supervising the serviceman and/or the salesman.

**32.** An information providing method for a construction machine, said method comprising the steps of:

obtaining, via information communication, data regarding machine operations of a plurality of construction machines (1) from an information terminal (4) provided on the side of a user or an owner of each construction machine (1), and
outputting, via information communication, the obtained data regarding the machine operations of the plurality of construction machines (1), as basic information for services and/or sales made to said user or said owner of the construction machine (1), to the side of a serviceman, a salesman or a supervisor supervising the serviceman and/or the salesman.

**33.** An information providing method for a construction machine according to Claim 31 or 32, wherein said method further comprises the steps of:

computing, based on the data obtained via information communication, the repair/replacement timing of a part belonging to the component section for each of the construction machines (1),
confirming parts having the repair/replacement timings substantially matched with each other among the plurality of construction machines (1),
deciding a planned selling price of the confirmed parts depending on a quantity thereof, and
outputting the planned selling price as the service information and/or the sales information via information communication.

**34.** An information providing method for a construction machine according to Claim 31 or 32, wherein said method further comprises the steps of:

computing, based on the data obtained via information communication, the repair/replacement timing of a part belonging to the component section for each of the construction machines (1),
confirming parts having the repair/replacement timings substantially matched with each other among the plurality of construction machines (1),
deciding, for the confirmed parts, a discount sales period prior to the repair/replacement timing thereof and a discount selling price during the discount sales period, and
outputting the discount sales period and the discount selling price as the service information and/or the sales information via information communication.

**35.** An information providing method for a construction machine according to Claim 31 or 32, wherein said method further comprises the steps of:

computing, based on the data obtained via information communication, future change in machine management cost of the construction machine and future change in machine value of the construction machine, as well as the timing at which the machine management cost and the machine value become substantially equal to each other,
computing, when a particular part belonging to the component section is to be repaired or replaced before said computed timing, subsequent change in machine management cost of the construction machine and subsequent change in machine value of the construction machine resulting after the repair/replacement of said particular part, and
outputting at least the subsequent change in machine management cost and the subsequent change in machine value after the repair/replacement, as the service information and/or the sales information, via information communication.

**36.** An information providing method for a construction machine according to Claim 31 or 32, wherein said method further comprises the steps of:

computing, based on the data obtained via information communication, future change in machine management cost of the construction machine and future change in machine value of the construction machine, as well as the timing at which the machine management cost and the machine value become substantially equal to each other,
computing, when a particular part belonging to the component section is to be repaired or replaced before said computed timing, subsequent change in machine management cost of the construction machine and subsequent change in machine value of the construction machine resulting after the repair/replacement of said particular part, and
outputting the subsequent change in machine management cost and the subsequent change in machine value after the repair/replacement along with the future change in machine management cost and the future change in machine value of the construction machine, as the service information and/or the sales information, via information communication.

FIG.1

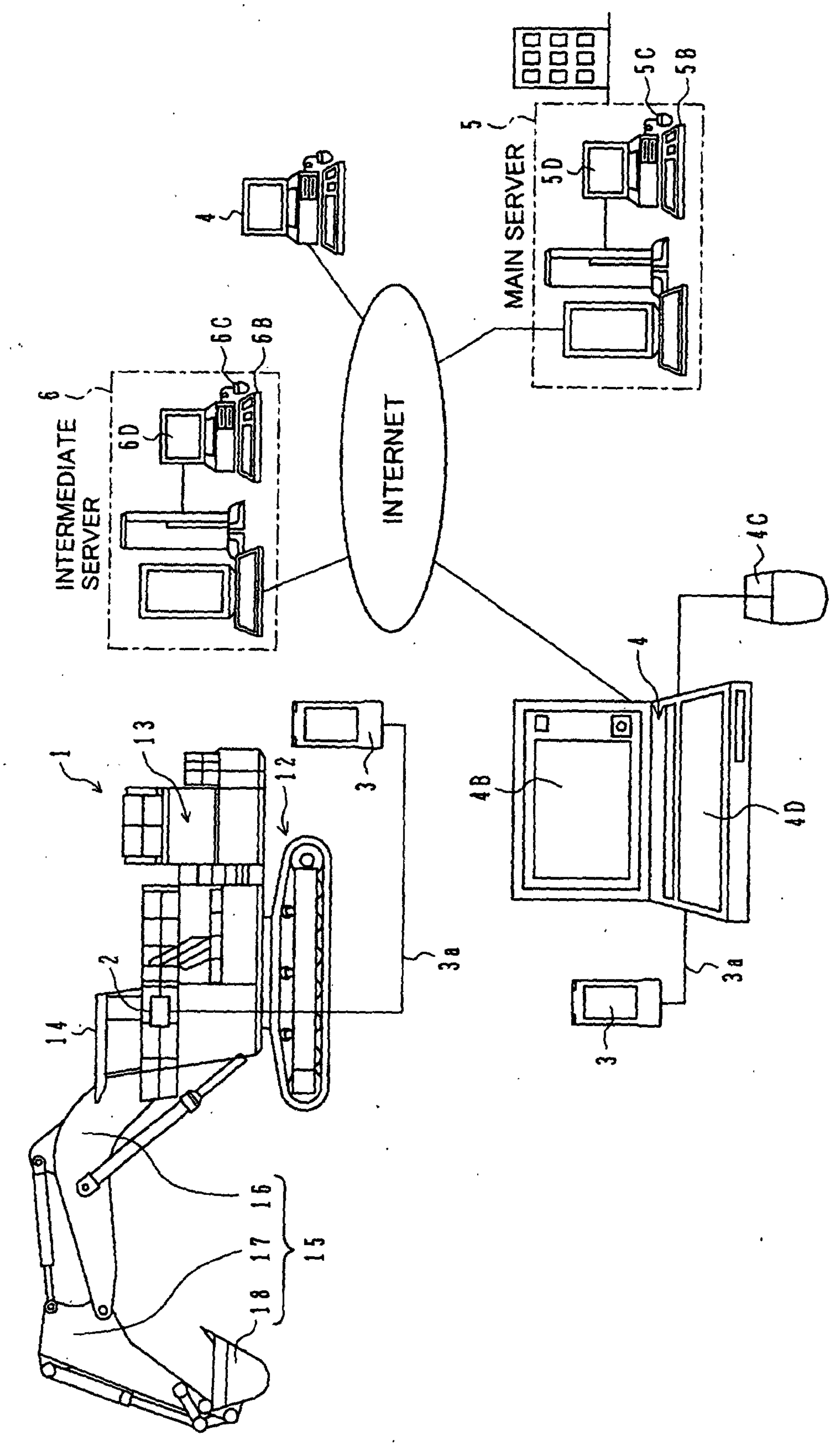
INTERMEDIATE SERVER
INTERNET
MAIN SERVER
1
2
3
3a
4
4B
4C
4D
5
5B
5C
5D
6
6B
6C
6D
12
13
14
15
16
17
18

FIG.2

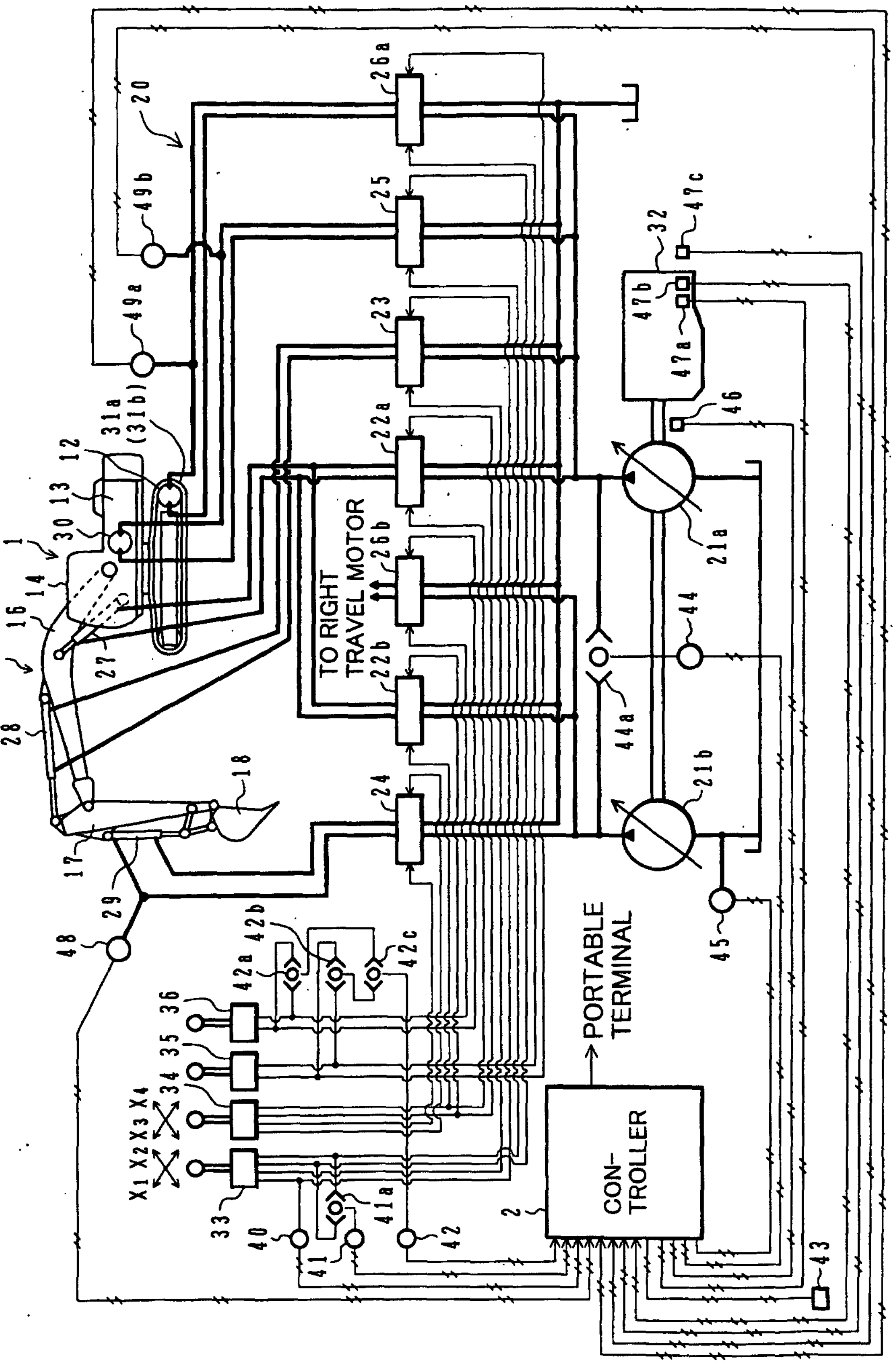
TO RIGHT TRAVEL MOTOR
PORTABLE TERMINAL
CON-TROLLER
X1 X2 X3 X4
1
2
12
13
14
15
16
17
18
20
21a
21b
22a
22b
23
24
25
26a
26b
27
28
29
30
31a (31b)
32
33
34
35
36
40
41
41a
42
42a
42b
42c
43
44
44a
45
46
47a
47b
47c
48
49a
49b

FIG.3

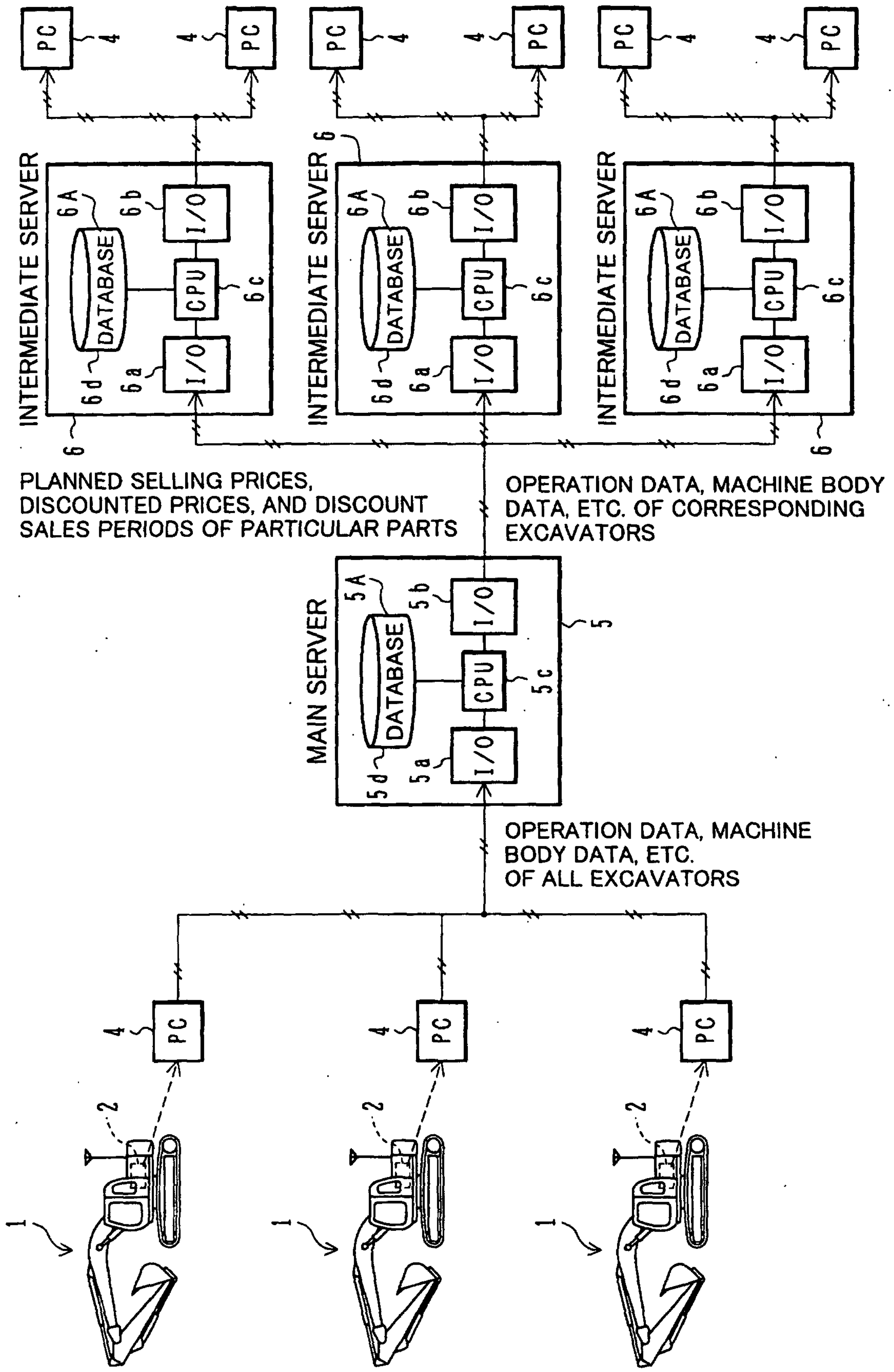
PC
INTERMEDIATE SERVER
DATABASE
CPU
I/O
MAIN SERVER
PLANNED SELLING PRICES, DISCOUNTED PRICES, AND DISCOUNT SALES PERIODS OF PARTICULAR PARTS
OPERATION DATA, MACHINE BODY DATA, ETC. OF CORRESPONDING EXCAVATORS
OPERATION DATA, MACHINE BODY DATA, ETC. OF ALL EXCAVATORS

FIG.4

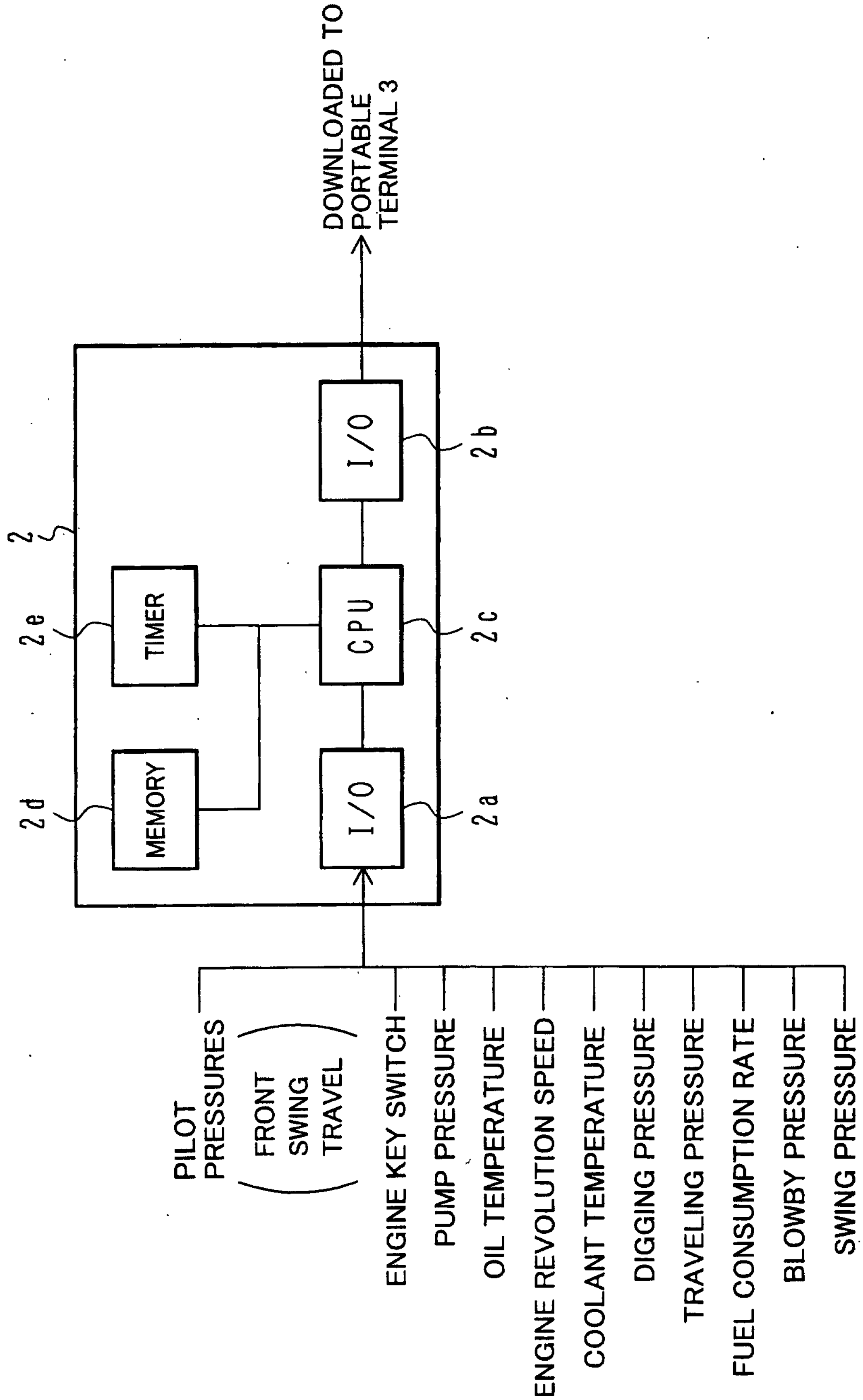
2
2d
2e
MEMORY
TIMER
I/O
CPU
I/O
2a
2c
2b
DOWNLOADED TO PORTABLE TERMINAL 3
PILOT PRESSURES
(FRONT SWING TRAVEL)
ENGINE KEY SWITCH
PUMP PRESSURE
OIL TEMPERATURE
ENGINE REVOLUTION SPEED
COOLANT TEMPERATURE
DIGGING PRESSURE
TRAVELING PRESSURE
FUEL CONSUMPTION RATE
BLOWBY PRESSURE
SWING PRESSURE

# FIG.5

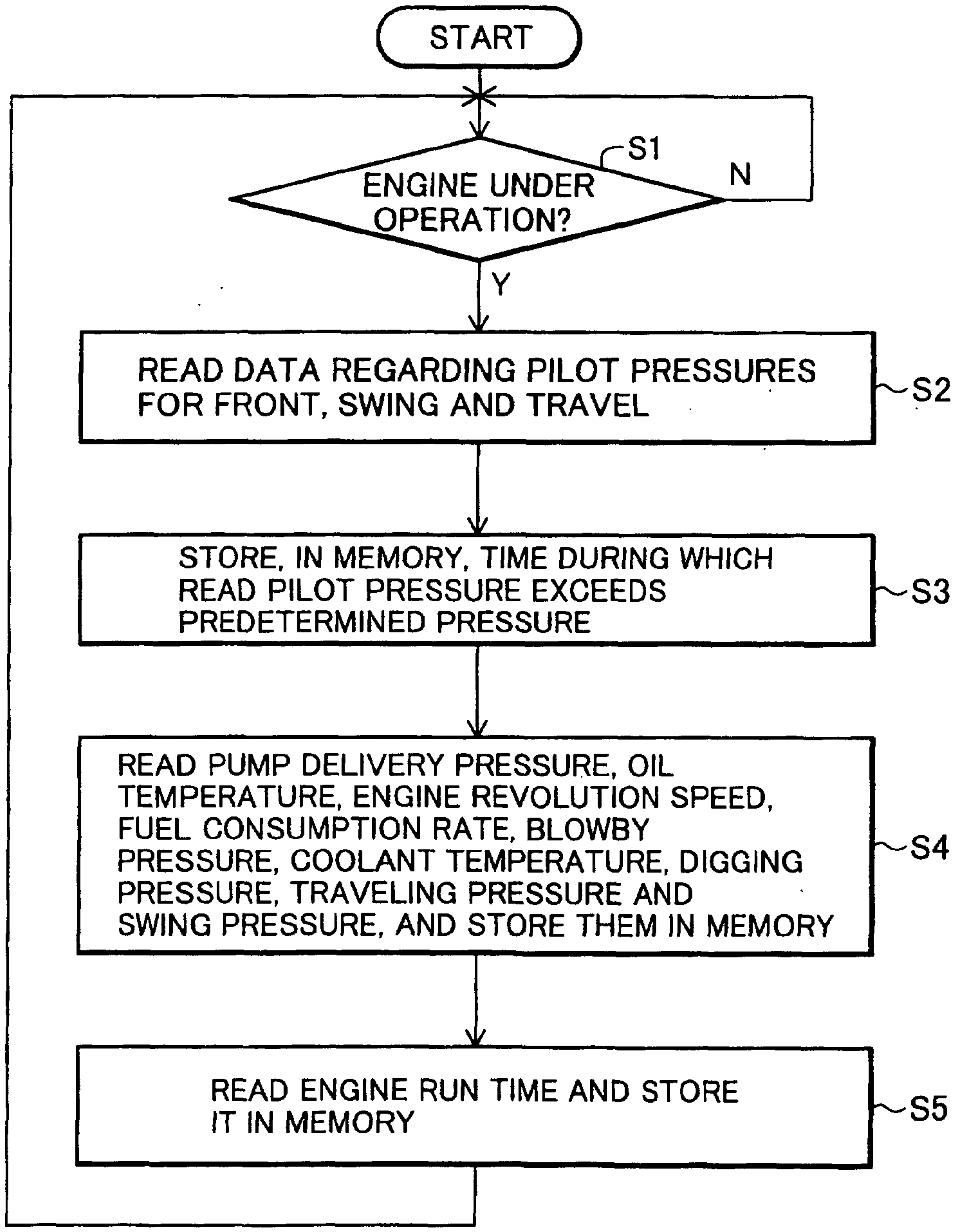
START
ENGINE UNDER OPERATION?
S1
N
Y
READ DATA REGARDING PILOT PRESSURES FOR FRONT, SWING AND TRAVEL
S2
STORE, IN MEMORY, TIME DURING WHICH READ PILOT PRESSURE EXCEEDS PREDETERMINED PRESSURE
S3
READ PUMP DELIVERY PRESSURE, OIL TEMPERATURE, ENGINE REVOLUTION SPEED, FUEL CONSUMPTION RATE, BLOWBY PRESSURE, COOLANT TEMPERATURE, DIGGING PRESSURE, TRAVELING PRESSURE AND SWING PRESSURE, AND STORE THEM IN MEMORY
S4
READ ENGINE RUN TIME AND STORE IT IN MEMORY
S5

# FIG.6

FILE STRUCTURE

FILER HEADER
- MACHINE MODEL CODE
- MACHINE NUMBER
- TIME LAG INFORMATION
- DOWNLOAD DATE AND TIME (UTC)

ACCUMULATED DATA
- ACCUMULATED ENGINE RUN TIME
- VARIOUS ACCUMULATED OPERATION TIMES
- VARIOUS ACCUMULATED FREQUENCY DISTRIBUTION
- ...

TIME UNIT DATA [1]
- TIME OF DAY
- ACCUMULATED ENGINE RUN TIME
- ENGINE RUN TIME
- VARIOUS OPERATION TIMES
- VARIOUS FREQUENCY DISTRIBUTION
- AVERAGE BLOWBY PRESSURE
- AVERAGE FUEL CONSUMPTION RATE
- ...

TIME UNIT DATA [2]
- TIME OF DAY
- ACCUMULATED ENGINE RUN TIME
- ENGINE RUN TIME
- VARIOUS OPERATION TIMES
- VARIOUS FREQUENCY DISTRIBUTION
- AVERAGE BLOWBY PRESSURE
- AVERAGE FUEL CONSUMPTION RATE
- ...

⋮

TIME UNIT DATA [n]
- TIME OF DAY
- ACCUMULATED ENGINE RUN TIME
- ENGINE RUN TIME
- VARIOUS OPERATION TIMES
- VARIOUS FREQUENCY DISTRIBUTION
- AVERAGE BLOWBY PRESSURE
- AVERAGE FUEL CONSUMPTION RATE
- ...

EVENT/ALARM OR OTHER DATA

| | | |
|---|---|---|
| DATE/TIME | ACCUMULATED ENGINE RUN TIME | EVENT NUMBER |
| DATE/TIME | ACCUMULATED ENGINE RUN TIME | EVENT NUMBER |
| ... | | |

FIG.7

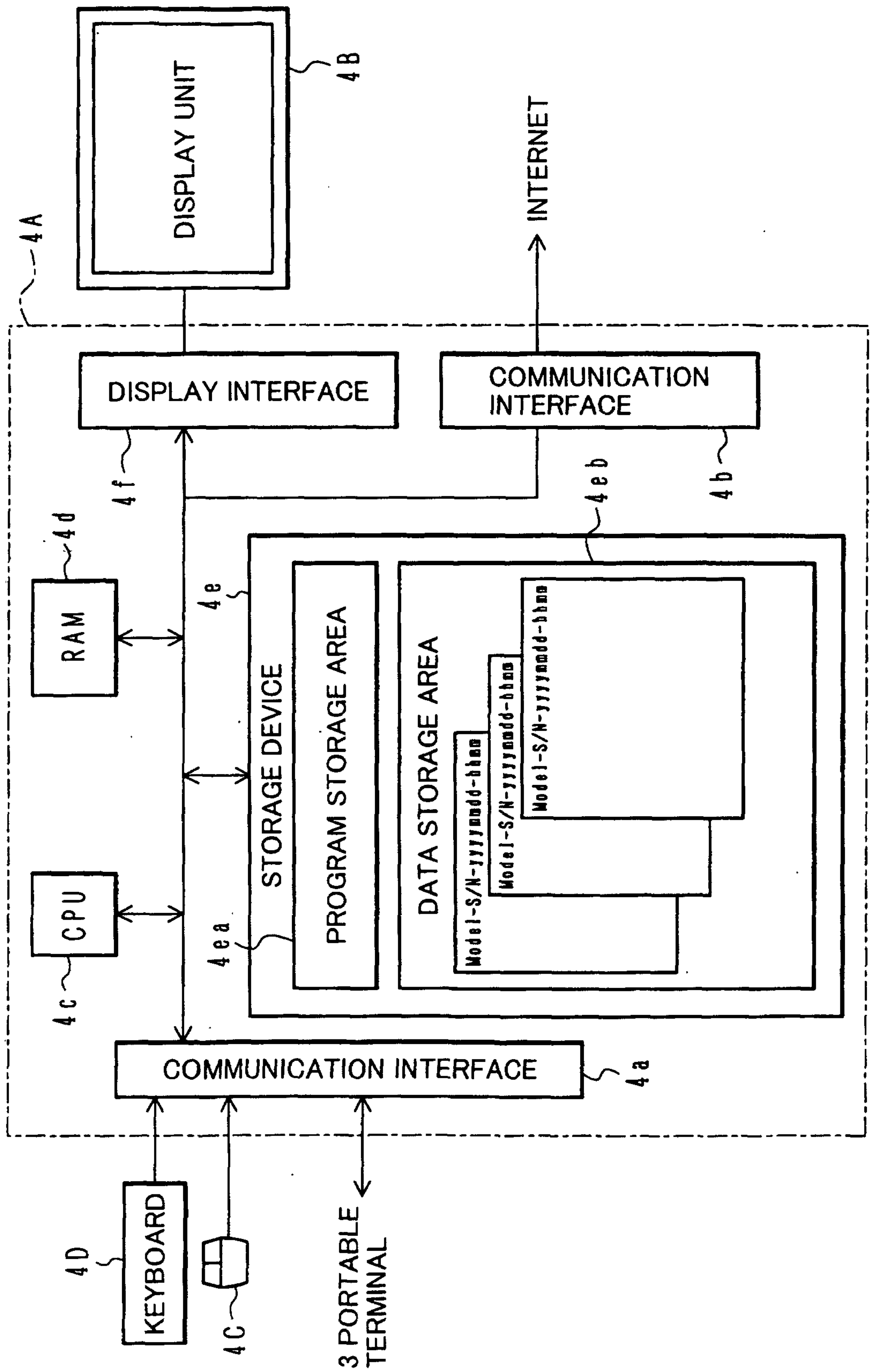
DISPLAY UNIT
4B
4A
INTERNET
DISPLAY INTERFACE
COMMUNICATION INTERFACE
4f
4b
4eb
4d
RAM
4e
STORAGE DEVICE
PROGRAM STORAGE AREA
DATA STORAGE AREA
Model-S/N-yyyymmdd-hhmm
Model-S/N-yyyymmdd-hhmm
Model-S/N-yyyymmdd-hhmm
CPU
4ea
4c
COMMUNICATION INTERFACE
4a
4D
KEYBOARD
4C
3 PORTABLE TERMINAL

FIG.8

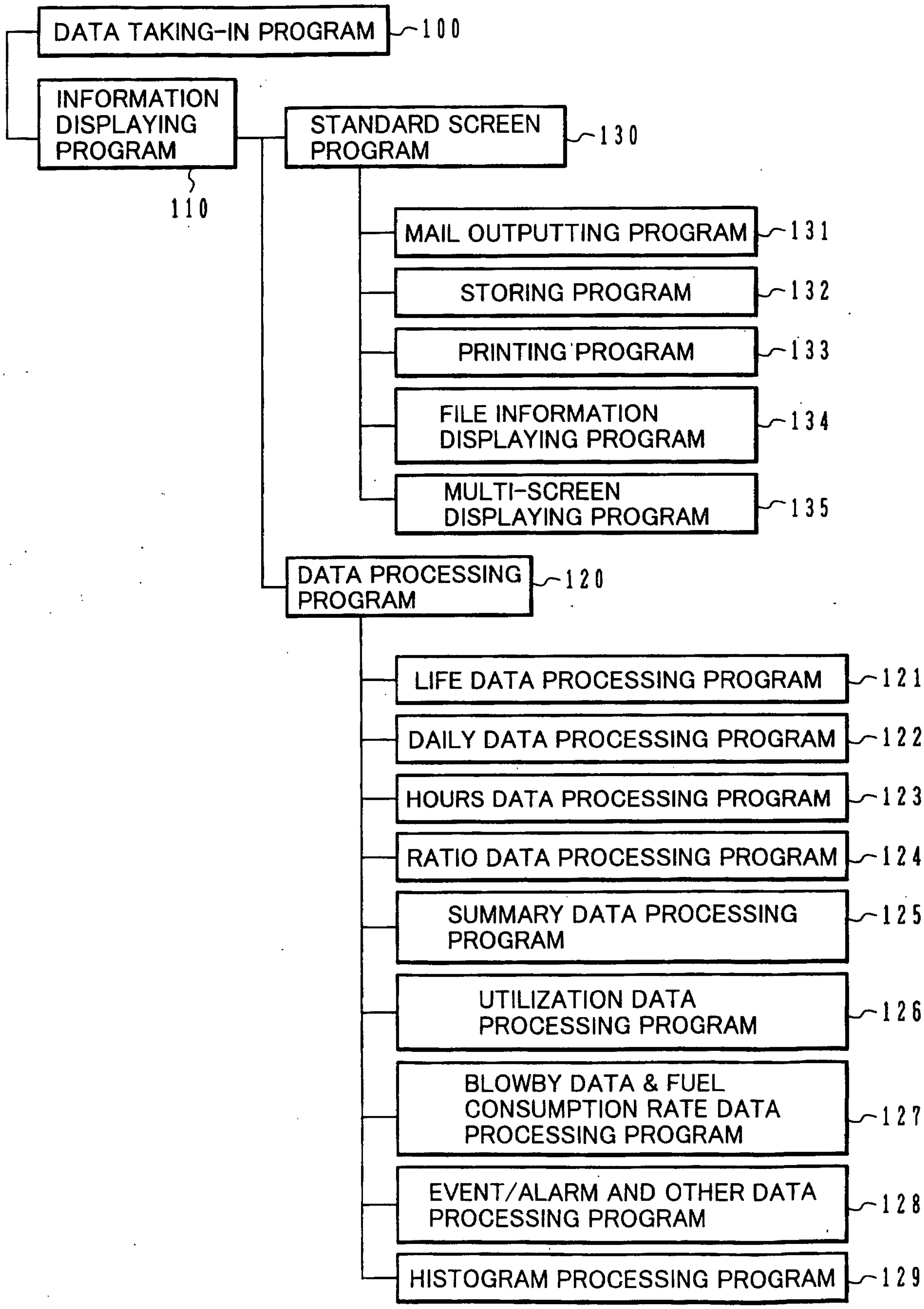
DATA TAKING-IN PROGRAM
100
INFORMATION DISPLAYING PROGRAM
110
STANDARD SCREEN PROGRAM
130
MAIL OUTPUTTING PROGRAM
131
STORING PROGRAM
132
PRINTING PROGRAM
133
FILE INFORMATION DISPLAYING PROGRAM
134
MULTI-SCREEN DISPLAYING PROGRAM
135
DATA PROCESSING PROGRAM
120
LIFE DATA PROCESSING PROGRAM
121
DAILY DATA PROCESSING PROGRAM
122
HOURS DATA PROCESSING PROGRAM
123
RATIO DATA PROCESSING PROGRAM
124
SUMMARY DATA PROCESSING PROGRAM
125
UTILIZATION DATA PROCESSING PROGRAM
126
BLOWBY DATA & FUEL CONSUMPTION RATE DATA PROCESSING PROGRAM
127
EVENT/ALARM AND OTHER DATA PROCESSING PROGRAM
128
HISTOGRAM PROCESSING PROGRAM
129

*FIG.9*

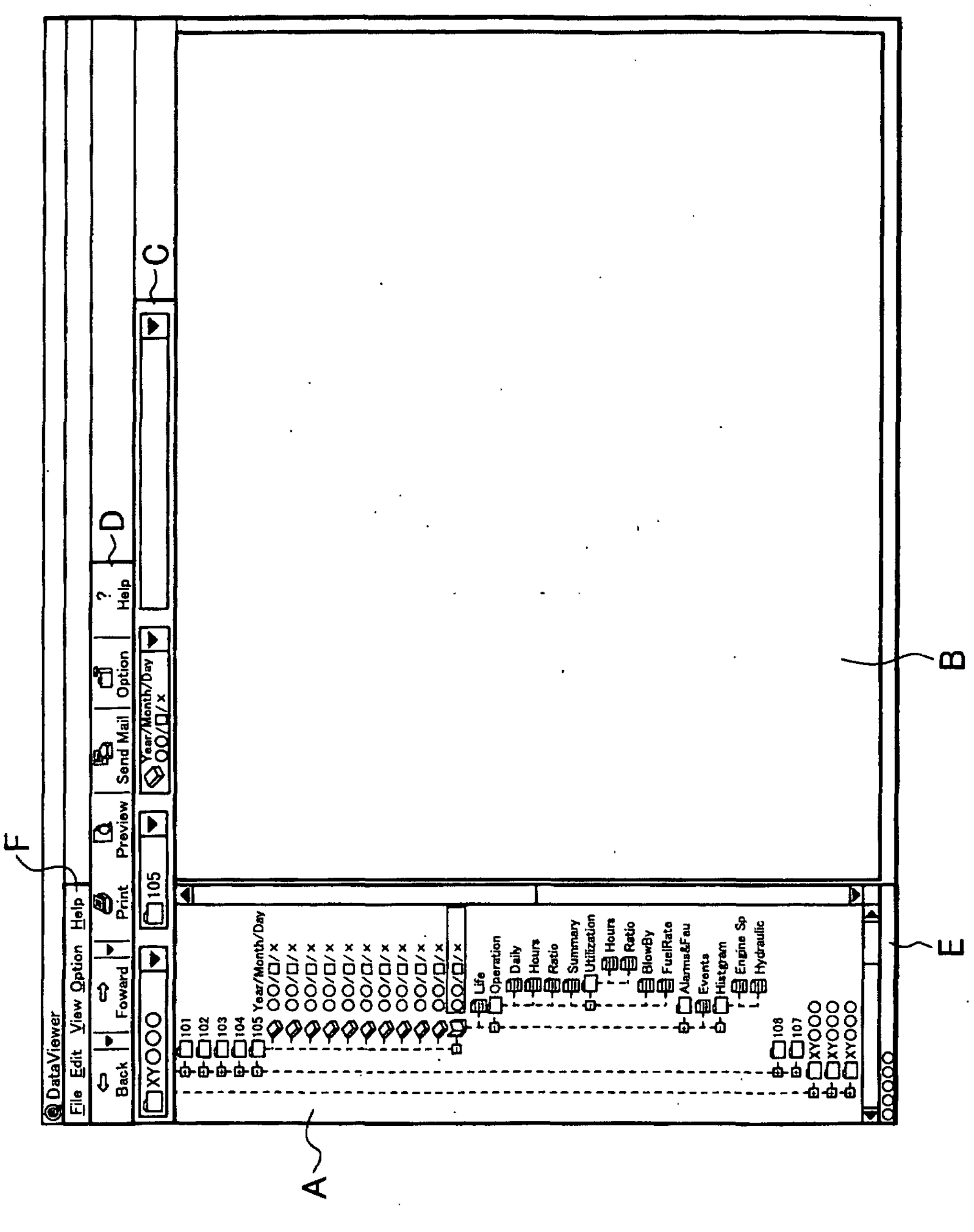
DataViewer
File Edit View Option Help
Back
Foward
Print
Preview
Send Mail
Option
Help
XYOOO
105
Year/Month/Day
101
102
103
104
105
Life
Operation
Daily
Hours
Ratio
Summary
Utilization
BlowBy
FuelRate
Alarms&Fau
Events
Histgram
Engine Sp
Hydraulic
108
107
A
B
C
D
E
F

FIG.10

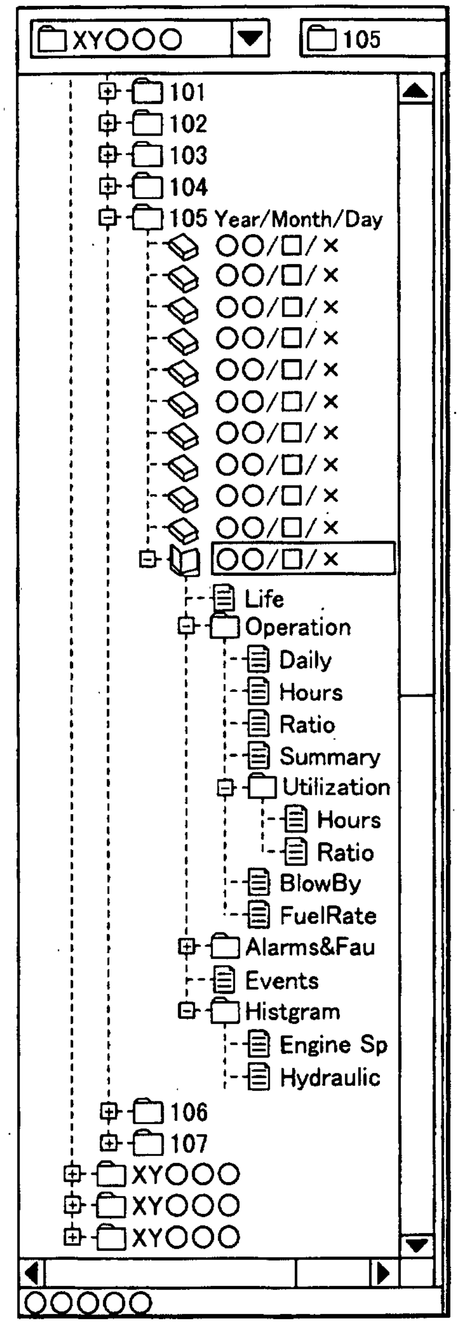
XYOOO
105
101
102
103
104
105 Year/Month/Day
OO/□/×
OO/□/×
OO/□/×
OO/□/×
OO/□/×
OO/□/×
OO/□/×
OO/□/×
OO/□/×
OO/□/×
OO/□/×
Life
Operation
Daily
Hours
Ratio
Summary
Utilization
Hours
Ratio
BlowBy
FuelRate
Alarms&Fau
Events
Histgram
Engine Sp
Hydraulic
106
107
XYOOO
XYOOO
XYOOO
OOOOO

FIG.11

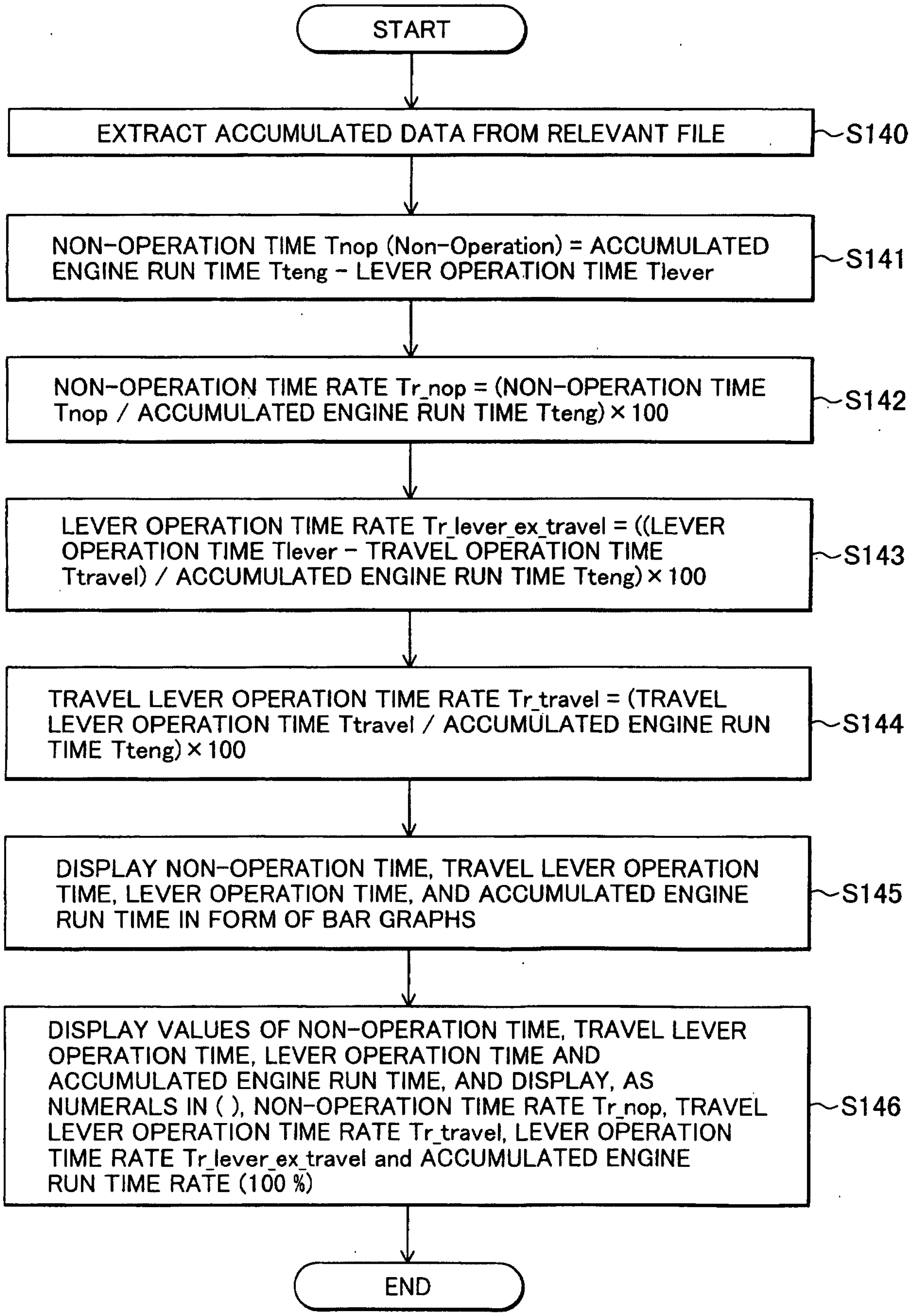
START
EXTRACT ACCUMULATED DATA FROM RELEVANT FILE
S140
NON-OPERATION TIME Tnop (Non-Operation) = ACCUMULATED ENGINE RUN TIME Tteng - LEVER OPERATION TIME Tlever
S141
NON-OPERATION TIME RATE Tr_nop = (NON-OPERATION TIME Tnop / ACCUMULATED ENGINE RUN TIME Tteng) × 100
S142
LEVER OPERATION TIME RATE Tr_lever_ex_travel = ((LEVER OPERATION TIME Tlever - TRAVEL OPERATION TIME Ttravel) / ACCUMULATED ENGINE RUN TIME Tteng) × 100
S143
TRAVEL LEVER OPERATION TIME RATE Tr_travel = (TRAVEL LEVER OPERATION TIME Ttravel / ACCUMULATED ENGINE RUN TIME Tteng) × 100
S144
DISPLAY NON-OPERATION TIME, TRAVEL LEVER OPERATION TIME, LEVER OPERATION TIME, AND ACCUMULATED ENGINE RUN TIME IN FORM OF BAR GRAPHS
S145
DISPLAY VALUES OF NON-OPERATION TIME, TRAVEL LEVER OPERATION TIME, LEVER OPERATION TIME AND ACCUMULATED ENGINE RUN TIME, AND DISPLAY, AS NUMERALS IN ( ), NON-OPERATION TIME RATE Tr_nop, TRAVEL LEVER OPERATION TIME RATE Tr_travel, LEVER OPERATION TIME RATE Tr_lever_ex_travel and ACCUMULATED ENGINE RUN TIME RATE (100 %)
S146
END

FIG.12

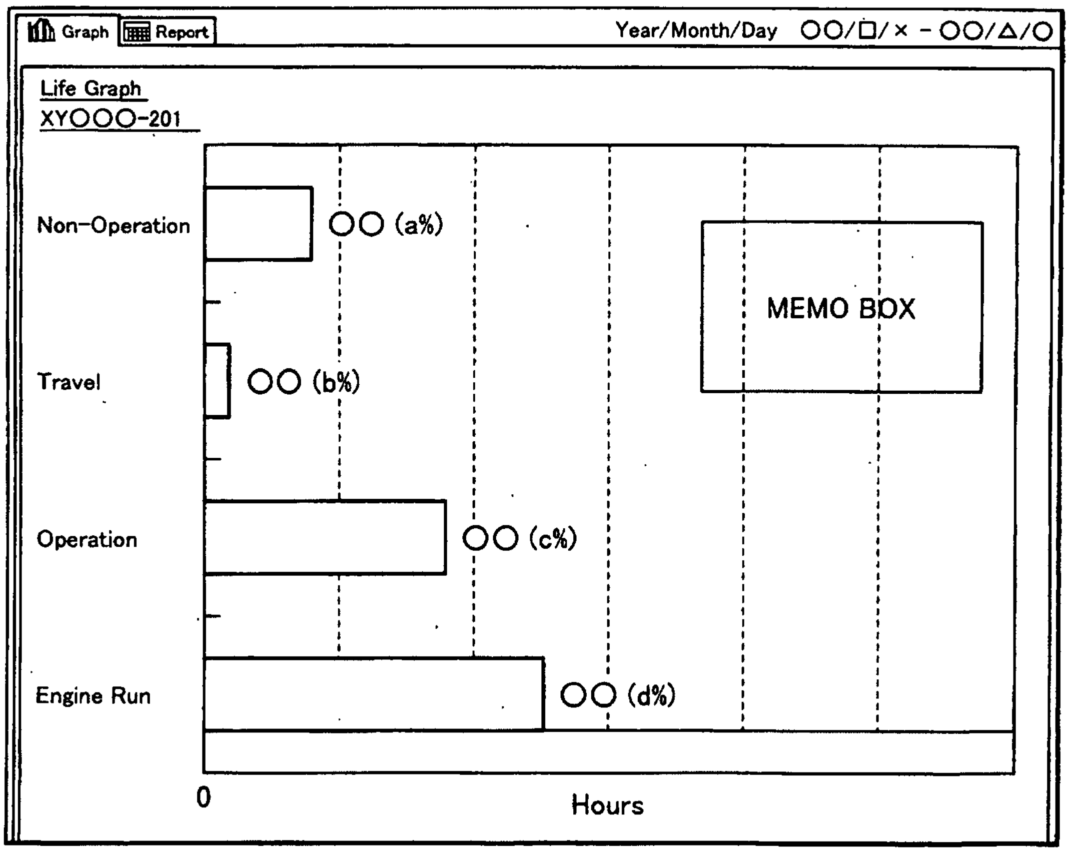
Graph
Report
Year/Month/Day ○○/□/× - ○○/△/○
Life Graph
XY○○○-201
Non-Operation
○○ (a%)
Travel
○○ (b%)
Operation
○○ (c%)
Engine Run
○○ (d%)
MEMO BOX
0
Hours

# FIG.13

Graph | Report    Year/Month/Day ○○/□/× - ○○/△/○

| Items | Values | Units | |
|---|---|---|---|
| Non-Operation | XX | Hours | |
| Travel | XX | Hours | |
| Operation | XX | Hours | |
| Engine Run | XX | Hours | |
| Engine Speed ... | XX | Hours | |
| Engine Speed ... | XX | Hours | |
| Hyd. Oil Temp ... | XX | Hours | |
| Hyd. Oil Temp ... | XX | Hours | MEMO BOX |
| Events Counts | | | |
| Alternator Ch... | XX | Times | |
| Coolant Level... | XX | Times | |
| Coolant Tem... | XX | Times | |
| Hyd. Oil Leve... | XX | Times | |
| Hyd. Oil Tem... | XX | Times | |
| Engine Oil Pr... | XX | Times | |
| Pump Trans. ... | XX | Times | |
| Emergency S... | XX | Times | |
| Buzzer(Stop) | XX | Times | |
| Fuel Level(Lo... | XX | Times | |
| Contaminatio... | XX | Times | |
| Air Cleaner R... | XX | Times | |
| Auto-Lubrica... | XX | Times | |
| Engine Contr... | XX | Times | |
| Key Seitch(O... | XX | Times | |
| Engine(On) | XX | Times | |
| Exhaust Tem... | XX | Times | |
| Engine Warni... | XX | Times | |
| RTC Data Se... | XX | Times | |
| Option unit d... | XX | Times | |
| Change Optio... | XX | Times | |
| System Error | XX | Times | |
| Sensor Fault | XX | Times | |
| System Com... | XX | Times | |

FIG.14

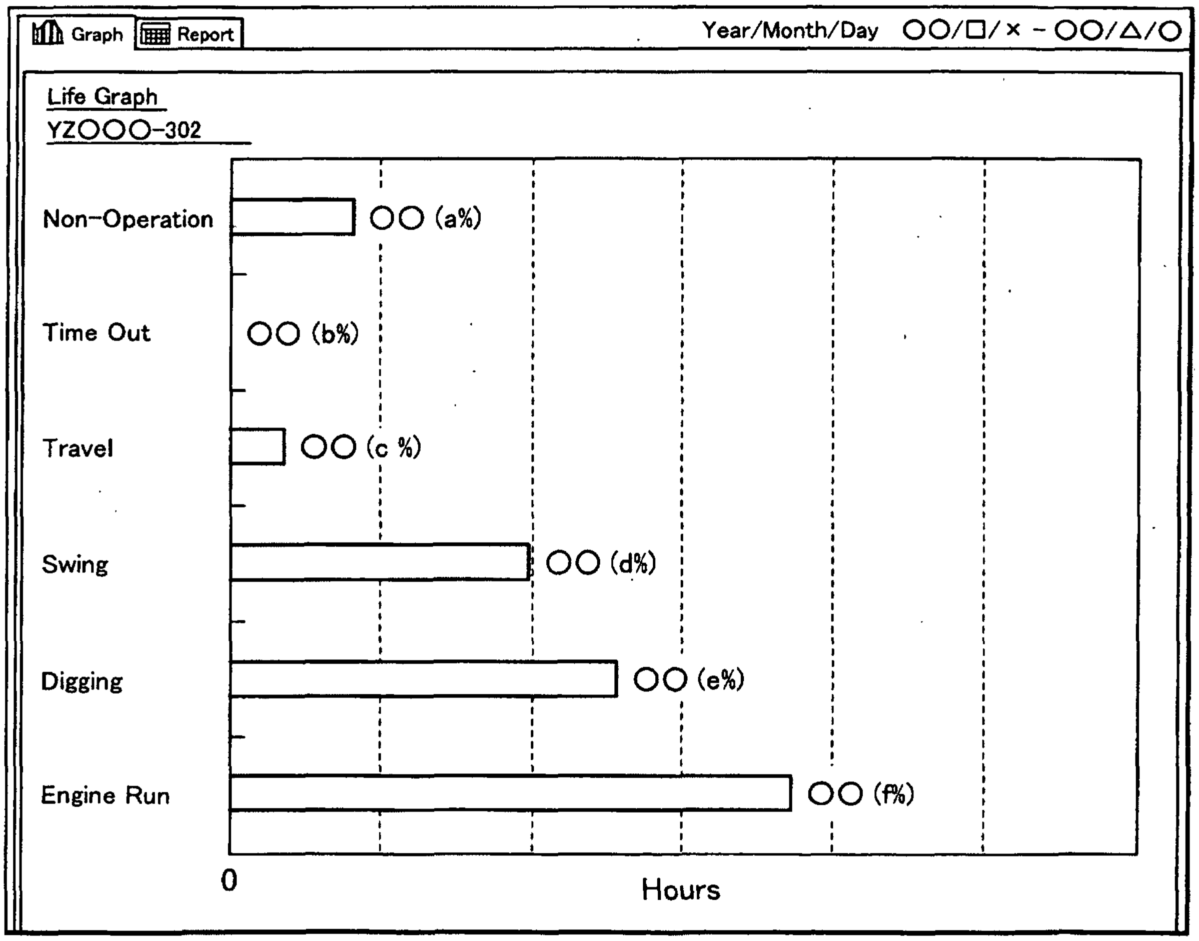
Graph
Report
Year/Month/Day ○○/□/× - ○○/△/○
Life Graph
YZ○○○-302
Non-Operation
○○ (a%)
Time Out
○○ (b%)
Travel
○○ (c %)
Swing
○○ (d%)
Digging
○○ (e%)
Engine Run
○○ (f%)
0
Hours

# FIG.15

Graph | Report    Year/Month/Day OO/□/× - OO/△/O

| Items | Values | Units |
|---|---|---|
| Non-Operation | XX | Hours |
| Time Out | XX | Hours |
| ML | XX | Hours |
| AUX | XX | Hours |
| Breaker | XX | Hours |
| Travel | XX | Hours |
| Swing | XX | Hours |
| Digging | XX | Hours |
| Engine Run | XX | Hours |
| Events Started | XX | Times |
| Events Counts | | |
| POWER | XX | Times |
| KEY SW | XX | Times |
| ENGINE | XX | Times |
| ENGINE STALL | XX | Times |
| MAIL SW | XX | Times |
| ENGINE OIL LEVEL WARNING | XX | Times |
| COOLANT LEVEL WARNING | XX | Times |
| HYDRAULIC FILTER WARNING | XX | Times |
| OVERHRAT WARNING | XX | Times |
| ENGINE OIL PRESSUER WAR... | XX | Times |
| AIR FILTER RESTRICTION WA... | XX | Times |
| ALTERNATOR WARNING | XX | Times |
| MC COMM. ERROR | XX | Times |
| MCX COMM. ERROR | XX | Times |
| MONITOR COMM. ERROR | XX | Times |
| EEPROM | XX | Times |
| RAM | XX | Times |
| A/D Converter | XX | Times |
| Sensor Voltage | XX | Times |
| Engine RPM Sensor | XX | Times |
| EC Sensor | XX | Times |
| Engine Contorol Dial | XX | Times |
| Pump1 Del. Press. Sensor | XX | Times |
| Pump2 Del. Press. Sensor | XX | Times |
| Pump1 Cont. Press. Sensor | XX | Times |
| Pump2 Cont. Press. Sensor | XX | Times |
| Swing Pilot Press. Sensor | XX | Times |
| Boom-up Pilot Press. Sensor | XX | Times |
| Arm-in Pilot Press. Sensor | XX | Times |

FIG.16

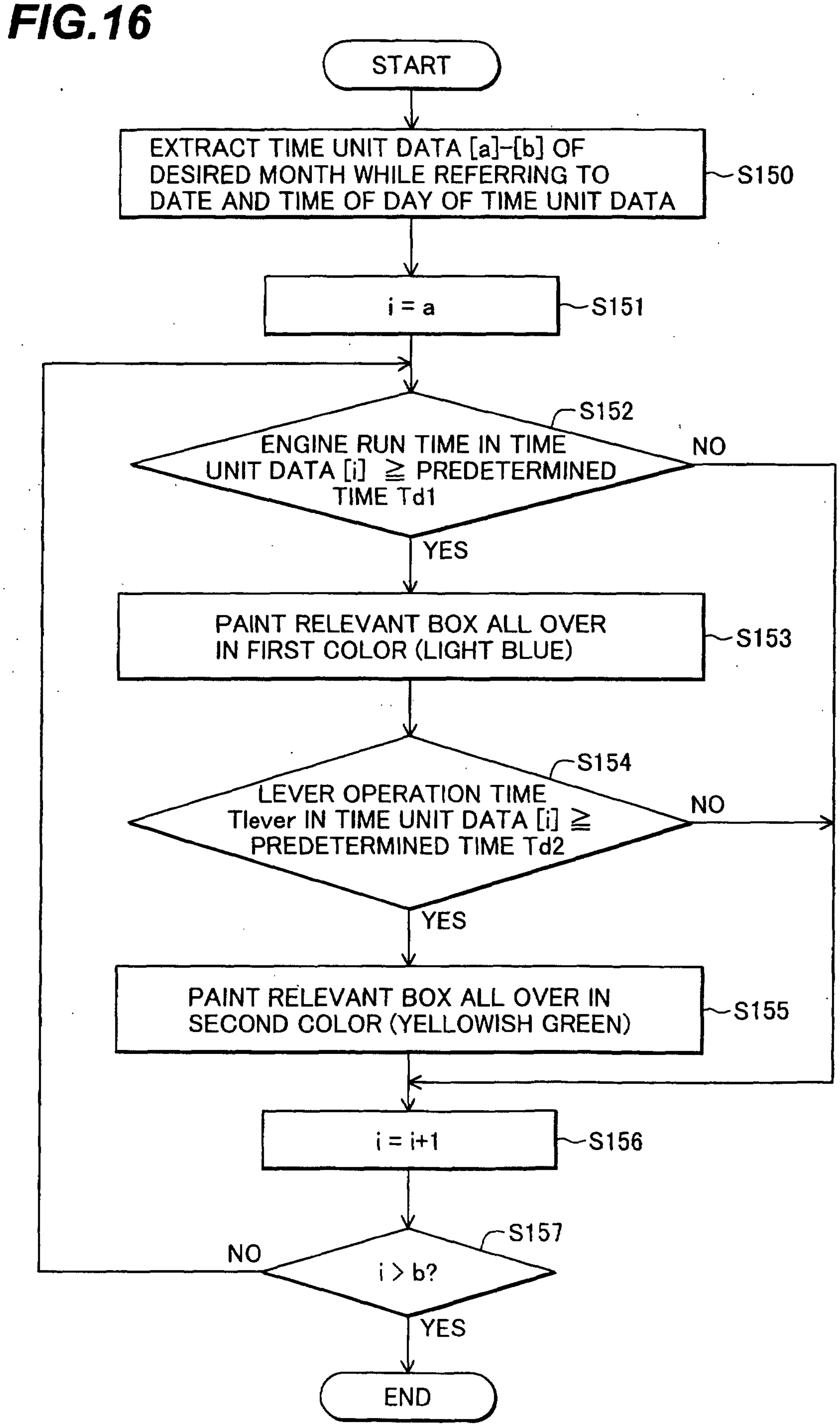
START
EXTRACT TIME UNIT DATA [a]-[b] OF DESIRED MONTH WHILE REFERRING TO DATE AND TIME OF DAY OF TIME UNIT DATA
S150
i = a
S151
ENGINE RUN TIME IN TIME UNIT DATA [i] ≧ PREDETERMINED TIME Td1
S152
NO
YES
PAINT RELEVANT BOX ALL OVER IN FIRST COLOR (LIGHT BLUE)
S153
LEVER OPERATION TIME Tlever IN TIME UNIT DATA [i] ≧ PREDETERMINED TIME Td2
S154
NO
YES
PAINT RELEVANT BOX ALL OVER IN SECOND COLOR (YELLOWISH GREEN)
S155
i = i+1
S156
NO
i > b?
S157
YES
END

FIG.17

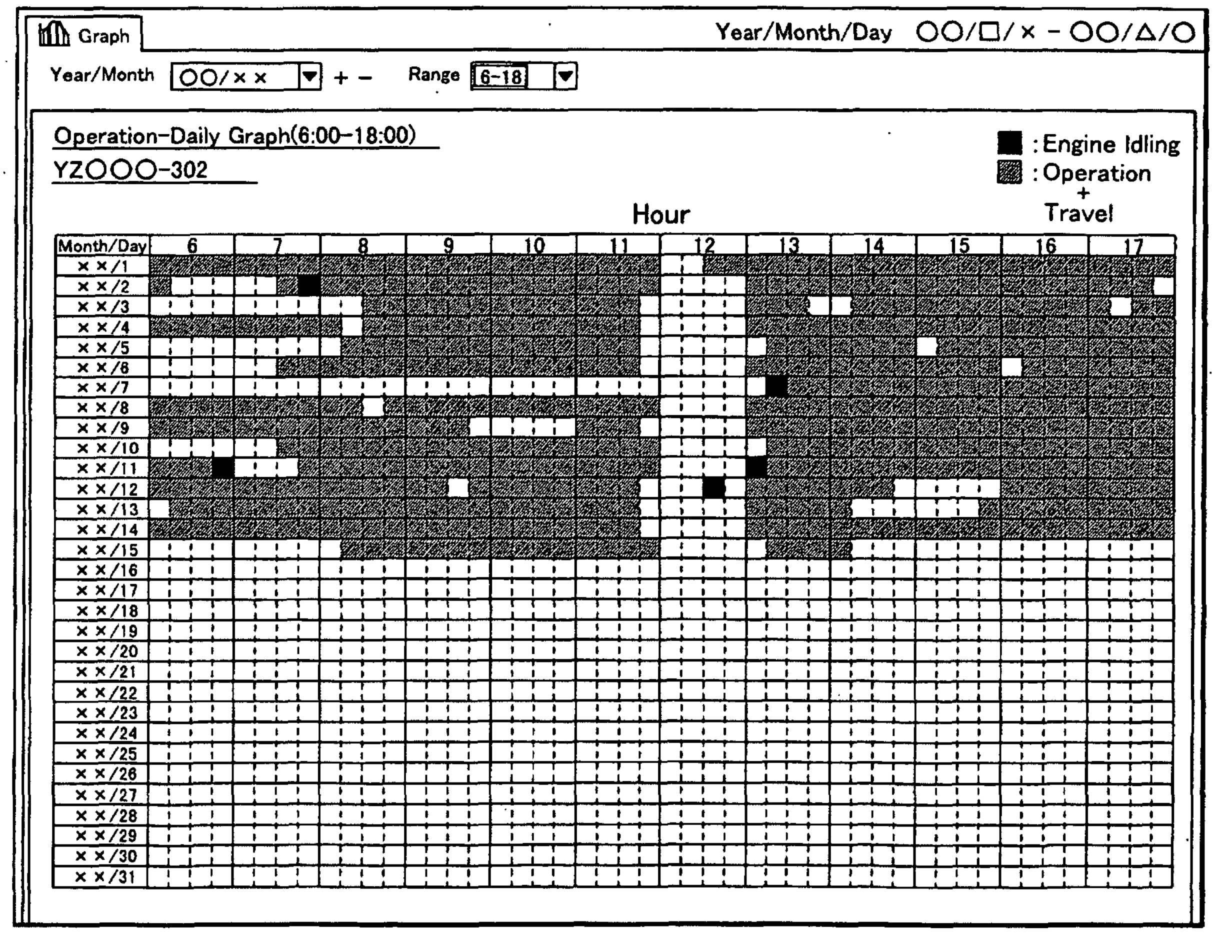
Graph
Year/Month/Day ○○/□/× - ○○/△/○
Year/Month ○○/×× + -
Range 6-18
Operation-Daily Graph(6:00-18:00)
YZ○○○-302
■ : Engine Idling
▨ : Operation + Travel
Hour
Month/Day
6 7 8 9 10 11 12 13 14 15 16 17
××/1
××/2
××/3
××/4
××/5
××/6
××/7
××/8
××/9
××/10
××/11
××/12
××/13
××/14
××/15
××/16
××/17
××/18
××/19
××/20
××/21
××/22
××/23
××/24
××/25
××/26
××/27
××/28
××/29
××/30
××/31

# FIG.18

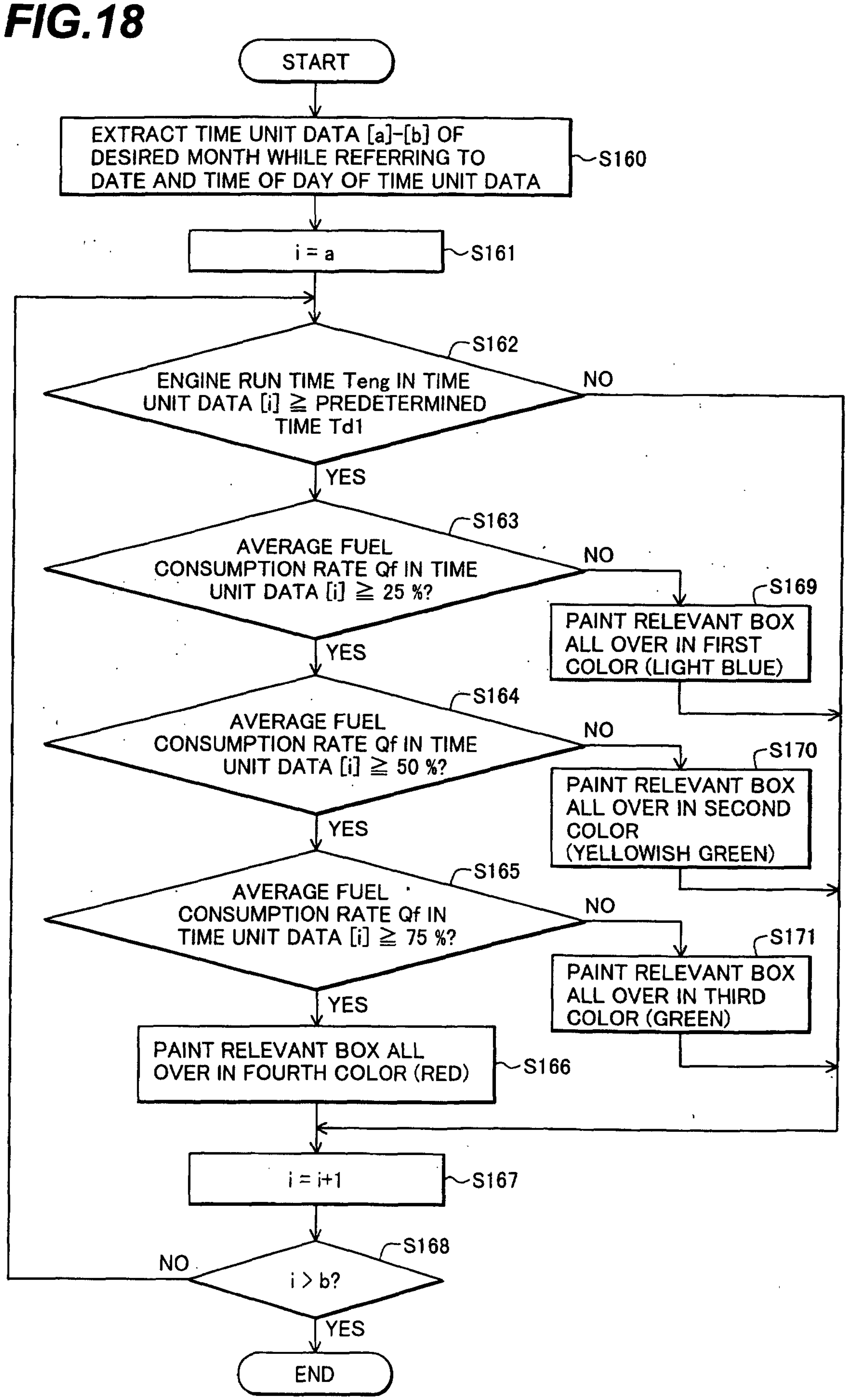
START
EXTRACT TIME UNIT DATA [a]-[b] OF DESIRED MONTH WHILE REFERRING TO DATE AND TIME OF DAY OF TIME UNIT DATA
S160
i = a
S161
ENGINE RUN TIME Teng IN TIME UNIT DATA [i] ≧ PREDETERMINED TIME Td1
S162
NO
YES
AVERAGE FUEL CONSUMPTION RATE Qf IN TIME UNIT DATA [i] ≧ 25 %?
S163
NO
PAINT RELEVANT BOX ALL OVER IN FIRST COLOR (LIGHT BLUE)
S169
YES
AVERAGE FUEL CONSUMPTION RATE Qf IN TIME UNIT DATA [i] ≧ 50 %?
S164
NO
PAINT RELEVANT BOX ALL OVER IN SECOND COLOR (YELLOWISH GREEN)
S170
YES
AVERAGE FUEL CONSUMPTION RATE Qf IN TIME UNIT DATA [i] ≧ 75 %?
S165
NO
PAINT RELEVANT BOX ALL OVER IN THIRD COLOR (GREEN)
S171
YES
PAINT RELEVANT BOX ALL OVER IN FOURTH COLOR (RED)
S166
i = i+1
S167
i > b?
S168
NO
YES
END

*FIG.19*

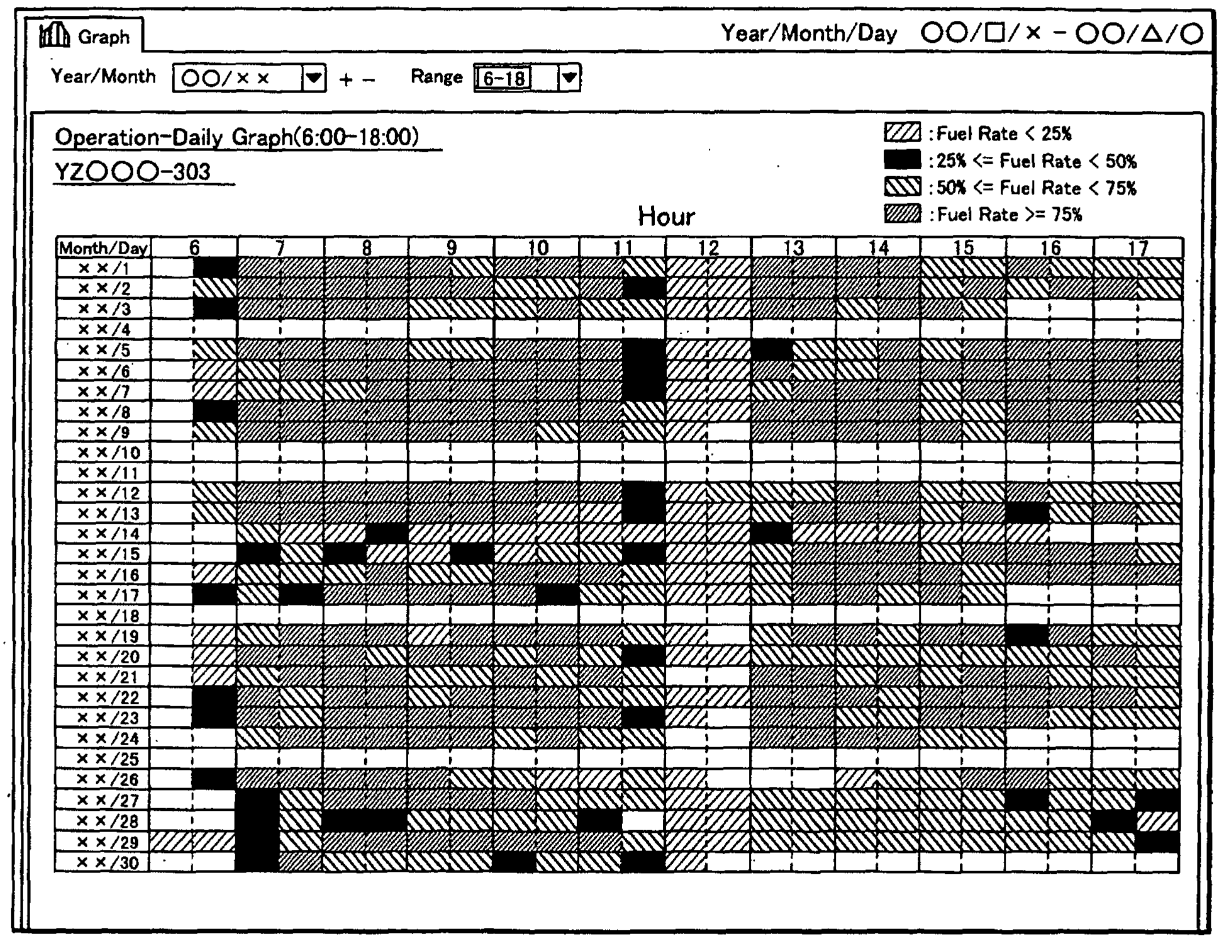
Graph
Year/Month/Day ○○/□/× - ○○/△/○
Year/Month ○○/××
+ -
Range 6-18
Operation-Daily Graph(6:00-18:00)
YZ○○○-303
: Fuel Rate < 25%
: 25% <= Fuel Rate < 50%
: 50% <= Fuel Rate < 75%
: Fuel Rate >= 75%
Hour
Month/Day
6
7
8
9
10
11
12
13
14
15
16
17
××/1
××/2
××/3
××/4
××/5
××/6
××/7
××/8
××/9
××/10
××/11
××/12
××/13
××/14
××/15
××/16
××/17
××/18
××/19
××/20
××/21
××/22
××/23
××/24
××/25
××/26
××/27
××/28
××/29
××/30

FIG.20

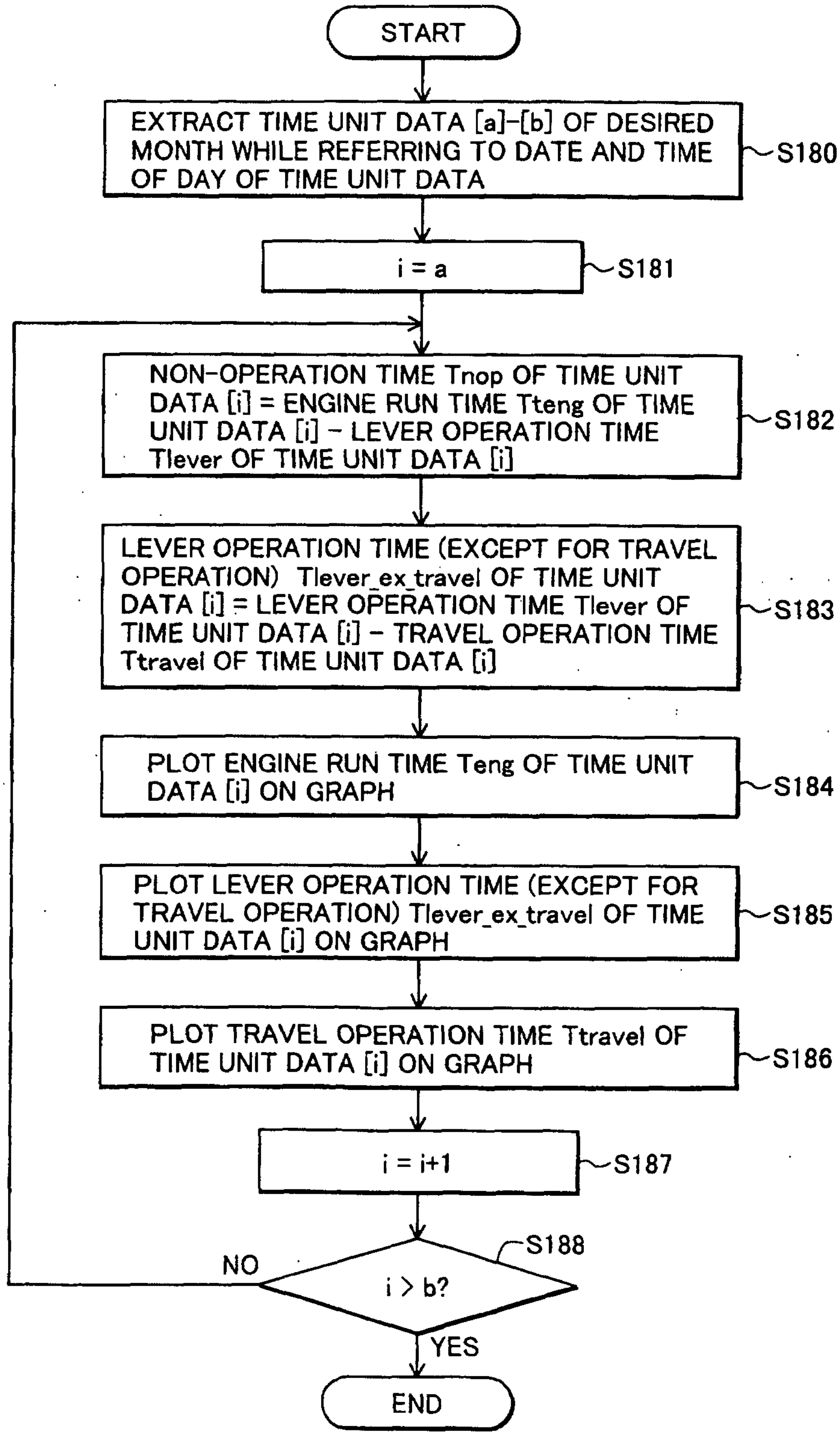
START
EXTRACT TIME UNIT DATA [a]-[b] OF DESIRED MONTH WHILE REFERRING TO DATE AND TIME OF DAY OF TIME UNIT DATA
S180
i = a
S181
NON-OPERATION TIME Tnop OF TIME UNIT DATA [i] = ENGINE RUN TIME Tteng OF TIME UNIT DATA [i] - LEVER OPERATION TIME Tlever OF TIME UNIT DATA [i]
S182
LEVER OPERATION TIME (EXCEPT FOR TRAVEL OPERATION) Tlever_ex_travel OF TIME UNIT DATA [i] = LEVER OPERATION TIME Tlever OF TIME UNIT DATA [i] - TRAVEL OPERATION TIME Ttravel OF TIME UNIT DATA [i]
S183
PLOT ENGINE RUN TIME Teng OF TIME UNIT DATA [i] ON GRAPH
S184
PLOT LEVER OPERATION TIME (EXCEPT FOR TRAVEL OPERATION) Tlever_ex_travel OF TIME UNIT DATA [i] ON GRAPH
S185
PLOT TRAVEL OPERATION TIME Ttravel OF TIME UNIT DATA [i] ON GRAPH
S186
i = i+1
S187
S188
NO
i > b?
YES
END

FIG.21

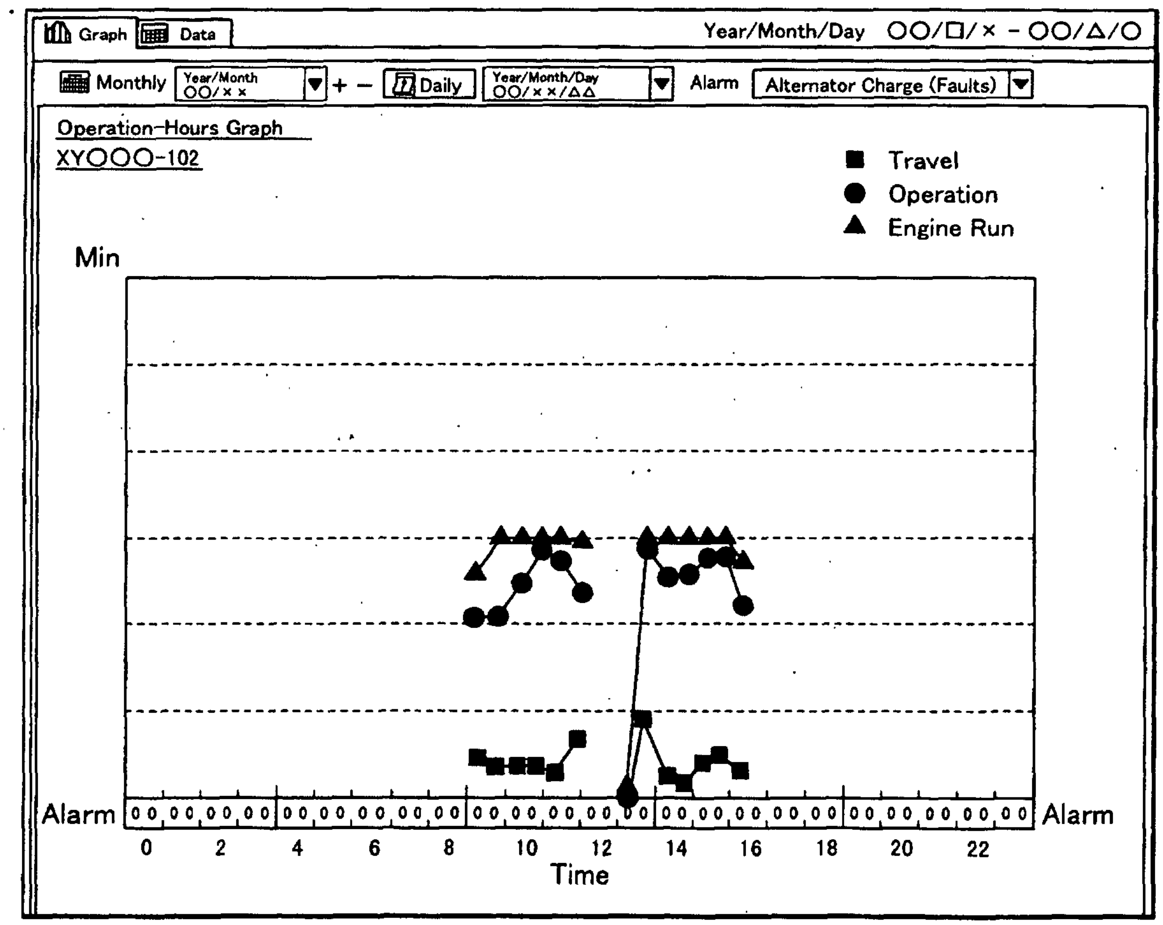
Graph
Data
Year/Month/Day OO/□/× - OO/△/O
Monthly
Year/Month OO/××
+ −
Daily
Year/Month/Day OO/××/△△
Alarm
Alternator Charge (Faults)
Operation-Hours Graph
XYOOO-102
Travel
Operation
Engine Run
Min
Alarm
Alarm
0
2
4
6
8
10
12
14
16
18
20
22
Time

*FIG.22*

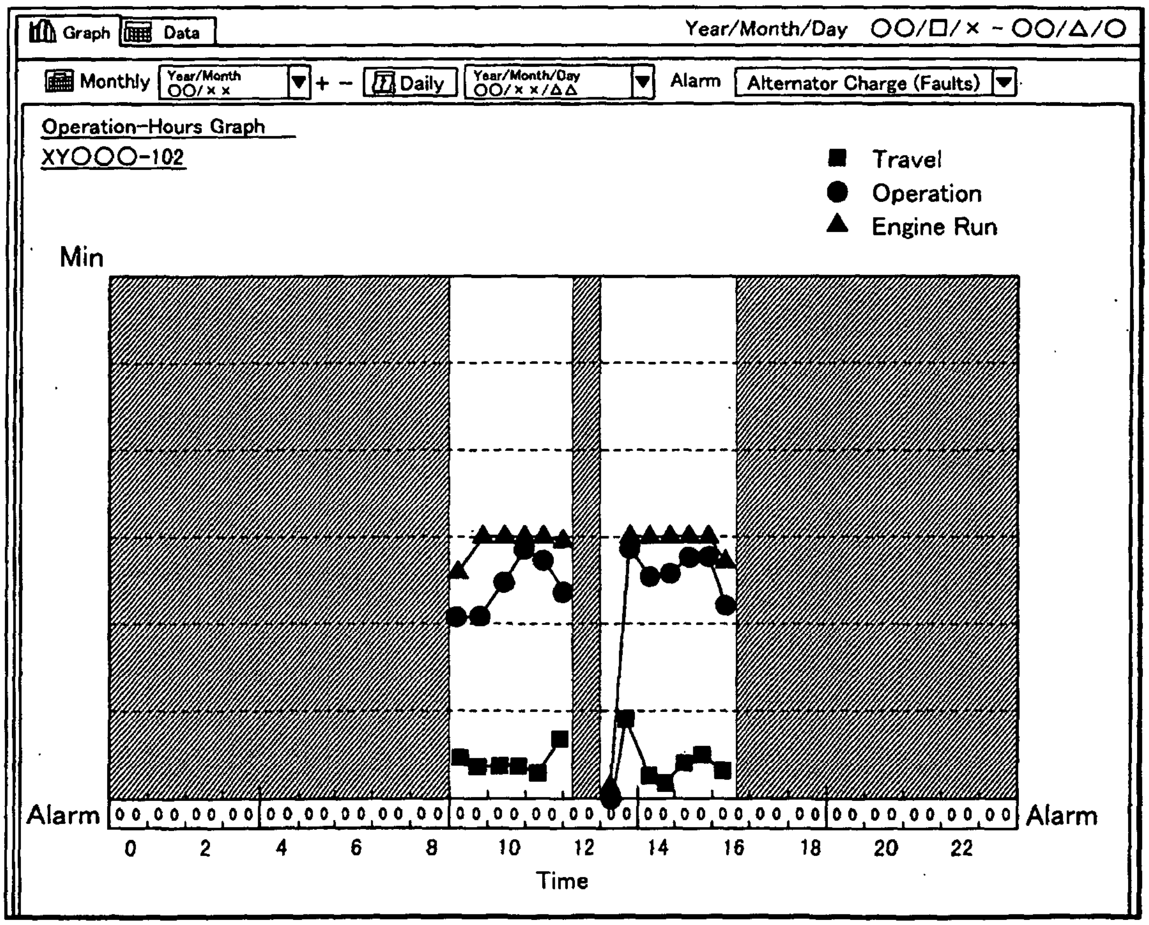
Graph
Data
Year/Month/Day OO/□/× ~ OO/△/O
Monthly
Year/Month OO/××
+ −
Daily
Year/Month/Day OO/××/△△
Alarm
Alternator Charge (Faults)
Operation-Hours Graph
XYOOO-102
Travel
Operation
Engine Run
Min
Alarm
Alarm
0
2
4
6
8
10
12
14
16
18
20
22
Time

FIG.23

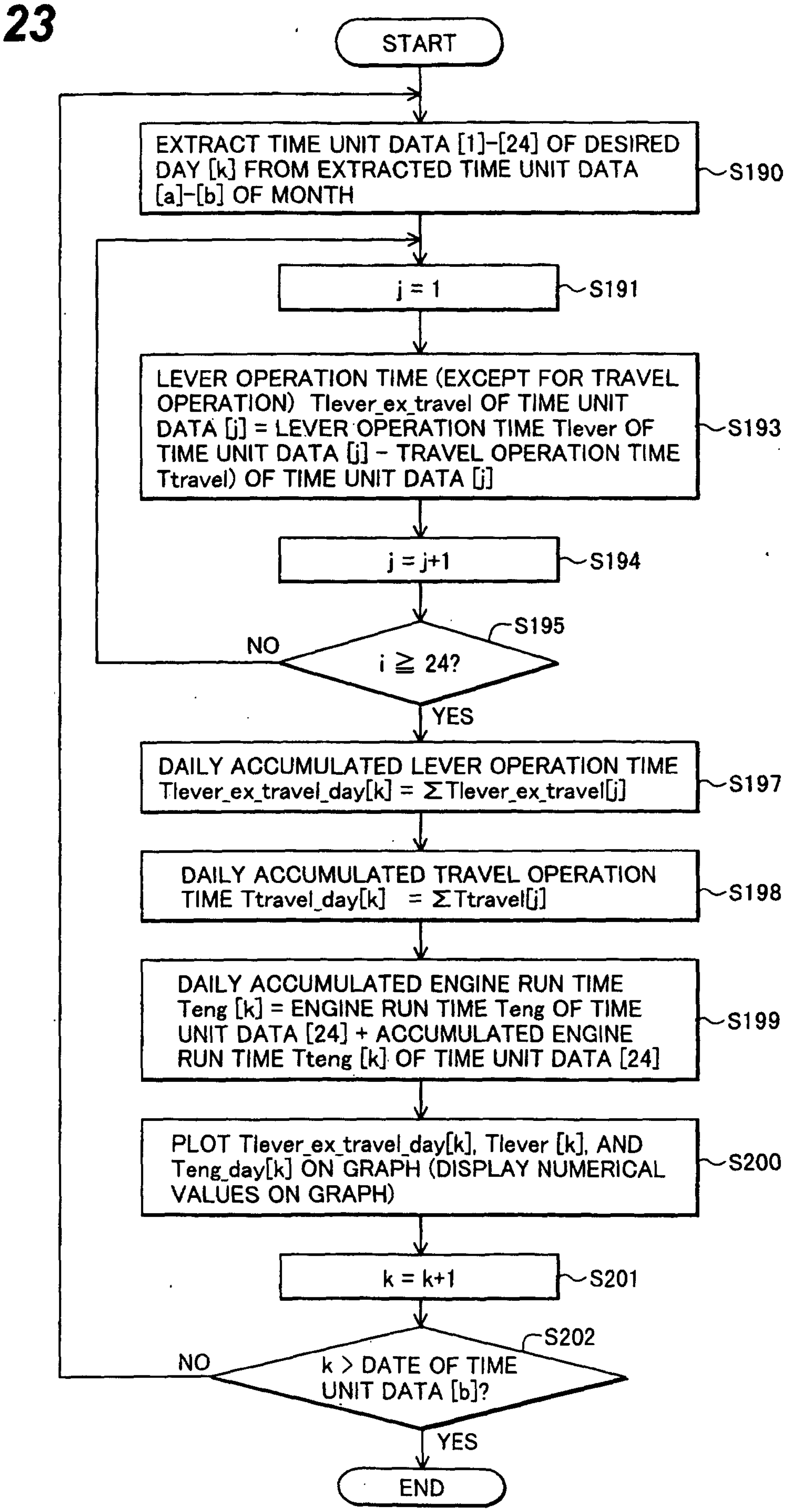
START
EXTRACT TIME UNIT DATA [1]-[24] OF DESIRED DAY [k] FROM EXTRACTED TIME UNIT DATA [a]-[b] OF MONTH
S190
j = 1
S191
LEVER OPERATION TIME (EXCEPT FOR TRAVEL OPERATION) Tlever_ex_travel OF TIME UNIT DATA [j] = LEVER OPERATION TIME Tlever OF TIME UNIT DATA [j] - TRAVEL OPERATION TIME Ttravel) OF TIME UNIT DATA [j]
S193
j = j+1
S194
S195
NO
i ≧ 24?
YES
DAILY ACCUMULATED LEVER OPERATION TIME Tlever_ex_travel_day[k] = ΣTlever_ex_travel[j]
S197
DAILY ACCUMULATED TRAVEL OPERATION TIME Ttravel_day[k] = ΣTtravel[j]
S198
DAILY ACCUMULATED ENGINE RUN TIME Teng [k] = ENGINE RUN TIME Teng OF TIME UNIT DATA [24] + ACCUMULATED ENGINE RUN TIME Tteng [k] OF TIME UNIT DATA [24]
S199
PLOT Tlever_ex_travel_day[k], Tlever [k], AND Teng_day[k] ON GRAPH (DISPLAY NUMERICAL VALUES ON GRAPH)
S200
k = k+1
S201
S202
NO
k > DATE OF TIME UNIT DATA [b]?
YES
END

FIG.24

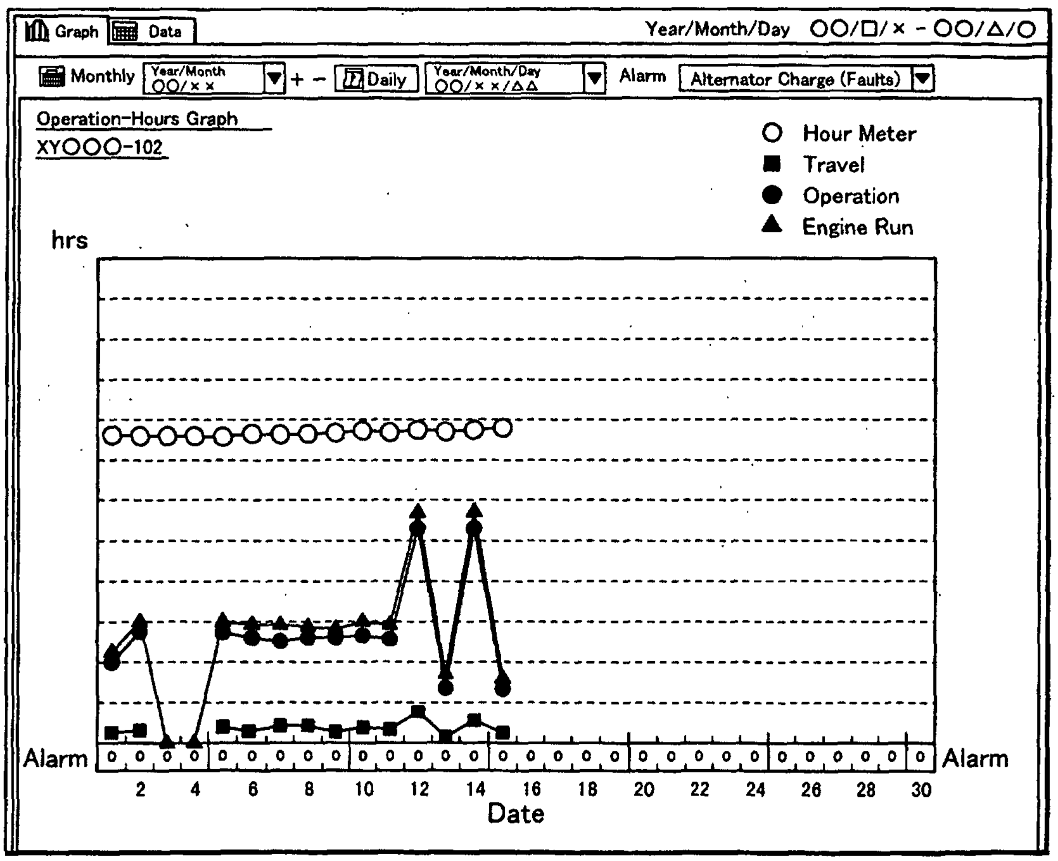
Graph
Data
Year/Month/Day OO/□/× - OO/△/O
Monthly
Year/Month OO/××
+ −
Daily
Year/Month/Day OO/××/△△
Alarm
Alternator Charge (Faults)
Operation-Hours Graph
XYOOO-102
Hour Meter
Travel
Operation
Engine Run
hrs
Alarm
Alarm
2 4 6 8 10 12 14 16 18 20 22 24 26 28 30
Date

FIG.25

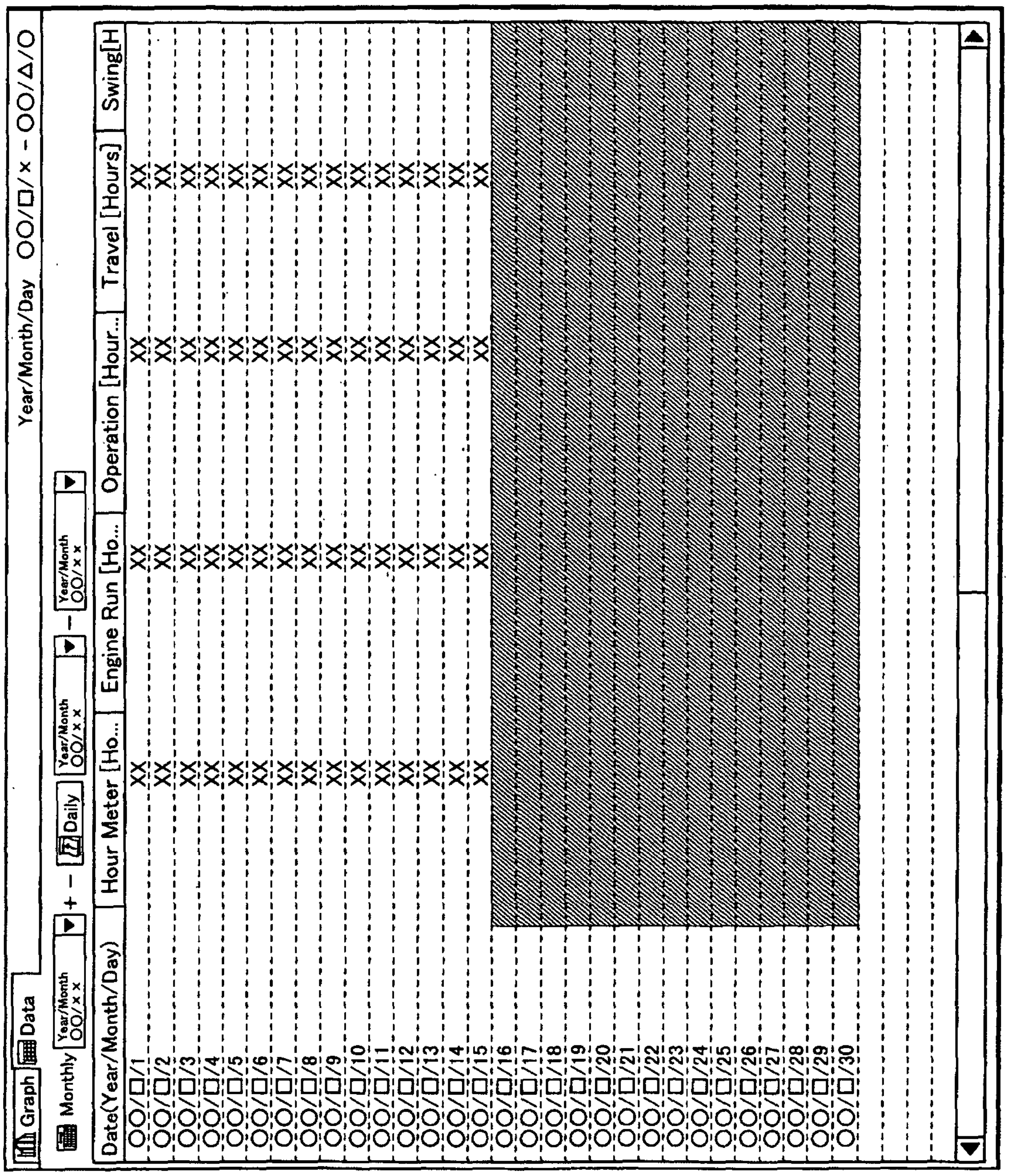
Graph
Data
Monthly
Year/Month OO/xx
Daily
Year/Month/Day OO/□/x - OO/Δ/O
Date(Year/Month/Day)
Hour Meter [Ho...
Engine Run [Ho...
Operation [Hour...
Travel [Hours]
Swing[H

FIG.26

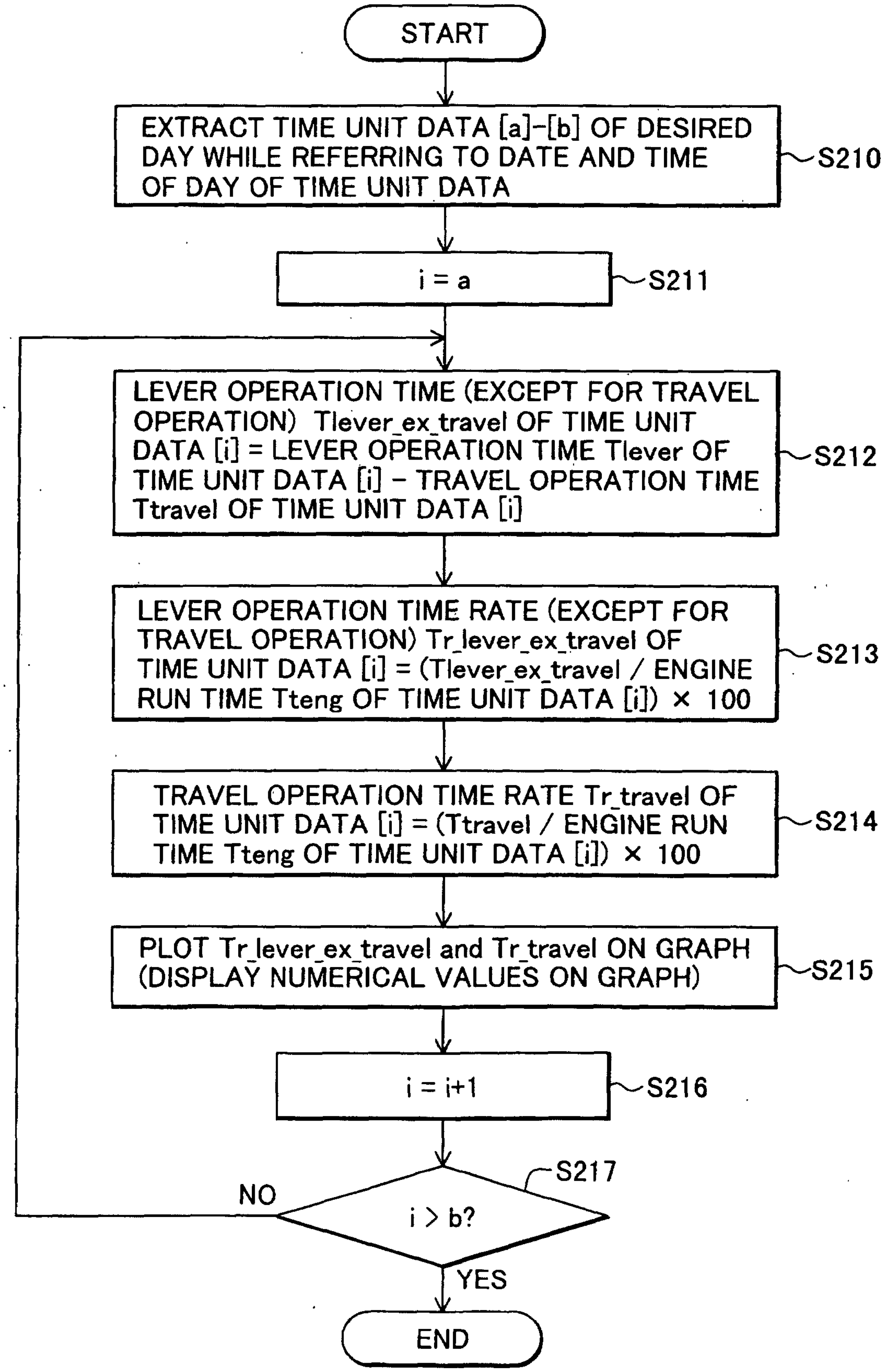
START
EXTRACT TIME UNIT DATA [a]-[b] OF DESIRED DAY WHILE REFERRING TO DATE AND TIME OF DAY OF TIME UNIT DATA
S210
i = a
S211
LEVER OPERATION TIME (EXCEPT FOR TRAVEL OPERATION) Tlever_ex_travel OF TIME UNIT DATA [i] = LEVER OPERATION TIME Tlever OF TIME UNIT DATA [i] - TRAVEL OPERATION TIME Ttravel OF TIME UNIT DATA [i]
S212
LEVER OPERATION TIME RATE (EXCEPT FOR TRAVEL OPERATION) Tr_lever_ex_travel OF TIME UNIT DATA [i] = (Tlever_ex_travel / ENGINE RUN TIME Tteng OF TIME UNIT DATA [i]) × 100
S213
TRAVEL OPERATION TIME RATE Tr_travel OF TIME UNIT DATA [i] = (Ttravel / ENGINE RUN TIME Tteng OF TIME UNIT DATA [i]) × 100
S214
PLOT Tr_lever_ex_travel and Tr_travel ON GRAPH (DISPLAY NUMERICAL VALUES ON GRAPH)
S215
i = i+1
S216
S217
i > b?
NO
YES
END

FIG.27

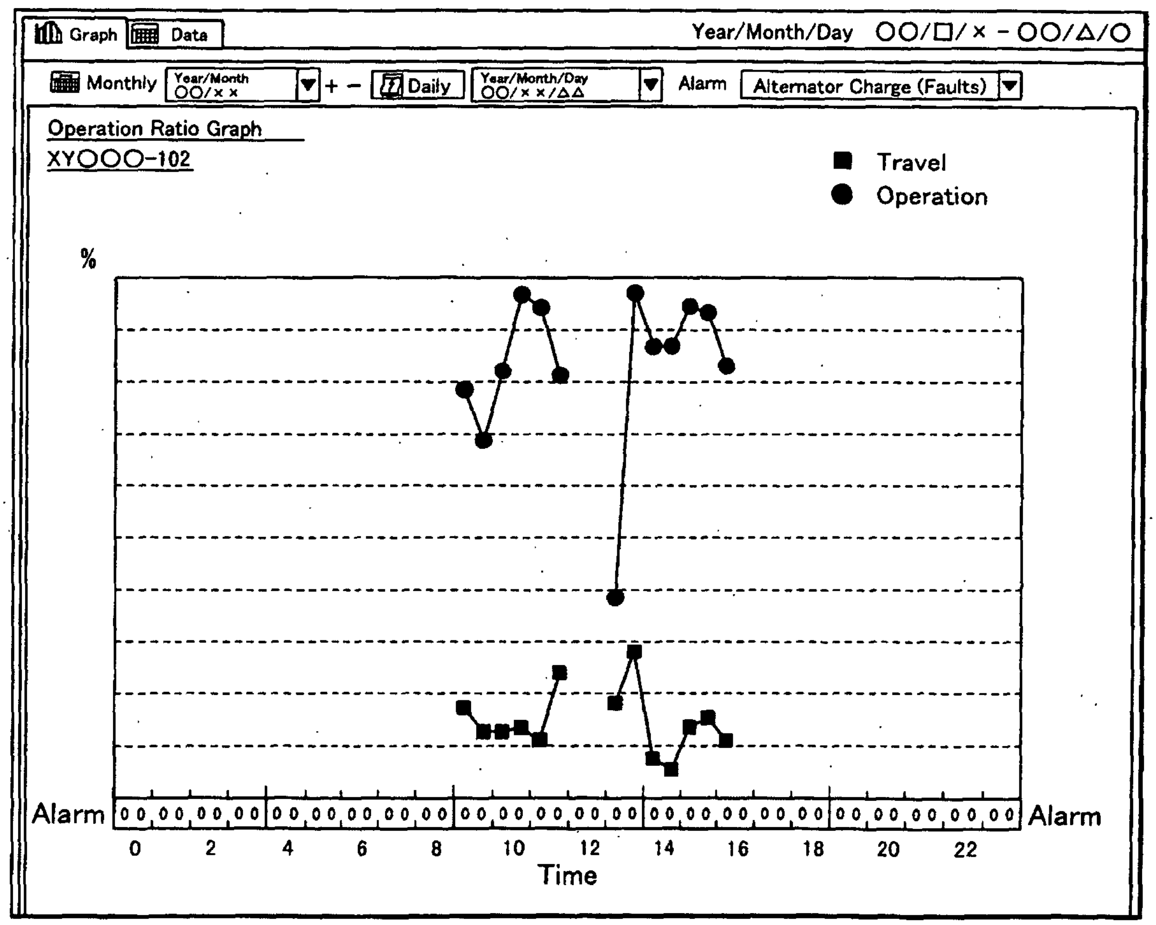
Graph
Data
Year/Month/Day OO/□/× - OO/△/O
Monthly
Year/Month OO/××
+ -
Daily
Year/Month/Day OO/××/△△
Alarm
Alternator Charge (Faults)
Operation Ratio Graph
XYOOO-102
Travel
Operation
%
Alarm
Alarm
0
2
4
6
8
10
12
14
16
18
20
22
Time

FIG.28

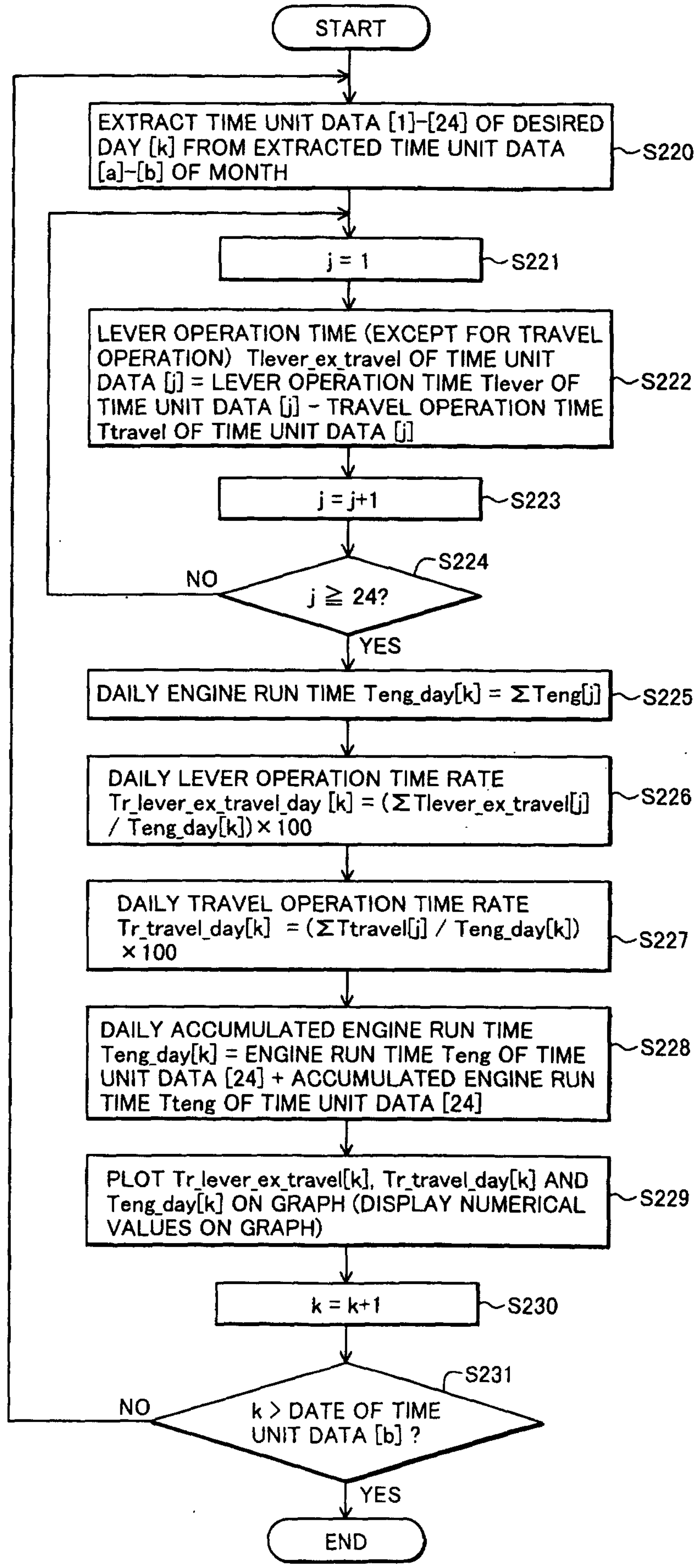
START
EXTRACT TIME UNIT DATA [1]-[24] OF DESIRED DAY [k] FROM EXTRACTED TIME UNIT DATA [a]-[b] OF MONTH
S220
j = 1
S221
LEVER OPERATION TIME (EXCEPT FOR TRAVEL OPERATION) Tlever_ex_travel OF TIME UNIT DATA [j] = LEVER OPERATION TIME Tlever OF TIME UNIT DATA [j] - TRAVEL OPERATION TIME Ttravel OF TIME UNIT DATA [j]
S222
j = j+1
S223
j ≧ 24?
S224
NO
YES
DAILY ENGINE RUN TIME Teng_day[k] = ΣTeng[j]
S225
DAILY LEVER OPERATION TIME RATE Tr_lever_ex_travel_day [k] = (ΣTlever_ex_travel[j] / Teng_day[k]) × 100
S226
DAILY TRAVEL OPERATION TIME RATE Tr_travel_day[k] = (ΣTtravel[j] / Teng_day[k]) × 100
S227
DAILY ACCUMULATED ENGINE RUN TIME Teng_day[k] = ENGINE RUN TIME Teng OF TIME UNIT DATA [24] + ACCUMULATED ENGINE RUN TIME Tteng OF TIME UNIT DATA [24]
S228
PLOT Tr_lever_ex_travel[k], Tr_travel_day[k] AND Teng_day[k] ON GRAPH (DISPLAY NUMERICAL VALUES ON GRAPH)
S229
k = k+1
S230
k > DATE OF TIME UNIT DATA [b] ?
S231
NO
YES
END

FIG.29

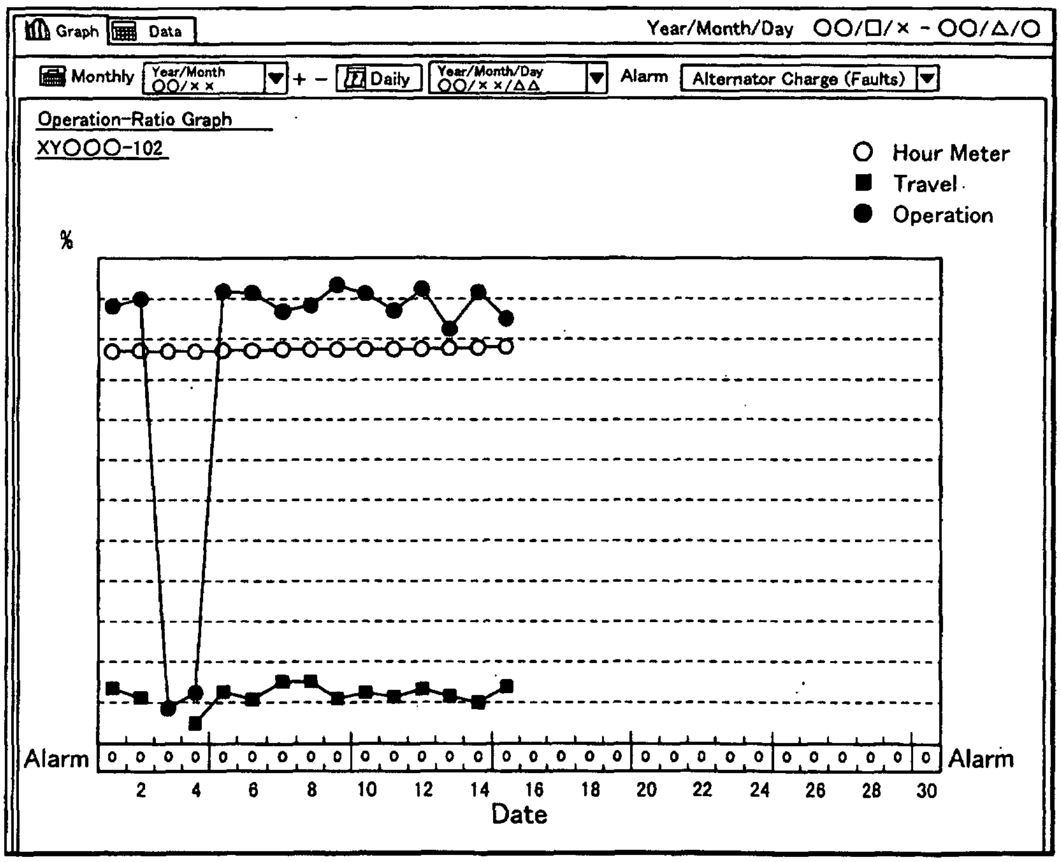
Graph
Data
Year/Month/Day ○○/□/× - ○○/△/○
Monthly
Year/Month ○○/× ×
+ −
Daily
Year/Month/Day ○○/× ×/△△
Alarm
Alternator Charge (Faults)
Operation-Ratio Graph
XY○○○-102
○ Hour Meter
■ Travel
● Operation
%
Alarm
Alarm
2 4 6 8 10 12 14 16 18 20 22 24 26 28 30
Date

FIG.30

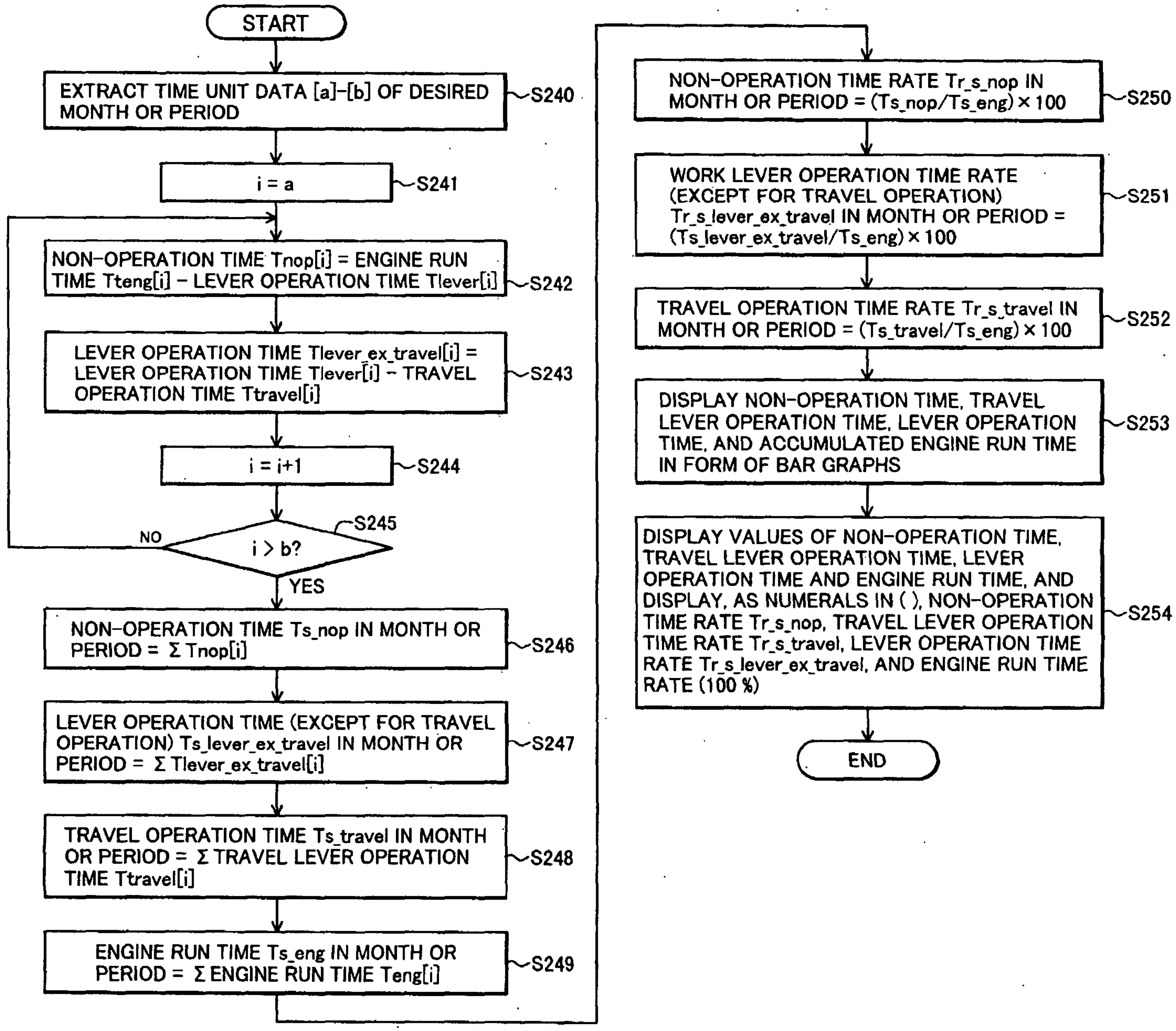
START
EXTRACT TIME UNIT DATA [a]-[b] OF DESIRED MONTH OR PERIOD
S240
i = a
S241
NON-OPERATION TIME Tnop[i] = ENGINE RUN TIME Tteng[i] - LEVER OPERATION TIME Tlever[i]
S242
LEVER OPERATION TIME Tlever_ex_travel[i] = LEVER OPERATION TIME Tlever[i] - TRAVEL OPERATION TIME Ttravel[i]
S243
i = i+1
S244
i > b?
S245
NO
YES
NON-OPERATION TIME Ts_nop IN MONTH OR PERIOD = Σ Tnop[i]
S246
LEVER OPERATION TIME (EXCEPT FOR TRAVEL OPERATION) Ts_lever_ex_travel IN MONTH OR PERIOD = Σ Tlever_ex_travel[i]
S247
TRAVEL OPERATION TIME Ts_travel IN MONTH OR PERIOD = Σ TRAVEL LEVER OPERATION TIME Ttravel[i]
S248
ENGINE RUN TIME Ts_eng IN MONTH OR PERIOD = Σ ENGINE RUN TIME Teng[i]
S249
NON-OPERATION TIME RATE Tr_s_nop IN MONTH OR PERIOD = (Ts_nop/Ts_eng) × 100
S250
WORK LEVER OPERATION TIME RATE (EXCEPT FOR TRAVEL OPERATION) Tr_s_lever_ex_travel IN MONTH OR PERIOD = (Ts_lever_ex_travel/Ts_eng) × 100
S251
TRAVEL OPERATION TIME RATE Tr_s_travel IN MONTH OR PERIOD = (Ts_travel/Ts_eng) × 100
S252
DISPLAY NON-OPERATION TIME, TRAVEL LEVER OPERATION TIME, LEVER OPERATION TIME, AND ACCUMULATED ENGINE RUN TIME IN FORM OF BAR GRAPHS
S253
DISPLAY VALUES OF NON-OPERATION TIME, TRAVEL LEVER OPERATION TIME, LEVER OPERATION TIME AND ENGINE RUN TIME, AND DISPLAY, AS NUMERALS IN ( ), NON-OPERATION TIME RATE Tr_s_nop, TRAVEL LEVER OPERATION TIME RATE Tr_s_travel, LEVER OPERATION TIME RATE Tr_s_lever_ex_travel, AND ENGINE RUN TIME RATE (100 %)
S254
END

FIG.31

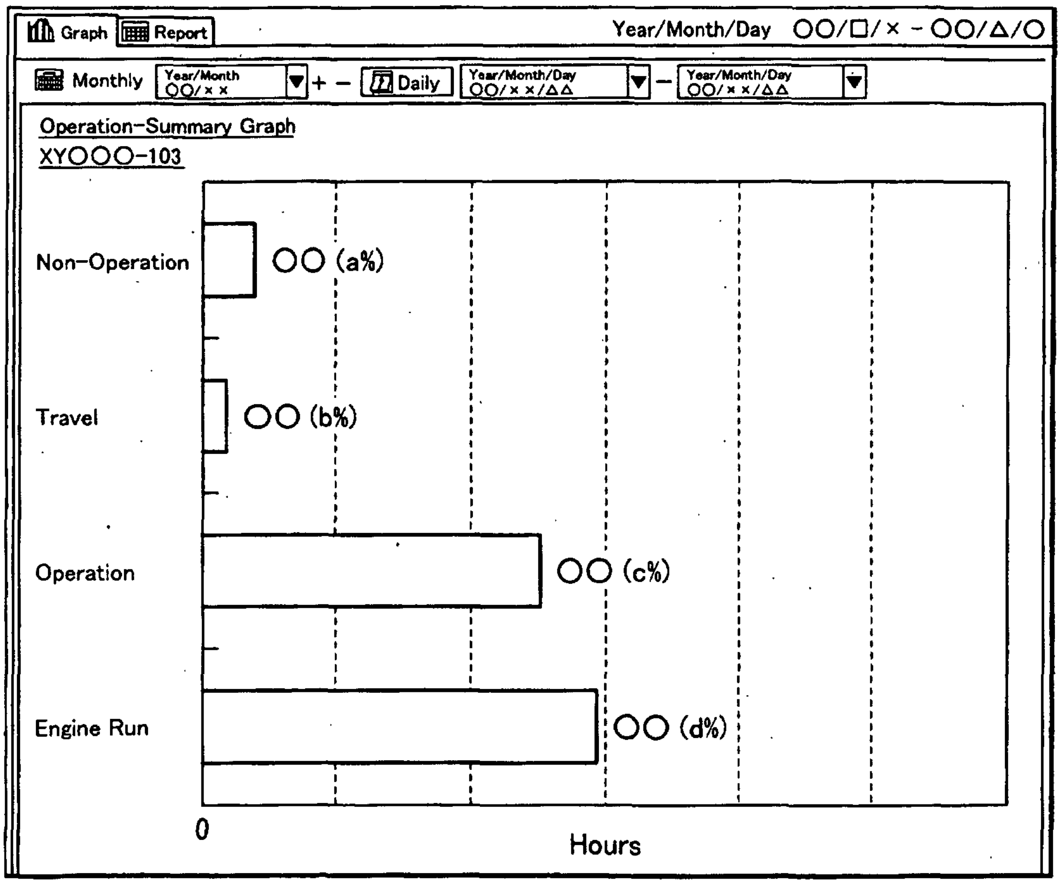
Graph
Report
Year/Month/Day ○○/□/× - ○○/△/○
Monthly
Year/Month ○○/××
Daily
Year/Month/Day ○○/××/△△
Year/Month/Day ○○/××/△△
Operation-Summary Graph
XY○○○-103
Non-Operation
○○ (a%)
Travel
○○ (b%)
Operation
○○ (c%)
Engine Run
○○ (d%)
0
Hours

# *FIG.32*

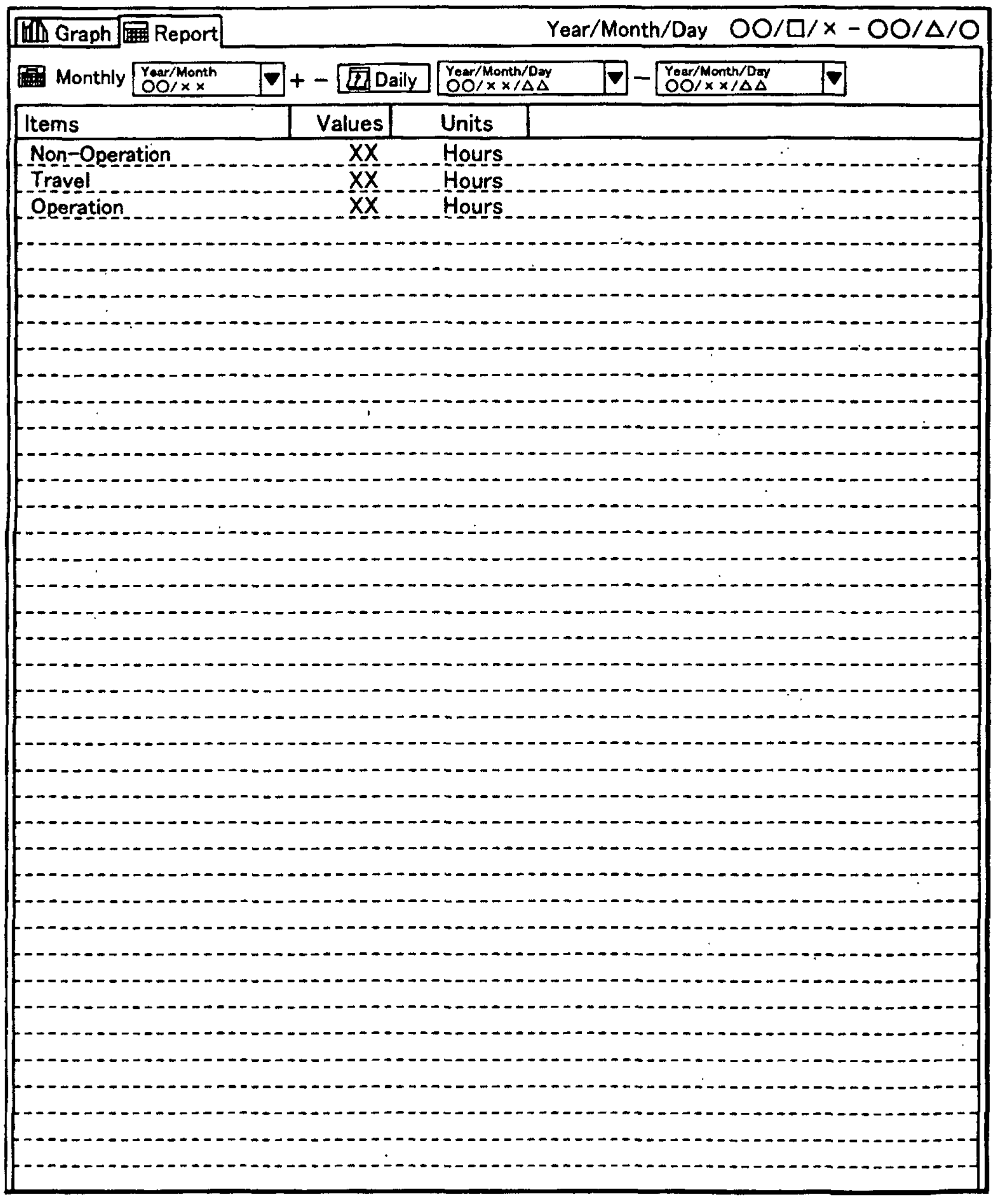
Graph
Report
Year/Month/Day OO/□/× - OO/△/O
Monthly
Year/Month
OO/××
+ -
Daily
Year/Month/Day
OO/××/△△
-
Year/Month/Day
OO/××/△△
Items
Values
Units
Non-Operation
XX
Hours
Travel
XX
Hours
Operation
XX
Hours

FIG.33

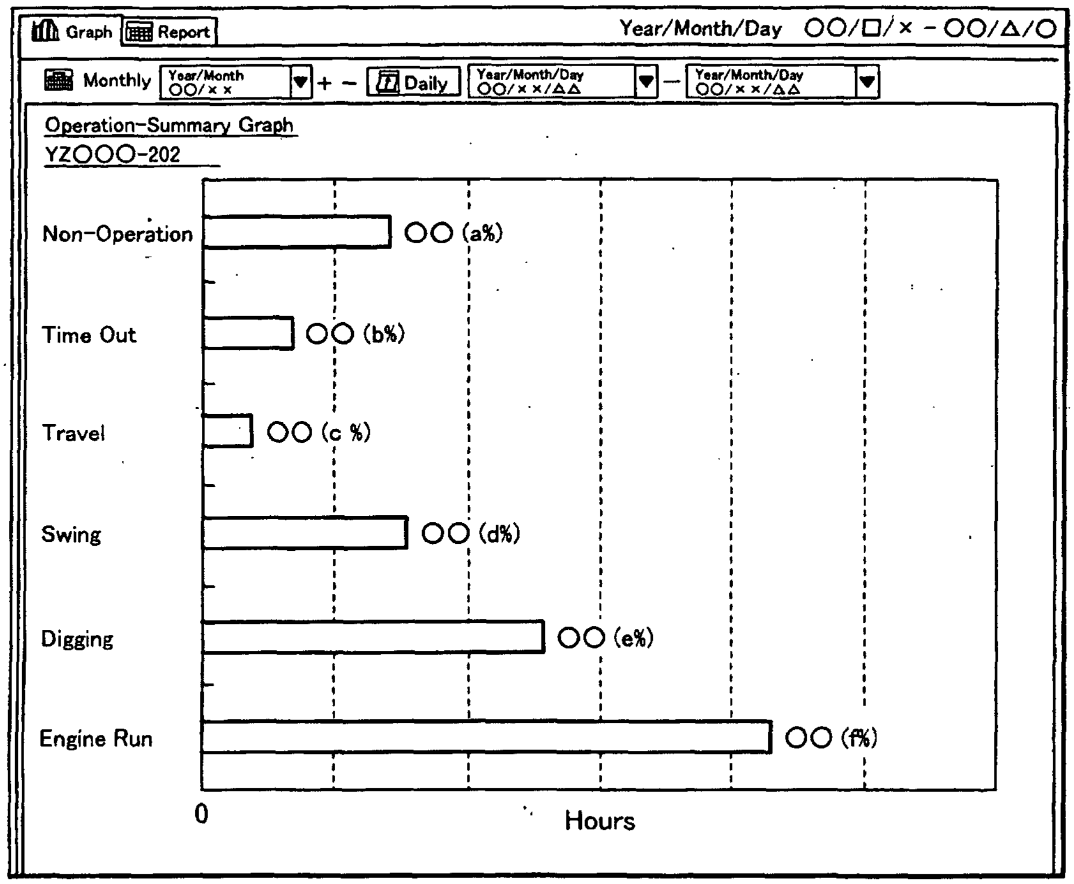
Graph
Report
Year/Month/Day ○○/□/× - ○○/△/○
Monthly
Year/Month ○○/× ×
+ −
Daily
Year/Month/Day ○○/× ×/△△
−
Year/Month/Day ○○/× ×/△△
Operation-Summary Graph
YZ○○○-202
Non-Operation
○○ (a%)
Time Out
○○ (b%)
Travel
○○ (c %)
Swing
○○ (d%)
Digging
○○ (e%)
Engine Run
○○ (f%)
0
Hours

***FIG.34***

Graph | Report | Year/Month/Day OO/□/× - OO/△/O

Monthly | Year/Month OO/×× | + – | Daily | Year/Month/Day OO/××/△△ | – | Year/Month/Day OO/××/△△

| Items | Values | Units |
|---|---|---|
| Non-Operation | XX | Hours |
| Time Out | XX | Hours |
| ML | XX | Hours |
| AUX | XX | Hours |
| Breaker | XX | Hours |
| Travel | XX | Hours |
| Swing | XX | Hours |
| Digging | XX | Hours |
| Engine Run | XX | Hours |
| Engine Started | XX | Times |
| Events Counts | | |
| ALTERNATOR | XX | Times |
| KEY SW | XX | Times |
| ENGINE | XX | Times |
| ENGINE STALL | XX | Times |
| MAIL SW | XX | Times |
| ENGINE OIL LEVEL WARNING | XX | Times |
| COOLANT LEVEL WARNING | XX | Times |
| HYDRAULIC FILTER WARNING | XX | Times |
| OVERHRAT WARNING | XX | Times |
| ENGINE OIL PRESSUER WAR... | XX | Times |
| AIR FILTER RESTRICTION WA... | XX | Times |
| ALTERNATOR WARNING | XX | Times |
| MC COMM. ERROR | XX | Times |
| MCX COMM. ERROR | XX | Times |
| MONITOR COMM. ERROR | XX | Times |
| EEPROM | XX | Times |
| RAM | XX | Times |
| A/D Converter | XX | Times |
| Sensor Voltage | XX | Times |
| Engine RPM Sensor | XX | Times |
| EC Sensor | XX | Times |
| Engine Contorol Dial | XX | Times |
| Pump1 Del. Press. Sensor | XX | Times |

FIG.35

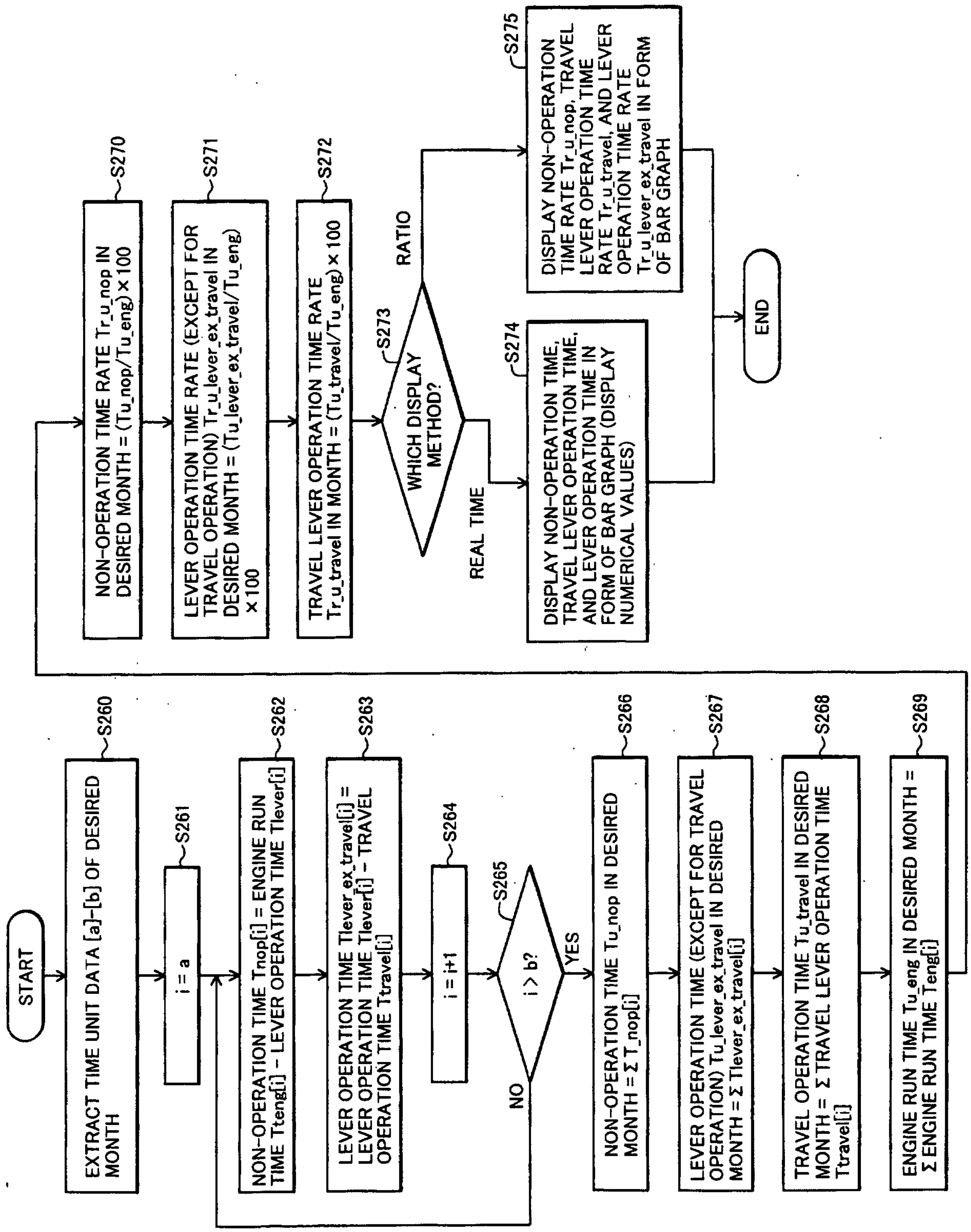
START
EXTRACT TIME UNIT DATA [a]-[b] OF DESIRED MONTH
S260
i = a
S261
NON-OPERATION TIME Tnop[i] = ENGINE RUN TIME Teng[i] - LEVER OPERATION TIME Tlever[i]
S262
LEVER OPERATION TIME Tlever_ex_travel[i] = LEVER OPERATION TIME Tlever[i] - TRAVEL OPERATION TIME Ttravel[i]
S263
i = i+1
S264
i > b?
S265
NO
YES
NON-OPERATION TIME Tu_nop IN DESIRED MONTH = Σ T_nop[i]
S266
LEVER OPERATION TIME (EXCEPT FOR TRAVEL OPERATION) Tu_lever_ex_travel IN DESIRED MONTH = Σ Tlever_ex_travel[i]
S267
TRAVEL OPERATION TIME Tu_travel IN DESIRED MONTH = Σ TRAVEL LEVER OPERATION TIME Ttravel[i]
S268
ENGINE RUN TIME Tu_eng IN DESIRED MONTH = Σ ENGINE RUN TIME Teng[i]
S269
NON-OPERATION TIME RATE Tr_u_nop IN DESIRED MONTH = (Tu_nop/Tu_eng) × 100
S270
LEVER OPERATION TIME RATE (EXCEPT FOR TRAVEL OPERATION) Tr_u_lever_ex_travel IN DESIRED MONTH = (Tu_lever_ex_travel/Tu_eng) × 100
S271
TRAVEL LEVER OPERATION TIME RATE Tr_u_travel IN MONTH = (Tu_travel/Tu_eng) × 100
S272
WHICH DISPLAY METHOD?
S273
REAL TIME
RATIO
DISPLAY NON-OPERATION TIME, TRAVEL LEVER OPERATION TIME, AND LEVER OPERATION TIME IN FORM OF BAR GRAPH (DISPLAY NUMERICAL VALUES)
S274
DISPLAY NON-OPERATION TIME RATE Tr_u_nop, TRAVEL LEVER OPERATION TIME RATE Tr_u_travel, AND LEVER OPERATION TIME RATE Tr_u_lever_ex_travel IN FORM OF BAR GRAPH
S275
END

## FIG.36

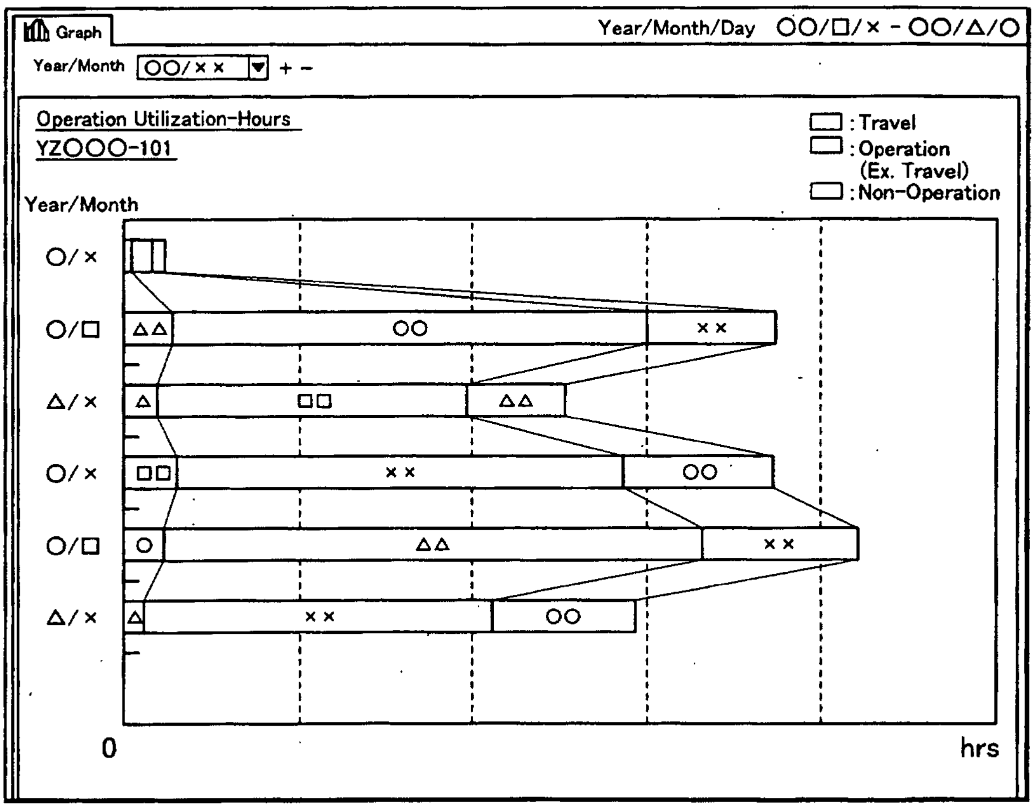
Graph
Year/Month/Day ○○/□/× - ○○/△/○
Year/Month ○○/×× + -
Operation Utilization-Hours
YZ○○○-101
: Travel
: Operation (Ex. Travel)
: Non-Operation
Year/Month
○/×
○/□
△/×
○/×
○/□
△/×
△△ ○○ ××
△ □□ △△
□□ ×× ○○
○ △△ ××
△ ×× ○○
0
hrs

*FIG.37*

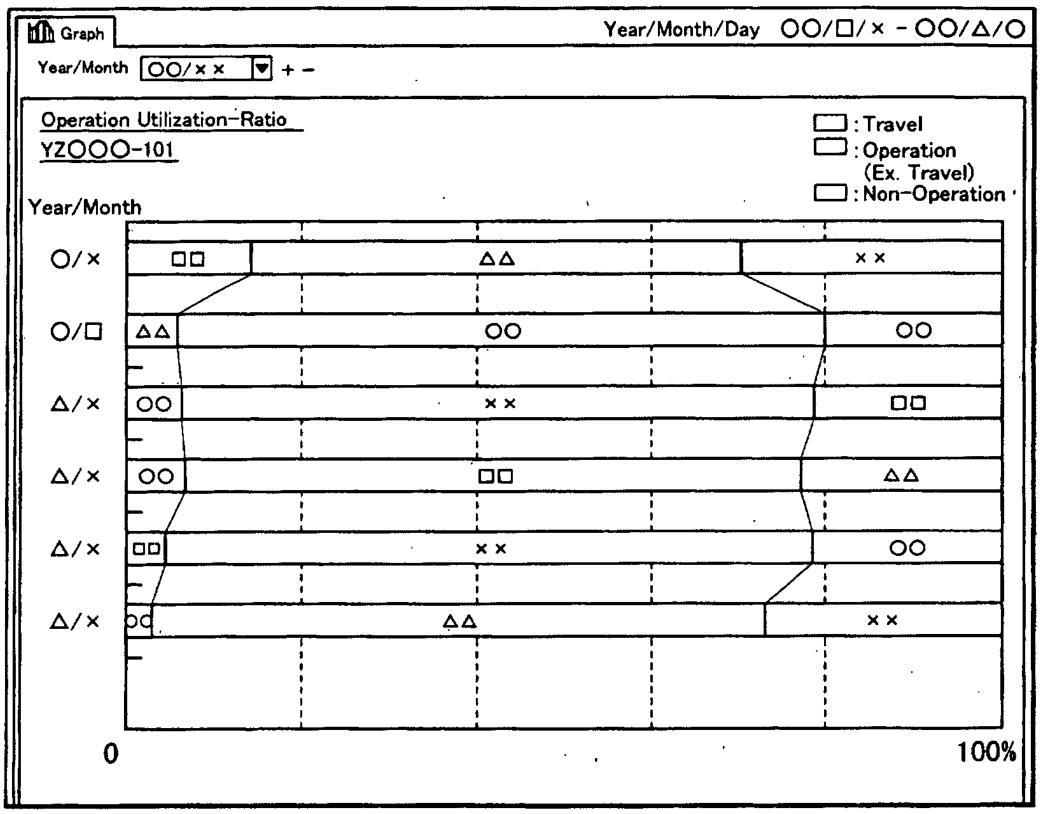
Graph
Year/Month/Day ○○/□/× - ○○/△/○
Year/Month ○○/×× + -
Operation Utilization-Ratio
YZ○○○-101
: Travel
: Operation (Ex. Travel)
: Non-Operation
Year/Month
○/×
○/□
△/×
△/×
△/×
△/×
□□
△△
××
○○
0
100%

FIG.38

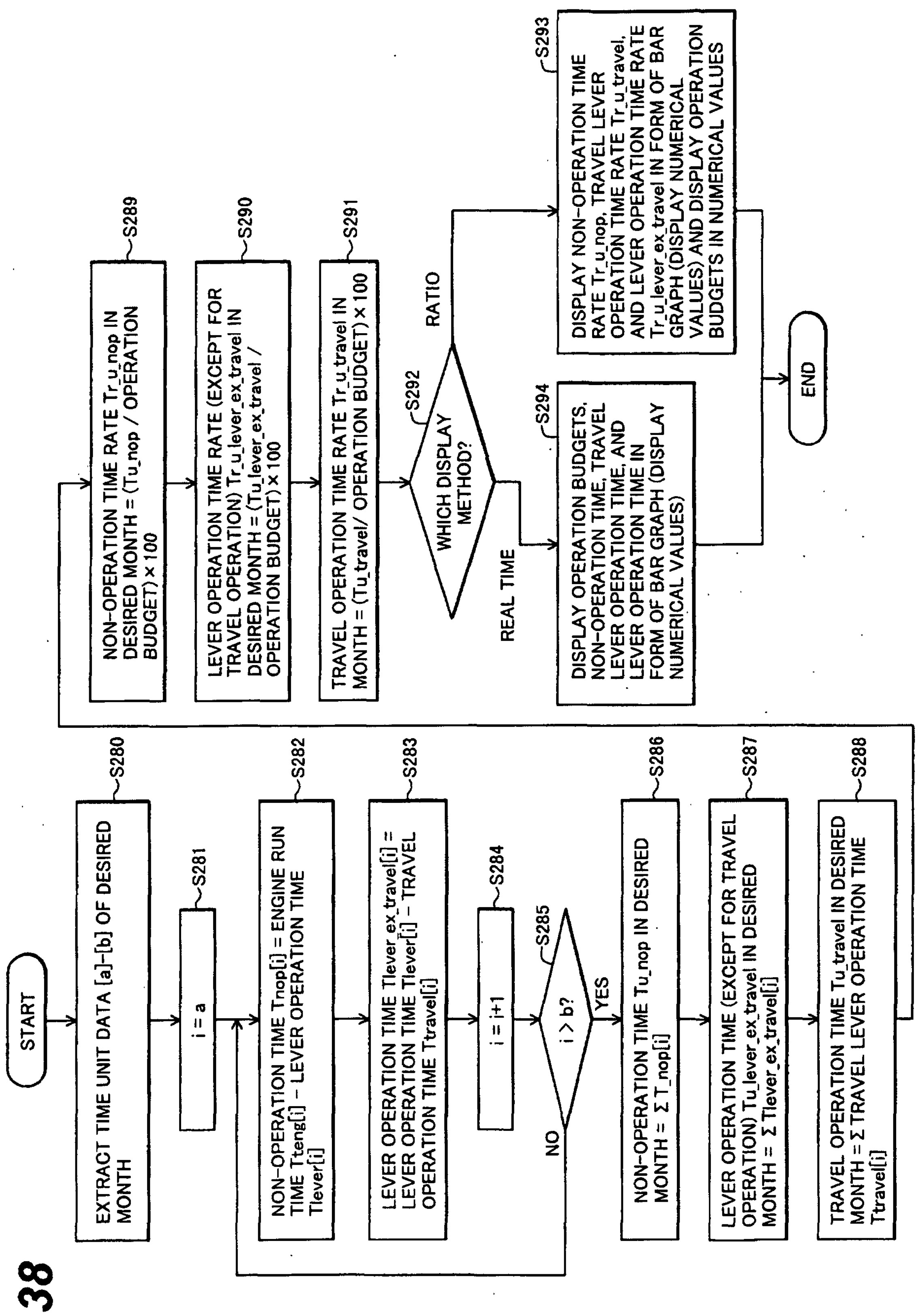
START
EXTRACT TIME UNIT DATA [a]-[b] OF DESIRED MONTH
S280
i = a
S281
NON-OPERATION TIME Tnop[i] = ENGINE RUN TIME Tteng[i] - LEVER OPERATION TIME Tlever[i]
S282
LEVER OPERATION TIME Tlever_ex_travel[i] = LEVER OPERATION TIME Tlever[i] - TRAVEL OPERATION TIME Ttravel[i]
S283
i = i+1
S284
i > b?
S285
NO
YES
NON-OPERATION TIME Tu_nop IN DESIRED MONTH = Σ T_nop[i]
S286
LEVER OPERATION TIME (EXCEPT FOR TRAVEL OPERATION) Tu_lever_ex_travel IN DESIRED MONTH = Σ Tlever_ex_travel[i]
S287
TRAVEL OPERATION TIME Tu_travel IN DESIRED MONTH = Σ TRAVEL LEVER OPERATION TIME Ttravel[i]
S288
NON-OPERATION TIME RATE Tr_u_nop IN DESIRED MONTH = (Tu_nop / OPERATION BUDGET) × 100
S289
LEVER OPERATION TIME RATE (EXCEPT FOR TRAVEL OPERATION) Tr_u_lever_ex_travel IN DESIRED MONTH = (Tu_lever_ex_travel / OPERATION BUDGET) × 100
S290
TRAVEL OPERATION TIME RATE Tr_u_travel IN MONTH = (Tu_travel/ OPERATION BUDGET) × 100
S291
WHICH DISPLAY METHOD?
S292
RATIO
REAL TIME
DISPLAY NON-OPERATION TIME RATE Tr_u_nop, TRAVEL LEVER OPERATION TIME RATE Tr_u_travel, AND LEVER OPERATION TIME RATE Tr_u_lever_ex_travel IN FORM OF BAR GRAPH (DISPLAY NUMERICAL VALUES) AND DISPLAY OPERATION BUDGETS IN NUMERICAL VALUES
S293
DISPLAY OPERATION BUDGETS, NON-OPERATION TIME, TRAVEL LEVER OPERATION TIME, AND LEVER OPERATION TIME IN FORM OF BAR GRAPH (DISPLAY NUMERICAL VALUES)
S294
END

# FIG.39

MONTHLY OPERATION BUDGET SETTING BUTTON

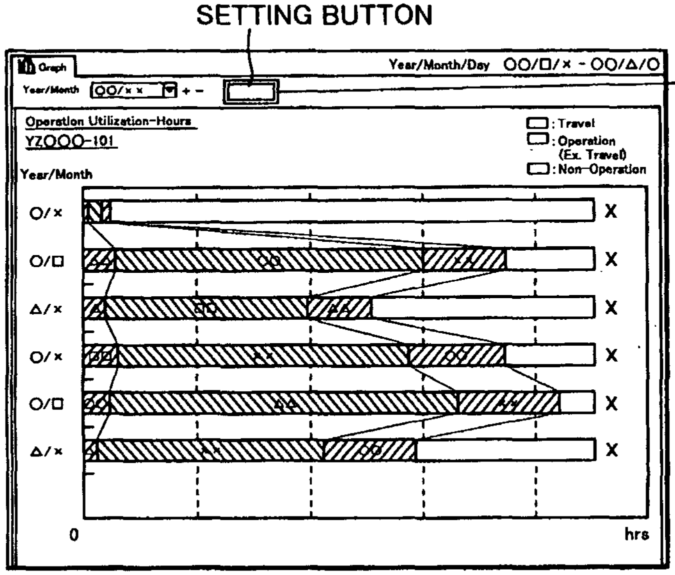


SETTING SCREEN (PER MONTH)

| Month | Budget |
|---|---|
| ○/□ | X |
| ○/□ | X |
| ○/□ | X |
| ○/□ | X |
| ○/□ | X |
| ○/□ | X |
| ○/□ | |
| ○/□ | |
| ○/□ | |
| ○/□ | |
| ○/□ | |

SETTING SCREEN (PER WEEK)

| Month | Budget | Budget/week 1st | 2st | 3st | 4st |
|---|---|---|---|---|---|
| ○/□ | X | $X_1$ | $X_2$ | $X_3$ | $X_4$ |
| ○/□ | X | ... | ... | ... | ... |
| ○/□ | X | ... | ... | ... | ... |
| ○/□ | X | ... | ... | ... | ... |
| ○/□ | X | ... | ... | ... | ... |
| ○/□ | X | ... | ... | ... | ... |
| ○/□ | | | | | |
| ○/□ | | | | | |
| ○/□ | | | | | |
| ○/□ | | | | | |
| ○/□ | | | | | |

*FIG.40*

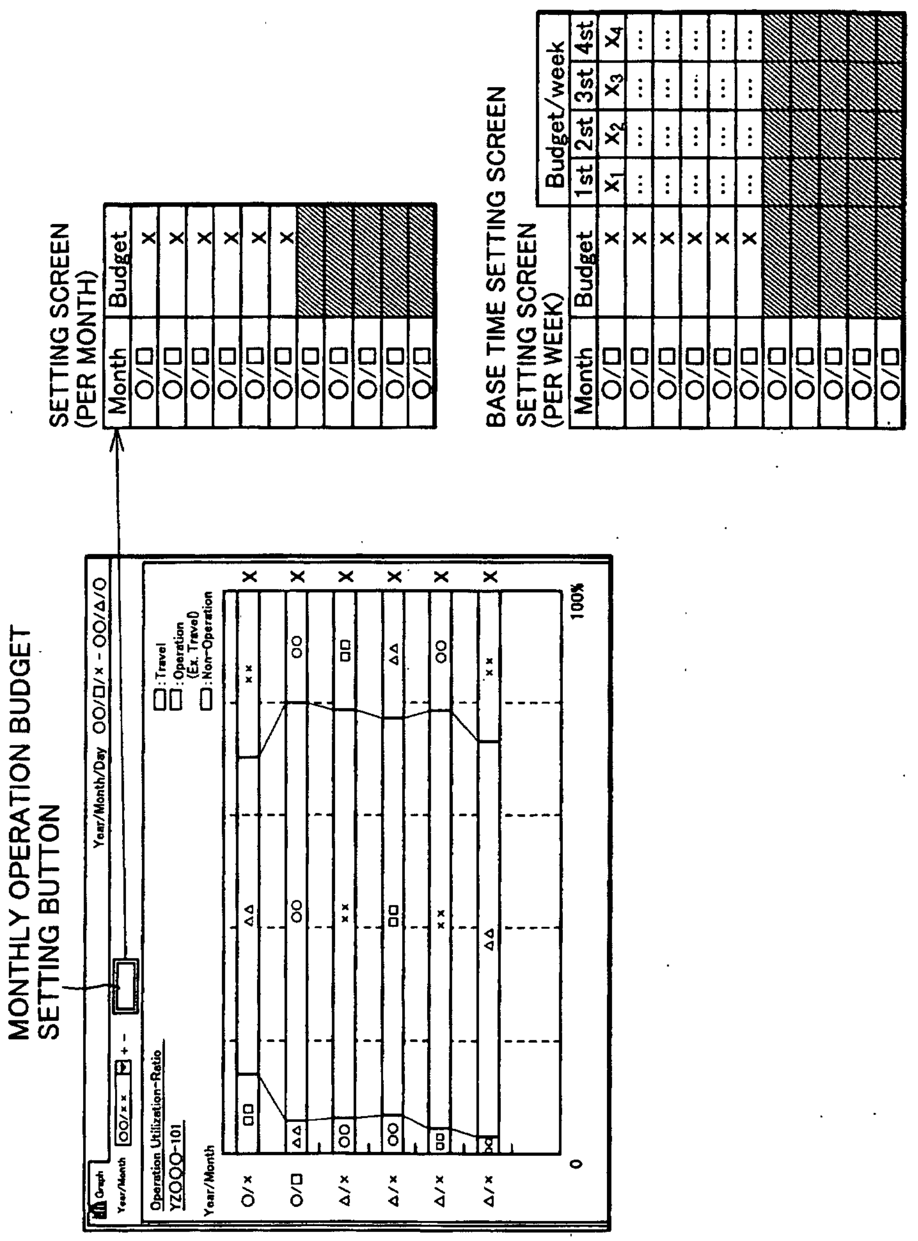
MONTHLY OPERATION BUDGET SETTING BUTTON
Graph
Year/Month
Year/Month/Day
Operation Utilization-Ratio
YZOOO-101
Year/Month
: Travel
: Operation (Ex. Travel)
: Non-Operation
0
100%
SETTING SCREEN (PER MONTH)
Month
Budget
BASE TIME SETTING SCREEN
SETTING SCREEN (PER WEEK)
Budget/week
1st
2st
3st
4st

*FIG.41*

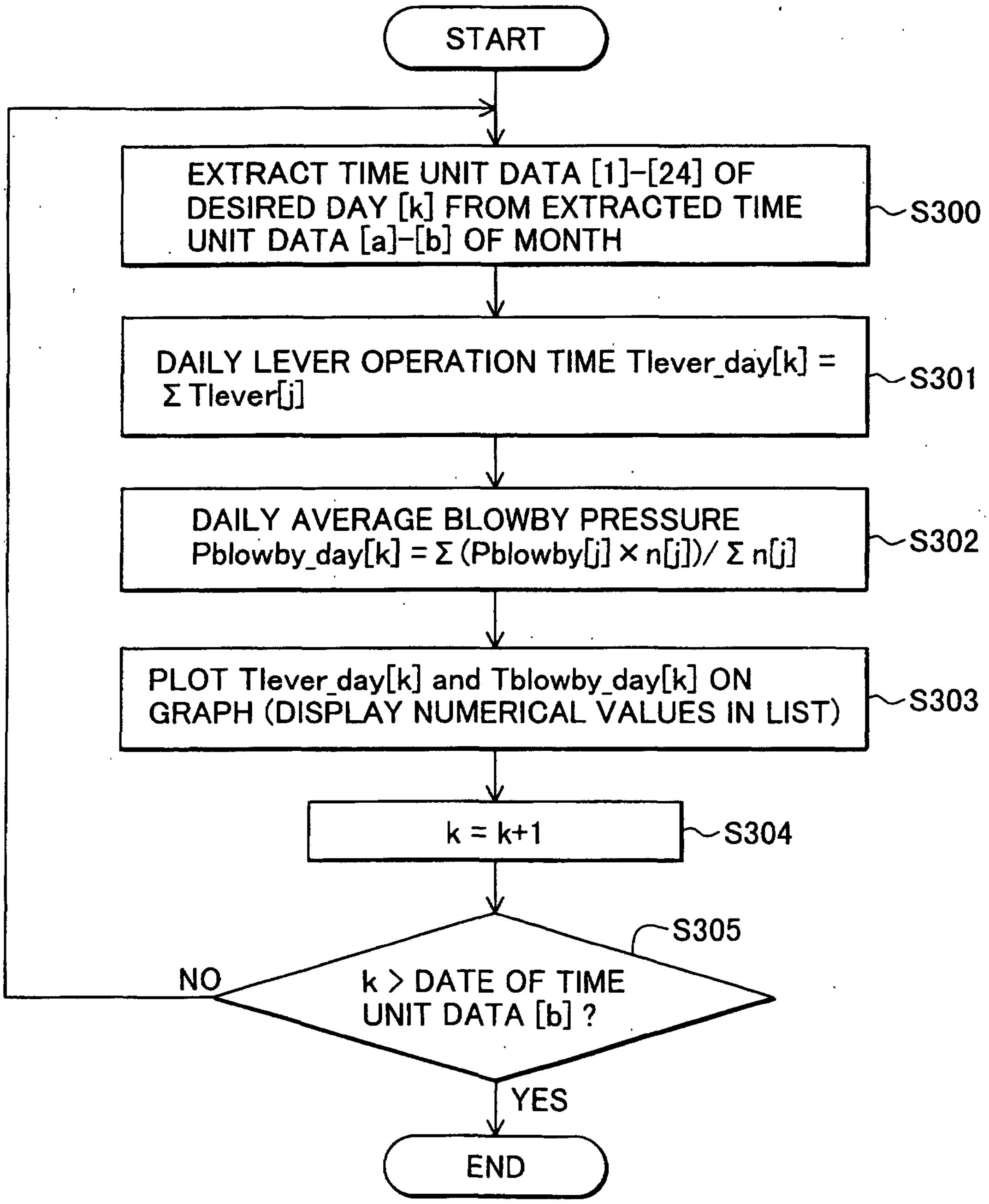
START
EXTRACT TIME UNIT DATA [1]-[24] OF DESIRED DAY [k] FROM EXTRACTED TIME UNIT DATA [a]-[b] OF MONTH
S300
DAILY LEVER OPERATION TIME Tlever_day[k] = Σ Tlever[j]
S301
DAILY AVERAGE BLOWBY PRESSURE Pblowby_day[k] = Σ (Pblowby[j] × n[j])/ Σ n[j]
S302
PLOT Tlever_day[k] and Tblowby_day[k] ON GRAPH (DISPLAY NUMERICAL VALUES IN LIST)
S303
k = k+1
S304
S305
k > DATE OF TIME UNIT DATA [b] ?
NO
YES
END

FIG.42

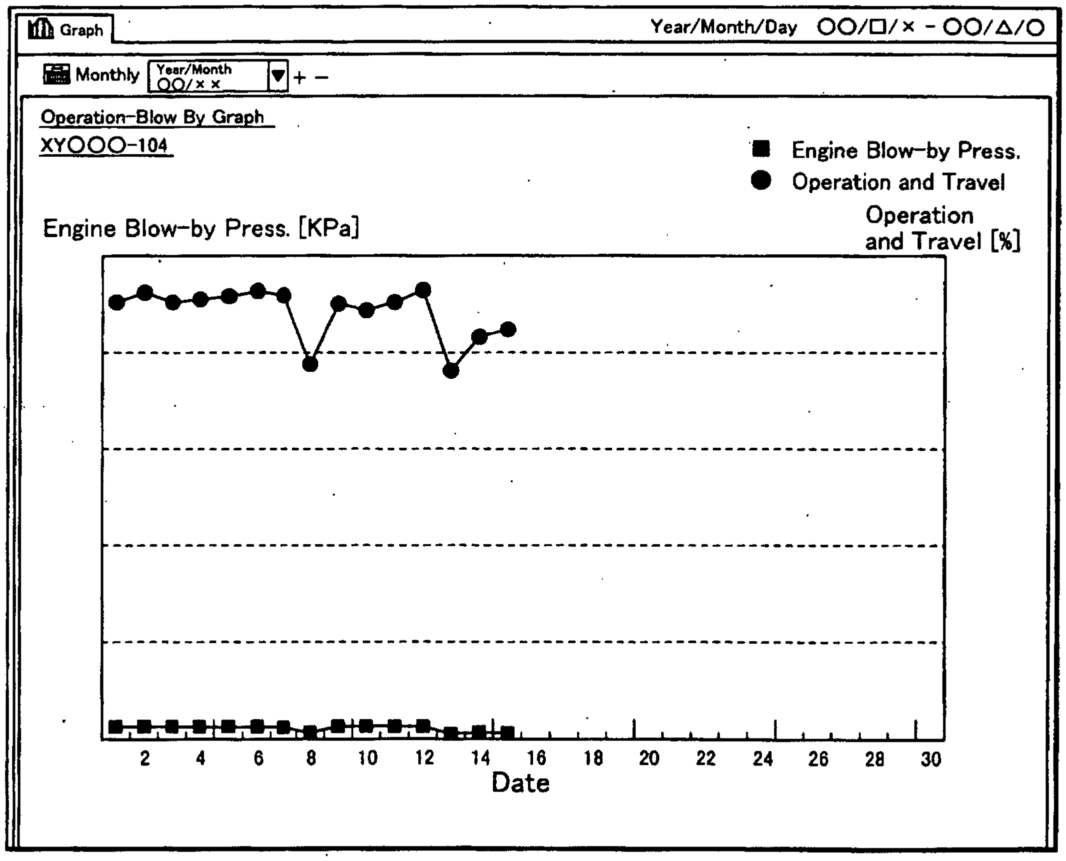
Graph
Year/Month/Day ○○/□/× - ○○/△/○
Monthly
Year/Month ○○/××
+ −
Operation-Blow By Graph
XY○○○-104
Engine Blow-by Press.
Operation and Travel
Engine Blow-by Press. [KPa]
Operation and Travel [%]
2 4 6 8 10 12 14 16 18 20 22 24 26 28 30
Date

# FIG.43

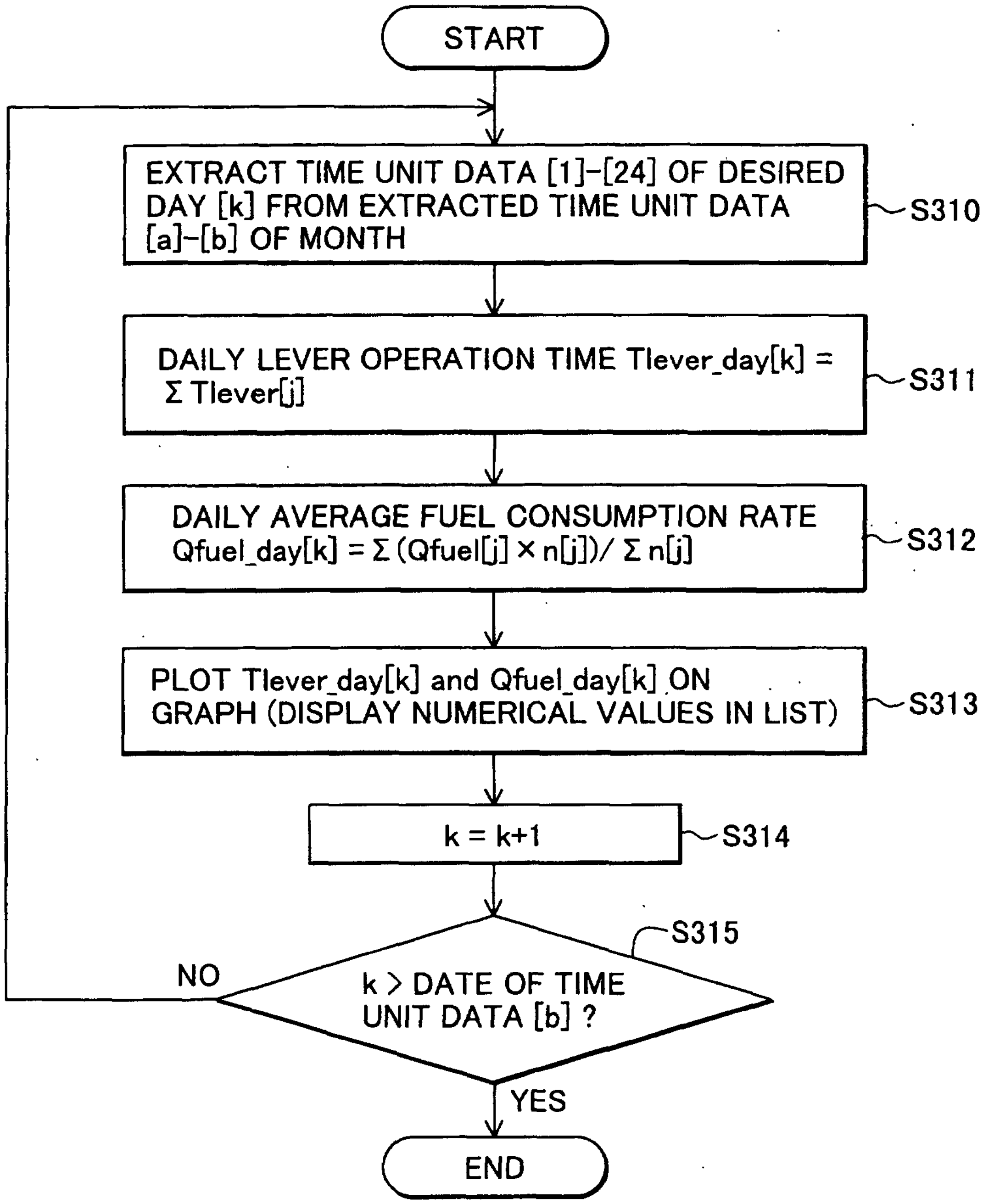
START
EXTRACT TIME UNIT DATA [1]-[24] OF DESIRED DAY [k] FROM EXTRACTED TIME UNIT DATA [a]-[b] OF MONTH
S310
DAILY LEVER OPERATION TIME Tlever_day[k] = Σ Tlever[j]
S311
DAILY AVERAGE FUEL CONSUMPTION RATE Qfuel_day[k] = Σ (Qfuel[j] × n[j])/ Σ n[j]
S312
PLOT Tlever_day[k] and Qfuel_day[k] ON GRAPH (DISPLAY NUMERICAL VALUES IN LIST)
S313
k = k+1
S314
S315
k > DATE OF TIME UNIT DATA [b] ?
NO
YES
END

FIG.44

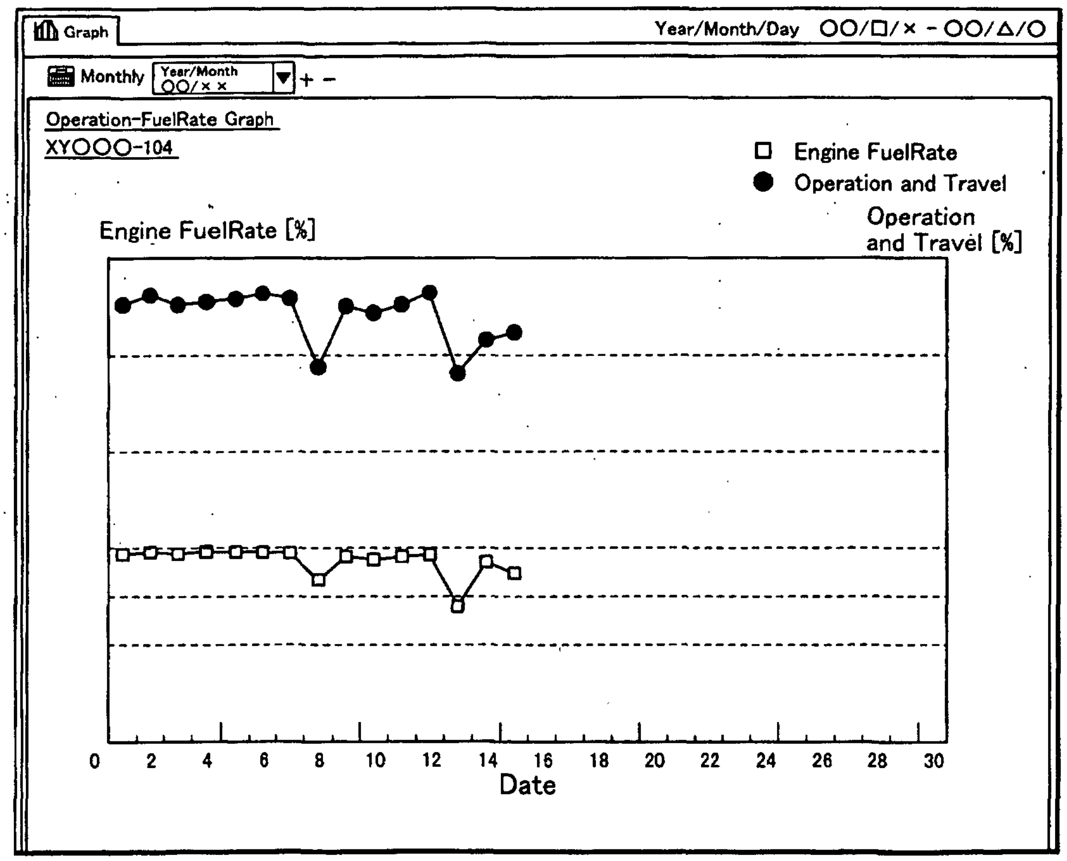
Graph
Year/Month/Day OO/□/× - OO/Δ/O
Monthly
Year/Month
OO/××
+ -
Operation-FuelRate Graph
XYOOO-104
Engine FuelRate
Operation and Travel
Engine FuelRate [%]
Operation and Travel [%]
0
2
4
6
8
10
12
14
16
18
20
22
24
26
28
30
Date

FIG.45

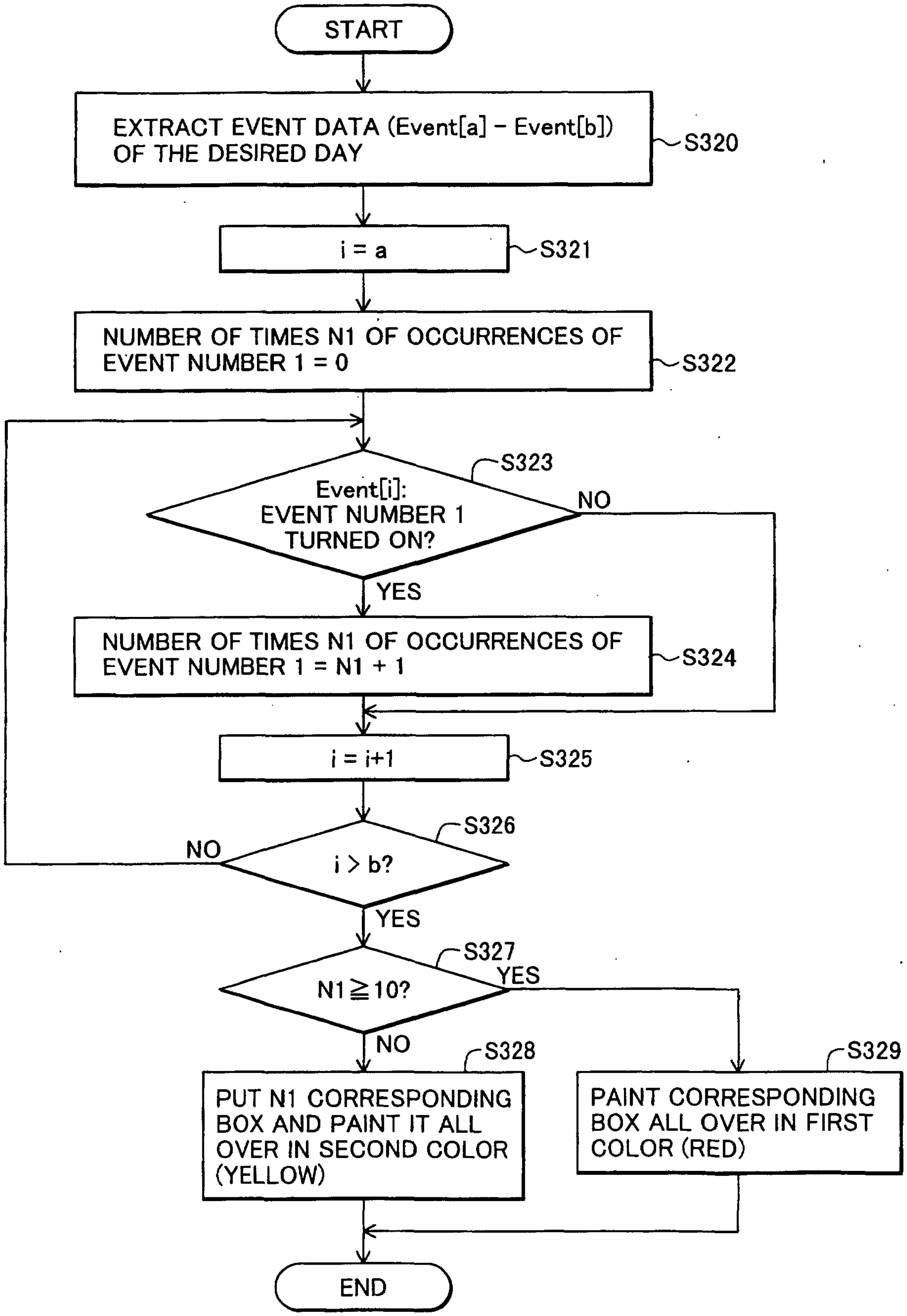
START
EXTRACT EVENT DATA (Event[a] - Event[b]) OF THE DESIRED DAY
S320
i = a
S321
NUMBER OF TIMES N1 OF OCCURRENCES OF EVENT NUMBER 1 = 0
S322
S323
Event[i]: EVENT NUMBER 1 TURNED ON?
NO
YES
NUMBER OF TIMES N1 OF OCCURRENCES OF EVENT NUMBER 1 = N1 + 1
S324
i = i+1
S325
S326
NO
i > b?
YES
S327
YES
N1 ≧ 10?
NO
S328
PUT N1 CORRESPONDING BOX AND PAINT IT ALL OVER IN SECOND COLOR (YELLOW)
S329
PAINT CORRESPONDING BOX ALL OVER IN FIRST COLOR (RED)
END

# FIG.46

Graph | Data

Year/Month/Day ○○/□/× - ○○/△/○

Year/Month ○○/×× + -

Alarm Graph

YZ○○○-204

Date

| | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|---|---|---|---|---|---|---|---|---|---|---|---|---|---|---|
| Alternator Charge(Fault) | | | | a | | | | i | ■ | b | | | | | | | | | | | | | | | | | | | | |
| Coolant Level(Low) | | | | | b | | | | | | | | b | | | | | | | | | | | | | | | | | |
| Coolant Temp.(Overhead) | | | | | b | | | | | | | | b | | | | | | | | | | | | | | | | | |
| Hyd. Oil Level(Low) | | | | | a | | | a | | | | | | | | | | | | | | | | | | | | | | |
| Hyd. Oil Temp(Overhead) | | | | | | | | | | | | | | | | | | | | | | | | | | | | | | |
| Engine Oil Press(Low) | | | | | b | | | | | | | | | | | | | | | | | | | | | | | | | |
| Pump Trans.Oil Press.(Low) | | | | | | | | a | | | | | | | | | | | | | | | | | | | | | | |
| Emergency Stop | a | | | d | | a | | f | f | d | b | b | f | | c | | | | | | | | | | | | | | | |
| Buzzer Stop | | | | | | | | h | a | a | | | | | | | | | | | | | | | | | | | | |
| Fuel Level(Low) | | | | | | | | | | | | | | | | | | | | | | | | | | | | | | |
| Pump Contamination Lamp | d | | | | | | | ■ | | | | | | | | | | | | | | | | | | | | | | |
| Air Cleaner Restriction | | | | | | | | | i | | | | | | | | | | | | | | | | | | | | | |
| Auto-Lubrication(Fault) | b | | a | c | a | | a | ■ | b | d | a | | f | | b | | | | | | | | | | | | | | | |
| Engine Controller(Fault) | | | | | | | | | | | | | | | | | | | | | | | | | | | | | | |
| Exhaust Temp.(High) | | | | | | | | | | | | | | | | | | | | | | | | | | | | | | |
| Engine Warning | | | | g | | | | ■ | h | g | ■ | b | ■ | | b | | | | | | | | | | | | | | | |

# FIG.47

Graph | Data

Year/Month/Day ○○/□/× - ○○/△/○

| Date (Year/Month/Day hour: minute: second) | Alarm | Status |
|---|---|---|
| ○/□/× ○:×:△ | Auto-Lubrication(Fault) | ON |
| ○/□/× ○:×:△ | Pump Trans. Oil Press.(LOW)[R] | ON |
| ○/□/× ○:×:△ | Auto-Lubrication(Fault) | OFF |
| ○/□/× ○:×:△ | Pump Trans. Oil Press.(LOW)[R] | OFF |
| ○/□/× ○:×:△ | Pump Trans. Oil Press.(LOW)[R] | ON |
| ○/□/× ○:×:△ | Engine Warning[(L)Protection Lamp] | OFF |
| ○/□/× ○:×:△ | Engine Warning[(R)Protection Lamp] | OFF |
| ○/□/× ○:×:△ | Engine Warning[(R)Protection Lamp] | ON |
| ○/□/× ○:×:△ | Engine Warning[(R)Protection Lamp] | OFF |
| ○/□/× ○:×:△ | Emergency Stop | OFF |
| ○/□/× ○:×:△ | Emergency Stop | ON |
| ○/□/× ○:×:△ | Emergency Stop | OFF |
| ○/□/× ○:×:△ | Emergency Stop | ON |
| ○/□/× ○:×:△ | Engine Warning[(L)Protection Lamp] | OFF |
| ○/□/× ○:×:△ | Emergency Stop | OFF |
| ○/□/× ○:×:△ | Engine Warning[(L)Protection Lamp] | ON |
| ○/□/× ○:×:△ | Emergency Stop | ON |
| ○/□/× ○:×:△ | Auto-Lubrication(Fault) | ON |
| ○/□/× ○:×:△ | Pump Trans. Oil Press.(LOW)[R] | OFF |
| ○/□/× ○:×:△ | Pump Trans. Oil Press.(LOW)[R] | ON |
| ○/□/× ○:×:△ | Pump Trans. Oil Press.(LOW)[R] | OFF |
| ○/□/× ○:×:△ | Pump Trans. Oil Press.(LOW)[R] | ON |
| ○/□/× ○:×:△ | Pump Trans. Oil Press.(LOW)[R] | OFF |
| ○/□/× ○:×:△ | Pump Trans. Oil Press.(LOW)[R] | ON |
| ○/□/× ○:×:△ | Pump Trans. Oil Press.(LOW)[R] | OFF |
| ○/□/× ○:×:△ | Pump Trans. Oil Press.(LOW)[R] | ON |
| ○/□/× ○:×:△ | Pump Trans. Oil Press.(LOW)[R] | OFF |
| ○/□/× ○:×:△ | Pump Trans. Oil Press.(LOW)[R] | ON |
| ○/□/× ○:×:△ | Pump Trans. Oil Press.(LOW)[R] | OFF |
| ○/□/× ○:×:△ | Pump Trans. Oil Press.(LOW)[R] | ON |
| ○/□/× ○:×:△ | Engine Warning[(R)Protection Lamp] | OFF |
| ○/□/× ○:×:△ | Engine Warning[(L)Protection Lamp] | OFF |
| ○/□/× ○:×:△ | Engine Warning[(R)Protection Lamp] | ON |
| ○/□/× ○:×:△ | Engine Warning[(L)Protection Lamp] | ON |
| ○/□/× ○:×:△ | Auto-Lubrication(Fault) | OFF |
| ○/□/× ○:×:△ | Auto-Lubrication(Fault) | ON |

# FIG.48

Data    Year/Month/Day ○○/□/× - ○○/△/○

| Date (Year/Month/Day hour: minute: second) | Event | Status | |
|---|---|---|---|
| ○/□/× ○:×:△ | Engine | ON | |
| ○/□/× ○:×:△ | KeySW | ON | |
| ○/□/× ○:×:△ | KeySW | OFF | |
| ○/□/× ○:×:△ | Engine | OFF | |
| ○/□/× ○:×:△ | Engine | ON | |
| ○/□/× ○:×:△ | Engine | OFF | |
| ○/□/× ○:×:△ | Engine | ON | |
| ○/□/× ○:×:△ | Engine | OFF | |
| ○/□/× ○:×:△ | Engine | ON | |
| ○/□/× ○:×:△ | KeySW | ON | |
| ○/□/× ○:×:△ | KeySW | OFF | |
| ○/□/× ○:×:△ | Engine | OFF | |
| ○/□/× ○:×:△ | Engine | ON | |
| ○/□/× ○:×:△ | KeySW | ON | |
| ○/□/× ○:×:△ | KeySW | OFF | |
| ○/□/× ○:×:△ | Engine | OFF | |
| ○/□/× ○:×:△ | Engine | ON | |
| ○/□/× ○:×:△ | KeySW | ON | |
| ○/□/× ○:×:△ | KeySW | OFF | |
| ○/□/× ○:×:△ | Engine | OFF | |
| ○/□/× ○:×:△ | Engine | ON | |
| ○/□/× ○:×:△ | KeySW | ON | |
| ○/□/× ○:×:△ | KeySW | OFF | |
| ○/□/× ○:×:△ | Engine | OFF | |
| ○/□/× ○:×:△ | Engine | ON | |
| ○/□/× ○:×:△ | KeySW | ON | |
| ○/□/× ○:×:△ | KeySW | OFF | |
| ○/□/× ○:×:△ | Engine | OFF | |
| ○/□/× ○:×:△ | Engine | ON | |
| ○/□/× ○:×:△ | KeySW | ON | |
| ○/□/× ○:×:△ | KeySW | OFF | |
| ○/□/× ○:×:△ | Engine | OFF | |
| ○/□/× ○:×:△ | Engine | ON | |
| ○/□/× ○:×:△ | KeySW | ON | |
| ○/□/× ○:×:△ | KeySW | OFF | |
| ○/□/× ○:×:△ | Engine | OFF | |

FIG.49

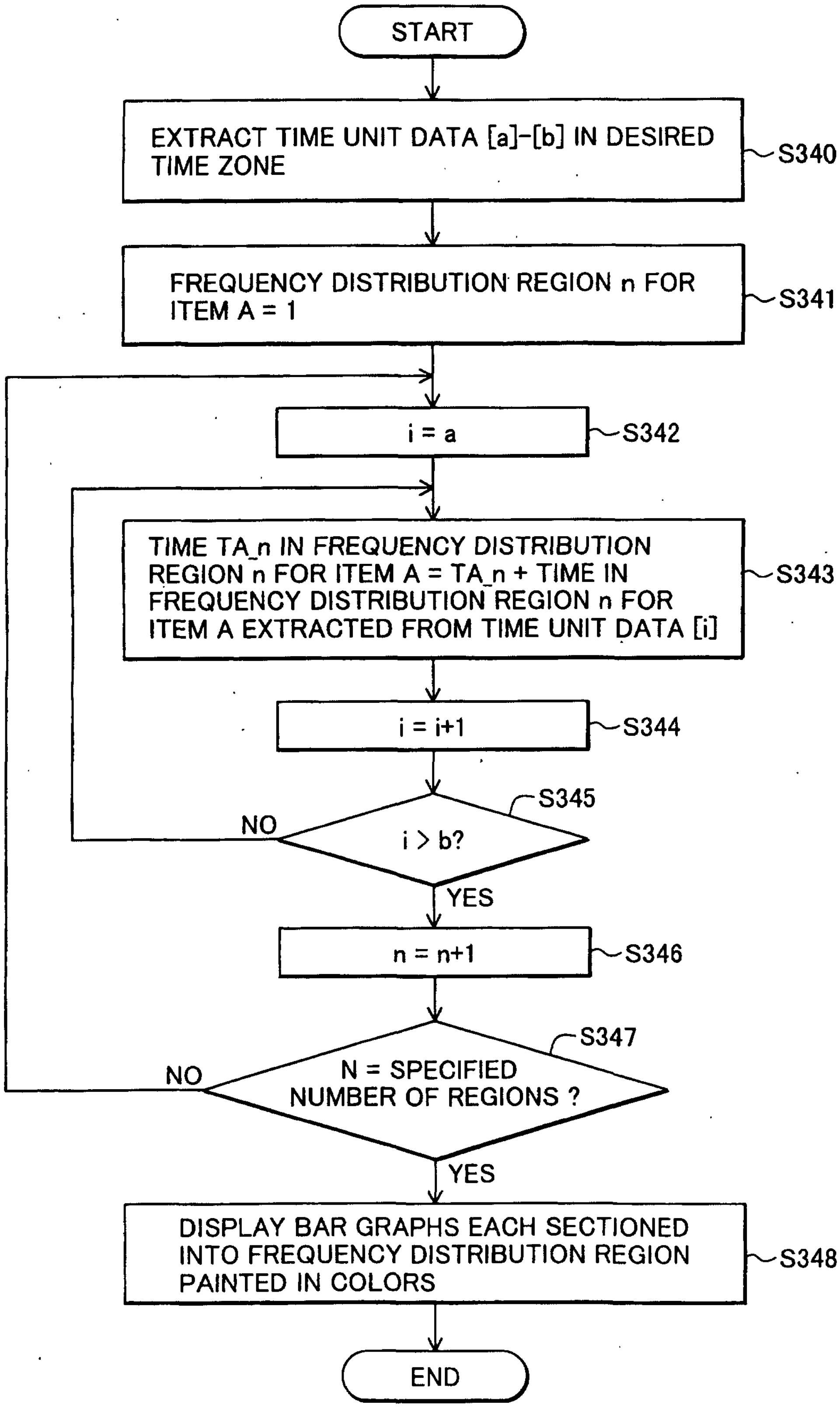
START
EXTRACT TIME UNIT DATA [a]-[b] IN DESIRED TIME ZONE
S340
FREQUENCY DISTRIBUTION REGION n FOR ITEM A = 1
S341
i = a
S342
TIME TA_n IN FREQUENCY DISTRIBUTION REGION n FOR ITEM A = TA_n + TIME IN FREQUENCY DISTRIBUTION REGION n FOR ITEM A EXTRACTED FROM TIME UNIT DATA [i]
S343
i = i+1
S344
S345
i > b?
NO
YES
n = n+1
S346
S347
N = SPECIFIED NUMBER OF REGIONS ?
NO
YES
DISPLAY BAR GRAPHS EACH SECTIONED INTO FREQUENCY DISTRIBUTION REGION PAINTED IN COLORS
S348
END

*FIG.50*

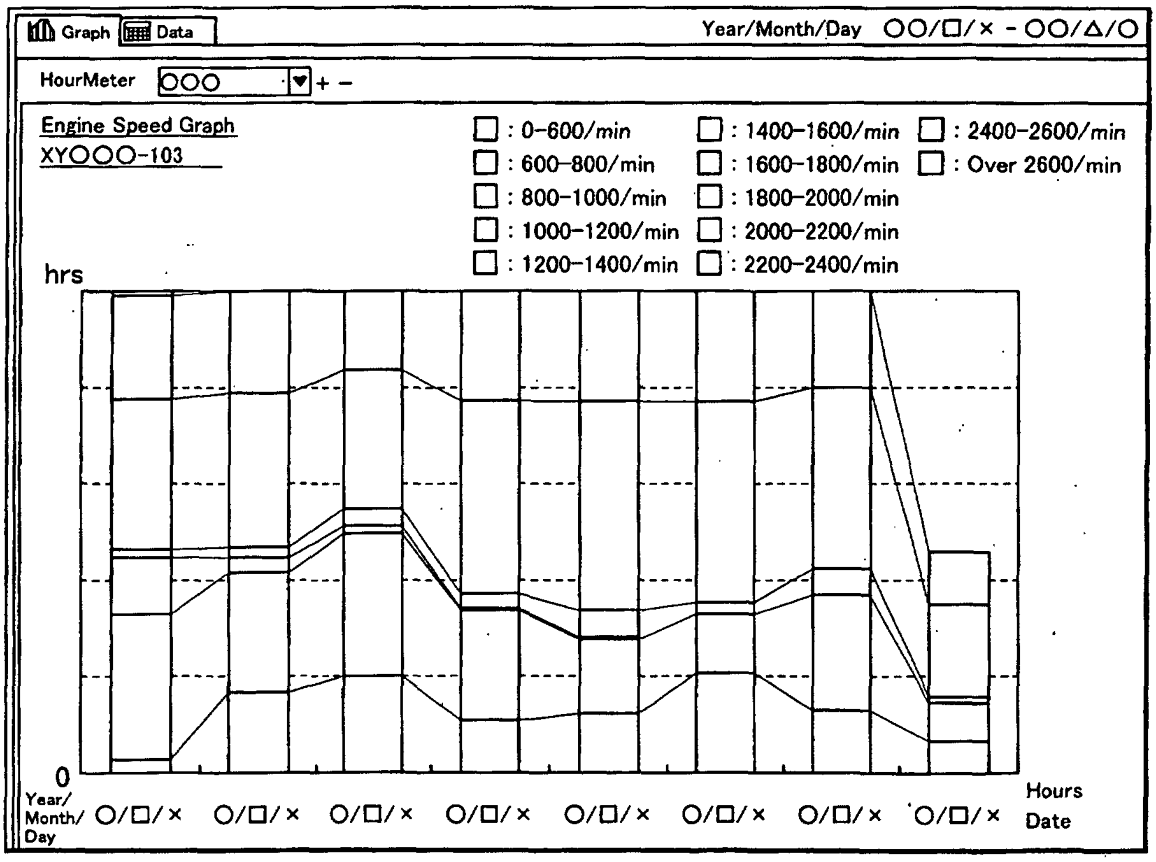
Graph
Data
Year/Month/Day ○○/□/× - ○○/△/○
HourMeter ○○○ + -
Engine Speed Graph
XY○○○-103
□ : 0-600/min
□ : 600-800/min
□ : 800-1000/min
□ : 1000-1200/min
□ : 1200-1400/min
□ : 1400-1600/min
□ : 1600-1800/min
□ : 1800-2000/min
□ : 2000-2200/min
□ : 2200-2400/min
□ : 2400-2600/min
□ : Over 2600/min
hrs
0
Year/Month/Day ○/□/× ○/□/× ○/□/× ○/□/× ○/□/× ○/□/× ○/□/× ○/□/×
Hours
Date

# FIG.51

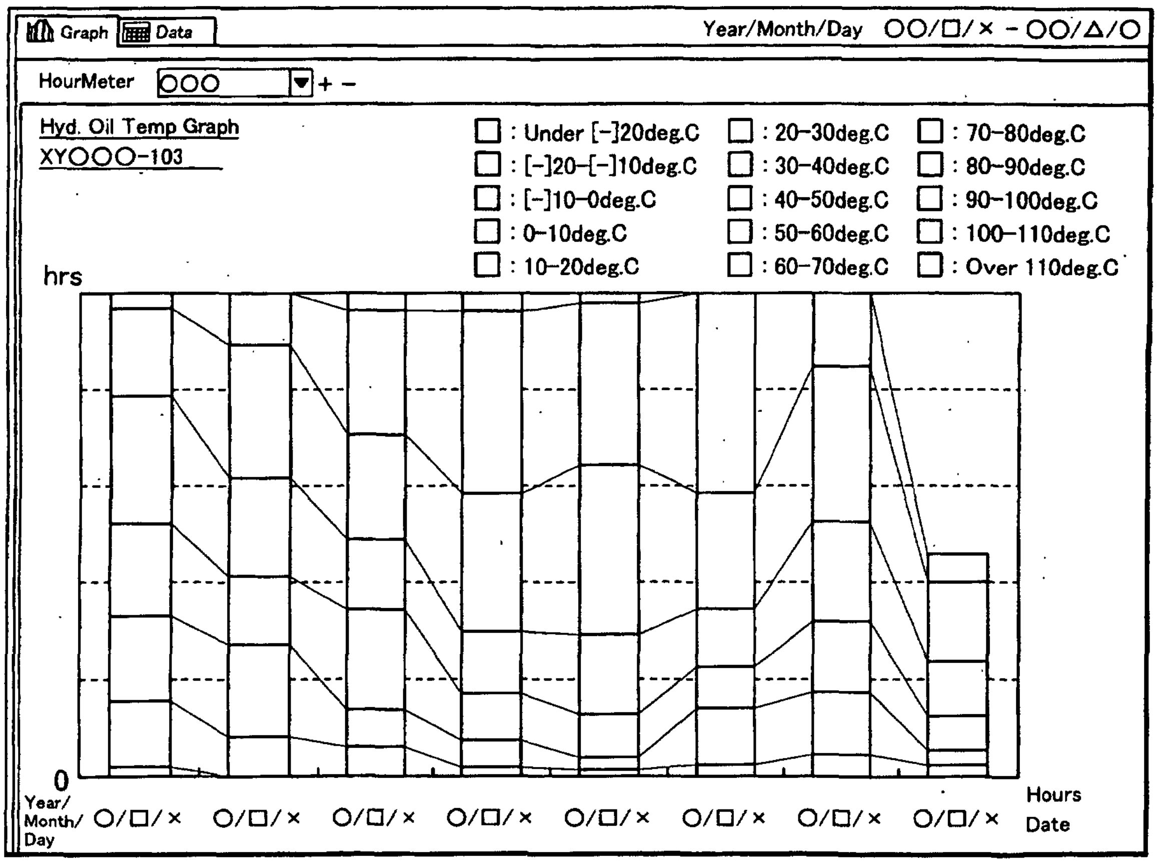

Graph
Data
Year/Month/Day ○○/□/× - ○○/△/○
HourMeter ○○○ + -
Hyd. Oil Temp Graph
XY○○○-103
□ : Under [-]20deg.C
□ : [-]20-[-]10deg.C
□ : [-]10-0deg.C
□ : 0-10deg.C
□ : 10-20deg.C
□ : 20-30deg.C
□ : 30-40deg.C
□ : 40-50deg.C
□ : 50-60deg.C
□ : 60-70deg.C
□ : 70-80deg.C
□ : 80-90deg.C
□ : 90-100deg.C
□ : 100-110deg.C
□ : Over 110deg.C
hrs
0
Year/Month/Day
○/□/×
○/□/×
○/□/×
○/□/×
○/□/×
○/□/×
○/□/×
○/□/×
Hours
Date

# FIG.52

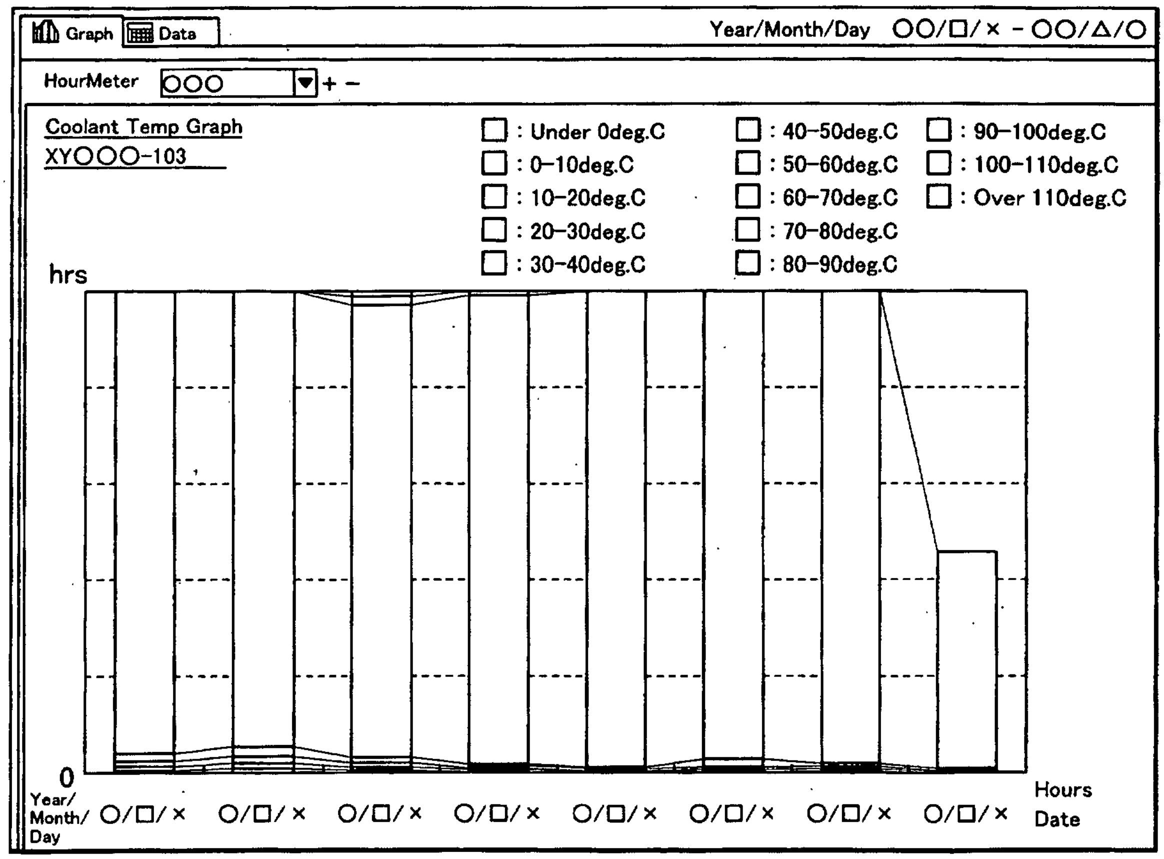
Graph
Data
Year/Month/Day OO/□/× - OO/Δ/O
HourMeter OOO
+ −
Coolant Temp Graph
XYOOO-103
□ : Under 0deg.C
□ : 0-10deg.C
□ : 10-20deg.C
□ : 20-30deg.C
□ : 30-40deg.C
□ : 40-50deg.C
□ : 50-60deg.C
□ : 60-70deg.C
□ : 70-80deg.C
□ : 80-90deg.C
□ : 90-100deg.C
□ : 100-110deg.C
□ : Over 110deg.C
hrs
0
Year/Month/Day
O/□/× O/□/× O/□/× O/□/× O/□/× O/□/× O/□/× O/□/×
Hours
Date

# FIG.53

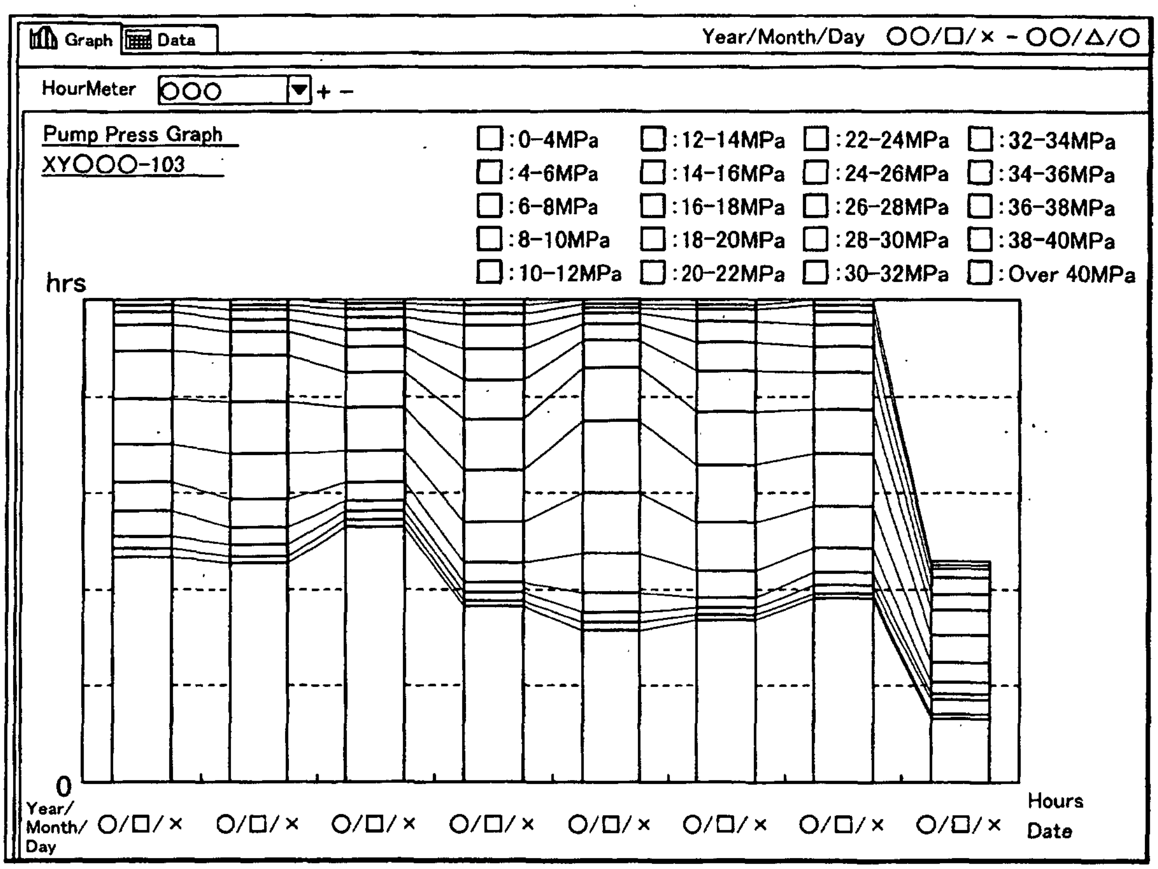
Graph
Data
Year/Month/Day ○○/□/× - ○○/△/○
HourMeter ○○○ + −
Pump Press Graph
XY○○○-103
□:0-4MPa
□:4-6MPa
□:6-8MPa
□:8-10MPa
□:10-12MPa
□:12-14MPa
□:14-16MPa
□:16-18MPa
□:18-20MPa
□:20-22MPa
□:22-24MPa
□:24-26MPa
□:26-28MPa
□:28-30MPa
□:30-32MPa
□:32-34MPa
□:34-36MPa
□:36-38MPa
□:38-40MPa
□:Over 40MPa
hrs
0
Year/ Month/ Day
○/□/×
○/□/×
○/□/×
○/□/×
○/□/×
○/□/×
○/□/×
○/□/×
Hours
Date

# FIG.54

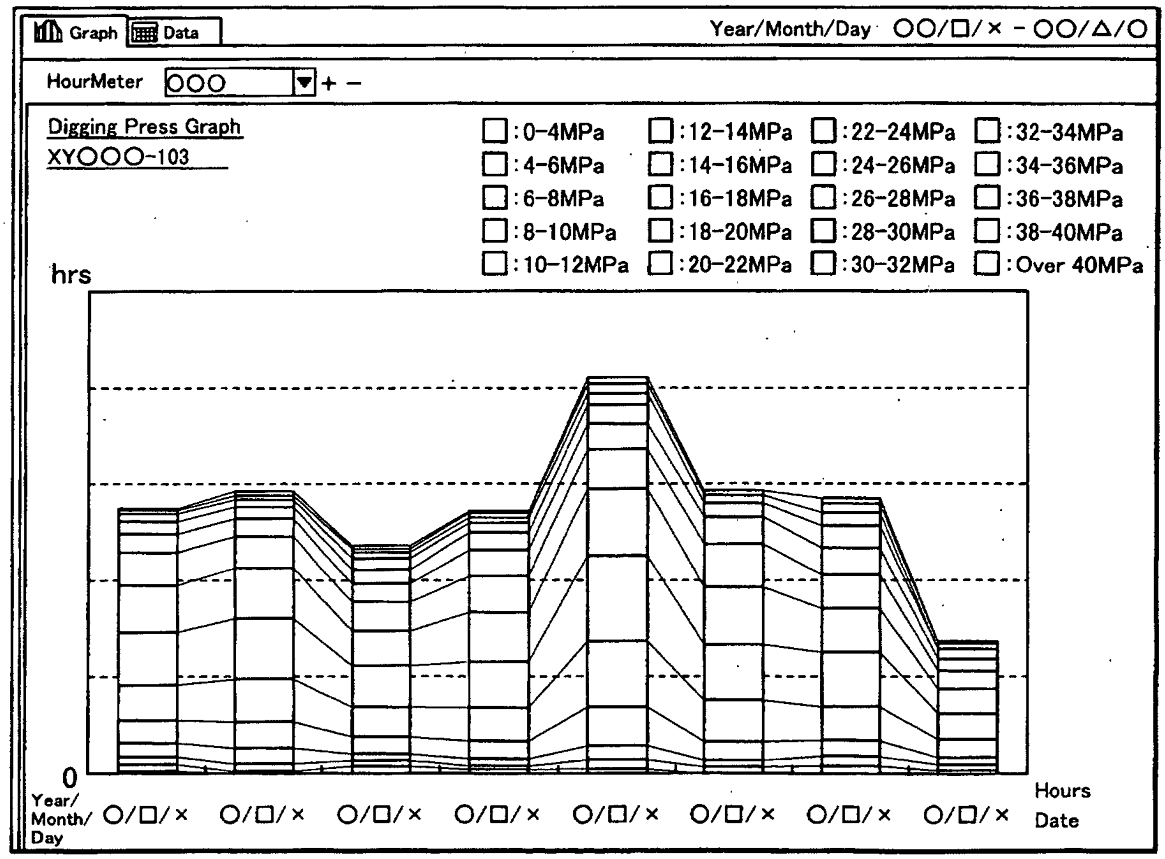

Graph
Data
Year/Month/Day OO/□/× - OO/△/O
HourMeter OOO
+ −
Digging Press Graph
XYOOO-103
□:0-4MPa
□:4-6MPa
□:6-8MPa
□:8-10MPa
□:10-12MPa
□:12-14MPa
□:14-16MPa
□:16-18MPa
□:18-20MPa
□:20-22MPa
□:22-24MPa
□:24-26MPa
□:26-28MPa
□:28-30MPa
□:30-32MPa
□:32-34MPa
□:34-36MPa
□:36-38MPa
□:38-40MPa
□:Over 40MPa
hrs
0
Year/Month/Day
O/□/× O/□/× O/□/× O/□/× O/□/× O/□/× O/□/× O/□/×
Hours
Date

# FIG.55

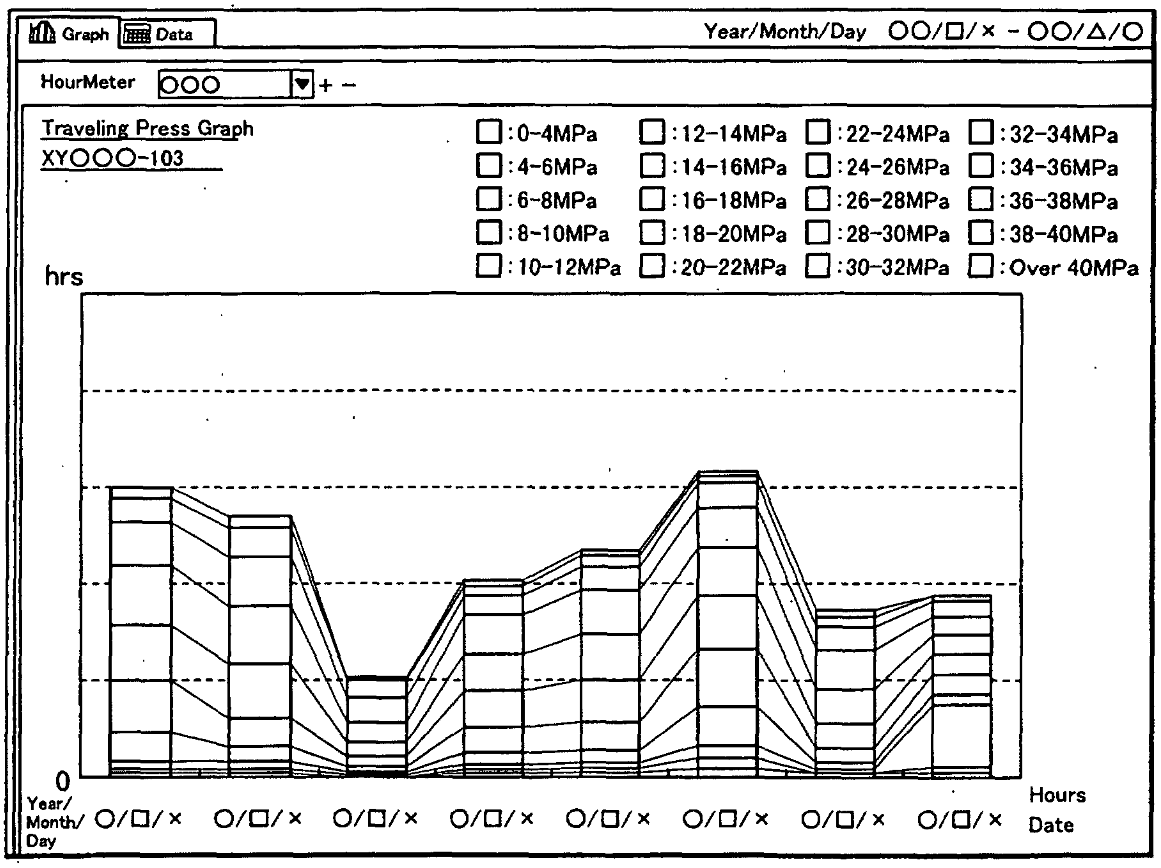

Graph
Data
Year/Month/Day ○○/□/× - ○○/△/○
HourMeter ○○○ + -
Traveling Press Graph
XY○○○-103
□ : 0-4MPa
□ : 4-6MPa
□ : 6-8MPa
□ : 8-10MPa
□ : 10-12MPa
□ : 12-14MPa
□ : 14-16MPa
□ : 16-18MPa
□ : 18-20MPa
□ : 20-22MPa
□ : 22-24MPa
□ : 24-26MPa
□ : 26-28MPa
□ : 28-30MPa
□ : 30-32MPa
□ : 32-34MPa
□ : 34-36MPa
□ : 36-38MPa
□ : 38-40MPa
□ : Over 40MPa
hrs
0
Year/Month/Day
○/□/× ○/□/× ○/□/× ○/□/× ○/□/× ○/□/× ○/□/× ○/□/×
Hours
Date

FIG.56

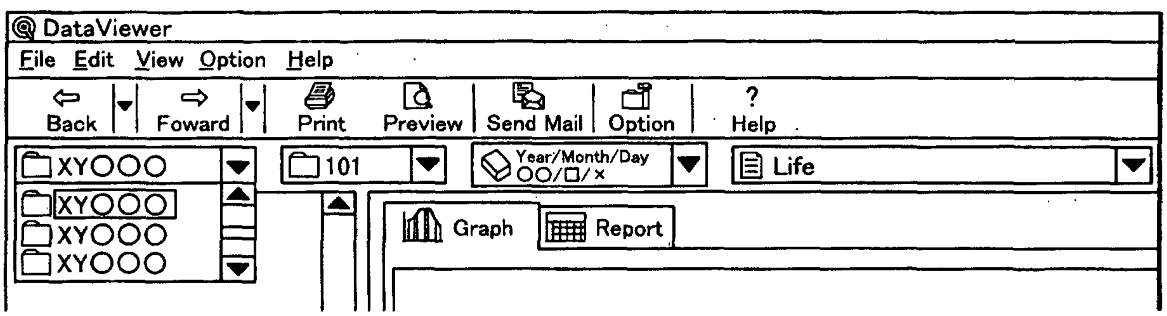
DataViewer
File Edit View Option Help
Back
Foward
Print
Preview
Send Mail
Option
?
Help
XY○○○
101
Year/Month/Day
○○/□/×
Life
XY○○○
XY○○○
XY○○○
Graph
Report

FIG.57

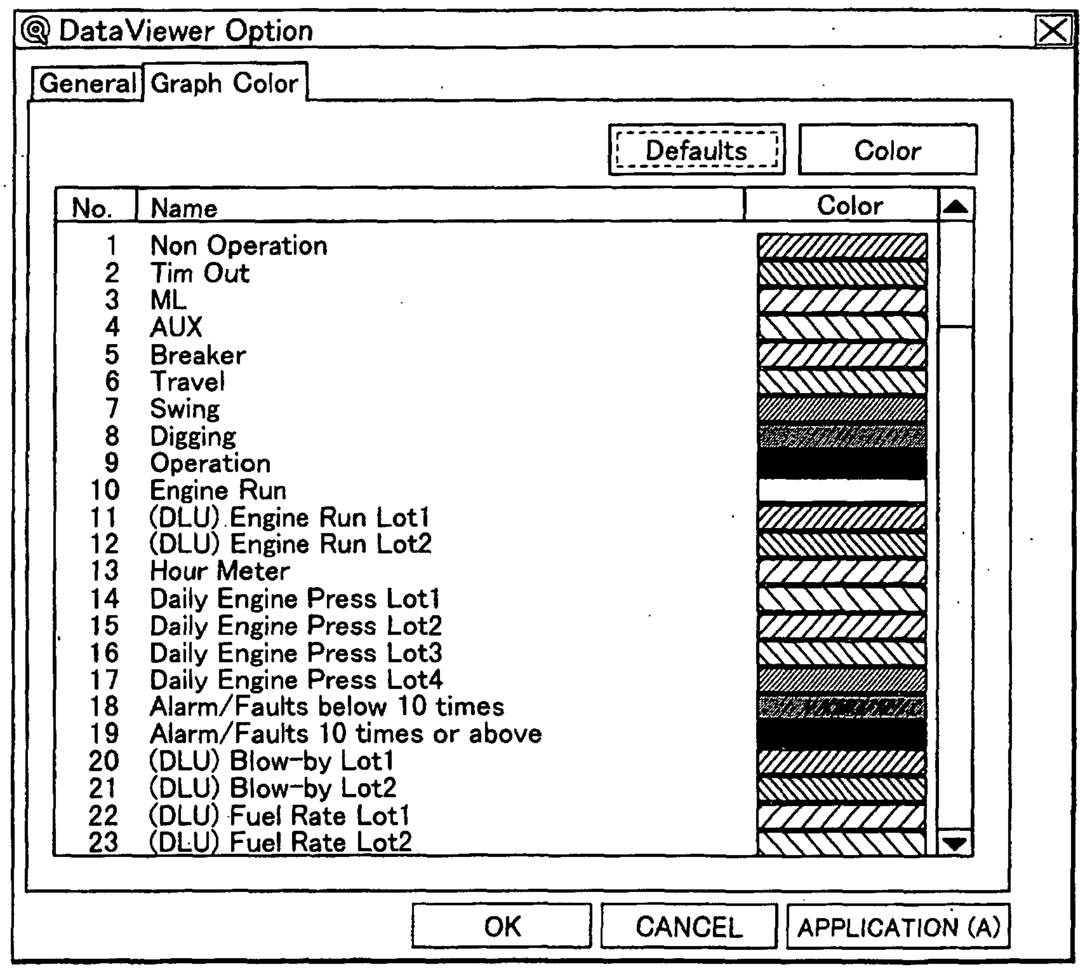
DataViewer Option
General
Graph Color
Defaults
Color
No.
Name
Color
1 Non Operation
2 Tim Out
3 ML
4 AUX
5 Breaker
6 Travel
7 Swing
8 Digging
9 Operation
10 Engine Run
11 (DLU) Engine Run Lot1
12 (DLU) Engine Run Lot2
13 Hour Meter
14 Daily Engine Press Lot1
15 Daily Engine Press Lot2
16 Daily Engine Press Lot3
17 Daily Engine Press Lot4
18 Alarm/Faults below 10 times
19 Alarm/Faults 10 times or above
20 (DLU) Blow-by Lot1
21 (DLU) Blow-by Lot2
22 (DLU) Fuel Rate Lot1
23 (DLU) Fuel Rate Lot2
OK
CANCEL
APPLICATION (A)

FIG.58

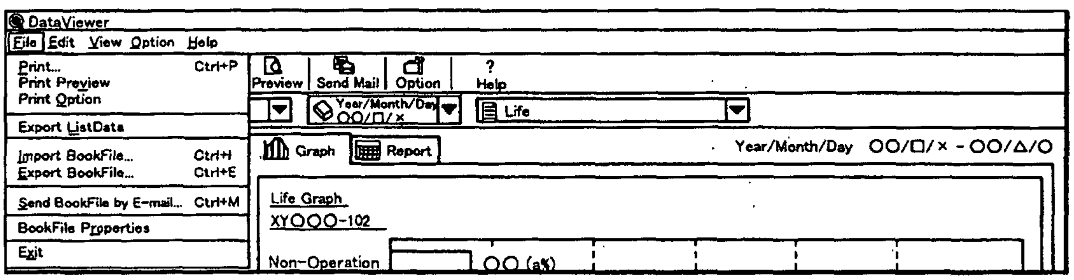
DataViewer
File Edit View Option Help
Print... Ctrl+P
Print Preview
Print Option
Export ListData
Import BookFile... Ctrl+I
Export BookFile... Ctrl+E
Send BookFile by E-mail... Ctrl+M
BookFile Properties
Exit
Preview
Send Mail
Option
Help
Year/Month/Day
Life
Graph
Report
Year/Month/Day
Life Graph
XYOOO-102
Non-Operation

FIG.59

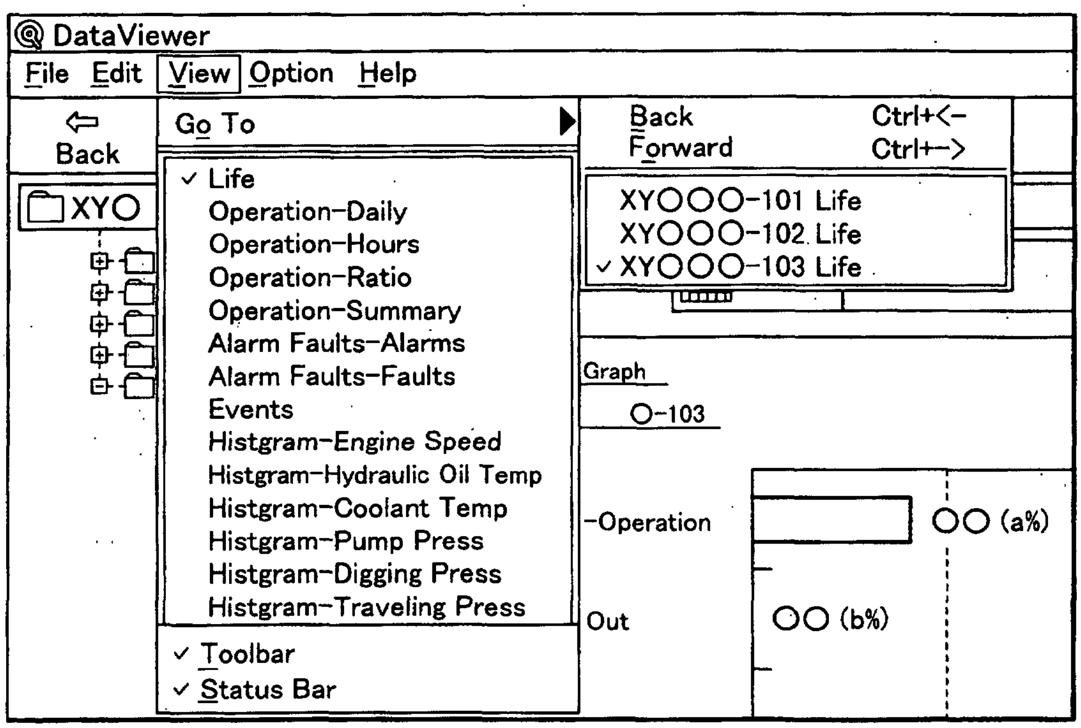
DataViewer
File Edit View Option Help
Back
Go To
Back Ctrl+<-
Forward Ctrl+->
XYO
✓ Life
Operation-Daily
Operation-Hours
Operation-Ratio
Operation-Summary
Alarm Faults-Alarms
Alarm Faults-Faults
Events
Histgram-Engine Speed
Histgram-Hydraulic Oil Temp
Histgram-Coolant Temp
Histgram-Pump Press
Histgram-Digging Press
Histgram-Traveling Press
✓ Toolbar
✓ Status Bar
XYOOO-101 Life
XYOOO-102 Life
✓ XYOOO-103 Life
Graph
O-103
-Operation
OO (a%)
Out
OO (b%)

*FIG.60*

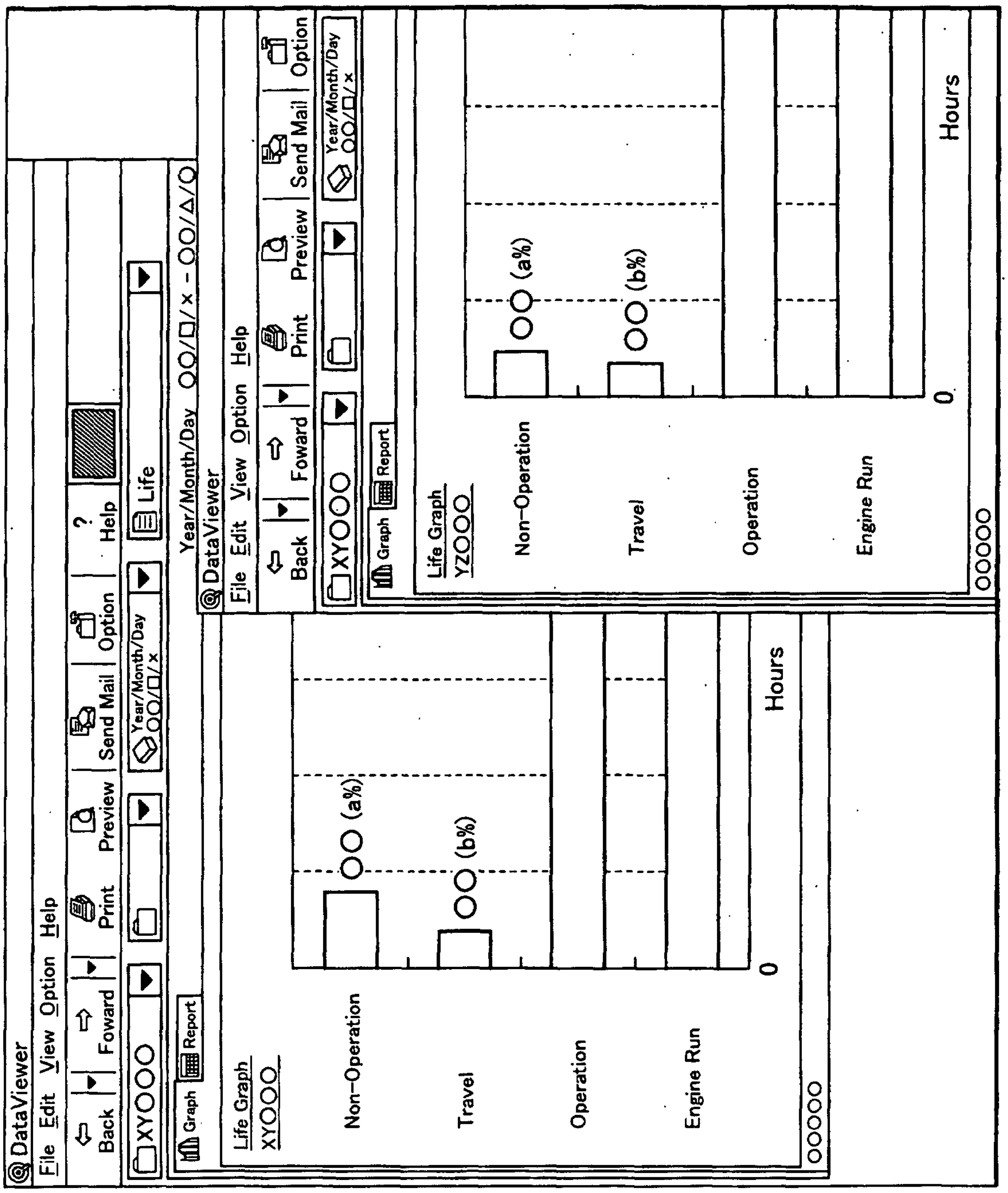
DataViewer
File Edit View Option Help
Back
Foward
Print
Preview
Send Mail
Option
Help
XYOOO
Year/Month/Day OO/□/x
Life
Year/Month/Day OO/□/x - OO/△/O
Graph
Report
Life Graph
XYOOO
Non-Operation
Travel
Operation
Engine Run
OO (a%)
OO (b%)
0
Hours
OOOOO
DataViewer
File Edit View Option Help
Back
Foward
Print
Preview
Send Mail
Option
XYOOO
Year/Month/Day OO/□/x
Graph
Report
Life Graph
YZOOO
Non-Operation
Travel
Operation
Engine Run
OO (a%)
OO (b%)
0
Hours
OOOOO

FIG.61

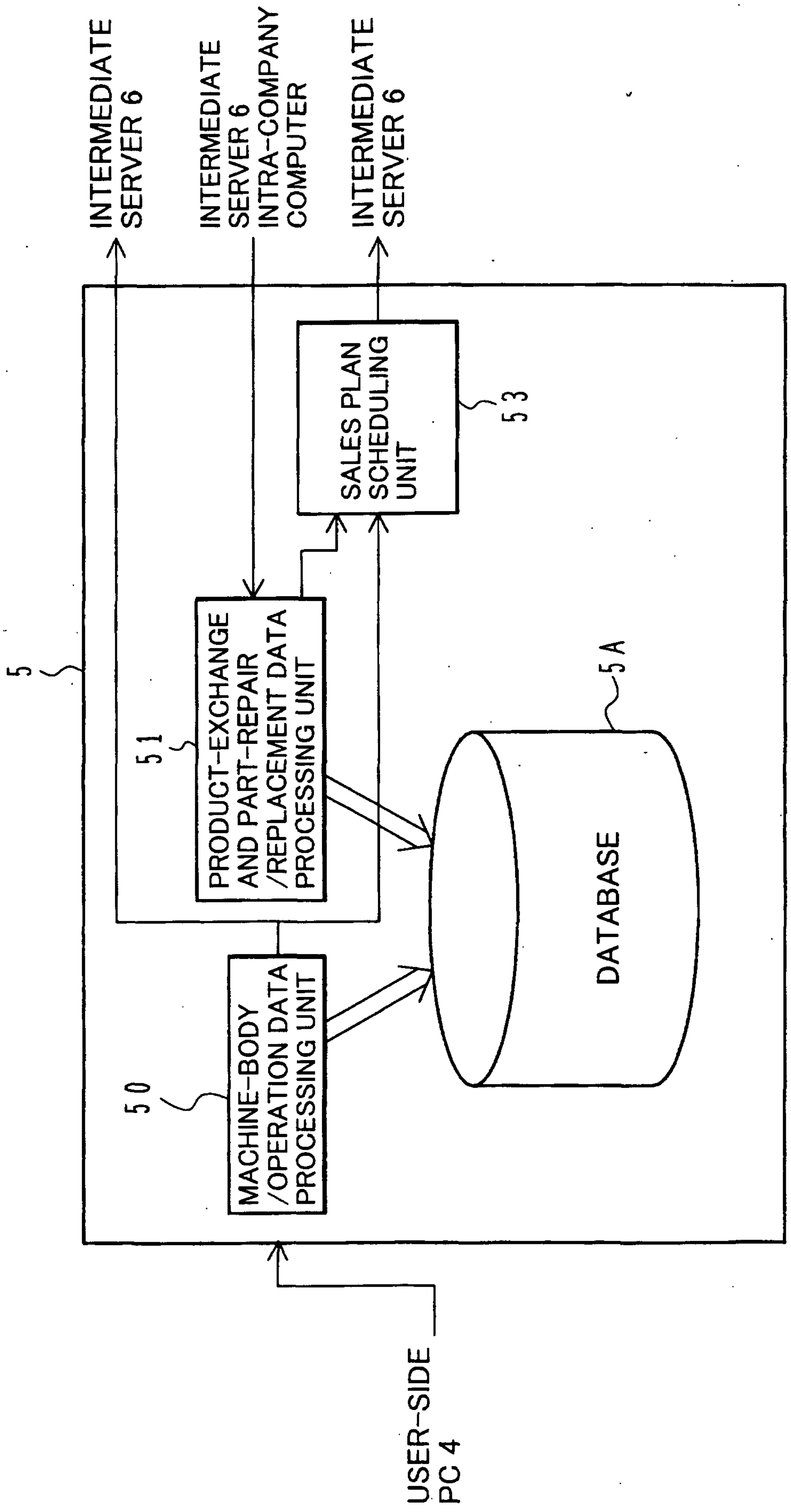
INTERMEDIATE SERVER 6
INTERMEDIATE SERVER 6 INTRA-COMPANY COMPUTER
INTERMEDIATE SERVER 6
5
SALES PLAN SCHEDULING UNIT
53
PRODUCT-EXCHANGE AND PART-REPAIR /REPLACEMENT DATA PROCESSING UNIT
51
5A
DATABASE
MACHINE-BODY /OPERATION DATA PROCESSING UNIT
50
USER-SIDE PC 4

# FIG.62

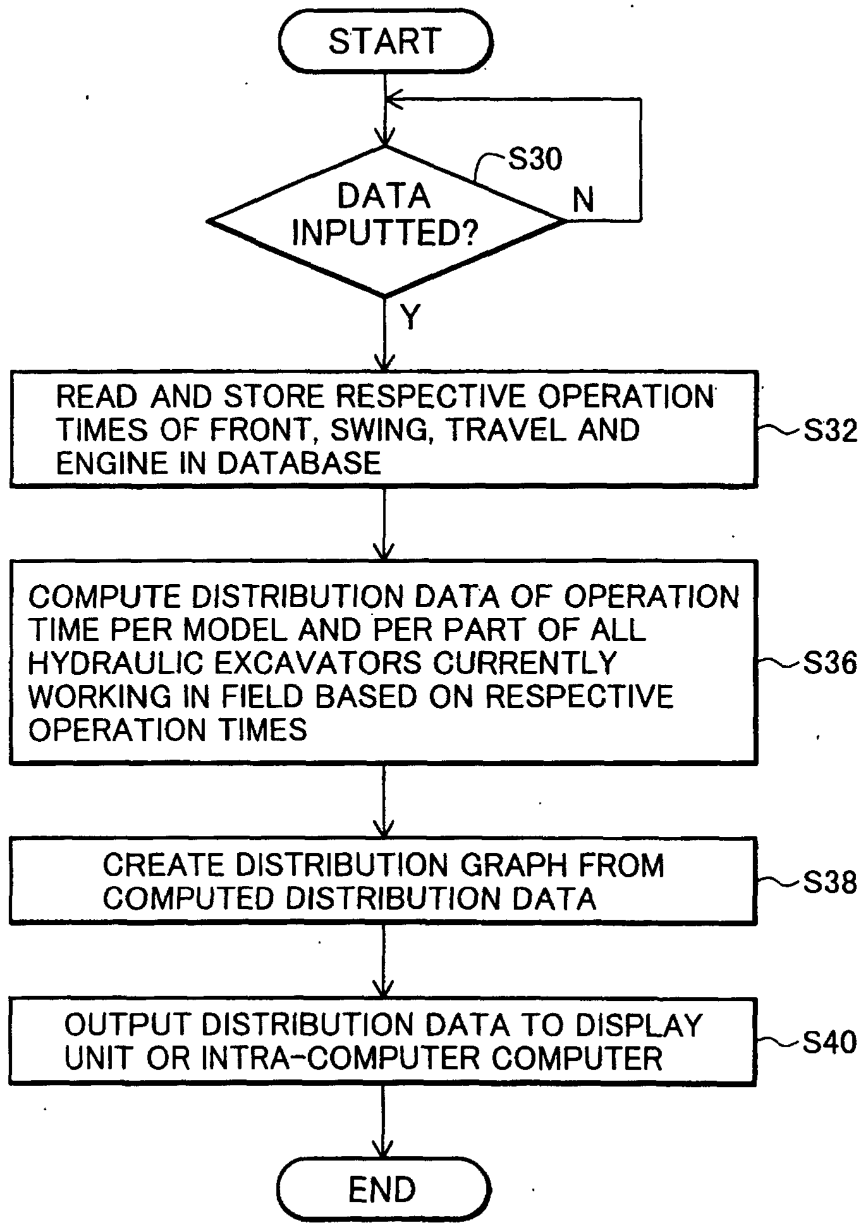
START
S30
DATA INPUTTED?
N
Y
READ AND STORE RESPECTIVE OPERATION TIMES OF FRONT, SWING, TRAVEL AND ENGINE IN DATABASE
S32
COMPUTE DISTRIBUTION DATA OF OPERATION TIME PER MODEL AND PER PART OF ALL HYDRAULIC EXCAVATORS CURRENTLY WORKING IN FIELD BASED ON RESPECTIVE OPERATION TIMES
S36
CREATE DISTRIBUTION GRAPH FROM COMPUTED DISTRIBUTION DATA
S38
OUTPUT DISTRIBUTION DATA TO DISPLAY UNIT OR INTRA-COMPUTER COMPUTER
S40
END

# FIG.63

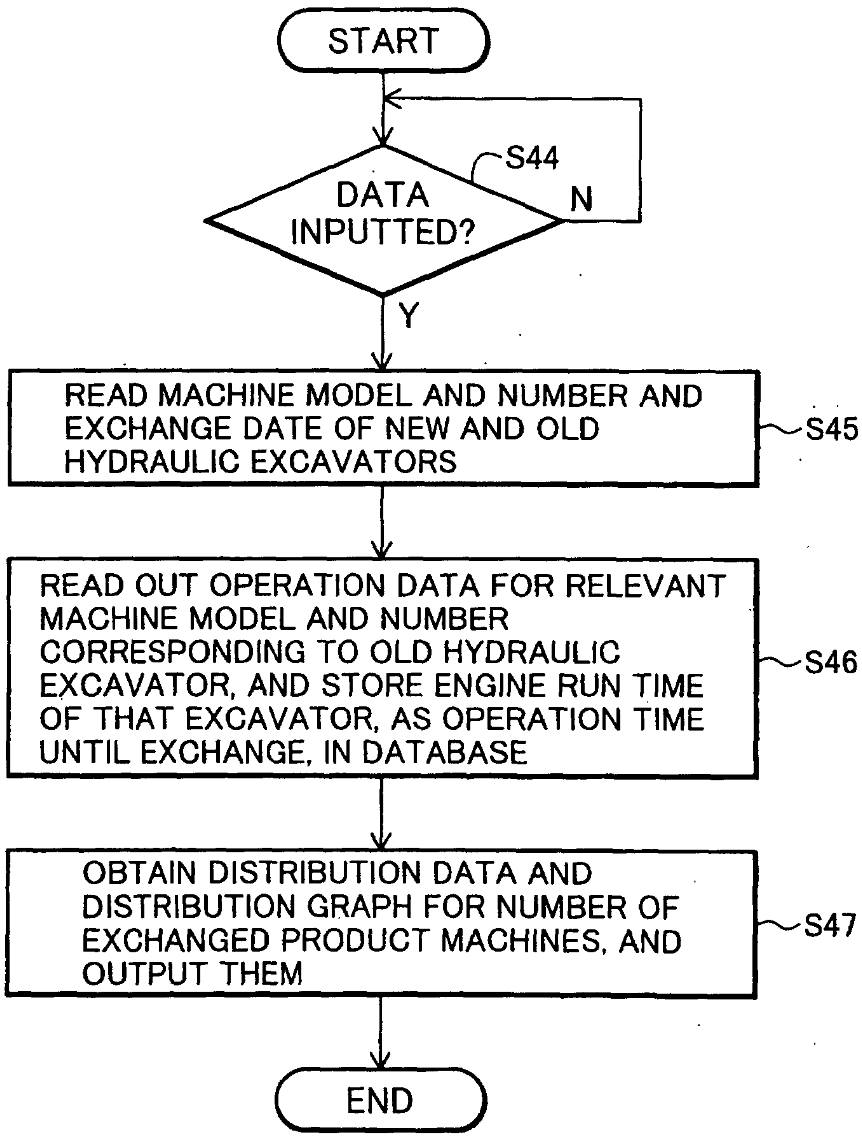
START
DATA INPUTTED?
S44
N
Y
READ MACHINE MODEL AND NUMBER AND EXCHANGE DATE OF NEW AND OLD HYDRAULIC EXCAVATORS
S45
READ OUT OPERATION DATA FOR RELEVANT MACHINE MODEL AND NUMBER CORRESPONDING TO OLD HYDRAULIC EXCAVATOR, AND STORE ENGINE RUN TIME OF THAT EXCAVATOR, AS OPERATION TIME UNTIL EXCHANGE, IN DATABASE
S46
OBTAIN DISTRIBUTION DATA AND DISTRIBUTION GRAPH FOR NUMBER OF EXCHANGED PRODUCT MACHINES, AND OUTPUT THEM
S47
END

FIG.64

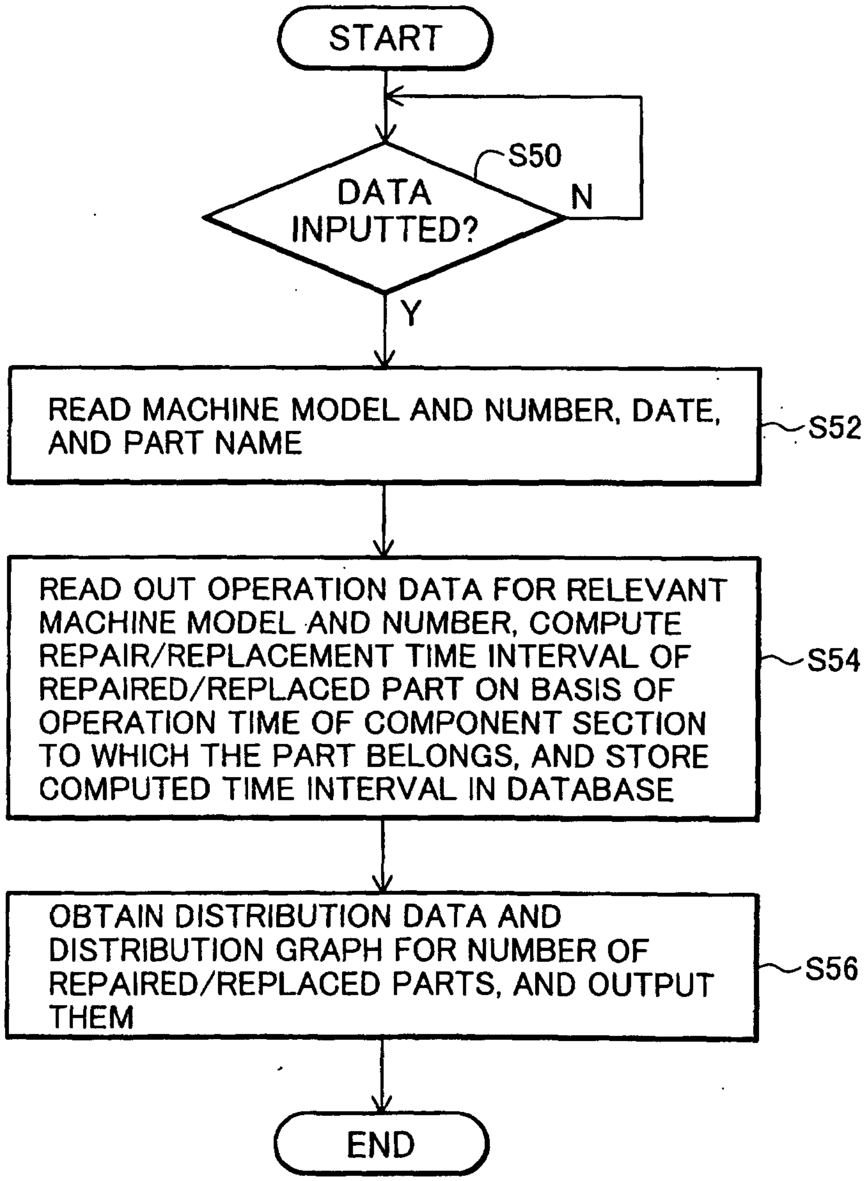
START
S50
DATA INPUTTED?
N
Y
READ MACHINE MODEL AND NUMBER, DATE, AND PART NAME
S52
READ OUT OPERATION DATA FOR RELEVANT MACHINE MODEL AND NUMBER, COMPUTE REPAIR/REPLACEMENT TIME INTERVAL OF REPAIRED/REPLACED PART ON BASIS OF OPERATION TIME OF COMPONENT SECTION TO WHICH THE PART BELONGS, AND STORE COMPUTED TIME INTERVAL IN DATABASE
S54
OBTAIN DISTRIBUTION DATA AND DISTRIBUTION GRAPH FOR NUMBER OF REPAIRED/REPLACED PARTS, AND OUTPUT THEM
S56
END

FIG.65

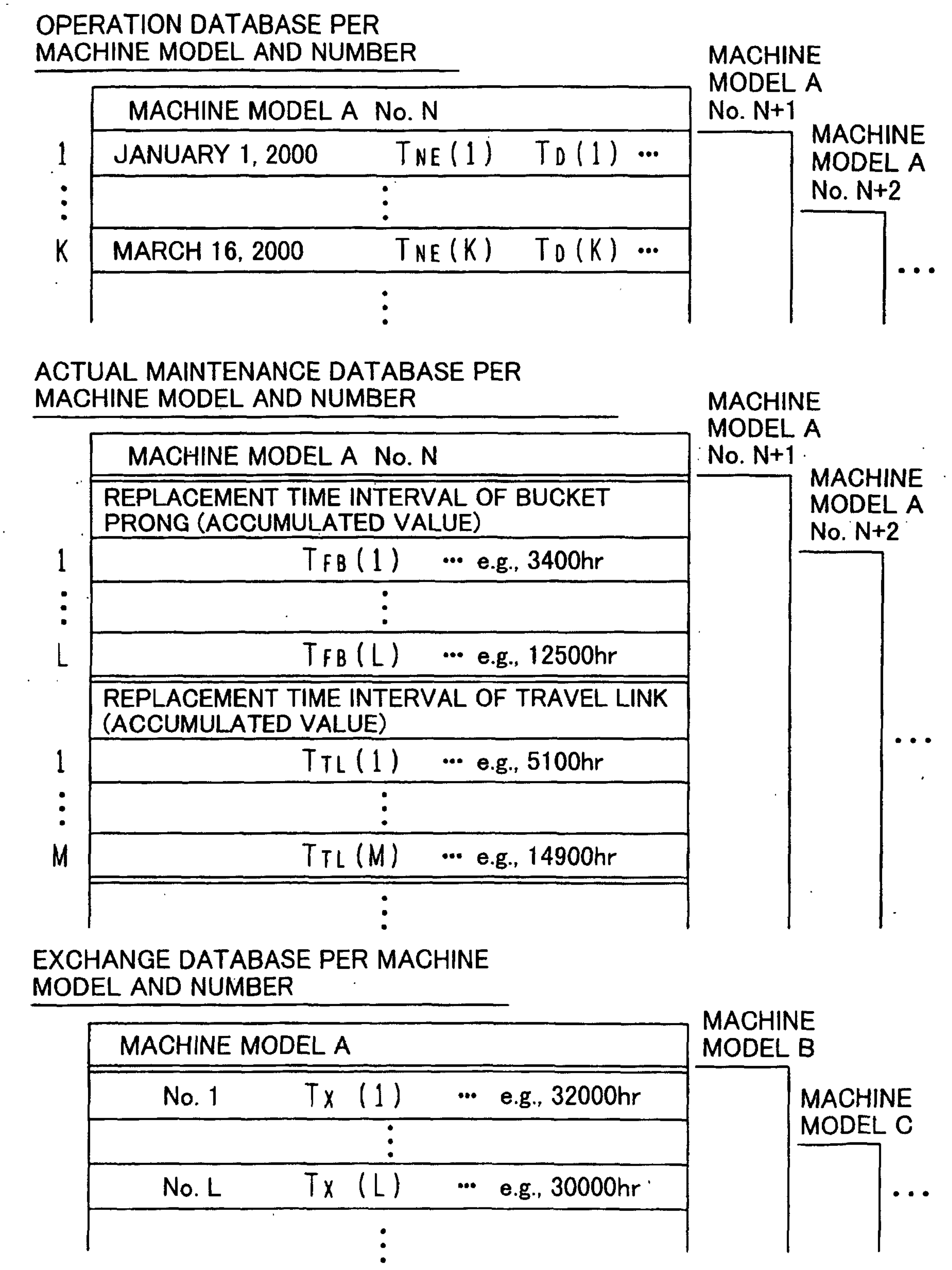
OPERATION DATABASE PER MACHINE MODEL AND NUMBER
MACHINE MODEL A No. N
1 JANUARY 1, 2000 $T_{NE}(1)$ $T_D(1)$ ...
K MARCH 16, 2000 $T_{NE}(K)$ $T_D(K)$ ...
MACHINE MODEL A No. N+1
MACHINE MODEL A No. N+2
ACTUAL MAINTENANCE DATABASE PER MACHINE MODEL AND NUMBER
MACHINE MODEL A No. N
REPLACEMENT TIME INTERVAL OF BUCKET PRONG (ACCUMULATED VALUE)
1 $T_{FB}(1)$ ... e.g., 3400hr
L $T_{FB}(L)$ ... e.g., 12500hr
REPLACEMENT TIME INTERVAL OF TRAVEL LINK (ACCUMULATED VALUE)
1 $T_{TL}(1)$ ... e.g., 5100hr
M $T_{TL}(M)$ ... e.g., 14900hr
MACHINE MODEL A No. N+1
MACHINE MODEL A No. N+2
EXCHANGE DATABASE PER MACHINE MODEL AND NUMBER
MACHINE MODEL A
No. 1 $T_X(1)$ ... e.g., 32000hr
No. L $T_X(L)$ ... e.g., 30000hr
MACHINE MODEL B
MACHINE MODEL C

FIG.66

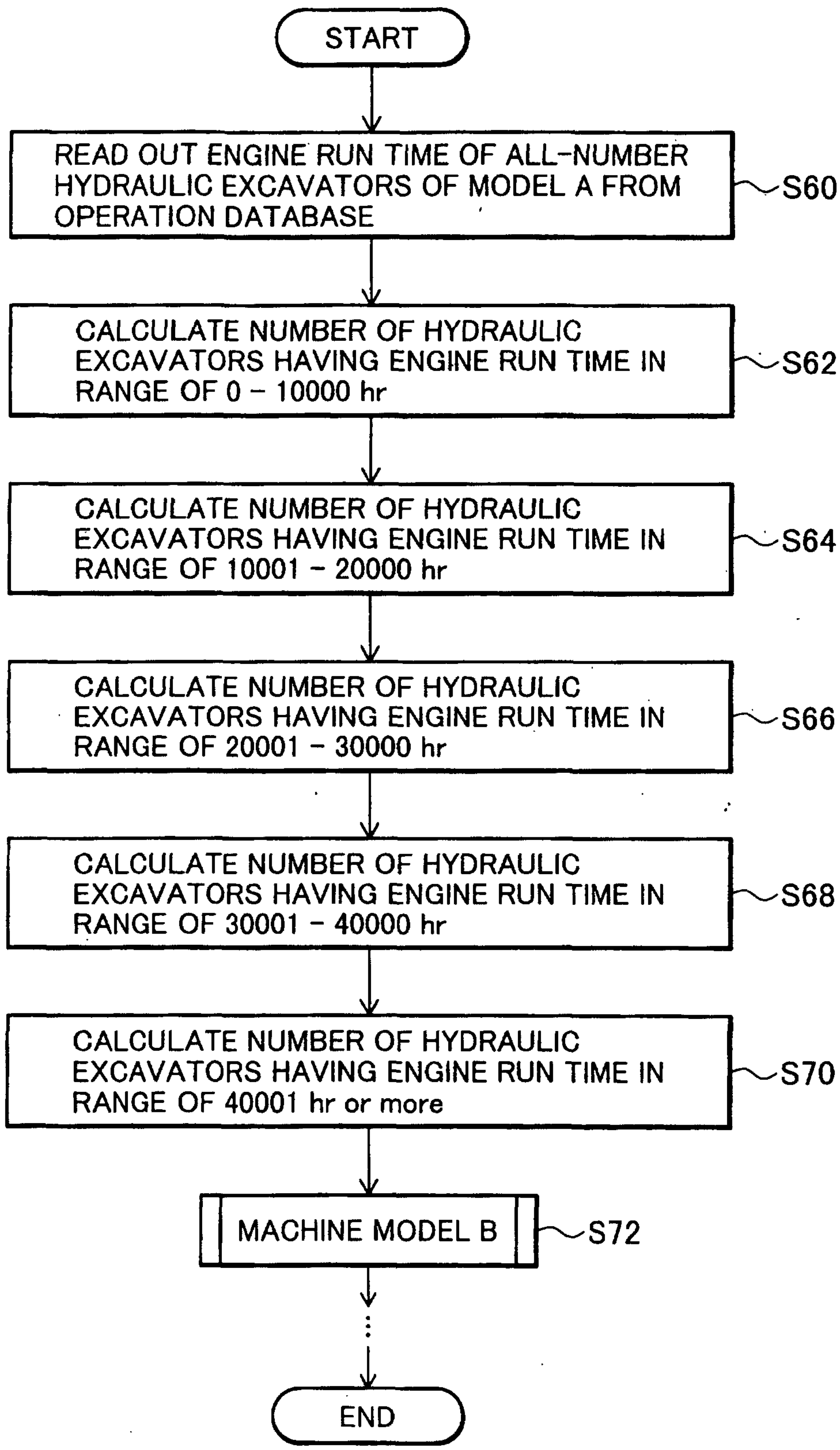
START
READ OUT ENGINE RUN TIME OF ALL-NUMBER HYDRAULIC EXCAVATORS OF MODEL A FROM OPERATION DATABASE
S60
CALCULATE NUMBER OF HYDRAULIC EXCAVATORS HAVING ENGINE RUN TIME IN RANGE OF 0 - 10000 hr
S62
CALCULATE NUMBER OF HYDRAULIC EXCAVATORS HAVING ENGINE RUN TIME IN RANGE OF 10001 - 20000 hr
S64
CALCULATE NUMBER OF HYDRAULIC EXCAVATORS HAVING ENGINE RUN TIME IN RANGE OF 20001 - 30000 hr
S66
CALCULATE NUMBER OF HYDRAULIC EXCAVATORS HAVING ENGINE RUN TIME IN RANGE OF 30001 - 40000 hr
S68
CALCULATE NUMBER OF HYDRAULIC EXCAVATORS HAVING ENGINE RUN TIME IN RANGE OF 40001 hr or more
S70
MACHINE MODEL B
S72
END

FIG.67

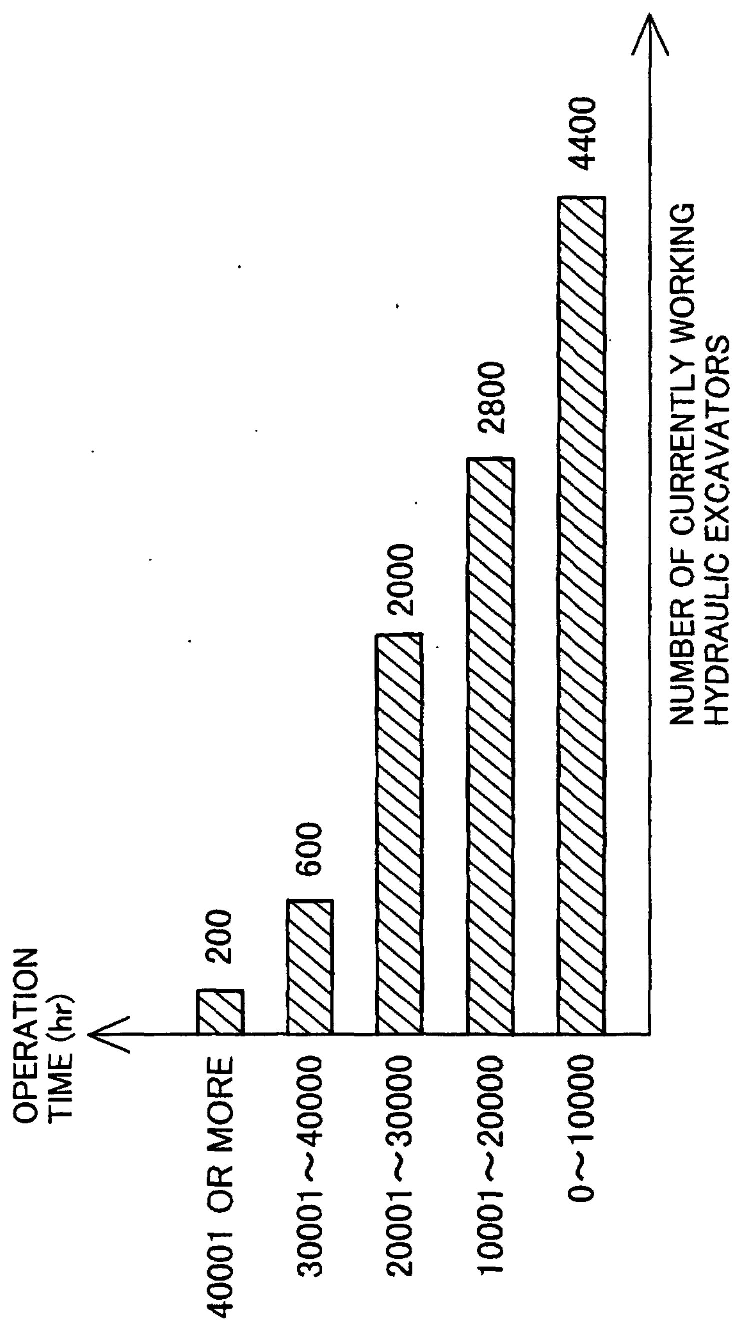
OPERATION TIME (hr)
40001 OR MORE
30001～40000
20001～30000
10001～20000
0～10000
200
600
2000
2800
4400
NUMBER OF CURRENTLY WORKING HYDRAULIC EXCAVATORS

FIG.68

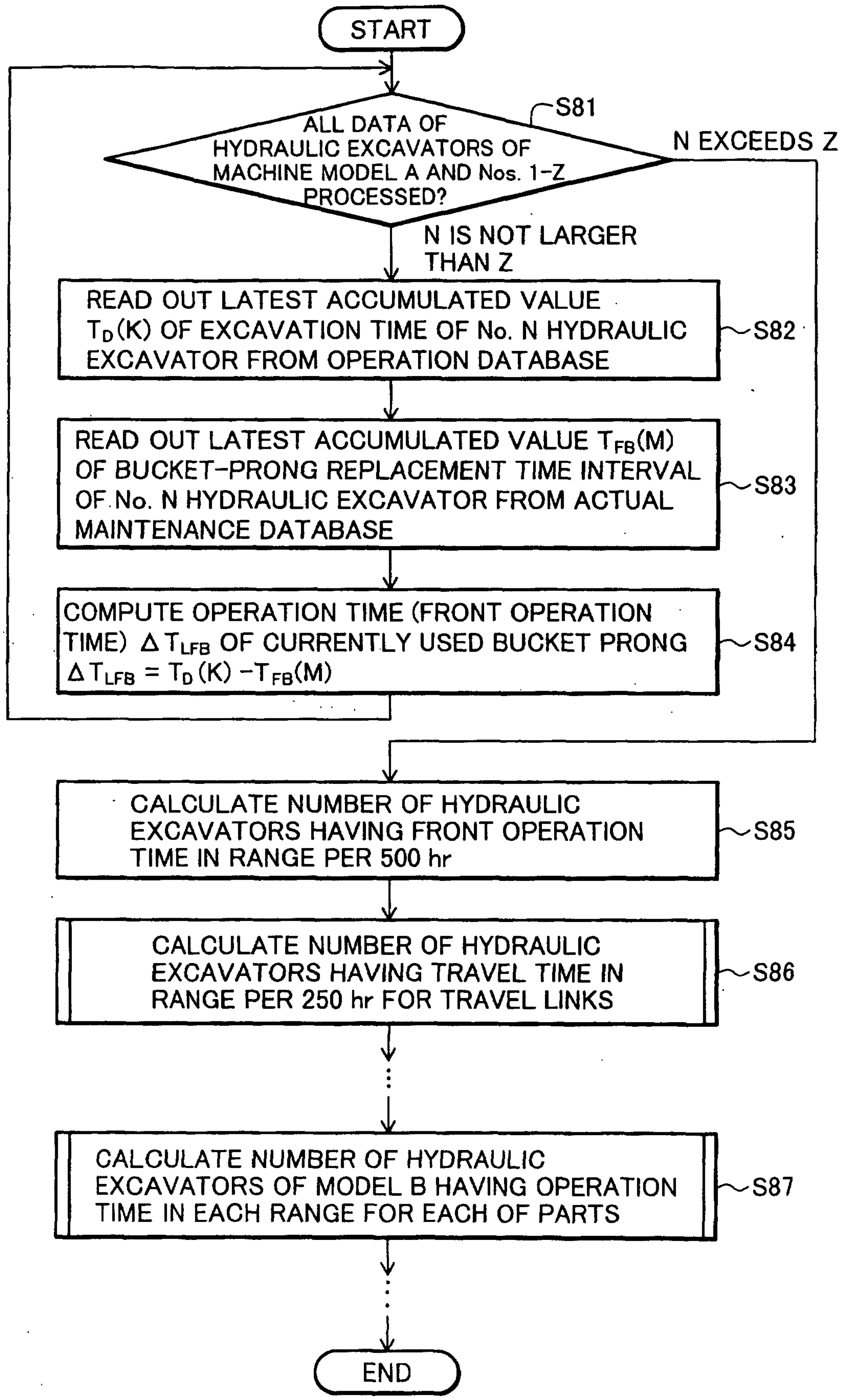
START
ALL DATA OF HYDRAULIC EXCAVATORS OF MACHINE MODEL A AND Nos. 1-Z PROCESSED?
S81
N EXCEEDS Z
N IS NOT LARGER THAN Z
READ OUT LATEST ACCUMULATED VALUE $T_D(K)$ OF EXCAVATION TIME OF No. N HYDRAULIC EXCAVATOR FROM OPERATION DATABASE
S82
READ OUT LATEST ACCUMULATED VALUE $T_{FB}(M)$ OF BUCKET-PRONG REPLACEMENT TIME INTERVAL OF No. N HYDRAULIC EXCAVATOR FROM ACTUAL MAINTENANCE DATABASE
S83
COMPUTE OPERATION TIME (FRONT OPERATION TIME) $\Delta T_{LFB}$ OF CURRENTLY USED BUCKET PRONG $\Delta T_{LFB} = T_D(K) - T_{FB}(M)$
S84
CALCULATE NUMBER OF HYDRAULIC EXCAVATORS HAVING FRONT OPERATION TIME IN RANGE PER 500 hr
S85
CALCULATE NUMBER OF HYDRAULIC EXCAVATORS HAVING TRAVEL TIME IN RANGE PER 250 hr FOR TRAVEL LINKS
S86
CALCULATE NUMBER OF HYDRAULIC EXCAVATORS OF MODEL B HAVING OPERATION TIME IN EACH RANGE FOR EACH OF PARTS
S87
END

FIG.69

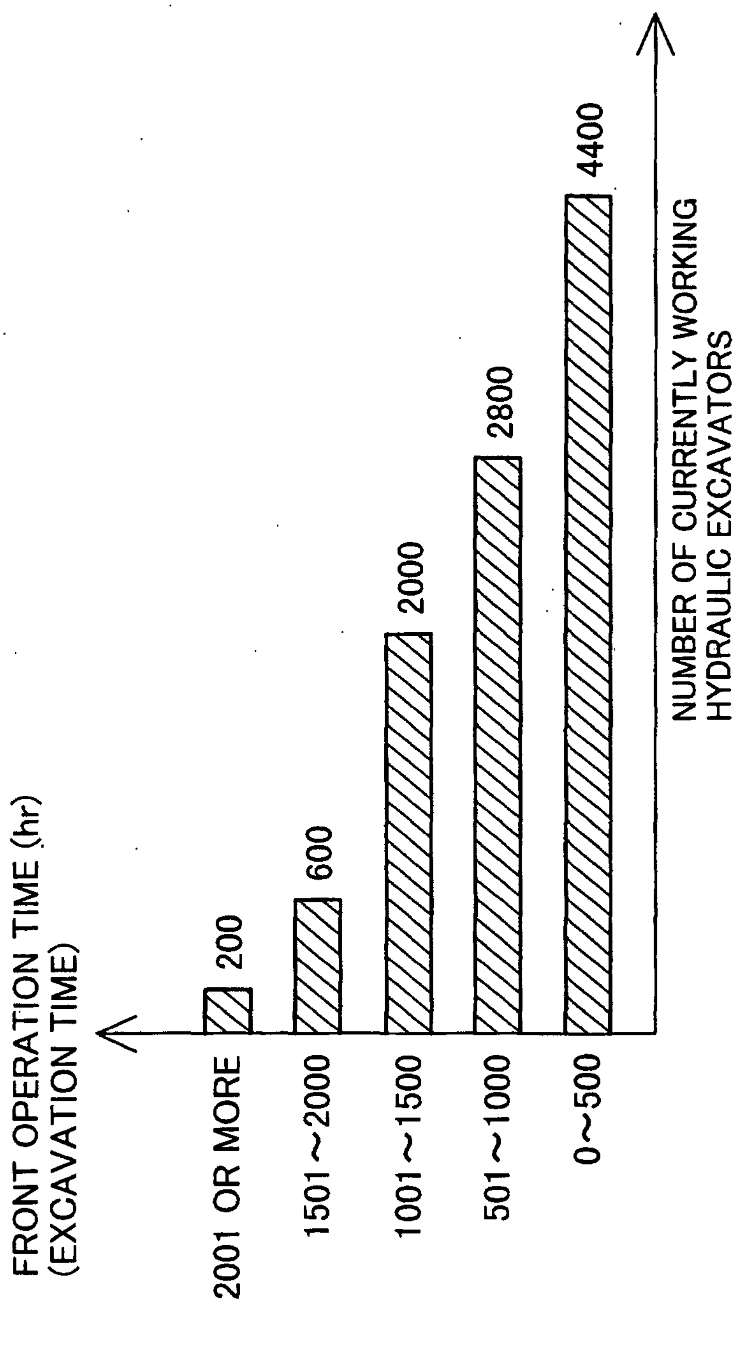
FRONT OPERATION TIME (hr)
(EXCAVATION TIME)
2001 OR MORE
1501～2000
1001～1500
501～1000
0～500
200
600
2000
2800
4400
NUMBER OF CURRENTLY WORKING
HYDRAULIC EXCAVATORS

*FIG.70*

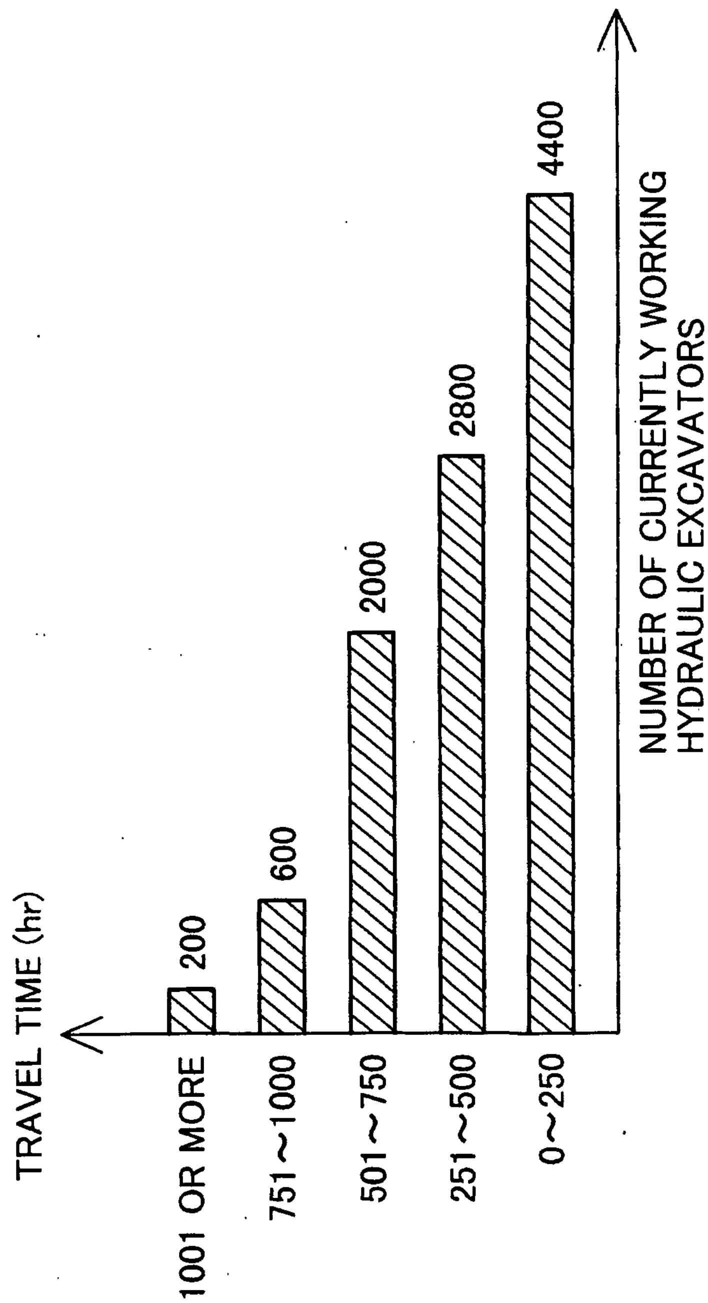

TRAVEL TIME (hr)
1001 OR MORE
751～1000
501～750
251～500
0～250
200
600
2000
2800
4400
NUMBER OF CURRENTLY WORKING HYDRAULIC EXCAVATORS

FIG.71

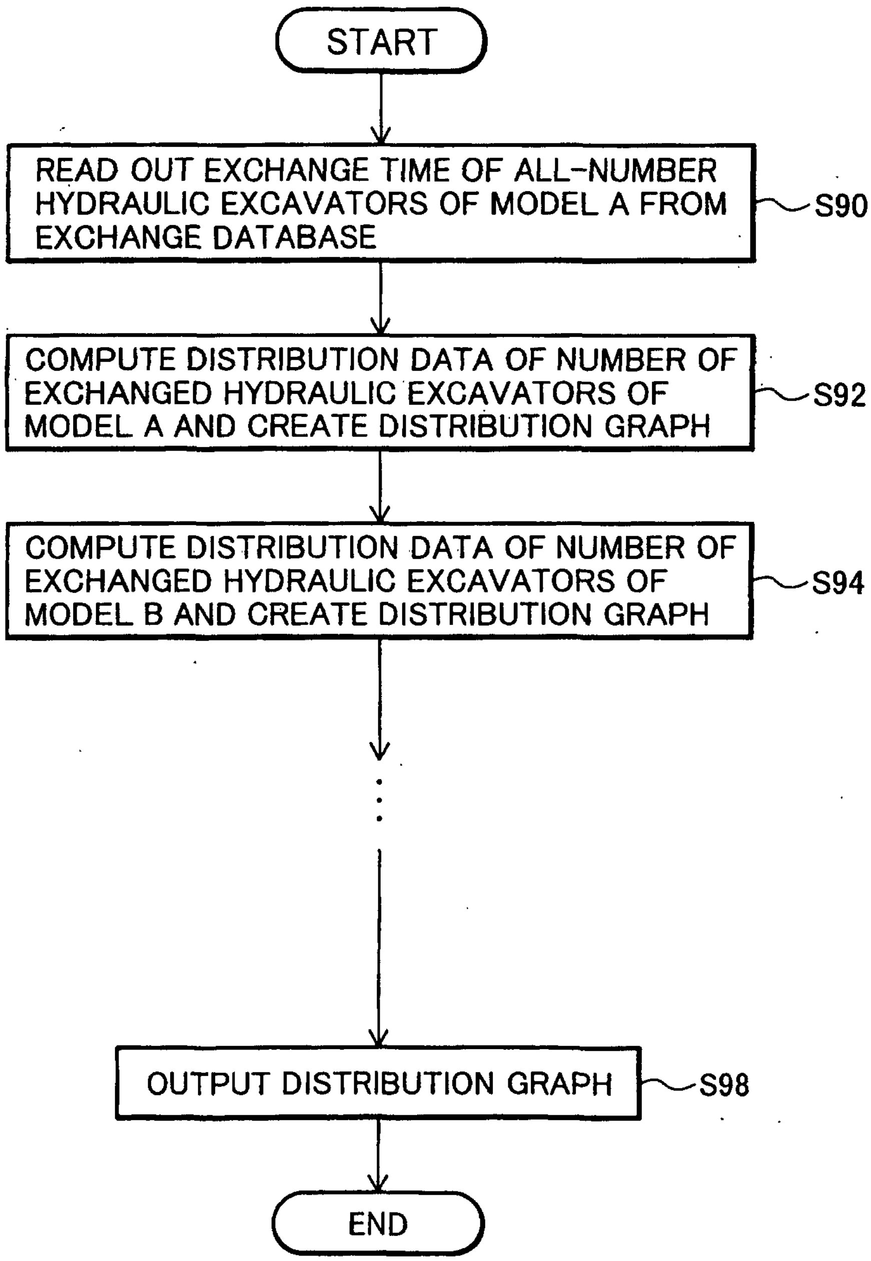
START
READ OUT EXCHANGE TIME OF ALL-NUMBER HYDRAULIC EXCAVATORS OF MODEL A FROM EXCHANGE DATABASE
S90
COMPUTE DISTRIBUTION DATA OF NUMBER OF EXCHANGED HYDRAULIC EXCAVATORS OF MODEL A AND CREATE DISTRIBUTION GRAPH
S92
COMPUTE DISTRIBUTION DATA OF NUMBER OF EXCHANGED HYDRAULIC EXCAVATORS OF MODEL B AND CREATE DISTRIBUTION GRAPH
S94
OUTPUT DISTRIBUTION GRAPH
S98
END

FIG.72

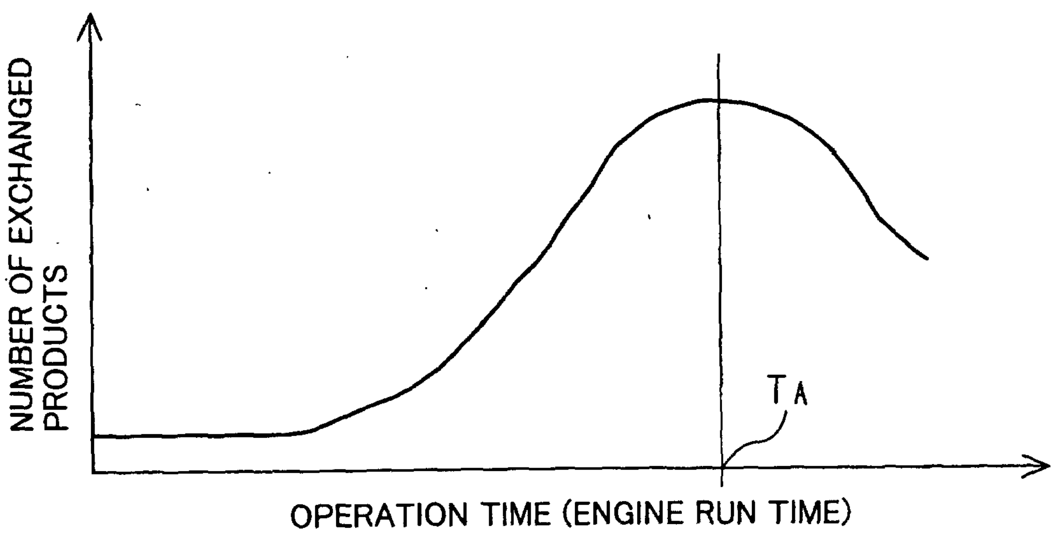
NUMBER OF EXCHANGED PRODUCTS
TA
OPERATION TIME (ENGINE RUN TIME)

FIG.73

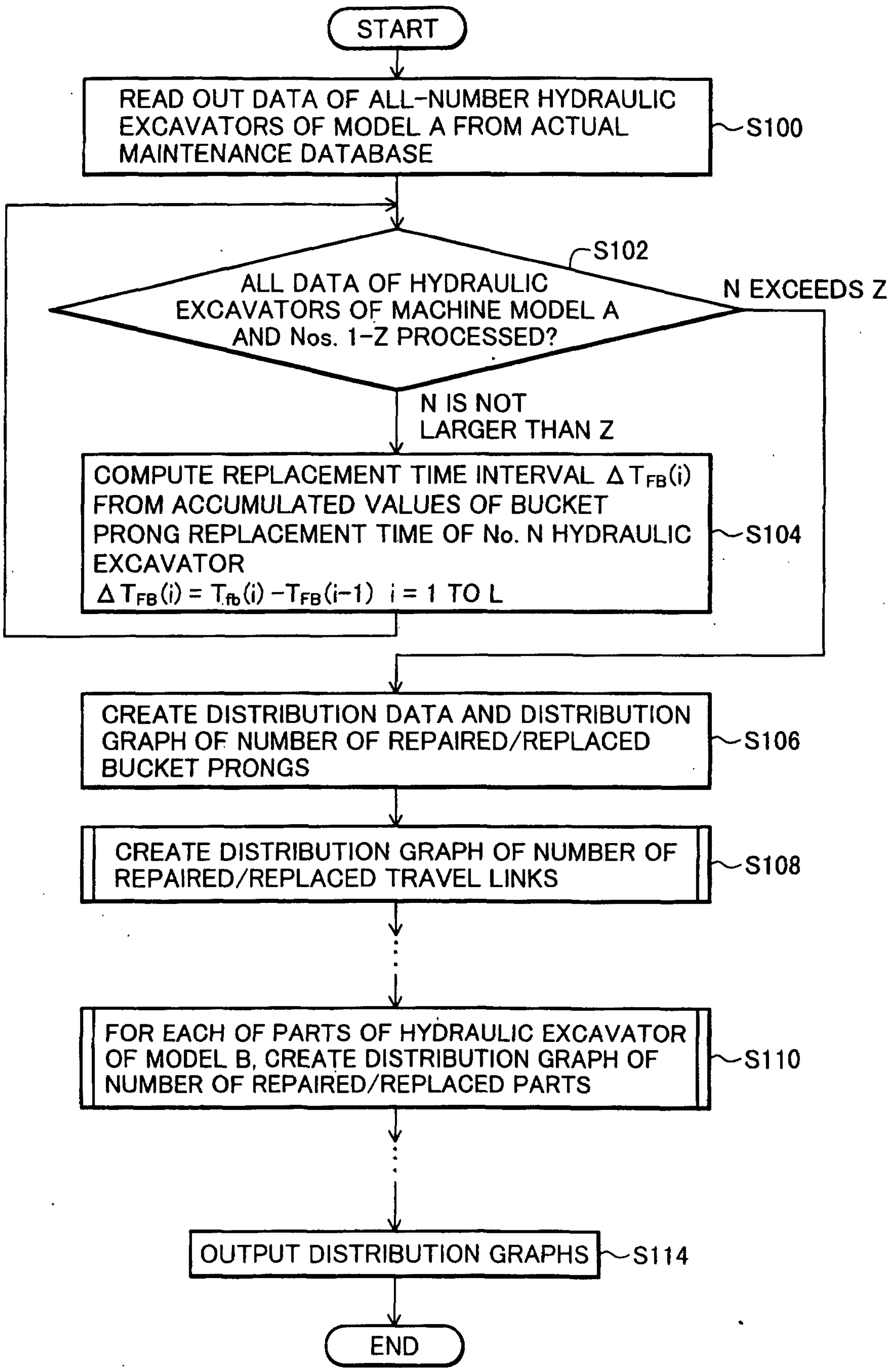
START
READ OUT DATA OF ALL-NUMBER HYDRAULIC EXCAVATORS OF MODEL A FROM ACTUAL MAINTENANCE DATABASE
S100
S102
ALL DATA OF HYDRAULIC EXCAVATORS OF MACHINE MODEL A AND Nos. 1-Z PROCESSED?
N EXCEEDS Z
N IS NOT LARGER THAN Z
COMPUTE REPLACEMENT TIME INTERVAL $\Delta T_{FB}(i)$ FROM ACCUMULATED VALUES OF BUCKET PRONG REPLACEMENT TIME OF No. N HYDRAULIC EXCAVATOR
$\Delta T_{FB}(i) = T_{fb}(i) - T_{FB}(i-1)$ i = 1 TO L
S104
CREATE DISTRIBUTION DATA AND DISTRIBUTION GRAPH OF NUMBER OF REPAIRED/REPLACED BUCKET PRONGS
S106
CREATE DISTRIBUTION GRAPH OF NUMBER OF REPAIRED/REPLACED TRAVEL LINKS
S108
FOR EACH OF PARTS OF HYDRAULIC EXCAVATOR OF MODEL B, CREATE DISTRIBUTION GRAPH OF NUMBER OF REPAIRED/REPLACED PARTS
S110
OUTPUT DISTRIBUTION GRAPHS
S114
END

FIG.74

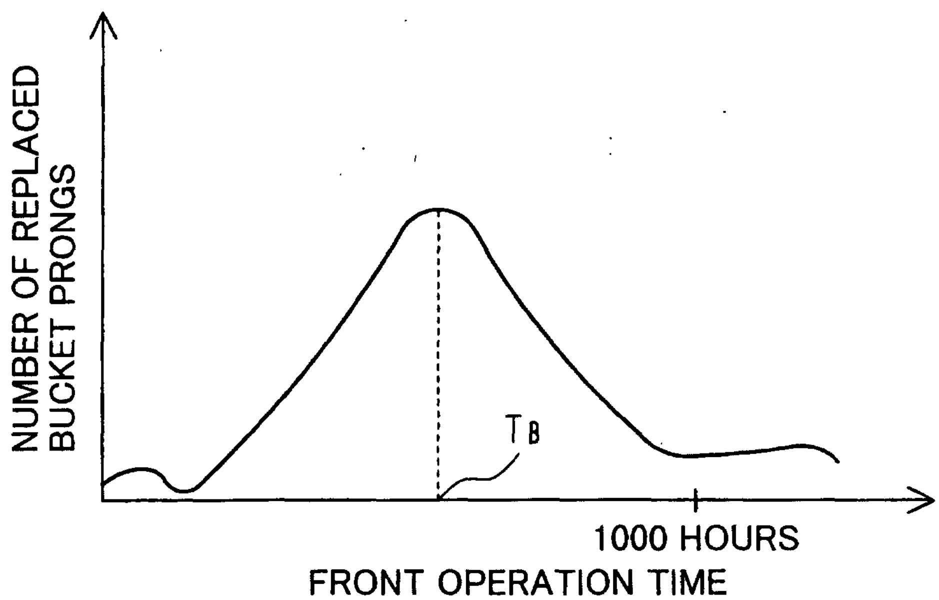
NUMBER OF REPLACED BUCKET PRONGS
TB
1000 HOURS
FRONT OPERATION TIME

FIG.75

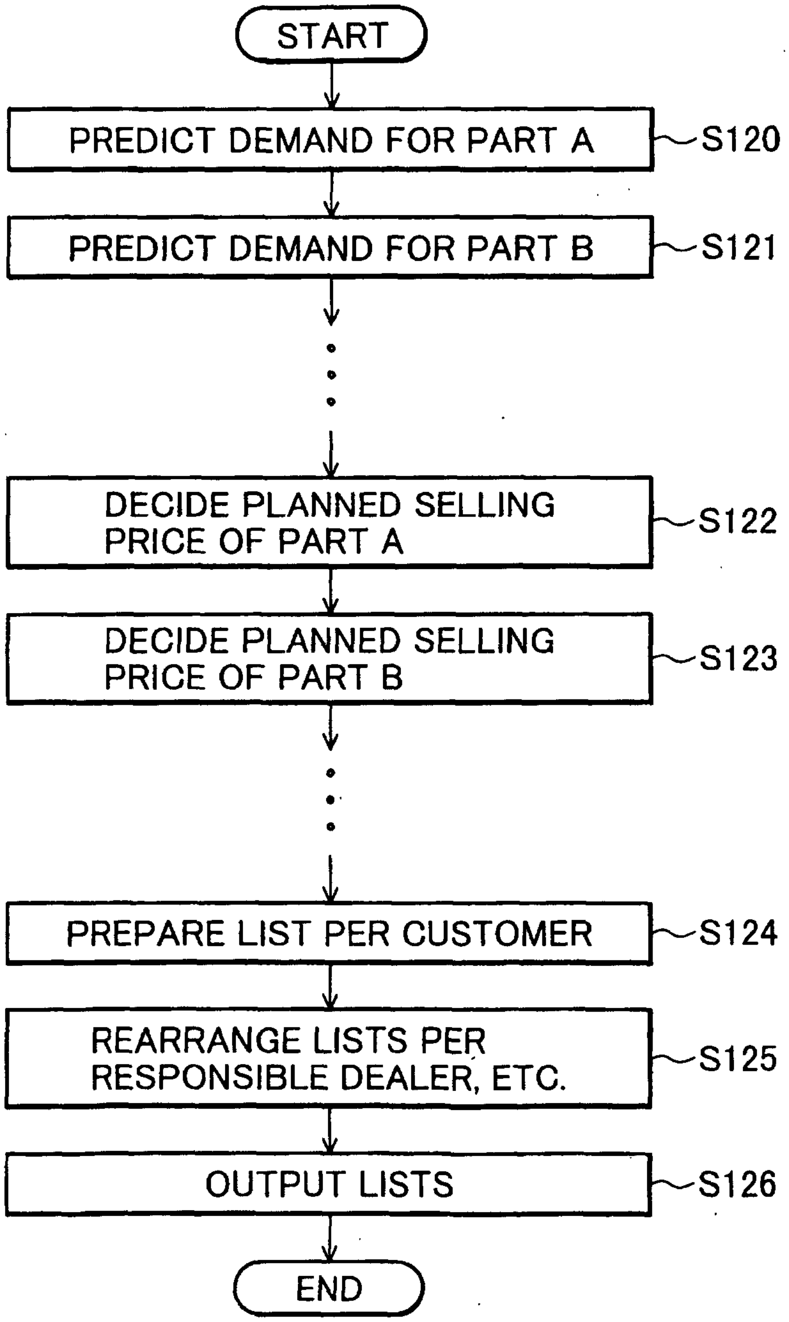
START
PREDICT DEMAND FOR PART A
S120
PREDICT DEMAND FOR PART B
S121
DECIDE PLANNED SELLING PRICE OF PART A
S122
DECIDE PLANNED SELLING PRICE OF PART B
S123
PREPARE LIST PER CUSTOMER
S124
REARRANGE LISTS PER RESPONSIBLE DEALER, ETC.
S125
OUTPUT LISTS
S126
END

# FIG.76

| CUSTOMER NAME | PART NAME | PLANNED SELLING PRICE | SCHEDULED TIMING |
|---|---|---|---|
| a | A | YENS | ○/× (YEAR/MONTH) |
| | B | YENS | ○/× (YEAR/MONTH) |
| | C | YENS | ○/× (YEAR/MONTH) |
| | D | YENS | ○/× (YEAR/MONTH) |
| | E | YENS | ○/× (YEAR/MONTH) |
| b | A | YENS | ○/× (YEAR/MONTH) |
| | C | YENS | ○/× (YEAR/MONTH) |
| | F | YENS | ○/× (YEAR/MONTH) |
| | G | YENS | ○/× (YEAR/MONTH) |
| c | B | YENS | ○/× (YEAR/MONTH) |
| | C | YENS | ○/× (YEAR/MONTH) |
| | D | YENS | ○/× (YEAR/MONTH) |

# FIG.77

| DEALER NAME | CUSTOMER NAME | PART NAME | PLANNED SELLING PRICE | SCHEDULED TIMING |
|---|---|---|---|---|
| ○○ DISTRICT △△COMPANY | a | A | YENS | ○/× (YEAR/MONTH) |
| | | B | YENS | ○/× (YEAR/MONTH) |
| | | C | YENS | ○/× (YEAR/MONTH) |
| | | D | YENS | ○/× (YEAR/MONTH) |
| | | E | YENS | ○/× (YEAR/MONTH) |
| | c | B | YENS | ○/× (YEAR/MONTH) |
| | | C | YENS | ○/× (YEAR/MONTH) |
| | | D | YENS | ○/× (YEAR/MONTH) |

FIG.78

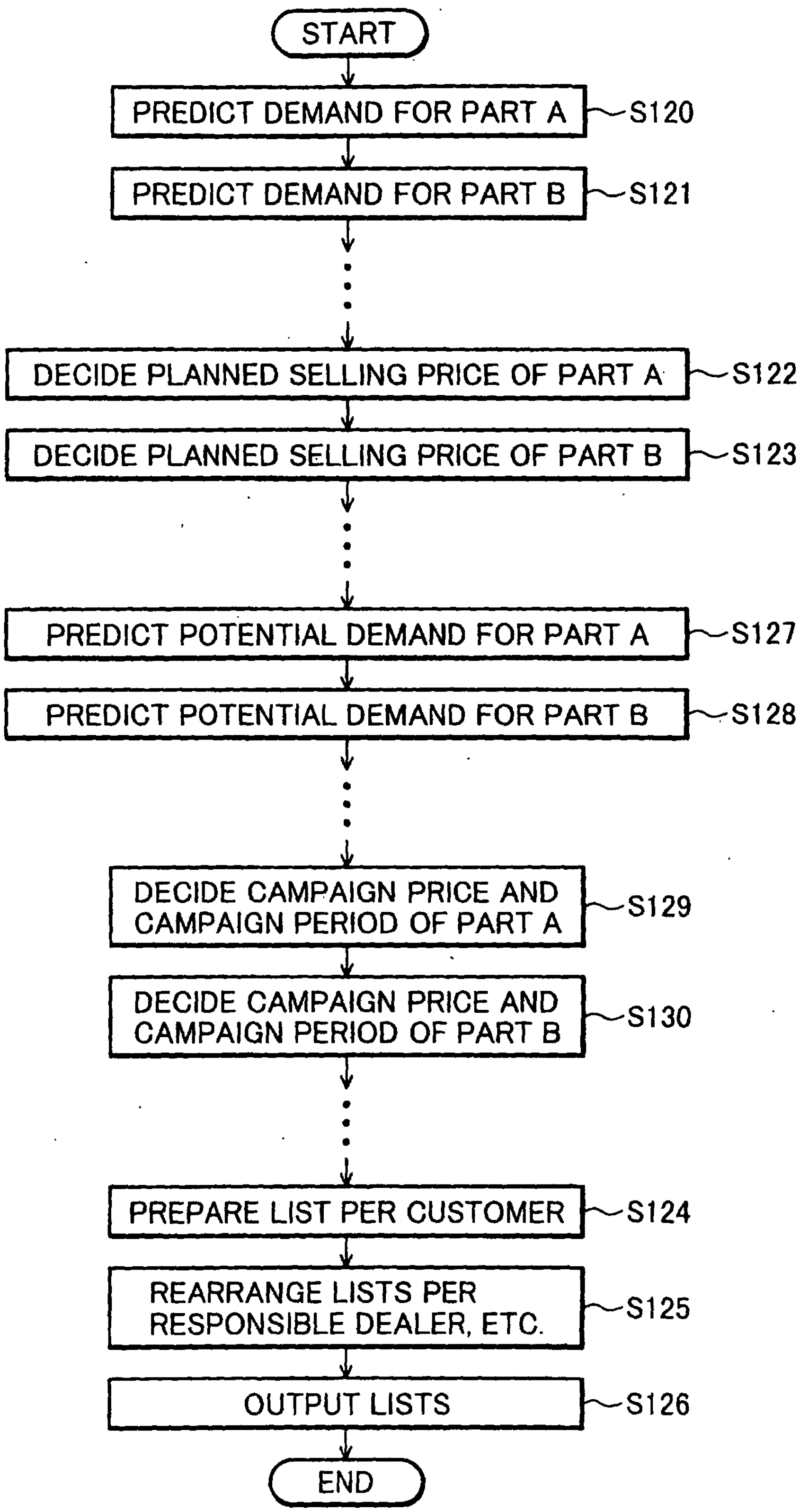
START
PREDICT DEMAND FOR PART A
S120
PREDICT DEMAND FOR PART B
S121
DECIDE PLANNED SELLING PRICE OF PART A
S122
DECIDE PLANNED SELLING PRICE OF PART B
S123
PREDICT POTENTIAL DEMAND FOR PART A
S127
PREDICT POTENTIAL DEMAND FOR PART B
S128
DECIDE CAMPAIGN PRICE AND CAMPAIGN PERIOD OF PART A
S129
DECIDE CAMPAIGN PRICE AND CAMPAIGN PERIOD OF PART B
S130
PREPARE LIST PER CUSTOMER
S124
REARRANGE LISTS PER RESPONSIBLE DEALER, ETC.
S125
OUTPUT LISTS
S126
END

# FIG.79

| CUSTOMER NAME | PART NAME | PLANNED SELLING PRICE | SCHEDULED TIMING | CAMPAIGN PRICE | CAMPAIGN PERIOD |
|---|---|---|---|---|---|
| a | A | YENS | ○/× (YEAR/MONTH) | — | — |
| | B | YENS | ○/× (YEAR/MONTH) | — | — |
| | C | YENS | ○/× (YEAR/MONTH) | — | — |
| | D | YENS | ○/× (YEAR/MONTH) | — | — |
| | E | YENS | ○/× (YEAR/MONTH) | — | — |
| | F | YENS | △/□ (YEAR/MONTH) | YENS | ○/△(YEAR/MONTH) – ×(MONTH) |
| b | A | YENS | ○/× (YEAR/MONTH) | — | — |
| | C | YENS | ○/× (YEAR/MONTH) | — | — |
| | F | YENS | ○/× (YEAR/MONTH) | — | — |
| | G | YENS | ○/× (YEAR/MONTH) | — | — |
| c | B | YENS | ○/× (YEAR/MONTH) | — | — |
| | C | YENS | ○/× (YEAR/MONTH) | — | — |
| | D | YENS | ○/× (YEAR/MONTH) | — | — |

FIG.80

TO: ○○ MFG. CO., LTD.

Thank you very much for your continued especial favor.
Regarding the hydraulic excavator of machine No. △△ under use at your site, let us inform you of the coming timing of repairing or replacing parts.
The selling prices of the parts planned by our ×× Co. are as follows.

Machine No.: △△

| PART NAME | PLANNED SELLING PRICE | TIMING OF REPAIR /REPLACEMENT |
|---|---|---|
| A | YENS | ○/× (YEAR/MONTH) |
| B | YENS | ○/× (YEAR/MONTH) |
| C | YENS | ○/× (YEAR/MONTH) |
| D | YENS | ○/× (YEAR/MONTH) |
| E | YENS | ○/× (YEAR/MONTH) |

Contact to: ○○○○, ×× Co.

# FIG.81

TO: ○○ MFG. CO., LTD.

Thank you very much for your continued especial favor.
Regarding the hydraulic excavator of machine No. △△ under use at your site, let us inform you of the coming timing of repairing or replacing parts.
The selling prices of the parts planned by our ×× Co. are as follows.

Machine No.: △△

| PART NAME | PLANNED SELLING PRICE | TIMING OF REPAIR /REPLACEMENT |
|---|---|---|
| A | YENS | ○/× (YEAR/MONTH) |
| B | YENS | ○/× (YEAR/MONTH) |
| C | YENS | ○/× (YEAR/MONTH) |
| D | YENS | ○/× (YEAR/MONTH) |
| E | YENS | ○/× (YEAR/MONTH) |

For the part given below, we are now proposing an extra sales campaign. If you purchase or reserve the part during a period of ○/△ (year/month) – ×(month), you can get it at the special price lower than the ordinary selling price. In view of this opportunity of campaign, you are cordially requested to purchase or reserve the part at an earlier timing.

| PART NAME | ORDINARY SELLING PRICE | TIMING OF REPAIR /REPLACEMENT | CAMPAIGN SPECIAL PRICE | CAMPAIGN PERIOD |
|---|---|---|---|---|
| F | ○○○○ YENS (if purchased or reserved during period of ○/× (year/month) - △(month)) | △/□ (YEAR/MONTH) | ×××× YENS (if purchased or reserved during period set in right column) | ○/△ (YEAR/MONTH) - ×(MONTH) |

Contact to: ○○○○, ×× Co.

FIG.82

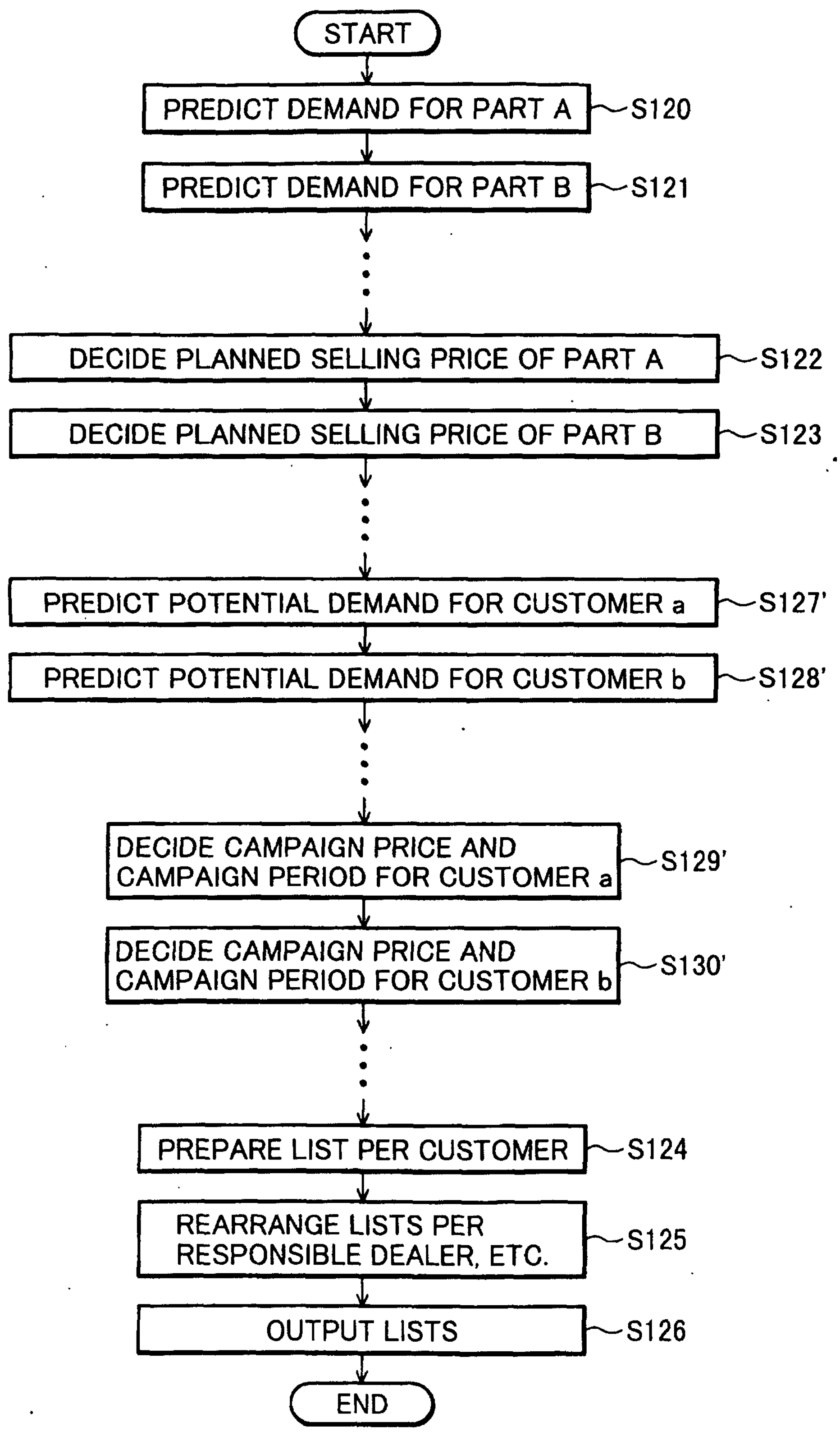
START
PREDICT DEMAND FOR PART A
S120
PREDICT DEMAND FOR PART B
S121
DECIDE PLANNED SELLING PRICE OF PART A
S122
DECIDE PLANNED SELLING PRICE OF PART B
S123
PREDICT POTENTIAL DEMAND FOR CUSTOMER a
S127'
PREDICT POTENTIAL DEMAND FOR CUSTOMER b
S128'
DECIDE CAMPAIGN PRICE AND CAMPAIGN PERIOD FOR CUSTOMER a
S129'
DECIDE CAMPAIGN PRICE AND CAMPAIGN PERIOD FOR CUSTOMER b
S130'
PREPARE LIST PER CUSTOMER
S124
REARRANGE LISTS PER RESPONSIBLE DEALER, ETC.
S125
OUTPUT LISTS
S126
END

FIG.83

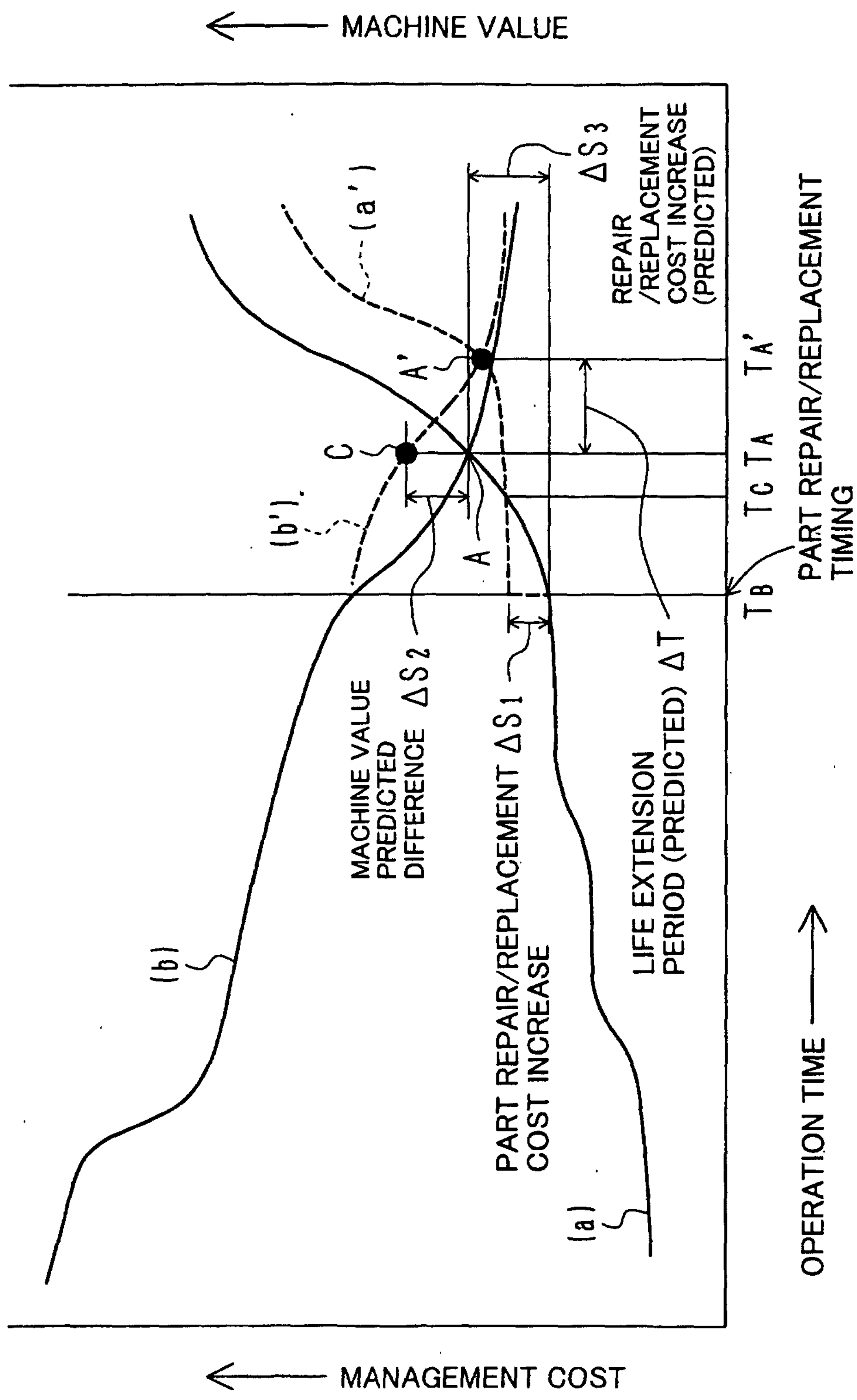
MACHINE VALUE
MANAGEMENT COST
OPERATION TIME
(a)
(b)
(a')
(b')
A
A'
C
MACHINE VALUE PREDICTED DIFFERENCE $\Delta S_2$
PART REPAIR/REPLACEMENT COST INCREASE $\Delta S_1$
LIFE EXTENSION PERIOD (PREDICTED) $\Delta T$
$\Delta S_3$
REPAIR /REPLACEMENT COST INCREASE (PREDICTED)
$T_B$
$T_C$
$T_A$
$T_A'$
PART REPAIR/REPLACEMENT TIMING

# FIG.84

| CUSTOMER NAME | PART NAME | PLANNED SELLING PRICE | SCHEDULED TIMING | CAMPAIGN PRICE | CAMPAIGN PERIOD |
|---|---|---|---|---|---|
| a | A | YENS | ○/× (YEAR/MONTH) | — | — |
| | B | YENS | ○/× (YEAR/MONTH) | — | — |
| | C | YENS | ○/× (YEAR/MONTH) | — | — |
| | D | YENS | △/○ (YEAR/MONTH) | YENS | ○/△(YEAR/MONTH) – ×(MONTH) |
| | E | YENS | △/△ (YEAR/MONTH) | YENS | ○/△(YEAR/MONTH) – ×(MONTH) |
| | F | YENS | △/□ (YEAR/MONTH) | YENS | ○/△(YEAR/MONTH) – ×(MONTH) |
| b | A | YENS | ○/× (YEAR/MONTH) | — | — |
| | C | YENS | ○/× (YEAR/MONTH) | — | — |
| | F | YENS | ○/× (YEAR/MONTH) | — | — |
| | G | YENS | ○/× (YEAR/MONTH) | — | — |
| c | B | YENS | ○/× (YEAR/MONTH) | — | — |
| | C | YENS | ○/× (YEAR/MONTH) | — | — |
| | D | YENS | ○/× (YEAR/MONTH) | — | — |

# FIG.85

| DEALER NAME | CUSTOMER NAME | PART NAME | PLANNED SELLING PRICE | SCHEDULED TIMING | CAMPAIGN PRICE | CAMPAIGN PERIOD |
|---|---|---|---|---|---|---|
| ○○ DISTRICT △△COMPANY | a | A | YENS | ○/× (YEAR/MONTH) | — | — |
| | | B | YENS | ○/× (YEAR/MONTH) | — | — |
| | | C | YENS | ○/× (YEAR/MONTH) | — | — |
| | | D | YENS | △/○ (YEAR/MONTH) | YENS | ○/△(YEAR/MONTH) – ×(MONTH) |
| | | E | YENS | △/△ (YEAR/MONTH) | YENS | ○/△(YEAR/MONTH) – ×(MONTH) |
| | | F | YENS | △/□ (YEAR/MONTH) | YENS | ○/△(YEAR/MONTH) – ×(MONTH) |
| | c | B | YENS | ○/× (YEAR/MONTH) | — | — |
| | | C | YENS | ○/× (YEAR/MONTH) | — | — |
| | | D | YENS | ○/× (YEAR/MONTH) | — | — |

# FIG.86

TO: OO MFG. CO., LTD.

Thank you very much for your continued especial favor.
Regarding the hydraulic excavator of machine No. ΔΔ under use at your site, let us inform you of the coming timing of repairing or replacing parts.
The selling prices of the parts planned by our × × Co. are as follows.

Machine No.: ΔΔ

| PART NAME | PLANNED SELLING PRICE | TIMING OF REPAIR /REPLACEMENT |
|---|---|---|
| A | YENS | O/× (YEAR/MONTH) |
| B | YENS | O/× (YEAR/MONTH) |
| C | YENS | O/× (YEAR/MONTH) |

For the parts given below, the timing of repair/replacement is not reached. As an attached sheet, however, if the parts are repaired or replaced at this time, the service life of the hydraulic excavator of machine No. ΔΔ is much extended. The trade-in prices of those parts are also more economical. We are now proposing an extra sales campaign with special prices specific for OO MFG. CO., LTD. only. If you purchase or reserve the parts during a period of O/Δ(year/month) - ×(month), you can get them at the special prices lower than the ordinary selling price.
In view of this opportunity of campaign, you are cordially requested to purchase or reserve the parts at an earlier timing.

| PART NAME | ORDINARY SELLING PRICE | TIMING OF REPAIR /REPLACEMENT | CAMPAIGN SPECIAL PRICE | CAMPAIGN PERIOD |
|---|---|---|---|---|
| D | OOOO YENS (if purchased or reserved during period of O/× (year/month) - Δ(month)) | Δ/O (YEAR/MONTH) | × × × × YENS (if purchased or reserved during period set in right column) | O/Δ (YEAR/MONTH) - ×(MONTH) |
| E | OOOO YENS (if purchased or reserved during period of O/× (year/month) - Δ(month)) | Δ/Δ (YEAR/MONTH) | × × × × YENS (if purchased or reserved during period set in right column) | O/Δ (YEAR/MONTH) - ×(MONTH) |
| F | OOOO YENS (if purchased or reserved during period of O/× (year/month) - Δ(month)) | Δ/□ (YEAR/MONTH) | × × × × YENS (if purchased or reserved during period set in right column) | O/Δ (YEAR/MONTH) - ×(MONTH) |

Contact to: OOOO, × × Co.

# FIG.87

OO MFG. CO., LTD.

Change in value of your hydraulic excavator of machine No. ΔΔ is predicted as follows.

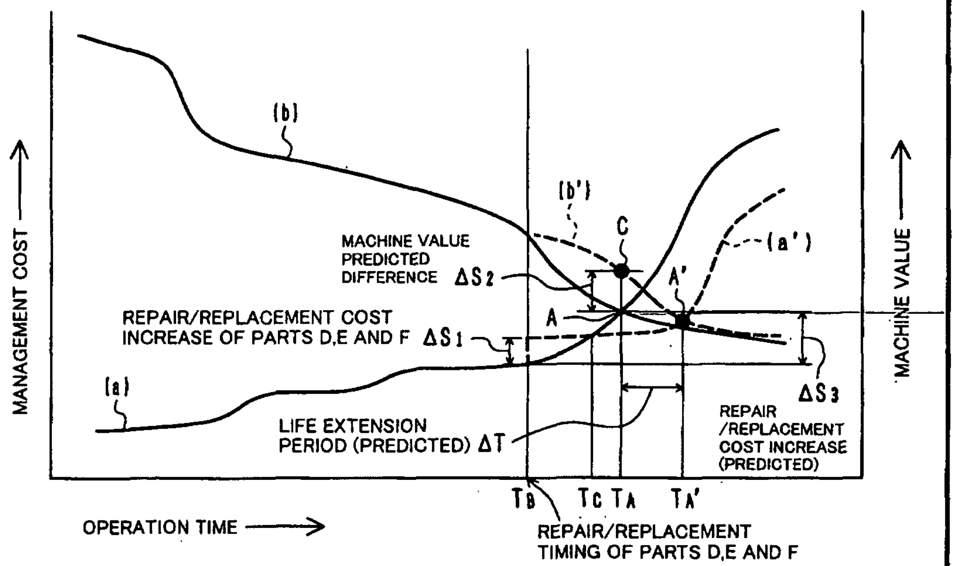


As to your machine (No.ΔΔ), in future, the repair/replacement cost (machine management cost curve (a)) as the whole machine increases generally monotonously, while the machine value curve (b) decreases generally monotonously with time. If the situation continues as it is, the repair/replacement cost exceeds the machine value (trade-in price) after the timing $T_A$(about □/□(year/month)).

You are therefore recommended to repair or replace particular parts (parts D, E and F in your machine of No.ΔΔ) relating to a particular unit (engine in your machine of No.ΔΔ) together at the timing $T_B$(about ☆/☆ (year/month)), which are effective in extending the overall machine life.

The repair/replacement slides the repair/replacement cost from the original machine management cost curve (a) toward the longer life side (lower cost side) after the timing $T_C$ (about ☆/× (year/month)) as indicated by a curve (a'), and also slides the machine value from the original machine value curve (b) toward the longer life side (higher value side) as indicated by a curve (b'). As a result, the cross point A' of the machine management cost curve (a') and the machine value curve (b'), i.e., the timing $T_{A'}$, can be extended by a period ΔT (about O years) from the originally predicted timing $T_A$, and the life of the overall machine is extended correspondingly.

Also, when you sell the machine (for trade-in) at the same the timing $T_A$ as that predicted before the repair/replacement, the machine value curve slides from the curve (b) to the curve (b') and the machine value increases by $\Delta S_2$ (about OOOten thousands yens). Further, repair/replacement cost increase $\Delta S_3$ (about ××ten thousands yens), which is to be paid in a period from the part repair/replacement timing $T_B$ to the timing $T_A$, is reduced to just the initial investment cost $S_1$ (about ΔΔten thousands yens) at the part repair/replacement timing $T_B$. Thus, you can save money by a value of $\Delta S_2 + \Delta S_3 - \Delta S_1$ (about □□ ten thousands yens).

## INTERNATIONAL SEARCH REPORT

International application No.
PCT/JP03/07325

**A. CLASSIFICATION OF SUBJECT MATTER**
Int.Cl$^7$ G06F17/60

According to International Patent Classification (IPC) or to both national classification and IPC

**B. FIELDS SEARCHED**

Minimum documentation searched (classification system followed by classification symbols)
Int.Cl$^7$ G06F17/60

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-099598 A (Komatsu Ltd.), 05 April, 2002 (05.04.02), (Family: none) | 1-36 |
| Y | JP 2002-133330 A (Komatsu Ltd.), 10 May, 2002 (10.05.02), (Family: none) | 1-36 |
| A | JP 2002-091547 A (Komatsu Ltd.), 29 March, 2002 (29.03.02), (Family: none) | 1-36 |
| A | JP 2002-023831 A (Komatsu Ltd.), 25 January, 2002 (25.01.02), (Family: none) | 1-36 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>16 July, 2003 (16.07.03) | Date of mailing of the international search report<br>05 August, 2003 (05.08.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/07325

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-024523 A (Komatsu Ltd.), 25 January, 2002 (25.01.02), (Family: none) | 1-36 |

Form PCT/ISA/210 (continuation of second sheet) (July 1998)